(19) **Europäisches Patentamt / European Patent Office / Office européen des brevets**

(11) **EP 4 554 209 A1**

(12) **EUROPEAN PATENT APPLICATION**
published in accordance with Art. 153(4) EPC

(43) Date of publication:
**14.05.2025 Bulletin 2025/20**

(21) Application number: **23835843.6**

(22) Date of filing: **05.07.2023**

(51) International Patent Classification (IPC):
*H04N 19/105* (2014.01)     *H04N 19/593* (2014.01)
*H04N 19/176* (2014.01)     *H04N 19/91* (2014.01)
*H04N 19/184* (2014.01)     *H04N 19/11* (2014.01)
*H04N 19/132* (2014.01)     *H04N 19/186* (2014.01)
*H04N 19/70* (2014.01)     *H04N 19/129* (2014.01)

(52) Cooperative Patent Classification (CPC):
**H04N 19/105; H04N 19/11; H04N 19/129;
H04N 19/132; H04N 19/176; H04N 19/184;
H04N 19/186; H04N 19/593; H04N 19/70;
H04N 19/91**

(86) International application number:
**PCT/KR2023/009533**

(87) International publication number:
**WO 2024/010377 (11.01.2024 Gazette 2024/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.07.2022   KR 20220082790
08.07.2022   KR 20220084570
20.07.2022   KR 20220089927
11.10.2022   KR 20220129439
05.01.2023   KR 20230001498
17.01.2023   KR 20230006995**

(71) Applicant: **Electronics and Telecommunications
Research Institute
Daejeon 34129 (KR)**

(72) Inventors:
• **LIM, Woong**
  **Daejeon 34129 (KR)**
• **KIM, Dong-Hyun**
  **Daejeon 34129 (KR)**
• **KIM, Jong-Ho**
  **Daejeon 34129 (KR)**
• **LIM, Sung-Chang**
  **Daejeon 34129 (KR)**
• **CHOI, Jin-Soo**
  **Daejeon 34129 (KR)**

(74) Representative: **Betten & Resch
Patent- und Rechtsanwälte PartGmbB
Maximiliansplatz 14
80333 München (DE)**

(54) **METHOD, DEVICE, AND RECORDING MEDIUM FOR IMAGE ENCODING/DECODING**

(57)     Disclosed herein are a method, an apparatus and a storage medium for image encoding/decoding. Methods for performing more accurate prediction are disclosed when performing prediction using a block vector. A block vector for a target block is derived by template matching, and a prediction block for the target block is determined based on the derived block vector. Various and detailed embodiments for a plurality of pieces of information used to derive a block vector, such as a search area, a block vector candidate list, a reference region, a buffer, and a tree type, are provided.

FIG. 18

EP 4 554 209 A1

## Description

### Technical Field

The present disclosure relates generally to a method, an apparatus, and a storage medium for image encoding/decoding. More particularly, the present disclosure relates to a method, an apparatus and a storage medium for image encoding/decoding, which provide various functions in prediction.

This application claims the benefit of Korean Patent Application Nos. 10-2022-0082790, filed July 5, 2022, 10-2022-0084570, filed July 8, 2022, 10-2022-0089927, filed July 20, 2022, 10-2022-0129439, filed October 11, 2022, 10-2023-0001498, filed January 5, 2023, 10-2023-0006995, filed January 17, 2023, and 10-2023-0087301, filed July 5, 2023, which are hereby incorporated by reference in their entireties into this application.

### Background Art

With the continuous development of the information and communication industries, broadcasting services supporting High-Definition (HD) resolution have been popularized all over the world. Through this popularization, a large number of users have become accustomed to high-resolution and high-definition images and/or video.

To satisfy users' demand for high definition, many institutions have accelerated the development of next-generation imaging devices. Users' interest in UHD TVs, having resolution that is more than four times as high as that of Full HD (FHD) TVs, as well as High-Definition TVs (HDTV) and FHD TVs, has increased. As interest therein has increased, image encoding/decoding technology for images having higher resolution and higher definition is currently required.

As image compression technology, there are various technologies, such as inter-prediction technology, intra-prediction technology, transform, quantization technology and entropy coding technology.

Inter-prediction technology is technology for predicting the value of a pixel included in a current picture using a picture previous to and/or a picture subsequent to the current picture. Intra-prediction technology is technology for predicting the value of a pixel included in a current picture using information about pixels in the current picture. Transform and quantization technology may be technology for compressing the energy of a residual signal. The entropy coding technology is technology for assigning a short codeword to a frequently occurring value and assigning a long codeword to a less frequently occurring value.

By utilizing this image compression technology, data about images may be effectively compressed, transmitted, and stored.

### Disclosure

### Technical Problem

An embodiment is intended to provide an apparatus, a method and a storage medium that use template matching.

An embodiment is intended to provide an apparatus, a method and a storage medium that use a template matching block vector.

### Technical Solution

In accordance with an aspect, there is provided an image decoding method, including deriving a block vector; and deriving a prediction block for a current block by performing prediction based on the block vector.

The prediction may be template matching prediction or intra template matching prediction.

When a luma component and a chroma component of the current block has independent block partitioning structures, template matching prediction mode information for the luma component and template matching prediction mode information for the chroma component may be independently decoded for the luma component and the chroma component, respectively.

A block vector of the current block may be stored in a motion information buffer.

The block vector may be added to a block vector candidate list for a next block of the current block.

The prediction may be template matching prediction or intra template matching prediction.

The block vector may be a template matching block vector.

Scaling may be performed on the template matching block vector.

In accordance with another aspect, there is provided an image encoding method, including deriving a block vector; and deriving a prediction block for a current block by performing prediction based on the block vector.

The prediction may be template matching prediction or intra template matching prediction.

When a luma component and a chroma component of the current block has independent block partitioning structures, template matching prediction mode information for the luma component and template matching prediction mode information for the chroma component may be independently decoded for the luma component and the chroma component, respectively.

A block vector of the current block may be stored in a motion information buffer.

The block vector may be added to a block vector candidate list for a next block of the current block.

The prediction may be template matching prediction or intra template matching prediction.

The block vector may be a template matching block vector.

Scaling may be performed on the template matching block vector.

In accordance with a further aspect, there is provided a computer-readable storage medium for storing a bitstream generated by the image encoding method.

In accordance with yet another aspect, there is provided a computer-readable storage medium for storing a bitstream for image decoding, wherein the bitstream includes prediction mode information, a block vector is derived using the prediction mode information, and a prediction block for a current block is derived by performing prediction based on the block vector.

The prediction may be template matching prediction or intra template matching prediction.

When a luma component and a chroma component of the current block has independent block partitioning structures, template matching prediction mode information for the luma component and template matching prediction mode information for the chroma component may be independently decoded for the luma component and the chroma component, respectively.

A block vector of the current block may be stored in a motion information buffer.

The block vector may be added to a block vector candidate list for a next block of the current block.

The prediction may be template matching prediction or intra template matching prediction.

The block vector may be a template matching block vector.

Scaling may be performed on the template matching block vector.

In accordance with yet another aspect, there is provided a computer-readable storage medium for storing a bitstream including computer-executable code, wherein, when being executed, the computer-executable code allows a video decoding apparatus to perform deriving a block vector based on prediction mode information of the computer-executable code; and deriving a prediction block for a current block by performing prediction based on the block vector.

## Advantageous Effects

There are provided an apparatus, a method and a storage medium that use template matching.

There are provided an apparatus, a method and a storage medium that use a template matching block vector.

## Description of Drawings

FIG. 1 is a block diagram illustrating the configuration of an embodiment of an encoding apparatus to which the present disclosure is applied;

FIG. 2 is a block diagram illustrating the configuration of an embodiment of a decoding apparatus to which the present disclosure is applied;

FIG. 3 is a diagram schematically illustrating the partition structure of an image when the image is encoded and decoded;

FIG. 4 is a diagram illustrating the form of a Prediction Unit (PU) that a Coding Unit (CU) can include;

FIG. 5 is a diagram illustrating the form of a Transform Unit (TU) that can be included in a CU;

FIG. 6 illustrates splitting of a block according to an example;

FIG. 7 is a diagram for explaining an embodiment of an intra-prediction procedure;

FIG. 8 is a diagram illustrating reference samples used in an intra-prediction procedure;

FIG. 9 is a diagram for explaining an embodiment of an inter-prediction procedure;

FIG. 10 illustrates spatial candidates according to an embodiment;

FIG. 11 illustrates the order of addition of motion information of spatial candidates to a merge list according to an embodiment;

FIG. 12 illustrates a transform and quantization process according to an example;

FIG. 13 illustrates diagonal scanning according to an example;

FIG. 14 illustrates horizontal scanning according to an example;

FIG. 15 illustrates vertical scanning according to an example;

FIG. 16 is a configuration diagram of an encoding apparatus according to an embodiment;

FIG. 17 is a configuration diagram of a decoding apparatus according to an embodiment;

FIG. 18 is a flowchart illustrating a target block prediction method and a bitstream generation method according to an embodiment;

FIG. 19 is a flowchart illustrating a target block prediction method using a bitstream according to an embodiment.

FIG. 20 conceptually illustrates a template matching prediction method according to an embodiment;

FIG. 21 illustrates the case where a template matching block vector derived by a template matching prediction method according to an example is referenced by a current block to which an intra block copy mode is applied;

FIG. 22 illustrates a search area determined using a block vector of an adjacent block of the current block according to an example;

FIG. 23 illustrates a method for extending a search area using a block vector of an adjacent block according to an example;

FIG. 24 illustrates determination of a prediction block using a matched template according to an example;

FIGS. 25A, 25B, and FIG. 25C illustrate configurations of a current template for a current block according to an example;

FIGS. 26A and 26B illustrate a method for configuring a template when a top side is a CTU boundary;

FIG. 27 is a flowchart of an image encoding method according to an embodiment;

FIG. 28 is a flowchart of an image decoding method according to an embodiment;

FIG. 29 illustrates a method for selecting a prediction block according to an example;

FIG. 30 illustrates spatial candidates according to an example;

FIG. 31 illustrates encoding/decoding methods for adjacent blocks according to an example;

FIG. 32 illustrates other encoding/decoding methods for adjacent blocks according to an example;

FIG. 33 illustrates additional encoding/decoding methods for adjacent blocks according to an example;

FIG. 34 illustrates a history block vector buffer in which block vectors are stored according to an example;

FIG. 35A illustrates an intra block copy history block vector buffer in which block vectors are stored according to another example;

FIG. 35B illustrates a template matching history block vector buffer in which block vectors are stored according to another example;

FIG. 36 illustrates a history block vector buffer in which block vectors are stored according to a further example;

FIG. 37 illustrates a first method for configuring a block vector candidate list for the current block with reference to spatial block vectors and history block vectors;

FIG. 38 illustrates a second method for configuring a block vector candidate list for the current block with reference to spatial block vectors and history block vectors;

FIG. 39 illustrates a third method for configuring a block vector candidate list for the current block with reference to spatial block vectors and history block vectors;

FIG. 40 illustrates a method for determining a refined block vector candidate by applying template matching to block vector candidates in a block vector candidate list according to an example;

FIG. 41 illustrates a block vector candidate list before template matching is applied and a block vector candidate list after template matching is applied;

FIG. 42 illustrates another method for determining a refined block vector candidate by applying template matching to block vector candidates in a block vector candidate list according to an example;

FIG. 43 illustrates a block vector candidate list before template matching is applied and a block vector candidate list after template matching is applied;

FIG. 44 illustrates a method for deriving reordered block vector candidates by applying template matching to block vector candidates in a block vector candidate list according to an example;

FIG. 45 illustrates a block vector candidate list before block vector candidate reordering using template matching is applied, and a block vector candidate list after block vector candidate reordering using template matching is applied;

FIGS. 46A, 46B, 46C, and 46D illustrate block partitioning methods according to an example;

FIG. 47 illustrates the case where the block vector candidate list of a higher-level block is shared with a lower-level block according to an example;

FIG. 48 illustrates a prediction block selection method according to an embodiment;

FIGS. 49A, 49B, 49C, and 49D illustrate an available area of a reference block determined by the location of a current block according to an example;

FIGS. 50A and 50B illustrate a buffer configuration method according to an example;

FIGS. 51A and 51B illustrate limitations on a block vector according to an example;

FIG. 52 illustrates a region encoded/decoded before the current block is encoded/decoded according to an example;

FIGS. 53A, 53B, 53C, and 53D illustrate methods for configuring a buffer using CTBs encoded/decoded before the current block is encoded/decoded according to an example;

FIG. 54 illustrates subblock partitioning depending on the block partitioning structure for a luma component and a chroma component according to an example;

FIG. 55 illustrates sample positions in a luma component subblock according to an example;

FIG. 56 illustrates a prediction block selection method according to an example;

FIG. 57 illustrates the case where prediction coding modes of luma component subblocks corresponding to a chroma component block are identical to each other according to an example;

FIG. 58 illustrates the case where prediction coding modes of luma component subblocks corresponding to a chroma component block are different from each other according to an example;

FIGS. 59A and 59B illustrate coding information signaled for a block partitioning structure according to an example;

FIG. 60 illustrates another type of coding information signaled for a block partitioning structure according to an example;

FIG. 61 illustrates a method for signaling coding information from which information redundancy is removed according to an example;

FIG. 62 illustrates another method for signaling coding information from which information redundancy is removed according to an example;

FIG. 63 illustrates a luma block and a chroma block when the ratio between color components is 4:2:0 according to an example;

FIG. 64 illustrates a luma block, a chroma block, and specific positions in the luma block when the ratio between color components is 4:2:0 according to an example;

FIG. 65 illustrates the positions of reconstructed samples according to an example;

FIG. 66 illustrates a prediction process of a DBV method according to an embodiment;

FIG. 67 illustrates intra-template matching prediction according to an example;

FIG. 68 illustrates templates and reference samples for the templates according to an example;

FIG. 69 illustrates clustering of AMVP IBC candidates according to an example; and

FIG. 70 illustrates an IBC reference region based on the location of a current CU according to an example.

**Mode for Invention**

The present invention may be variously changed, and may have various embodiments, and specific embodiments will be described in detail below with reference to the attached drawings. However, it should be understood that those embodiments are not intended to limit the present invention to specific disclosure forms, and that they include all changes, equivalents or modifications included in the spirit and scope of the present invention.

Detailed descriptions of the following exemplary embodiments will be made with reference to the attached drawings illustrating specific embodiments. These embodiments are described so that those having ordinary knowledge in the technical field to which the present disclosure pertains can easily practice the embodiments. It should be noted that the various embodiments are different from each other, but do not need to be mutually exclusive of each other. For example, specific shapes, structures, and characteristics described here may be implemented as other embodiments without departing from the spirit and scope of the embodiments in relation to an embodiment. Further, it should be understood that the locations or arrangement of individual components in each disclosed embodiment can be changed without departing from the spirit and scope of the embodiments. Therefore, the accompanying detailed description is not intended to restrict the scope of the disclosure, and the scope of the exemplary embodiments is limited only by the accompanying claims, along with equivalents thereof, as long as they are appropriately described.

In the drawings, similar reference numerals are used to designate the same or similar functions in various aspects. The shapes, sizes, etc. of components in the drawings may be exaggerated to make the description clear.

Terms such as "first" and "second" may be used to describe various components, but the components are not restricted by the terms. The terms are used only to distinguish one component from another component. For example, a first component may be named a second component without departing from the scope of the present specification. Likewise, a second component may be named a first component. The terms "and/or" may include combinations of a plurality of related described items or any of a plurality of related described items.

It will be understood that when a component is referred to as being "connected" or "coupled" to another component, the two components may be directly connected or coupled to each other, or intervening components may be present between the two components. On the other hand, it will be understood that when a component is referred to as being "directly connected or coupled", no intervening components are present between the two components.

Components described in the embodiments are independently shown in order to indicate different characteristic functions, but this does not mean that each of the components is formed of a separate piece of hardware or software. That is, the components are arranged and included separately for convenience of description. For example, at least two of the components may be integrated into a single component. Conversely, one component may be divided into multiple components. An embodiment into which the components are integrated or an embodiment in which some components are separated is included in the scope of the present specification as long as it does not depart from the essence of the present specification.

The terms used in the embodiment are merely used to describe specific embodiments and are not intended to limit the present invention. A singular expression includes a plural expression unless a description to the contrary is specifically pointed out in context. In the embodiments, it should be understood that the terms such as "include" or "have" are merely intended to indicate that features, numbers, steps, operations, components, parts, or combinations thereof are present, and are not intended to exclude the possibility that one or more other features, numbers, steps, operations, components, parts, or combinations thereof will be present or added. That is, in the embodiments, an expression describing that a component "comprises" a specific component means that additional components may be included within the scope of the practice of the present invention or the technical spirit of the present invention, but does not preclude the presence of components other than the specific component.

In the embodiments, a term "at least one" may mean one of one or more numbers, such as 1, 2, 3, and 4. In the embodiments, a term "a plurality of" may mean one of two or more numbers, such as 2, 3 and 4.

In embodiments, "at least one" among the listed specific items may include a combination of the specific items. For example, "at least one" among the listed specific items may be construed as one of the specific items, some of the specific items, and all of the specific items.

Some components of the embodiments are not essential components for performing essential functions, but may be optional components for improving only performance. The embodiments may be implemented using only essential components for implementing the essence of the embodiments. For example, a structure including only essential components, excluding optional components used only to improve performance, is also included in the scope of the embodiments.

Embodiments will be described in detail below with reference to the accompanying drawings so that those having ordinary knowledge in the technical field to which the embodiments pertain can easily practice the embodiments. In the following description of the embodiments, detailed descriptions of known functions or configurations which are deemed to make the gist of the present specification obscure will be omitted. Further, the same reference numerals are used to designate the same components throughout the drawings, and repeated descriptions of the same components will be omitted.

Hereinafter, "image" may mean a single picture constituting a video, or may mean the video itself. For example, "encoding and/or decoding of an image" may mean "encoding and/or decoding of a video", and may also mean "encoding and/or decoding of any one of images constituting the video".

Hereinafter, the terms "video" and "motion picture" may be used to have the same meaning, and may be used interchangeably with each other.

Hereinafter, a target image may be an encoding target image, which is the target to be encoded, and/or a decoding target image, which is the target to be decoded. Further, the target image may be an input image that is input to an encoding apparatus or an input image that is input to a decoding apparatus. And, a target image may be a current image, that is, the target to be currently encoded and/or decoded. For example, the terms "target image" and "current image" may be used to have the same meaning, and may be used interchangeably with each other.

Hereinafter, the terms "image", "picture", "frame", and "screen" may be used to have the same meaning and may be used interchangeably with each other.

Hereinafter, a target block may be an encoding target block, i.e. the target to be encoded and/or a decoding target block, i.e. the target to be decoded. Further, the target block may be a current block, i.e. the target to be currently encoded and/or decoded. Here, the terms "target block" and "current block" may be used to have the same meaning, and may be used interchangeably with each other. A current block may denote an encoding target block, which is the target of encoding, during encoding and/or a decoding target block, which is the target of decoding, during decoding. Also, the current block may be at least one of a coding block, a prediction block, a residual block, and a transform block.

Hereinafter, the terms "block" and "unit" may be used to have the same meaning, and may be used interchangeably with each other. Alternatively, "block" may denote a specific unit.

Hereinafter, the terms "region" and "segment" may be used interchangeably with each other.

In the following embodiments, specific information, data, a flag, an index, an element, and an attribute may have their respective values. A value of "0" corresponding to each of the information, data, flag, index, element, and attribute may indicate a false, a logical false or a first predefined value. In other words, the value of "0", a false, logical false, and a first predefined value may be used interchangeably with each other. A value of "1" corresponding to each of the information, data, flag, index, element, and attribute may indicate a true, a logical true or a second predefined value. In other words, the value of "1", true, logical true, and a second predefined value may be used interchangeably with each other.

When a variable such as $i$ or $j$ is used to indicate a row, a column, or an index, the value of $i$ may be an integer of 0 or more or an integer of 1 or more. In other words, in the embodiments, each of a row, a column, and an index may be counted from 0 or may be counted from 1.

In embodiments, the term "one or more" or the term "at least one" may mean the term "plural". The term "one or more" or the term "at least one" may be used interchangeably with "plural".

Below, the terms to be used in embodiments will be described.

Encoder: An encoder denotes a device for performing encoding. That is, an encoder may mean an encoding apparatus.

Decoder: A decoder denotes a device for performing decoding. That is, a decoder may mean a decoding apparatus.

Unit: A unit may denote the unit of image encoding and decoding. The terms "unit" and "block" may be used to have the same meaning, and may be used interchangeably with each other.

- A unit may be an MxN array of samples. Each of M and N may be a positive integer. A unit may typically mean an array of samples in the form of two-dimensions.

    - In the encoding and decoding of an image, "unit" may be an area generated by the partitioning of one image. In other words, "unit" may be a region specified in one image. A single image may be partitioned into multiple units. Alternatively, one image may be partitioned into sub-parts, and the unit may denote each partitioned sub-part when encoding or decoding is performed on the partitioned sub-part.

- In the encoding and decoding of an image, predefined processing may be performed on each unit depending on the type of the unit.
- Depending on functions, the unit types may be classified into a macro unit, a Coding Unit (CU), a Prediction Unit (PU), a residual unit, a Transform Unit (TU), etc. Alternatively, depending on functions, the unit may denote a block, a macroblock, a coding tree unit, a coding tree block, a coding unit, a coding block, a prediction unit, a prediction block, a residual unit, a residual block, a transform unit, a transform block, etc. For example, a target unit, which is the target of encoding and/or decoding, may be at least one of a CU, a PU, a residual unit, and a TU.
- The term "unit" may mean information including a luminance (luma) component block, a chrominance (chroma) component block corresponding thereto, and syntax elements for respective blocks so that the unit is designated to be distinguished from a block.
- The size and shape of a unit may be variously implemented. Further, a unit may have any of various sizes and shapes. In particular, the shapes of the unit may include not only a square, but also a geometric figure that can be represented in two dimensions (2D), such as a rectangle, a trapezoid, a triangle, and a pentagon.
- Further, unit information may include one or more of the type of a unit, the size of a unit, the depth of a unit, the order of encoding of a unit and the order of decoding of a unit, etc. For example, the type of a unit may indicate one of a CU, a PU, a residual unit and a TU.
- One unit may be partitioned into sub-units, each having a smaller size than that of the relevant unit.

Depth: A depth may mean an extent to which the unit is partitioned. Further, the depth of the unit may indicate the level at which the corresponding unit is present when unit(s) are represented by a tree structure.

- Unit partition information may include a depth indicating the depth of a unit. A depth may indicate the number of times the unit is partitioned and/or the degree to which the unit is partitioned.
- In a tree structure, it may be considered that the depth of a root node is the smallest, and the depth of a leaf node is the largest. The root node may be the highest (top) node. The leaf node may be a lowest node.
- A single unit may be hierarchically partitioned into multiple sub-units while having depth information based on a tree structure. In other words, the unit and sub-units, generated by partitioning the unit, may correspond to a node and child nodes of the node, respectively. Each of the partitioned sub-units may have a unit depth. Since the depth indicates the number of times the unit is partitioned and/or the degree to which the unit is partitioned, the partition information of the sub-units may include information about the sizes of the sub-units.
- In a tree structure, the top node may correspond to the initial node before partitioning. The top node may be referred to as a "root node". Further, the root node may have a minimum depth value. Here, the top node may have a depth of level '0'.
- A node having a depth of level '1' may denote a unit generated when the initial unit is partitioned once. A node having a depth of level '2' may denote a unit generated when the initial unit is partitioned twice.
- A leaf node having a depth of level 'n' may denote a unit generated when the initial unit has been partitioned n times.

    - The leaf node may be a bottom node, which cannot be partitioned any further. The depth of the leaf node may be the maximum level. For example, a predefined value for the maximum level may be 3.
    - A QT depth may denote a depth for a quad-partitioning. A BT depth may denote a depth for a binary-partitioning. A TT depth may denote a depth for a ternary-partitioning.

Sample: A sample may be a base unit constituting a block. A sample may be represented by values from 0 to $2^{Bd}-1$ depending on the bit depth (Bd).

- A sample may be a pixel or a pixel value.
- Hereinafter, the terms "pixel" and "sample" may be used to have the same meaning, and may be used interchangeably with each other.

A Coding Tree Unit (CTU): A CTU may be composed of a single luma component (Y) coding tree block and two chroma component (Cb, Cr) coding tree blocks related to the luma component coding tree block. Further, a CTU may mean information including the above blocks and a syntax element for each of the blocks.

- Each coding tree unit (CTU) may be partitioned using one or more partitioning methods, such as a quad tree (QT), a binary tree (BT), and a ternary tree (TT) so as to configure sub-units, such as a coding unit, a prediction unit, and a transform unit. A quad tree may mean a quarternary tree. Further, each coding tree unit may be partitioned using a multitype tree (MTT) using one or more partitioning methods.
- "CTU" may be used as a term designating a pixel block, which is a processing unit in an image-decoding and encoding process, as in the case of partitioning of an input image.

Coding Tree Block (CTB): "CTB" may be used as a term designating any one of a Y coding tree block, a Cb coding tree block, and a Cr coding tree block.
Neighbor block: A neighbor block (or neighboring block) may mean a block adjacent to a target block. A neighbor block may mean a reconstructed neighbor block.
Hereinafter, the terms "neighbor block" and "adjacent block" may be used to have the same meaning and may be used interchangeably with each other.
A neighbor block may mean a reconstructed neighbor block.
Spatial neighbor block; A spatial neighbor block may a block spatially adjacent to a target block. A neighbor block may include a spatial neighbor block.

- The target block and the spatial neighbor block may be included in a target picture.
- The spatial neighbor block may mean a block, the boundary of which is in contact with the target block, or a block located within a predetermined distance from the target block.
- A spatial neighbor block may be a block within a specific region determined for the target block.
- The spatial neighbor block may mean a block adjacent to the vertex of the target block. Here, the block adjacent to the vertex of the target block may mean a block vertically adjacent to a neighbor block which is horizontally adjacent to the target block or a block horizontally adjacent to a neighbor block which is vertically adjacent to the target block.

Temporal neighbor block: A temporal neighbor block may be a block temporally adjacent to a target block. A neighbor block may include a temporal neighbor block.

- The temporal neighbor block may include a co-located block (col block).
- The col block may be a block in a previously reconstructed co-located picture (col picture). The location of the col block in the col-picture may correspond to the location of the target block in a target picture. Alternatively, the location of the col block in the col-picture may be equal to the location of the target block in the target picture. The col picture may be a picture included in a reference picture list.
- The temporal neighbor block may be a block temporally adjacent to a spatial neighbor block of a target block.

Prediction mode: The prediction mode may be information indicating the mode used for intra prediction, or the mode used for inter prediction.
Prediction unit: A prediction unit may be a base unit for prediction, such as inter prediction, intra prediction, inter compensation, intra compensation, and motion compensation.

- A single prediction unit may be divided into multiple partitions having smaller sizes or sub-prediction units. The multiple partitions may also be base units in the performance of prediction or compensation. The partitions generated by dividing the prediction unit may also be prediction units.

Prediction unit partition: A prediction unit partition may be the shape into which a prediction unit is divided.
Reconstructed neighbor unit: A reconstructed neighbor unit may be a unit which has already been decoded and reconstructed neighboring a target unit.

- A reconstructed neighbor unit may be a unit that is spatially adjacent to the target unit or that is temporally adjacent to the target unit.
- A reconstructed spatial neighbor unit may be a unit which is included in a target picture and which has already been reconstructed through encoding and/or decoding.
- A reconstructed temporal neighbor unit may be a unit which is included in a reference image and which has already been reconstructed through encoding and/or decoding. The location of the reconstructed temporal neighbor unit in the reference image may be identical to that of the target unit in the target picture, or may correspond to the location of the target unit in the target picture. Also, a reconstructed temporal neighbor unit may be a block neighboring the corresponding block in a reference image. Here, the location of the corresponding block in the reference image may correspond to the location of the target block in the target image. Here, the fact that the locations of blocks correspond to each other may mean that the locations of the blocks are identical to each other, may mean that one block is included in another block, or may mean that one block occupies a specific location in another block.

Sub-picture: A picture may be divided into one or more sub-pictures. A sub-picture may be composed of one or more tile rows and one or more tile columns.

- A sub-picture may be a region having a square shape or a rectangular(i.e., a non-square rectangular) shape in a picture. Further, a sub-picture may include one or more CTUs.
- A sub-picture may be a rectangular region of one or more slices in a picture.
- One sub-picture may include one or more tiles, one or more bricks, and/or one or more slices.

Tile: A tile may be a region having a square shape or rectangular (i.e., a non-square rectangular) shape in a picture.

- A tile may include one or more CTUs.
- A tile may be partitioned into one or more bricks.

Brick: A brick may denote one or more CTU rows in a tile.

- A tile may be partitioned into one or more bricks. Each brick may include one or more CTU rows.
- A tile that is not partitioned into two parts may also denote a brick.

Slice: A slice may include one or more tiles in a picture. Alternatively, a slice may include one or more bricks in a tile.

- A sub-picture may contain one or more slices that collectively cover a rectangular region of a picture. Consequently, each sub-picture boundary is also always a slice boundary, and each vertical sub-picture boundary is always also a vertical tile boundary.

Parameter set: A parameter set may correspond to header information in the internal structure of a bitstream.

- A parameter set may include at least one of a video parameter set (VPS), a sequence parameter set (SPS), a picture parameter set (PPS), an adaptation parameter set (APS), a decoding parameter set (DPS), etc.
- Information signaled through each parameter set may be applied to pictures which refer to the corresponding parameter set. For example, information in a VPS may be applied to pictures which refer to the VPS. Information in an SPS may be applied to pictures which refer to the SPS. Information in a PPS may be applied to pictures which refer to the PPS.
- Each parameter set may refer to a higher parameter set. For example, a PPS may refer to an SPS. An SPS may refer to a VPS.
- Further, a parameter set may include a tile group, slice header information, and tile header information. The tile group may be a group including multiple tiles. Also, the meaning of "tile group" may be identical to that of "slice".

Rate-distortion optimization: An encoding apparatus may use rate-distortion optimization so as to provide high coding efficiency by utilizing combinations of the size of a coding unit (CU), a prediction mode, the size of a prediction unit (PU), motion information, and the size of a transform unit (TU).

- A rate-distortion optimization scheme may calculate rate-distortion costs of respective combinations so as to select an optimal combination from among the combinations. The rate-distortion costs may be calculated using the equation "*D*

+ $\lambda$ * R". Generally, a combination enabling the rate-distortion cost to be minimized may be selected as the optimal combination in the rate-distortion optimization scheme.

- D may denote distortion. D may be the mean of squares of differences (i.e. mean square error) between original transform coefficients and reconstructed transform coefficients in a transform unit.
- R may denote the rate, which may denote a bit rate using related-context information.
- $\lambda$ denotes a Lagrangian multiplier. R may include not only coding parameter information, such as a prediction mode, motion information, and a coded block flag, but also bits generated due to the encoding of transform coefficients.
- An encoding apparatus may perform procedures, such as inter prediction and/or intra prediction, transform, quantization, entropy encoding, inverse quantization (dequantization), and/or inverse transform so as to calculate precise D and R. These procedures may greatly increase the complexity of the encoding apparatus.
- Bitstream: A bitstream may denote a stream of bits including encoded image information.

Parsing: Parsing may be the decision on the value of a syntax element, made by performing entropy decoding on a bitstream. Alternatively, the term "parsing" may mean such entropy decoding itself.

Symbol: A symbol may be at least one of the syntax element, the coding parameter, and the transform coefficient of an encoding target unit and/or a decoding target unit. Further, a symbol may be the target of entropy encoding or the result of entropy decoding.

Reference picture: A reference picture may be an image referred to by a unit so as to perform inter prediction or motion compensation. Alternatively, a reference picture may be an image including a reference unit referred to by a target unit so as to perform inter prediction or motion compensation.

Hereinafter, the terms "reference picture" and "reference image" may be used to have the same meaning, and may be used interchangeably with each other.

Reference picture list: A reference picture list may be a list including one or more reference images used for inter prediction or motion compensation.

- The types of a reference picture list may include List Combined (LC), List 0 (L0), List 1 (L1), List 2 (L2), List 3 (L3), etc.
- For inter prediction, one or more reference picture lists may be used.

Inter-prediction indicator: An inter-prediction indicator may indicate the inter-prediction direction for a target unit. Inter prediction may be one of unidirectional prediction and bidirectional prediction. Alternatively, the inter-prediction indicator may denote the number of reference pictures used to generate a prediction unit of a target unit. Alternatively, the inter-prediction indicator may denote the number of prediction blocks used for inter prediction or motion compensation of a target unit.

Prediction list utilization flag: A prediction list utilization flag may indicate whether a prediction unit is generated using at least one reference picture in a specific reference picture list.

- An inter-prediction indicator may be derived using the prediction list utilization flag. In contrast, the prediction list utilization flag may be derived using the inter-prediction indicator. For example, the case where the prediction list utilization flag indicates a first value (e.g., "0"), may indicate that, for a target unit, a prediction block is not generated using a reference picture in a reference picture list. The case where the prediction list utilization flag indicates "1", which is a second value, may indicate that, for a target unit, a prediction unit is generated using the reference picture list.

Reference picture index: A reference picture index may be an index indicating a specific reference picture in a reference picture list.

Picture Order Count (POC): A POC value for a picture may denote an order in which the corresponding picture is displayed.

Motion vector (MV): A motion vector may be a 2D vector used for inter prediction or motion compensation. A motion vector may mean an offset between a target image and a reference image.

- For example, a MV may be represented in a form such as $(mv_x, mv_y)$. $mv_x$ may indicate a horizontal component, and $mv_y$ may indicate a vertical component.
- Search range: A search range may be a 2D area in which a search for a MV is performed during inter prediction. For example, the size of the search range may be MxN. M and N may be respective positive integers.

Motion vector candidate: A motion vector candidate may be a block that is a prediction candidate or the motion vector of the block that is a prediction candidate when a motion vector is predicted.

- A motion vector candidate may be included in a motion vector candidate list.

Motion vector candidate list: A motion vector candidate list may be a list configured using one or more motion vector candidates.

Motion vector candidate index: A motion vector candidate index may be an indicator for indicating a motion vector candidate in the motion vector candidate list. Alternatively, a motion vector candidate index may be the index of a motion vector predictor.

Motion information: Motion information may be information including at least one of a reference picture list, a reference image, a motion vector candidate, a motion vector candidate index, a merge candidate, and a merge index, as well as a motion vector, a reference picture index, and an inter-prediction indicator.

Merge candidate list: A merge candidate list may be a list configured using one or more merge candidates.

Merge candidate: A merge candidate may be a spatial merge candidate, a temporal merge candidate, a combined merge candidate, a combined bi-prediction merge candidate, a candidate based on a history, a candidate based on an average of two candidates, a zero-merge candidate, etc. A merge candidate may include an inter-prediction indicator, and may include motion information such as prediction type information, a reference picture index for each list, a motion vector, a prediction list utilization flag, and an inter-prediction indicator.

Merge index: A merge index may be an indicator for indicating a merge candidate in a merge candidate list.

- A merge index may indicate a reconstructed unit used to derive a merge candidate between a reconstructed unit spatially adjacent to a target unit and a reconstructed unit temporally adjacent to the target unit.
- A merge index may indicate at least one of pieces of motion information of a merge candidate.

Transform unit: A transform unit may be the base unit of residual signal encoding and/or residual signal decoding, such as transform, inverse transform, quantization, dequantization, transform coefficient encoding, and transform coefficient decoding. A single transform unit may be partitioned into multiple sub-transform units having a smaller size. Here, a transform may include one or more of a primary transform and a secondary transform, and an inverse transform may include one or more of a primary inverse transform and a secondary inverse transform.

Scaling: Scaling may denote a procedure for multiplying a factor by a transform coefficient level.

- As a result of scaling of the transform coefficient level, a transform coefficient may be generated. Scaling may also be referred to as "dequantization".

Quantization Parameter (QP): A quantization parameter may be a value used to generate a transform coefficient level for a transform coefficient in quantization. Alternatively, a quantization parameter may also be a value used to generate a transform coefficient by scaling the transform coefficient level in dequantization. Alternatively, a quantization parameter may be a value mapped to a quantization step size.

Delta quantization parameter: A delta quantization parameter may mean a difference value between a predicted quantization parameter and the quantization parameter of a target unit.

Scan: Scan may denote a method for aligning the order of coefficients in a unit, a block or a matrix. For example, a method for aligning a 2D array in the form of a one-dimensional (1D) array may be referred to as a "scan". Alternatively, a method for aligning a 1D array in the form of a 2D array may also be referred to as a "scan" or an "inverse scan".

Transform coefficient: A transform coefficient may be a coefficient value generated as an encoding apparatus performs a transform. Alternatively, the transform coefficient may be a coefficient value generated as a decoding apparatus performs at least one of entropy decoding and dequantization.

- A quantized level or a quantized transform coefficient level generated by applying quantization to a transform coefficient or a residual signal may also be included in the meaning of the term "transform coefficient".

Quantized level: A quantized level may be a value generated as the encoding apparatus performs quantization on a transform coefficient or a residual signal. Alternatively, the quantized level may be a value that is the target of dequantization as the decoding apparatus performs dequantization.

- A quantized transform coefficient level, which is the result of transform and quantization, may also be included in the meaning of a quantized level.

Non-zero transform coefficient: A non-zero transform coefficient may be a transform coefficient having a value other than 0 or a transform coefficient level having a value other than 0. Alternatively, a non-zero transform coefficient may be a transform coefficient, the magnitude of the value of which is not 0, or a transform coefficient level, the magnitude of the value of which is not 0.

Quantization matrix: A quantization matrix may be a matrix used in a quantization procedure or a dequantization procedure so as to improve the subjective image quality or objective image quality of an image. A quantization matrix may also be referred to as a "scaling list".

Quantization matrix coefficient: A quantization matrix coefficient may be each element in a quantization matrix. A quantization matrix coefficient may also be referred to as a "matrix coefficient".

Default matrix: A default matrix may be a quantization matrix predefined by the encoding apparatus and the decoding apparatus.

Non-default matrix: A non-default matrix may be a quantization matrix that is not predefined by the encoding apparatus and the decoding apparatus. The non-default matrix may mean a quantization matrix to be signaled from the encoding apparatus to the decoding apparatus by a user.

Most Probable Mode (MPM): An MPM may denote an intra-prediction mode having a high probability of being used for intra prediction for a target block.

An encoding apparatus and a decoding apparatus may determine one or more MPMs based on coding parameters related to the target block and the attributes of entities related to the target block.

The encoding apparatus and the decoding apparatus may determine one or more MPMs based on the intra-prediction mode of a reference block. The reference block may include multiple reference blocks. The multiple reference blocks may include spatial neighbor blocks adjacent to the left of the target block and spatial neighbor blocks adjacent to the top of the target block. In other words, depending on which intra-prediction modes have been used for the reference blocks, one or more different MPMs may be determined.

- The one or more MPMs may be determined in the same manner both in the encoding apparatus and in the decoding apparatus. That is, the encoding apparatus and the decoding apparatus may share the same MPM list including one or more MPMs.

MPM list: An MPM list may be a list including one or more MPMs. The number of the one or more MPMs in the MPM list may be defined in advance.

MPM indicator: An MPM indicator may indicate an MPM to be used for intra prediction for a target block among one or more MPMs in the MPM list. For example, the MPM indicator may be an index for the MPM list.

- Since the MPM list is determined in the same manner both in the encoding apparatus and in the decoding apparatus, there may be no need to transmit the MPM list itself from the encoding apparatus to the decoding apparatus.
- The MPM indicator may be signaled from the encoding apparatus to the decoding apparatus. As the MPM indicator is signaled, the decoding apparatus may determine the MPM to be used for intra prediction for the target block among the MPMs in the MPM list.

MPM use indicator: An MPM use indicator may indicate whether an MPM usage mode is to be used for prediction for a target block. The MPM usage mode may be a mode in which the MPM to be used for intra prediction for the target block is determined using the MPM list.

- The MPM use indicator may be signaled from the encoding apparatus to the decoding apparatus.

Signaling: "signaling" may denote that information is transferred from an encoding apparatus to a decoding apparatus. Alternatively, "signaling" may mean information is included in in a bitstream or a recoding medium by an encoding apparatus. Information signaled by an encoding apparatus may be used by a decoding apparatus.

- The encoding apparatus may generate encoded information by performing encoding on information to be signaled. The encoded information may be transmitted from the encoding apparatus to the decoding apparatus. The decoding apparatus may obtain information by decoding the transmitted encoded information. Here, the encoding may be entropy encoding, and the decoding may be entropy decoding.
- In embodiments, decoding/encoding of specific information may include signaling of the specific information from the encoding apparatus to the decoding apparatus through a bitstream. In embodiments, "encoding/decoding" may be regarded as "signaling/encoding/decoding".

Selective Signaling: Information may be signaled selectively. A selective signaling FOR information may mean that an encoding apparatus selectively includes information (according to a specific condition) in a bitstream or a recording medium. Selective signaling for information may mean that a decoding apparatus selectively extracts information from a bitstream (according to a specific condition).

Omission of signaling: Signaling for information may be omitted. Omission of signaling for information on information may mean that an encoding apparatus does not include information (according to a specific condition) in a bitstream or a recording medium. Omission of signaling for information may mean that a decoding apparatus does not extract information from a bitstream (according to a specific condition).

Statistic value: A variable, a coding parameter, a constant, etc. may have values that can be calculated. The statistic value may be a value generated by performing calculations (operations) on the values of specified targets. For example, the statistic value may indicate one or more of the average, weighted average, weighted sum, minimum value, maximum value, mode, median value, and interpolated value of the values of a specific variable, a specific coding parameter, a specific constant, or the like.

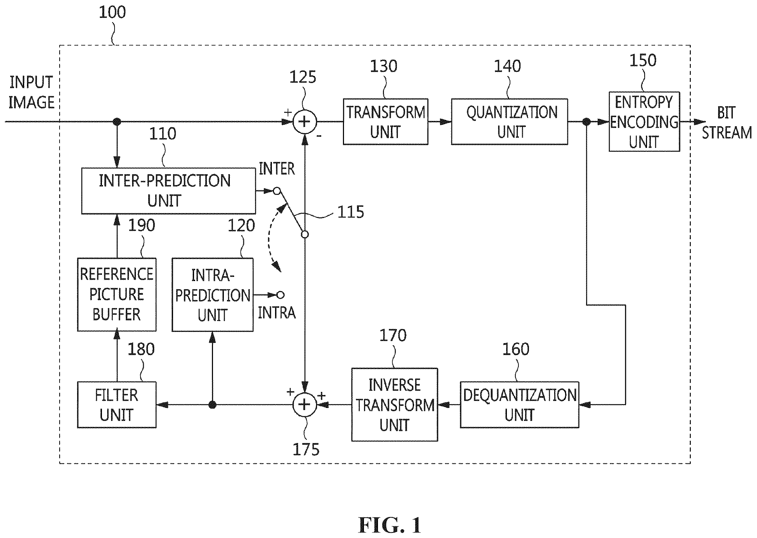

FIG. 1 is a block diagram illustrating the configuration of an embodiment of an encoding apparatus to which the present disclosure is applied.

An encoding apparatus 100 may be an encoder, a video encoding apparatus or an image encoding apparatus. A video may include one or more images (pictures). The encoding apparatus 100 may sequentially encode one or more images of the video.

Referring to FIG. 1, the encoding apparatus 100 includes an inter-prediction unit 110, an intra-prediction unit 120, a switch 115, a subtractor 125, a transform unit 130, a quantization unit 140, an entropy encoding unit 150, a dequantization (inverse quantization) unit 160, an inverse transform unit 170, an adder 175, a filter unit 180, and a reference picture buffer 190.

The encoding apparatus 100 may perform encoding on a target image using an intra mode and/or an inter mode. In other words, a prediction mode for a target block may be one of an intra mode and an inter mode.

Hereinafter, the terms "intra mode", "intra-prediction mode", "intra-picture mode" and "intra-picture prediction mode" may be used to have the same meaning, and may be used interchangeably with each other.

Hereinafter, the terms "inter mode", "inter-prediction mode", "inter-picture mode" and "inter-picture prediction mode" may be used to have the same meaning, and may be used interchangeably with each other.

Hereinafter, the term "image" may indicate only part of an image, or may indicate a block. Also, the processing of an "image" may indicate sequential processing of multiple blocks.

Further, the encoding apparatus 100 may generate a bitstream, including encoded information, via encoding on the target image, and may output and store the generated bitstream. The generated bitstream may be stored in a computer-readable storage medium and may be streamed through a wired and/or wireless transmission medium.

When the intra mode is used as a prediction mode, the switch 115 may switch to the intra mode. When the inter mode is used as a prediction mode, the switch 115 may switch to the inter mode.

The encoding apparatus 100 may generate a prediction block of a target block. Further, after the prediction block has been generated, the encoding apparatus 100 may encode a residual block for the target block using a residual between the target block and the prediction block.

When the prediction mode is the intra mode, the intra-prediction unit 120 may use pixels of previously encoded/decoded neighbor blocks adjacent to the target block as reference samples. The intra-prediction unit 120 may perform spatial prediction on the target block using the reference samples, and may generate prediction samples for the target block via spatial prediction. the prediction samples may mean samples in the prediction block.

The inter-prediction unit 110 may include a motion prediction unit and a motion compensation unit.

When the prediction mode is an inter mode, the motion prediction unit may search a reference image for the area most closely matching the target block in a motion prediction procedure, and may derive a motion vector for the target block and the found area based on the found area. Here, the motion-prediction unit may use a search range as a target area for searching.

The reference image may be stored in the reference picture buffer 190. More specifically, an encoded and/or decoded reference image may be stored in the reference picture buffer 190 when the encoding and/or decoding of the reference image have been processed.

Since a decoded picture is stored, the reference picture buffer 190 may be a Decoded Picture Buffer (DPB).

The motion compensation unit may generate a prediction block for the target block by performing motion compensation using a motion vector. Here, the motion vector may be a two-dimensional (2D) vector used for inter-prediction. Further, the motion vector may indicate an offset between the target image and the reference image.

The motion prediction unit and the motion compensation unit may generate a prediction block by applying an interpolation filter to a partial area of a reference image when the motion vector has a value other than an integer. In order to perform inter prediction or motion compensation, it may be determined which one of a skip mode, a merge mode, an advanced motion vector prediction (AMVP) mode, and a current picture reference mode corresponds to a method for predicting the motion of a PU included in a CU, based on the CU, and compensating for the motion, and inter prediction or motion compensation may be performed depending on the mode.

The subtractor 125 may generate a residual block, which is the differential between the target block and the prediction block. A residual block may also be referred to as a "residual signal".

The residual signal may be the difference between an original signal and a prediction signal. Alternatively, the residual signal may be a signal generated by transforming or quantizing the difference between an original signal and a prediction signal or by transforming and quantizing the difference. A residual block may be a residual signal for a block unit.

The transform unit 130 may generate a transform coefficient by transforming the residual block, and may output the generated transform coefficient. Here, the transform coefficient may be a coefficient value generated by transforming the residual block.

The transform unit 130 may use one of multiple predefined transform methods when performing a transform.

The multiple predefined transform methods may include a Discrete Cosine Transform (DCT), a Discrete Sine Transform (DST), a Karhunen-Loeve Transform (KLT), etc.

The transform method used to transform a residual block may be determined depending on at least one of coding parameters for a target block and/or a neighbor block. For example, the transform method may be determined based on at least one of an inter-prediction mode for a PU, an intra-prediction mode for a PU, the size of a TU, and the shape of a TU. Alternatively, transformation information indicating the transform method may be signaled from the encoding apparatus 100 to the decoding apparatus 200.

When a transform skip mode is used, the transform unit 130 may omit transforming the residual block.

By applying quantization to the transform coefficient, a quantized transform coefficient level or a quantized level may be generated. Hereinafter, in the embodiments, each of the quantized transform coefficient level and the quantized level may also be referred to as a 'transform coefficient'.

The quantization unit 140 may generate a quantized transform coefficient level (i.e., a quantized level or a quantized coefficient) by quantizing the transform coefficient depending on quantization parameters. The quantization unit 140 may output the quantized transform coefficient level that is generated. In this case, the quantization unit 140 may quantize the transform coefficient using a quantization matrix.

The entropy encoding unit 150 may generate a bitstream by performing probability distribution-based entropy encoding based on values, calculated by the quantization unit 140, and/or coding parameter values, calculated in the encoding procedure. The entropy encoding unit 150 may output the generated bitstream.

The entropy encoding unit 150 may perform entropy encoding on information about the pixels of the image and information required to decode the image. For example, the information required to decode the image may include syntax elements or the like.

When entropy encoding is applied, fewer bits may be assigned to more frequently occurring symbols, and more bits may be assigned to rarely occurring symbols. As symbols are represented by means of this assignment, the size of a bit string for target symbols to be encoded may be reduced. Therefore, the compression performance of video encoding may be improved through entropy encoding.

Further, for entropy encoding, the entropy encoding unit 150 may use a coding method such as exponential Golomb, Context-Adaptive Variable Length Coding (CAVLC), or Context-Adaptive Binary Arithmetic Coding (CABAC). For example, the entropy encoding unit 150 may perform entropy encoding using a Variable Length Coding/Code (VLC) table. For example, the entropy encoding unit 150 may derive a binarization method for a target symbol. Further, the entropy encoding unit 150 may derive a probability model for a target symbol/bin. The entropy encoding unit 150 may perform arithmetic coding using the derived binarization method, a probability model, and a context model.

The entropy encoding unit 150 may transform the coefficient of the form of a 2D block into the form of a 1D vector through a transform coefficient scanning method so as to encode a quantized transform coefficient level.

The coding parameters may be information required for encoding and/or decoding. The coding parameters may include information encoded by the encoding apparatus 100 and transferred from the encoding apparatus 100 to a decoding apparatus, and may also include information that may be derived in the encoding or decoding procedure. For example, information transferred to the decoding apparatus may include syntax elements.

The coding parameters may include not only information (or a flag or an index), such as a syntax element, which is encoded by the encoding apparatus and is signaled by the encoding apparatus to the decoding apparatus, but also information derived in an encoding or decoding process. Further, the coding parameters may include information required so as to encode or decode images. For example, the coding parameters may include at least one value, combinations or statistics of a size of a unit/block, a shape/form of a unit/block, a depth of a unit/block, partition information of a unit/block, a partition structure of a unit/block, information indicating whether a unit/block is partitioned in a quad-tree structure, information indicating whether a unit/block is partitioned in a binary tree structure, a partitioning direction of a binary tree structure (horizontal direction or vertical direction), a partitioning form of a binary tree structure (symmetrical partitioning or asymmetrical partitioning), information indicating whether a unit/block is partitioned in a ternary tree structure, a partitioning direction of a ternary tree structure (horizontal direction or vertical direction), a partitioning form of a ternary tree structure (symmetrical partitioning or asymmetrical partitioning, etc.), information indicating whether a unit/block is partitioned in a multi-type tree structure, a combination and a direction (horizontal direction or vertical direction, etc.) of a partitioning of the multi-type tree structure, a partitioning form of a multi-type tree structure (symmetrical partitioning or asymmetrical partitioning, etc.), a partitioning tree (a binary tree or a ternary tree) of the multi-type tree form, a type of a prediction (intra prediction or inter prediction), an intra-prediction mode/direction, an intra luma prediction mode/direction, an intra chroma prediction mode/direction, an intra partitioning information, an inter partitioning information, a coding block partitioning flag, a prediction block partitioning flag, a transform block partitioning flag, a reference sample filtering method, a reference sample filter tap, a reference sample filter coefficient, a prediction block filtering method, a prediction block filter tap, a prediction block filter coefficient, a prediction block boundary filtering method, a prediction block boundary filter tap, a prediction block boundary filter coefficient, an inter-prediction mode, motion information, a motion vector, a motion vector difference, a reference picture index, an inter-prediction direction, an inter-prediction indicator, a prediction list utilization flag, a reference picture list, a reference image, a POC, a motion vector predictor, a motion vector prediction index, a motion vector prediction candidate, a motion vector candidate list, information indicating whether a merge mode is used, a merge index, a merge candidate, a merge candidate list, information indicating whether a skip mode is used, a type of an interpolation filter, a tap of an interpolation filter, a filter coefficient of an interpolation filter, a magnitude of a motion vector, accuracy of motion vector representation, a transform type, a transform size, information indicating whether a first transform is used, information indicating whether an additional (secondary) transform is used, first transform selection information (or a first transform index), secondary transform selection information (or a secondary transform index), information indicating a presence or absence of a residual signal, a coded block pattern, a coded block flag, a quantization parameter, a residual quantization parameter, a quantization matrix, information about an intra-loop filter, information indicating whether an intra-loop filter is applied, a coefficient of an intra-loop filter, a tap of an intra-loop filter, a shape/form of an intra-loop filter, information indicating whether a deblocking filter is applied, a coefficient of a deblocking filter, a tap of a deblocking filter, deblocking filter strength, a shape/form of a deblocking filter, information indicating whether an adaptive sample offset is applied, a value of an adaptive sample offset, a category of an adaptive sample offset, a type of an adaptive sample offset, information indicating whether an adaptive in-loop filter is applied, a coefficient of an adaptive in-loop filter, a tap of an adaptive in-loop filter, a shape/form of an adaptive in-loop filter, a binarization/inverse binarization method, a context model, a context model decision method, a context model update method, information indicating whether a regular mode is performed, information whether a bypass mode is performed, a significant coefficient flag, a last significant coefficient flag, a coding flag for a coefficient group, a position of a last significant coefficient, information indicating whether a value of a coefficient is greater than 1, information indicating whether a value of a coefficient is greater than 2, information indicating whether a value of a coefficient is greater than 3, a remaining coefficient value information, a sign information, a reconstructed luma sample, a reconstructed chroma sample, a context bin, a bypass bin, a residual luma sample, a residual chroma sample, a transform coefficient, a luma transform coefficient, a chroma transform coefficient, a quantized level, a luma quantized level, a chroma quantized level, a transform coefficient level, a transform coefficient level scanning method, a size of a motion vector search region on a side of a decoding apparatus, a shape/form of a motion vector search region on a side of a decoding apparatus, the number of a motion vector search on a side of a decoding apparatus, a size of a CTU, a minimum block size, a maximum block size, a maximum block depth, a minimum block depth, an image display/output order, slice identification information, a slice type, slice partition information, tile group identification information, a tile group type, a tile group partitioning information, tile identification information, a tile type, tile partitioning information, a picture type, bit depth, input sample bit depth, reconstructed sample bit depth, residual sample bit depth, transform coefficient bit depth, quantized level bit depth, information about a luma signal, information about a chroma signal, a color space of a target block and a color space of a residual block. Further, the above-described coding parameter-related information may also be included in the coding parameter. Information used to calculate and/or derive the above-described coding parameter may also be included in the coding parameter. Information calculated or derived using the above-described coding parameter may also be included in the coding parameter.

The first transform selection information may indicate a first transform which is applied to a target block.

The second transform selection information may indicate a second transform which is applied to a target block.

The residual signal may denote the difference between the original signal and a prediction signal. Alternatively, the residual signal may be a signal generated by transforming the difference between the original signal and the prediction signal. Alternatively, the residual signal may be a signal generated by transforming and quantizing the difference between the original signal and the prediction signal. A residual block may be the residual signal for a block.

Here, signaling information may mean that the encoding apparatus 100 includes an entropy-encoded information, generated by performing entropy encoding a flag or an index, in a bitstream, and that the decoding apparatus 200 acquires information by performing entropy decoding on the entropy-encoded information, extracted from the bitstream. Here, the information may comprise a flag, an index, etc.

A signal may mean information to be signaled. Hereinafter, information for an image and a block may be referred to as a signal. Further, hereinafter, the terms "information" and "signal" may be used to have the same meaning and may be used interchangeably with each other. For example, a specific signal may be a signal representing a specific block. An original signal may be a signal representing a target block. A prediction signal may be a signal representing a prediction block. A residual signal may be a signal representing a residual block.

A bitstream may include information based on a specific syntax. The encoding apparatus 100 may generate a bitstream including information depending on a specific syntax. The decoding apparatus 200 may acquire information from the bitstream depending on a specific syntax.

Since the encoding apparatus 100 performs encoding via inter prediction, the encoded target image may be used as a reference image for additional image(s) to be subsequently processed. Therefore, the encoding apparatus 100 may reconstruct or decode the encoded target image and store the reconstructed or decoded image as a reference image in the reference picture buffer 190. For decoding, dequantization and inverse transform on the encoded target image may be processed.

The quantized level may be inversely quantized by the dequantization unit 160, and may be inversely transformed by the inverse transform unit 170. The dequantization unit 160 may generate an inversely quantized coefficient by performing inverse transform for the quantized level. The inverse transform unit 170 may generate a inversely quantized and inversely transformed coefficient by performing inverse transform for the inversely quantized coefficient.

The inversely quantized and inversely transformed coefficient may be added to the prediction block by the adder 175. The inversely quantized and inversely transformed coefficient and the prediction block are added, and then a reconstructed block may be generated. Here, the inversely quantized and/or inversely transformed coefficient may denote a coefficient on which one or more of dequantization and inverse transform are performed, and may also denote a reconstructed residual block. Here, the reconstructed block may mean a recovered block or a decoded block.

The reconstructed block may be subjected to filtering through the filter unit 180. The filter unit 180 may apply one or more of a deblocking filter, a Sample Adaptive Offset (SAO) filter, an Adaptive Loop Filter (ALF), and a Non Local Filter (NLF) to a reconstructed sample, the reconstructed block or a reconstructed picture. The filter unit 180 may also be referred to as an "in-loop filter".

The deblocking filter may eliminate block distortion occurring at the boundaries between blocks in a reconstructed picture. In order to determine whether to apply the deblocking filter, the number of columns or rows which are included in a block and which include pixel(s) based on which it is determined whether to apply the deblocking filter to a target block may be decided on.

When the deblocking filter is applied to the target block, the applied filter may differ depending on the strength of the required deblocking filtering. In other words, among different filters, a filter decided on in consideration of the strength of deblocking filtering may be applied to the target block. When a deblocking filter is applied to a target block, one or more filters of a long-tap filter, a strong filter, a weak filter and Gaussian filter may be applied to the target block depending on the strength of required deblocking filtering.

Also, when vertical filtering and horizontal filtering are performed on the target block, the horizontal filtering and the vertical filtering may be processed in parallel.

The SAO may add a suitable offset to the values of pixels to compensate for coding error. The SAO may perform, for the image to which deblocking is applied, correction that uses an offset in the difference between an original image and the image to which deblocking is applied, on a pixel basis. To perform an offset correction for an image, a method for dividing the pixels included in the image into a certain number of regions, determining a region to which an offset is to be applied, among the divided regions, and applying an offset to the determined region may be used, and a method for applying an offset in consideration of edge information of each pixel may also be used.

The ALF may perform filtering based on a value obtained by comparing a reconstructed image with an original image. After pixels included in an image have been divided into a predetermined groups, filters to be applied to each group may be determined, and filtering may be differentially performed for respective groups. information related to whether to apply an adaptive loop filter may be signaled for each CU. Such information may be signaled for a luma signal. The shapes and filter coefficients of ALFs to be applied to respective blocks may differ for respective blocks. Alternatively, regardless of the features of a block, an ALF having a fixed form may be applied to the block.

A non-local filter may perform filtering based on reconstructed blocks, similar to a target block. A region similar to the target block may be selected from a reconstructed picture, and filtering of the target block may be performed using the statistical properties of the selected similar region. Information about whether to apply a non-local filter may be signaled for a Coding Unit (CU). Also, the shapes and filter coefficients of the non-local filter to be applied to blocks may differ depending on the blocks.

The reconstructed block or the reconstructed image subjected to filtering through the filter unit 180 may be stored in the reference picture buffer 190 as a reference picture. The reconstructed block subjected to filtering through the filter unit 180 may be a part of a reference picture. In other words, the reference picture may be a reconstructed picture composed of reconstructed blocks subjected to filtering through the filter unit 180. The stored reference picture may be subsequently used for inter prediction or a motion compensation.

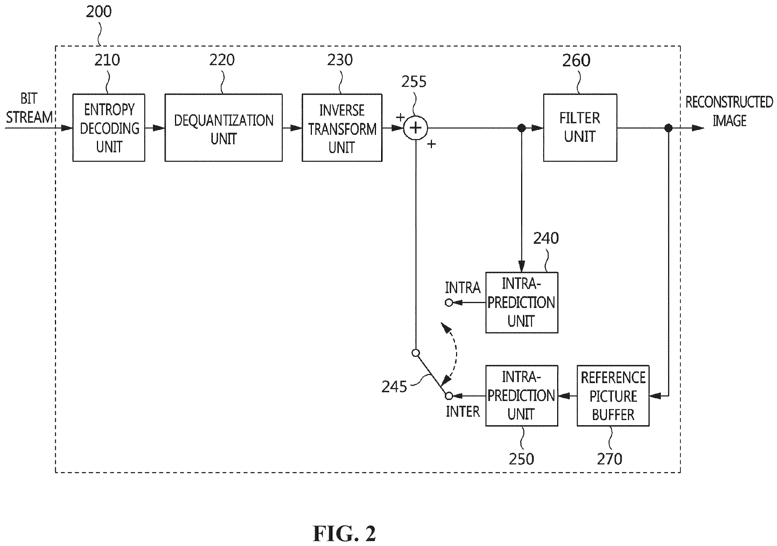

FIG. 2 is a block diagram illustrating the configuration of an embodiment of a decoding apparatus to which the present disclosure is applied.

A decoding apparatus 200 may be a decoder, a video decoding apparatus or an image decoding apparatus.

Referring to FIG. 2, the decoding apparatus 200 may include an entropy decoding unit 210, a dequantization (inverse quantization) unit 220, an inverse transform unit 230, an intra-prediction unit 240, an inter-prediction unit 250, a switch 245 an adder 255, a filter unit 260, and a reference picture buffer 270.

The decoding apparatus 200 may receive a bitstream output from the encoding apparatus 100. The decoding apparatus 200 may receive a bitstream stored in a computer-readable storage medium, and may receive a bitstream that is streamed through a wired/wireless transmission medium.

The decoding apparatus 200 may perform decoding on the bitstream in an intra mode and/or an inter mode. Further, the decoding apparatus 200 may generate a reconstructed image or a decoded image via decoding, and may output the reconstructed image or decoded image.

For example, switching to an intra mode or an inter mode based on the prediction mode used for decoding may be performed by the switch 245. When the prediction mode used for decoding is an intra mode, the switch 245 may be operated to switch to the intra mode. When the prediction mode used for decoding is an inter mode, the switch 245 may be operated to switch to the inter mode.

The decoding apparatus 200 may acquire a reconstructed residual block by decoding the input bitstream, and may generate a prediction block. When the reconstructed residual block and the prediction block are acquired, the decoding apparatus 200 may generate a reconstructed block, which is the target to be decoded, by adding the reconstructed residual block and the prediction block.

The entropy decoding unit 210 may generate symbols by performing entropy decoding on the bitstream based on the probability distribution of a bitstream. The generated symbols may include symbols in a form of a quantized transform coefficient level (i.e., a quantized level or a quantized coefficient). Here, the entropy decoding method may be similar to the above-described entropy encoding method. That is, the entropy decoding method may be the reverse procedure of the above-described entropy encoding method.

The entropy decoding unit 210 may change a coefficient having a one-dimensional (1D) vector form to a 2D block shape through a transform coefficient scanning method in order to decode a quantized transform coefficient level.

For example, the coefficients of the block may be changed to 2D block shapes by scanning the block coefficients using up-right diagonal scanning. Alternatively, which one of up-right diagonal scanning, vertical scanning, and horizontal scanning is to be used may be determined depending on the size and/or the intra-prediction mode of the corresponding block.

The quantized coefficient may be inversely quantized by the dequantization unit 220. The dequantization unit 220 may generate an inversely quantized coefficient by performing dequantization on the quantized coefficient. Further, the inversely quantized coefficient may be inversely transformed by the inverse transform unit 230. The inverse transform unit 230 may generate a reconstructed residual block by performing an inverse transform on the inversely quantized coefficient. As a result of performing dequantization and the inverse transform on the quantized coefficient, the reconstructed residual block may be generated. Here, the dequantization unit 220 may apply a quantization matrix to the quantized coefficient when generating the reconstructed residual block.

When the intra mode is used, the intra-prediction unit 240 may generate a prediction block by performing spatial prediction that uses the pixel values of previously decoded neighbor blocks adjacent to a target block for the target block.

The inter-prediction unit 250 may include a motion compensation unit. Alternatively, the inter-prediction unit 250 may be designated as a "motion compensation unit".

When the inter mode is used, the motion compensation unit may generate a prediction block by performing motion compensation that uses a motion vector and a reference image stored in the reference picture buffer 270 for the target block.

The motion compensation unit may apply an interpolation filter to a partial area of the reference image when the motion vector has a value other than an integer, and may generate a prediction block using the reference image to which the interpolation filter is applied. In order to perform motion compensation, the motion compensation unit may determine which one of a skip mode, a merge mode, an Advanced Motion Vector Prediction (AMVP) mode, and a current picture reference mode corresponds to the motion compensation method used for a PU included in a CU, based on the CU, and may perform motion compensation depending on the determined mode.

The reconstructed residual block and the prediction block may be added to each other by the adder 255. The adder 255 may generate a reconstructed block by adding the reconstructed residual block to the prediction block.

The reconstructed block may be subjected to filtering through the filter unit 260. The filter unit 260 may apply at least one of a deblocking filter, an SAO filter, an ALF, and a NLF to the reconstructed block or the reconstructed image. The reconstructed image may be a picture including the reconstructed block.

The filter unit may output the reconstructed image.

The reconstructed image and/or the reconstructed block subjected to filtering through the filter unit 260 may be stored as a reference picture in the reference picture buffer 270. The reconstructed block subjected to filtering through the filter unit 260 may be a part of the reference picture. In other words, the reference picture may be an image composed of reconstructed blocks subjected to filtering through the filter unit 260. The stored reference picture may be subsequently used for inter prediction or a motion compensation.

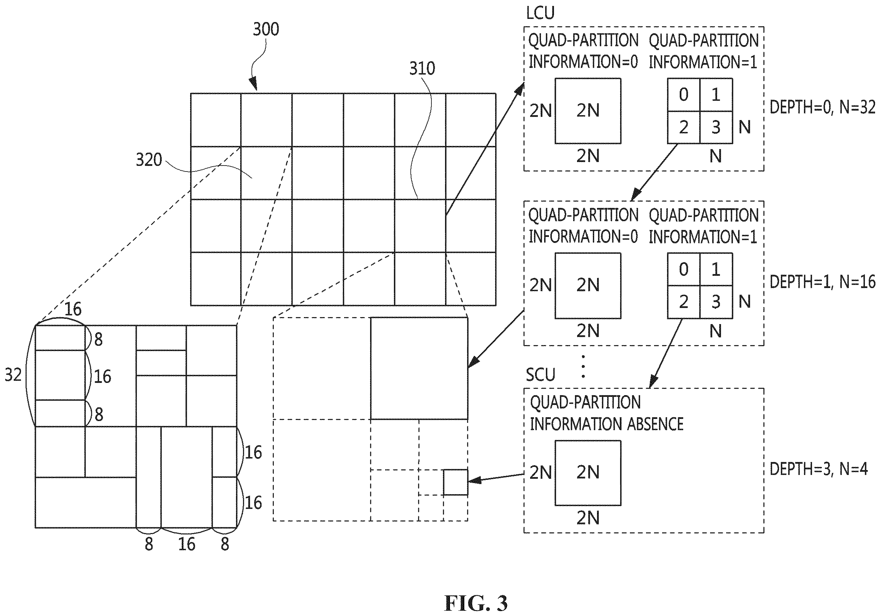

FIG. 3 is a diagram schematically illustrating the partition structure of an image when the image is encoded and decoded.

FIG. 3 may schematically illustrate an example in which a single unit is partitioned into multiple sub-units.

In order to efficiently partition the image, a Coding Unit (CU) may be used in encoding and decoding. The term "unit" may be used to collectively designate 1) a block including image samples and 2) a syntax element. For example, the "partitioning of a unit" may mean the "partitioning of a block corresponding to a unit".

A CU may be used as a base unit for image encoding/decoding. A CU may be used as a unit to which one mode selected from an intra mode and an inter mode in image encoding/decoding is applied. In other words, in image encoding/decoding, which one of an intra mode and an inter mode is to be applied to each CU may be determined.

Further, a CU may be a base unit in prediction, transform, quantization, inverse transform, dequantization, and encoding/decoding of transform coefficients.

Referring to FIG. 3, an image 200 may be sequentially partitioned into units corresponding to a Largest Coding Unit (LCU), and a partition structure may be determined for each LCU. Here, the LCU may be used to have the same meaning as a Coding Tree Unit (CTU).

The partitioning of a unit may mean the partitioning of a block corresponding to the unit. Block partition information may include depth information about the depth of a unit. The depth information may indicate the number of times the unit is partitioned and/or the degree to which the unit is partitioned. A single unit may be hierarchically partitioned into a plurality of sub-units while having depth information based on a tree structure.

Each of partitioned sub-units may have depth information. The depth information may be information indicating the size of a CU. The depth information may be stored for each CU.

Each CU may have depth information. When the CU is partitioned, CUs resulting from partitioning may have a depth increased from the depth of the partitioned CU by 1.

The partition structure may mean the distribution of Coding Units (CUs) to efficiently encode the image in an LCU 310. Such a distribution may be determined depending on whether a single CU is to be partitioned into multiple CUs. The number of CUs generated by partitioning may be a positive integer of 2 or more, including 2, 3, 4, 8, 16, etc.

The horizontal size and the vertical size of each of CUs generated by the partitioning may be less than the horizontal size and the vertical size of a CU before being partitioned, depending on the number of CUs generated by partitioning. For example, the horizontal size and the vertical size of each of CUs generated by the partitioning may be half of the horizontal size and the vertical size of a CU before being partitioned.

Each partitioned CU may be recursively partitioned into four CUs in the same way. Via the recursive partitioning, at least one of the horizontal size and the vertical size of each partitioned CU may be reduced compared to at least one of the horizontal size and the vertical size of the CU before being partitioned.

The partitioning of a CU may be recursively performed up to a predefined depth or a predefined size.

For example, the depth of a CU may have a value ranging from 0 to 3. The size of the CU may range from a size of 64x64 to a size of 8x8 depending on the depth of the CU.

For example, the depth of an LCU 310 may be 0, and the depth of a Smallest Coding Unit (SCU) may be a predefined maximum depth. Here, as described above, the LCU may be the CU having the maximum coding unit size, and the SCU may be the CU having the minimum coding unit size.

Partitioning may start at the LCU 310, and the depth of a CU may be increased by 1 whenever the horizontal and/or vertical sizes of the CU are reduced by partitioning.

For example, for respective depths, a CU that is not partitioned may have a size of 2Nx2N. Further, in the case of a CU that is partitioned, a CU having a size of 2Nx2N may be partitioned into four CUs, each having a size of NxN. The value of N may be halved whenever the depth is increased by 1.

Referring to FIG. 3, an LCU having a depth of 0 may have 64x64 pixels or 64x64 blocks. 0 may be a minimum depth. An SCU having a depth of 3 may have 8x8 pixels or 8x8 blocks. 3 may be a maximum depth. Here, a CU having 64x64 blocks, which is the LCU, may be represented by a depth of 0. A CU having 32x32 blocks may be represented by a depth of 1. A CU having 16x16 blocks may be represented by a depth of 2. A CU having 8x8 blocks, which is the SCU, may be represented by a depth of 3.

Information about whether the corresponding CU is partitioned may be represented by the partition information of the CU. The partition information may be 1-bit information. All CUs except the SCU may include partition information. For example, the value of the partition information of a CU that is not partitioned may be a first value. The value of the partition information of a CU that is partitioned may be a second value. When the partition information indicates whether a CU is partitioned or not, the first value may be "0" and the second value may be "1".

For example, when a single CU is partitioned into four CUs, the horizontal size and vertical size of each of four CUs generated by partitioning may be half the horizontal size and the vertical size of the CU before being partitioned. When a CU having a 32x32 size is partitioned into four CUs, the size of each of four partitioned CUs may be 16x16. When a single CU is partitioned into four CUs, it may be considered that the CU has been partitioned in a quad-tree structure. In other words, it may be considered that a quad-tree partition has been applied to a CU.

For example, when a single CU is partitioned into two CUs, the horizontal size or the vertical size of each of two CUs generated by partitioning may be half the horizontal size or the vertical size of the CU before being partitioned. When a CU having a 32x32 size is vertically partitioned into two CUs, the size of each of two partitioned CUs may be 16x32. When a CU having a 32x32 size is horizontally partitioned into two CUs, the size of each of two partitioned CUs may be 32x16. When a single CU is partitioned into two CUs, it may be considered that the CU has been partitioned in a binary-tree structure. In other words, it may be considered that a binary-tree partition has been applied to a CU.

For example, when a single CU is partitioned (or split) into three CUs, the original CU before being partitioned is partitioned so that the horizontal size or vertical size thereof is divided at a ratio of 1:2:1, thus enabling three sub-CUs to be generated. For example, when a CU having a 16x32 size is horizontally partitioned into three sub-CUs, the three sub-CUs resulting from the partitioning may have sizes of 16x8, 16x16, and 16x8, respectively, in a direction from the top to the bottom. For example, when a CU having a 32x32 size is vertically partitioned into three sub-CUs, the three sub-CUs resulting from the partitioning may have sizes of 8x32, 16x32, and 8x32, respectively, in a direction from the left to the right. When a single CU is partitioned into three CUs, it may be considered that the CU is partitioned in a ternary-tree form. In other words, it may be considered that a ternary-tree partition has been applied to the CU.

Both of quad-tree partitioning and binary-tree partitioning are applied to the LCU 310 of FIG. 3.

In the encoding apparatus 100, a Coding Tree Unit (CTU) having a size of 64x64 may be partitioned into multiple smaller CUs by a recursive quad-tree structure. A single CU may be partitioned into four CUs having the same size. Each CU may be recursively partitioned, and may have a quad-tree structure.

By the recursive partitioning of a CU, an optimal partitioning method that incurs a minimum rate-distortion cost may be selected.

The Coding Tree Unit (CTU) 320 in FIG. 3 is an example of a CTU to which all of a quad-tree partition, a binary-tree partition, and a ternary-tree partition are applied.

As described above, in order to partition a CTU, at least one of a quad-tree partition, a binary-tree partition, and a ternary-tree partition may be applied to the CTU. Partitions may be applied based on specific priority.

For example, a quad-tree partition may be preferentially applied to the CTU. A CU that cannot be partitioned in a quad-tree form any further may correspond to a leaf node of a quad-tree. A CU corresponding to the leaf node of the quad-tree may be a root node of a binary tree and/or a ternary tree. That is, the CU corresponding to the leaf node of the quad-tree may be partitioned in a binary-tree form or a ternary-tree form, or may not be partitioned any further. In this case, each CU, which is generated by applying a binary-tree partition or a ternary-tree partition to the CU corresponding to the leaf node of a quad-tree, is prevented from being subjected again to quad-tree partitioning, thus effectively performing partitioning of a block and/or signaling of block partition information.

The partition of a CU corresponding to each node of a quad-tree may be signaled using quad-partition information. Quad-partition information having a first value (e.g., "1") may indicate that the corresponding CU is partitioned in a quad-tree form. Quad-partition information having a second value (e.g., "0") may indicate that the corresponding CU is not partitioned in a quad-tree form. The quad-partition information may be a flag having a specific length (e.g., 1 bit).

Priority may not exist between a binary-tree partition and a ternary-tree partition. That is, a CU corresponding to the leaf node of a quad-tree may be partitioned in a binary-tree form or a ternary-tree form. Also, the CU generated through a binary-tree partition or a ternary-tree partition may be further partitioned in a binary-tree form or a ternary-tree form, or may not be partitioned any further.

Partitioning performed when priority does not exist between a binary-tree partition and a ternary-tree partition may be referred to as a "multi-type tree partition". That is, a CU corresponding to the leaf node of a quad-tree may be the root node of a multi-type tree. Partitioning of a CU corresponding to each node of the multi-type tree may be signaled using at least one of information indicating whether the CU is partitioned in a multi-type tree, partition direction information, and partition tree information. For partitioning of a CU corresponding to each node of a multi-type tree, information indicating whether partitioning in the multi-type tree is performed, partition direction information, and partition tree information may be sequentially signaled.

For example, information indicating whether a CU is partitioned in a multi-type tree and having a first value (e.g., "1") may indicate that the corresponding CU is partitioned in a multi-type tree form. Information indicating whether a CU is partitioned in a multi-type tree and having a second value (e.g., "0") may indicate that the corresponding CU is not partitioned in a multi-type tree form.

When a CU corresponding to each node of a multi-type tree is partitioned in a multi-type tree form, the corresponding CU may further include partition direction information.

The partition direction information may indicate the partition direction of the multi-type tree partition. Partition direction information having a first value (e.g., "1") may indicate that the corresponding CU is partitioned in a vertical direction. Partition direction information having a second value (e.g., "0") may indicate that the corresponding CU is partitioned in a horizontal direction.

When a CU corresponding to each node of a multi-type tree is partitioned in a multi-type tree form, the corresponding CU may further include partition-tree information. The partition-tree information may indicate the tree that is used for a multi-type tree partition.

For example, partition-tree information having a first value (e.g., "1") may indicate that the corresponding CU is partitioned in a binary-tree form. Partition-tree information having a second value (e.g., "0") may indicate that the corresponding CU is partitioned in a ternary-tree form.

Here, each of the above-described information indicating whether partitioning in the multi-type tree is performed, partition-tree information, and partition direction information may be a flag having a specific length (e.g., 1 bit).

At least one of the above-described quad-partition information, information indicating whether partitioning in the multi-type tree is performed, partition direction information, and partition-tree information may be entropy-encoded and/or entropy-decoded. In order to perform entropy encoding/decoding of such information, information of a neighbor CU adjacent to a target CU may be used.

For example, it may be considered that there is a high probability that the partition form of a left CU and/or an above CU (i.e., partitioning/non-partitioning, a partition tree and/or a partition direction) and the partition form of a target CU will be similar to each other. Therefore, based on the information of a neighbor CU, context information for entropy encoding and/or entropy decoding of the information of the target CU may be derived. Here, the information of the neighbor CU may include at least one of 1) quad-partition information of the neighbor CU, 2) information indicating whether the neighbor CU is partitioned in a multi-type tree, 3) partition direction information of the neighbor CU, and 4) partition-tree information of the neighbor CU.

In another embodiment, of a binary-tree partition and a ternary-tree partition, the binary-tree partition may be preferentially performed. That is, the binary-tree partition may be first applied, and then a CU corresponding to the leaf node of a binary tree may be set to the root node of a ternary tree. In this case, a quad-tree partition or a binary-tree partition may not be performed on the CU corresponding to the node of the ternary tree.

A CU, which is not partitioned any further through a quad-tree partition, a binary-tree partition, and/or a ternary-tree partition, may be the unit of encoding, prediction and/or transform. That is, the CU may not be partitioned any further for prediction and/or transform. Therefore, a partition structure for partitioning the CU into Prediction Units (PUs) and/or Transform Units (TUs), partition information thereof, etc. may not be present in a bitstream.

However, when the size of a CU, which is the unit of partitioning, is greater than the size of a maximum transform block, the CU may be recursively partitioned until the size of the CU becomes less than or equal to the size of the maximum transform block. For example, when the size of a CU is 64x64 and the size of the maximum transform block is 32x32, the CU may be partitioned into four 32x32 blocks so as to perform a transform. For example, when the size of a CU is 32x64 and the size of the maximum transform block is 32x32, the CU may be partitioned into two 32x32 blocks.

In this case, information indicating whether a CU is partitioned for a transform may not be separately signaled. Without signaling, whether a CU is partitioned may be determined via a comparison between the horizontal size (and/or vertical size) of the CU and the horizontal size (and/or vertical size) of the maximum transform block. For example, when the horizontal size of the CU is greater than the horizontal size of the maximum transform block, the CU may be vertically bisected. Further, when the vertical size of the CU is greater than the vertical size of the maximum transform block, the CU may be horizontally bisected.

Information about the maximum size and/or minimum size of a CU and information about the maximum size and/or minimum size of a transform block may be signaled or determined at a level higher than that of the CU. For example, the higher level may be a sequence level, a picture level, a tile level, a tile group level or a slice level. For example, the minimum size of the CU may be set to 4x4. For example, the maximum size of the transform block may be set to 64x64. For example, the maximum size of the transform block may be set to 4x4.

Information about the minimum size of a CU corresponding to the leaf node of a quad-tree (i.e., the minimum size of the quad-tree) and/or information about the maximum depth of a path from the root node to the leaf node of a multi-type tree (i.e., the maximum depth of a multi-type tree) may be signaled or determined at a level higher than that of the CU. For example, the higher level may be a sequence level, a picture level, a slice level, a tile group level or a tile level. Information about the minimum size of a quad-tree and/or information about the maximum depth of a multi-type tree may be separately signaled or determined at each of an intra-slice level and an inter-slice level.

Information about the difference between the size of a CTU and the maximum size of a transform block may be signaled or determined at a level higher than that of a CU. For example, the higher level may be a sequence level, a picture level, a slice level, a tile group level or a tile level. Information about the maximum size of a CU corresponding to each node of a binary tree (i.e., the maximum size of the binary tree) may be determined based on the size and the difference information of a CTU. The maximum size of a CU corresponding to each node of a ternary tree (i.e., the maximum size of the ternary tree) may have different values depending on the type of slice. For example, the maximum size of the ternary tree at an intra-slice level may be 32x32. For example, the maximum size of the ternary tree at an inter-slice level may be 128x128. For example, the minimum size of a CU corresponding to each node of a binary tree (i.e., the minimum size of the binary tree) and/or the minimum size of a CU corresponding to each node of a ternary tree (i.e., the minimum size of the ternary tree) may be set to the minimum size of a CU.

In a further example, the maximum size of a binary tree and/or the maximum size of a ternary tree may be signaled or determined at a slice level. Also, the minimum size of a binary tree and/or the minimum size of a ternary tree may be signaled or determined at a slice level.

Based on the above-described various block sizes and depths, quad-partition information, information indicating whether partitioning in a multi-type tree is performed, partition tree information and/or partition direction information may or may not be present in a bitstream.

For example, when the size of a CU is not greater than the minimum size of a quad-tree, the CU may not include quad-partition information, and quad-partition information of the CU may be inferred as a second value.

For example, when the size of a CU corresponding to each node of a multi-type tree (horizontal size and vertical size) is greater than the maximum size of a binary tree (horizontal size and vertical size) and/or the maximum size of a ternary tree (horizontal size and vertical size), the CU may not be partitioned in a binary-tree form and/or a ternary-tree form. By means of this determination manner, information indicating whether partitioning in a multi-type tree is performed may not be signaled, but may be inferred as a second value.

Alternatively, when the size of a CU corresponding to each node of a multi-type tree (horizontal size and vertical size) is equal to the minimum size of a binary tree (horizontal size and vertical size), or when the size of a CU (horizontal size and vertical size) is equal to twice the minimum size of a ternary tree (horizontal size and vertical size), the CU may not be partitioned in a binary tree form and/or a ternary tree form. By means of this determination manner, information indicating whether partitioning in a multi-type tree is performed may not be signaled, but may be inferred as a second value. The reason for this is that, when a CU is partitioned in a binary tree form and/or a ternary tree form, a CU smaller than the minimum size of the binary tree and/or the minimum size of the ternary tree is generated.

Alternatively, a binary-tree partition or a ternary-tree partition may be limited based on the size of a virtual pipeline data unit (i.e., the size of a pipeline buffer). For example, when a CU is partitioned into sub-CUs unsuitable for the size of a pipeline buffer through a binary-tree partition or a ternary-tree partition, a binary-tree partition or a ternary-tree partition may be limited. The size of the pipeline buffer may be equal to the maximum size of a transform block (e.g., 64x64).

For example, when the size of the pipeline buffer is 64x64, the following partitions may be limited.

- Ternary-tree partition for NxM CU (where N and/or M are 128)
- Horizontal binary-tree partition for 128xN CU (where N <= 64)
- Vertical binary-tree partition for Nx128 CU (where N <= 64)

Alternatively, when the depth of a CU corresponding to each node of a multi-type tree is equal to the maximum depth of the multi-type tree, the CU may not be partitioned in a binary-tree form and/or a ternary-tree form. By means of this determination manner, information indicating whether partitioning in a multi-type tree is performed may not be signaled, but may be inferred as a second value.

Alternatively, information indicating whether partitioning in a multi-type tree is performed may be signaled only when at least one of a vertical binary-tree partition, a horizontal binary-tree partition, a vertical ternary-tree partition, and a horizontal ternary-tree partition is possible for a CU corresponding to each node of a multi-type tree. Otherwise, the CU may not be partitioned in a binary-tree form and/or a ternary-tree form. By means of this determination manner, information indicating whether partitioning in a multi-type tree is performed may not be signaled, but may be inferred as a second value.

Alternatively, partition direction information may be signaled only when both a vertical binary-tree partition and a horizontal binary-tree partition are possible or only when both a vertical ternary-tree partition and a horizontal ternary-tree partition are possible, for a CU corresponding to each node of a multi-type tree. Otherwise, the partition direction information may not be signaled, but may be inferred as a value indicating the direction in which the CU can be partitioned.

Alternatively, partition tree information may be signaled only when both a vertical binary-tree partition and a vertical ternary-tree partition are possible or only when both a horizontal binary-tree partition and a horizontal ternary-tree partition are possible, for a CU corresponding to each node of a multi-type tree. Otherwise, the partition tree information may not be signaled, but may be inferred as a value indicating a tree that can be applied to the partition of the CU.

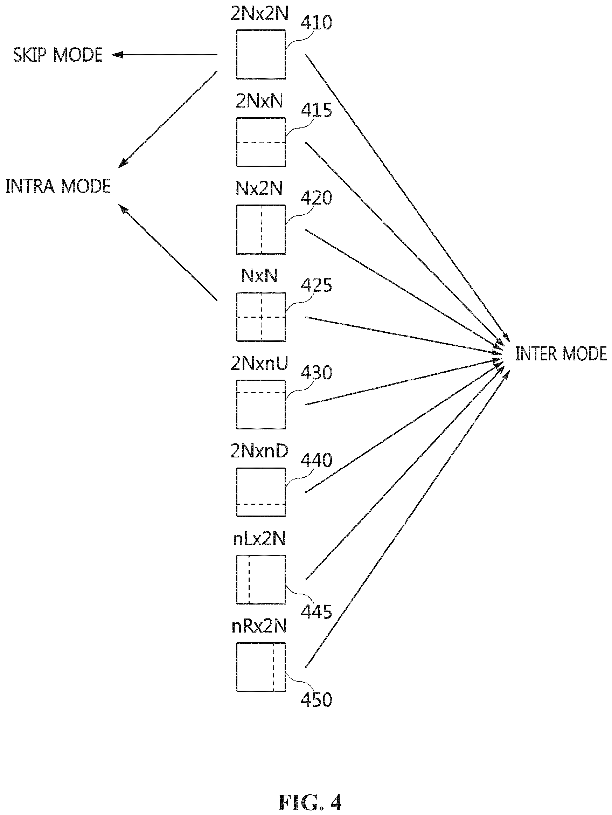

FIG. 4 is a diagram illustrating the form of a Prediction Unit that a Coding Unit can include.

When, among CUs partitioned from an LCU, a CU, which is not partitioned any further, may be divided into one or more Prediction Units (PUs). Such division is also referred to as "partitioning".

A PU may be a base unit for prediction. A PU may be encoded and decoded in any one of a skip mode, an inter mode, and an intra mode. A PU may be partitioned into various shapes depending on respective modes. For example, the target block, described above with reference to FIG. 1, and the target block, described above with reference to FIG. 2, may each be a PU.

A CU may not be split into PUs. When the CU is not split into PUs, the size of the CU and the size of a PU may be equal to each other.

In a skip mode, partitioning may not be present in a CU. In the skip mode, a 2Nx2N mode 410, in which the sizes of a PU and a CU are identical to each other, may be supported without partitioning.

In an inter mode, 8 types of partition shapes may be present in a CU. For example, in the inter mode, the 2Nx2N mode 410, a 2NxN mode 415, an Nx2N mode 420, an NxN mode 425, a 2NxnU mode 430, a 2NxnD mode 435, an nLx2N mode 440, and an nRx2N mode 445 may be supported.

In an intra mode, the 2Nx2N mode 410 and the NxN mode 425 may be supported.

In the 2Nx2N mode 410, a PU having a size of 2Nx2N may be encoded. The PU having a size of 2Nx2N may mean a PU having a size identical to that of the CU. For example, the PU having a size of 2Nx2N may have a size of 64x64, 32x32, 16x16 or 8x8.

In the NxN mode 425, a PU having a size of NxN may be encoded.

For example, in intra prediction, when the size of a PU is 8x8, four partitioned PUs may be encoded. The size of each partitioned PU may be 4x4.

When a PU is encoded in an intra mode, the PU may be encoded using any one of multiple intra-prediction modes. For example, HEVC technology may provide 35 intra-prediction modes, and the PU may be encoded in any one of the 35 intra-prediction modes.

Which one of the 2Nx2N mode 410 and the NxN mode 425 is to be used to encode the PU may be determined based on rate-distortion cost.

The encoding apparatus 100 may perform an encoding operation on a PU having a size of 2Nx2N. Here, the encoding operation may be the operation of encoding the PU in each of multiple intra-prediction modes that can be used by the encoding apparatus 100. Through the encoding operation, the optimal intra-prediction mode for a PU having a size of 2Nx2N may be derived. The optimal intra-prediction mode may be an intra-prediction mode in which a minimum rate-distortion cost occurs upon encoding the PU having a size of 2Nx2N, among multiple intra-prediction modes that can be used by the encoding apparatus 100.

Further, the encoding apparatus 100 may sequentially perform an encoding operation on respective PUs obtained from NxN partitioning. Here, the encoding operation may be the operation of encoding a PU in each of multiple intra-prediction modes that can be used by the encoding apparatus 100. By means of the encoding operation, the optimal intra-prediction mode for the PU having a size of NxN may be derived. The optimal intra-prediction mode may be an intra-prediction mode in which a minimum rate-distortion cost occurs upon encoding the PU having a size of NxN, among multiple intra-prediction modes that can be used by the encoding apparatus 100.

The encoding apparatus 100 may determine which of a PU having a size of 2Nx2N and PUs having sizes of NxN to be encoded based on a comparison of a rate-distortion cost of the PU having a size of 2Nx2N and a rate-distortion costs of the PUs having sizes of NxN.

A single CU may be partitioned into one or more PUs, and a PU may be partitioned into multiple PUs.

For example, when a single PU is partitioned into four PUs, the horizontal size and vertical size of each of four PUs generated by partitioning may be half the horizontal size and the vertical size of the PU before being partitioned. When a PU having a 32x32 size is partitioned into four PUs, the size of each of four partitioned PUs may be 16x16. When a single PU is partitioned into four PUs, it may be considered that the PU has been partitioned in a quad-tree structure.

For example, when a single PU is partitioned into two PUs, the horizontal size or the vertical size of each of two PUs generated by partitioning may be half the horizontal size or the vertical size of the PU before being partitioned. When a PU having a 32x32 size is vertically partitioned into two PUs, the size of each of two partitioned PUs may be 16x32. When a PU having a 32x32 size is horizontally partitioned into two PUs, the size of each of two partitioned PUs may be 32x16. When a single PU is partitioned into two PUs, it may be considered that the PU has been partitioned in a binary-tree structure.

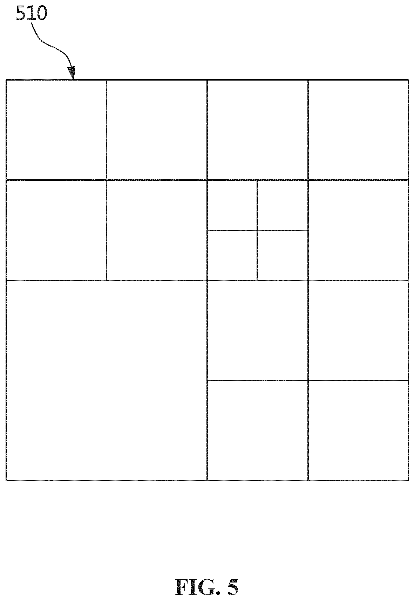

FIG. 5 is a diagram illustrating the form of a Transform Unit that can be included in a Coding Unit.

A Transform Unit (TU) may have a base unit that is used for a procedure, such as transform, quantization, inverse transform, dequantization, entropy encoding, and entropy decoding, in a CU.

A TU may have a square shape or a rectangular shape. A shape of a TU may be determined based on a size and/or a shape of a CU.

Among CUs partitioned from the LCU, a CU which is not partitioned into CUs any further may be partitioned into one or more TUs. Here, the partition structure of a TU may be a quad-tree structure. For example, as shown in FIG. 5, a single CU 510 may be partitioned one or more times depending on the quad-tree structure. By means of this partitioning, the single CU 510 may be composed of TUs having various sizes.

It can be considered that when a single CU is split two or more times, the CU is recursively split. Through splitting, a single CU may be composed of Transform Units (TUs) having various sizes.

Alternatively, a single CU may be split into one or more TUs based on the number of vertical lines and/or horizontal lines that split the CU.

A CU may be split into symmetric TUs or asymmetric TUs. For splitting into asymmetric TUs, information about the size and/or shape of each TU may be signaled from the encoding apparatus 100 to the decoding apparatus 200. Alternatively, the size and/or shape of each TU may be derived from information about the size and/or shape of the CU.

A CU may not be split into TUs. When the CU is not split into TUs, the size of the CU and the size of a TU may be equal to each other.

A single CU may be partitioned into one or more TUs, and a TU may be partitioned into multiple TUs.

For example, when a single TU is partitioned into four TUs, the horizontal size and vertical size of each of four TUs generated by partitioning may be half the horizontal size and the vertical size of the TU before being partitioned. When a TU having a 32x32 size is partitioned into four TUs, the size of each of four partitioned TUs may be 16x16. When a single TU is partitioned into four TUs, it may be considered that the TU has been partitioned in a quad-tree structure.

For example, when a single TU is partitioned into two TUs, the horizontal size or the vertical size of each of two TUs generated by partitioning may be half the horizontal size or the vertical size of the TU before being partitioned. When a TU having a 32x32 size is vertically partitioned into two TUs, the size of each of two partitioned TUs may be 16x32. When a TU having a 32x32 size is horizontally partitioned into two TUs, the size of each of two partitioned TUs may be 32x16. When a single TU is partitioned into two TUs, it may be considered that the TU has been partitioned in a binary-tree structure.

In a way differing from that illustrated in FIG. 5, a CU may be split.

For example, a single CU may be split into three CUs. The horizontal sizes or vertical sizes of the three CUs generated from splitting may be 1/4, 1/2, and 1/4, respectively, of the horizontal size or vertical size of the original CU before being split.

For example, when a CU having a 32x32 size is vertically split into three CUs, the sizes of the three CUs generated from the splitting may be 8x32, 16x32, and 8x32, respectively. In this way, when a single CU is split into three CUs, it may be considered that the CU is split in the form of a ternary tree.

One of exemplary splitting forms, that is, quad-tree splitting, binary tree splitting, and ternary tree splitting, may be applied to the splitting of a CU, and multiple splitting schemes may be combined and used together for splitting of a CU. Here, the case where multiple splitting schemes are combined and used together may be referred to as "complex tree-format splitting".

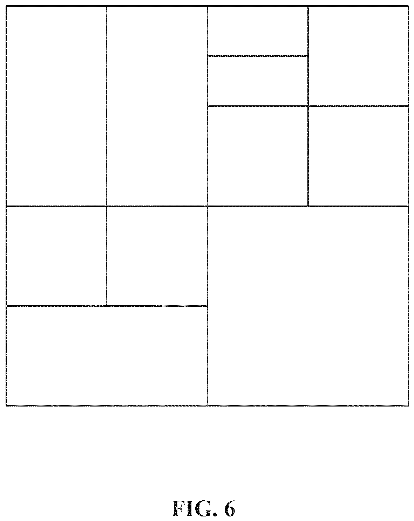

FIG. 6 illustrates the splitting of a block according to an example.

In a video encoding and/or decoding process, a target block may be split, as illustrated in FIG. 6. For example, the target block may be a CU.

For splitting of the target block, an indicator indicating split information may be signaled from the encoding apparatus 100 to the decoding apparatus 200. The split information may be information indicating how the target block is split.

The split information may be one or more of a split flag (hereinafter referred to as "split_flag"), a quad-binary flag (hereinafter referred to as "QB_flag"), a quad-tree flag (hereinafter referred to as "quadtree_flag"), a binary tree flag (hereinafter referred to as "binary tree_flag"), and a binary type flag (hereinafter referred to as "Btype_flag").

"split_flag" may be a flag indicating whether a block is split. For example, a split_flag value of 1 may indicate that the corresponding block is split. A split_flag value of 0 may indicate that the corresponding block is not split.

"QB_flag" may be a flag indicating which one of a quad-tree form and a binary tree form corresponds to the shape in which the block is split. For example, a QB_flag value of 0 may indicate that the block is split in a quad-tree form. A QB_flag value of 1 may indicate that the block is split in a binary tree form. Alternatively, a QB_flag value of 0 may indicate that the block is split in a binary tree form. A QB_flag value of 1 may indicate that the block is split in a quad-tree form.

"quadtree_flag" may be a flag indicating whether a block is split in a quad-tree form. For example, a quadtree_flag value of 1 may indicate that the block is split in a quad-tree form. A quadtree_flag value of 0 may indicate that the block is not split in a quad-tree form.

"binarytree_flag" may be a flag indicating whether a block is split in a binary tree form. For example, a binarytree_flag value of 1 may indicate that the block is split in a binary tree form. A binary tree_flag value of 0 may indicate that the block is not split in a binary tree form.

"Btype_flag" may be a flag indicating which one of a vertical split and a horizontal split corresponds to a split direction when a block is split in a binary tree form. For example, a Btype_flag value of 0 may indicate that the block is split in a horizontal direction. A Btype_flag value of 1 may indicate that a block is split in a vertical direction. Alternatively, a Btype_flag value of 0 may indicate that the block is split in a vertical direction. A Btype_flag value of 1 may indicate that a block is split in a horizontal direction.

For example, the split information of the block in FIG. 6 may be derived by signaling at least one of quadtree_flag, binarytree_flag, and Btype_flag, as shown in the following Table 1.

Table 1

| | quadtree_flag | binarytree_flag | Btype_flag |
|---|---|---|---|
| | 1 | | |

(continued)

| | quadtree_flag | binarytree_flag | Btype_flag |
|---|---|---|---|
| | 0 | | |
| | | 1 | |
| | | | 1 |
| | | 0 | |
| | | 0 | |
| | 1 | | |
| | 0 | | |
| | | 1 | |
| | | | 0 |
| | | 0 | |
| | | 0 | |
| | 0 | | |
| | | 0 | |
| | 0 | | |
| | | 0 | |
| | 0 | | |
| | | 0 | |
| | 0 | | |
| | | 1 | |
| | | | 0 |
| | | 1 | |
| | | | 1 |
| | | 0 | |
| | | 0 | |
| | | 0 | |
| | 0 | | |
| | | 0 | |

For example, the split information of the block in FIG. 6 may be derived by signaling at least one of split_flag, QB_flag and Btype_flag, as shown in the following Table 2.

Table 2

| | split_flag | QB_flag | Btype_flag |
|---|---|---|---|
| | 1 | | |
| | | 0 | |

**EP 4 554 209 A1**

(continued)

| split_flag | QB_flag | Btype_flag |
|---|---|---|
| 1 | | |
| | 1 | |
| | | 1 |
| 0 | | |
| 0 | | |
| 1 | | |
| | 0 | |
| 1 | | |
| | 1 | |
| | | 0 |
| 0 | | |
| 0 | | |
| 0 | | |
| 0 | | |
| 0 | | |
| 1 | | |
| | 1 | |
| | | 0 |
| 1 | | |
| | | 1 |
| 0 | | |
| 0 | | |
| 0 | | |
| 0 | | |

The splitting method may be limited only to a quad-tree or to a binary tree depending on the size and/or shape of the block. When this limitation is applied, split_flag may be a flag indicating whether a block is split in a quad-tree form or a flag indicating whether a block is split in a binary tree form. The size and shape of a block may be derived depending on the depth information of the block, and the depth information may be signaled from the encoding apparatus 100 to the decoding apparatus 200.

When the size of a block falls within a specific range, only splitting in a quad-tree form may be possible. For example, the specific range may be defined by at least one of a maximum block size and a minimum block size at which only splitting in a quad-tree form is possible.

Information indicating the maximum block size and the minimum block size at which only splitting in a quad-tree form is possible may be signaled from the encoding apparatus 100 to the decoding apparatus 200 through a bitstream. Further, this information may be signaled for at least one of units such as a video, a sequence, a picture, a parameter, a tile group, and a slice (or a segment).

Alternatively, the maximum block size and/or the minimum block size may be fixed sizes predefined by the encoding apparatus 100 and the decoding apparatus 200. For example, when the size of a block is above 64x64 and below 256x256, only splitting in a quad-tree form may be possible. In this case, split_flag may be a flag indicating whether splitting in a quad-tree form is performed.

When the size of a block is greater than the maximum size of a transform block, only partitioning in a quad-tree form may be possible. Here, a sub-block resulting from partitioning may be at least one of a CU and a TU.

In this case, split_flag may be a flag indicating whether a CU is partitioned in a quad-tree form.

When the size of a block falls within the specific range, only splitting in a binary tree form or a ternary tree form may be possible. For example, the specific range may be defined by at least one of a maximum block size and a minimum block size at which only splitting in a binary tree form or a ternary tree form is possible.

Information indicating the maximum block size and/or the minimum block size at which only splitting in a binary tree form or splitting in a ternary tree form is possible may be signaled from the encoding apparatus 100 to the decoding apparatus 200 through a bitstream. Further, this information may be signaled for at least one of units such as a sequence, a picture, and a slice (or a segment).

Alternatively, the maximum block size and/or the minimum block size may be fixed sizes predefined by the encoding apparatus 100 and the decoding apparatus 200. For example, when the size of a block is above 8x8 and below 16x16, only splitting in a binary tree form may be possible. In this case, split_flag may be a flag indicating whether splitting in a binary tree form or a ternary tree form is performed.

The above description of partitioning in a quad-tree form may be equally applied to a binary-tree form and/or a ternary-tree form.

The partition of a block may be limited by a previous partition. For example, when a block is partitioned in a specific binary-tree form and then multiple sub-blocks are generated from the partitioning, each sub-block may be additionally partitioned only in a specific tree form. Here, the specific tree form may be at least one of a binary-tree form, a ternary-tree form, and a quad-tree form.

When the horizontal size or vertical size of a partition block is a size that cannot be split further, the above-described indicator may not be signaled.

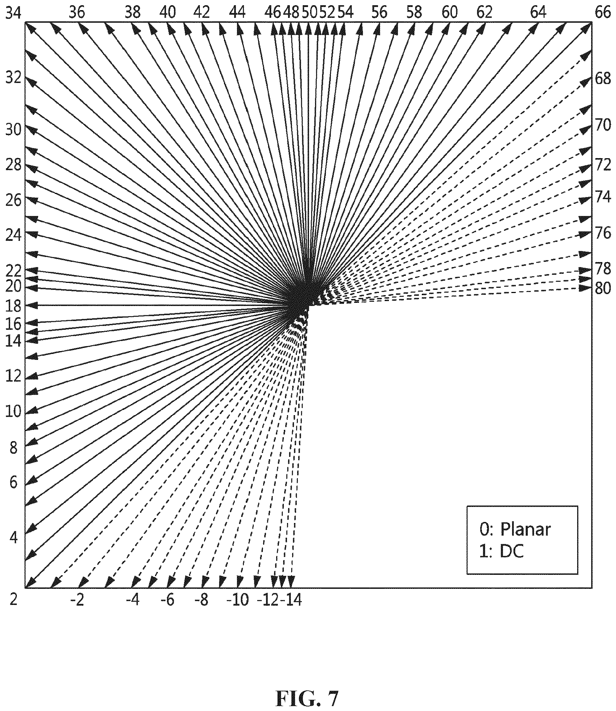

FIG. 7 is a diagram for explaining an embodiment of an intra-prediction process.

Arrows radially extending from the center of the graph in FIG. 7 indicate the prediction directions of intra-prediction modes. Further, numbers appearing near the arrows indicate examples of mode values assigned to intra-prediction modes or to the prediction directions of the intra-prediction modes.

In FIG. 7, A number 0 may represent a Planar mode which is a non-directional intra prediciton mode. A number 1 may represent a DC mode which is a non-directional intra prediciton mode

Intra encoding and/or decoding may be performed using a reference sample of neighbor block of a target block. The neighbor block may be a reconstructed neighbor block. The reference sample may mean a neighbor sample.

For example, intra encoding and/or decoding may be performed using the value of a reference sample which are included in are reconstructed neighbor block or the coding parameters of the reconstructed neighbor block.

The encoding apparatus 100 and/or the decoding apparatus 200 may generate a prediction block by performing intra prediction on a target block based on information about samples in a target image. When intra prediction is performed, the encoding apparatus 100 and/or the decoding apparatus 200 may generate a prediction block for the target block by performing intra prediction based on information about samples in the target image. When intra prediction is performed, the encoding apparatus 100 and/or the decoding apparatus 200 may perform directional prediction and/or non-directional prediction based on at least one reconstructed reference sample.

A prediction block may be a block generated as a result of performing intra prediction. A prediction block may correspond to at least one of a CU, a PU, and a TU.

The unit of a prediction block may have a size corresponding to at least one of a CU, a PU, and a TU. The prediction block may have a square shape having a size of 2Nx2N or NxN. The size of NxN may include sizes of 4x4, 8x8, 16x16, 32x32, 64x64, or the like.

Alternatively, a prediction block may a square block having a size of 2x2, 4x4, 8x8, 16x16, 32x32, 64x64 or the like or a rectangular block having a size of 2x8, 4x8, 2x16, 4x16, 8x16, or the like.

Intra prediction may be performed in consideration of the intra-prediction mode for the target block. The number of intra-prediction modes that the target block can have may be a predefined fixed value, and may be a value determined differently depending on the attributes of a prediction block. For example, the attributes of the prediction block may include the size of the prediction block, the type of prediction block, etc. Further, the attribute of a prediction block may indicate a coding parameter for the prediction block.

For example, the number of intra-prediction modes may be fixed at N regardless of the size of a prediction block. Alternatively, the number of intra-prediction modes may be, for example, 3, 5, 9, 17, 34, 35, 36, 65, 67 or 95.

The intra-prediction modes may be non-directional modes or directional modes.

For example, the intra-prediction modes may include two non-directional modes and 65 directional modes corresponding to numbers 0 to 66 illustrated in FIG. 7.

For example, the intra-prediction modes may include two non-directional modes and 93 directional modes corresponding to numbers -14 to 80 illustrated in FIG. 7 in a case that a specific intra prediciton method is used.

The two non-directional modes may include a DC mode and a planar mode.

A directional mode may be a prediction mode having a specific direction or a specific angle. The directional mode may also be referred to as an "angular mode".

An intra-prediction mode may be represented by at least one of a mode number, a mode value, a mode angle, and a mode direction. In other words, the terms "(mode) number of the intra-prediction mode", "(mode) value of the intra-prediction mode", "(mode) angle of the intra-prediction mode", and "(mode) direction of the intra-prediction mode" may be used to have the same meaning, and may be used interchangeably with each other.

The number of intra-prediction modes may be M. The value of M may be 1 or more. In other words, the number of intra-prediction modes may be M, which includes the number of non-directional modes and the number of directional modes.

The number of intra-prediction modes may be fixed to M regardless of the size and/or the color component of a block. For example, the number of intra-prediction modes may be fixed at any one of 35 and 67 regardless of the size of a block.

Alternatively, the number of intra-prediction modes may differ depending on the shape, the size and/or the type of the color component of a block.

For example, in FIG. 7, directional prediction modes illustrated as dashed lines may be applied only for a prediction for a non-square block.

For example, the larger the size of the block, the greater the number of intra-prediction modes. Alternatively, the larger the size of the block, the smaller the number of intra-prediction modes. When the size of the block is 4x4 or 8x8, the number of intra-prediction modes may be 67. When the size of the block is 16x 16, the number of intra-prediction modes may be 35. When the size of the block is 32x32, the number of intra-prediction modes may be 19. When the size of a block is 64x64, the number of intra-prediction modes may be 7.

For example, the number of intra prediction modes may differ depending on whether a color component is a luma signal or a chroma signal. Alternatively, the number of intra-prediction modes corresponding to a luma component block may be greater than the number of intra-prediction modes corresponding to a chroma component block.

For example, in a vertical mode having a mode value of 50, prediction may be performed in a vertical direction based on the pixel value of a reference sample. For example, in a horizontal mode having a mode value of 18, prediction may be performed in a horizontal direction based on the pixel value of a reference sample.

Even in directional modes other than the above-described mode, the encoding apparatus 100 and the decoding apparatus 200 may perform intra prediction on a target unit using reference samples depending on angles corresponding to the directional modes.

Intra-prediction modes located on a right side with respect to the vertical mode may be referred to as "vertical-right modes'. Intra-prediction modes located below the horizontal mode may be referred to as 'horizontal-below modes'. For example, in FIG. 7, the intra-prediction modes in which a mode value is one of 51, 52, 53, 54, 55, 56, 57, 58, 59, 60, 61, 62, 63, 64, 65, and 66 may be vertical-right modes. Intra-prediction modes in which a mode value is one of 2, 3, 4, 5, 6, 7, 8, 9, 10, 11, 12, 13, 14, 15, 16, and 17 may be horizontal-below modes.

The non-directional mode may include a DC mode and a planar mode. For example, a value of the DC mode may be 1. A value of the planar mode may be 0.

The directional mode may include an angular mode. Among the plurality of the intra prediction modes, remaining modes except for the DC mode and the planar mode may be directional modes.

When the intra-prediction mode is a DC mode, a prediction block may be generated based on the average of pixel values of a plurality of reference pixels. For example, a value of a pixel of a prediction block may be determined based on the average of pixel values of a plurality of reference pixels.

The number of above-described intra-prediction modes and the mode values of respective intra-prediction modes are merely exemplary. The number of above-described intra-prediction modes and the mode values of respective intra-prediction modes may be defined differently depending on the embodiments, implementation and/or requirements.

In order to perform intra prediction on a target block, the step of checking whether samples included in a reconstructed neighbor block can be used as reference samples of a target block may be performed. When a sample that cannot be used as a reference sample of the target block is present among samples in the neighbor block, a value generated via copying and/or interpolation that uses at least one sample value, among the samples included in the reconstructed neighbor block, may replace the sample value of the sample that cannot be used as the reference sample. When the value generated via copying and/or interpolation replaces the sample value of the existing sample, the sample may be used as the reference sample of the target block.

When intra prediction is used, a filter may be applied to at least one of a reference sample and a prediction sample based on at least one of the intra-prediction mode and the size of the target block.

The type of filter to be applied to at least one of a reference sample and a prediction sample may differ depending on at least one of the intra-prediction mode of a target block, the size of the target block, and the shape of the target block. The types of filters may be classified depending on one or more of the length of filter tap, the value of a filter coefficient, and filter strength. The length of filter tap may mean the number of filter taps. Also, the number of filter tap may mean the length of the filter.

When the intra-prediction mode is a planar mode, a sample value of a prediction target block may be generated using a weighted sum of an above reference sample of the target block, a left reference sample of the target block, an above-right reference sample of the target block, and a below-left reference sample of the target block depending on the location of the prediction target sample in the prediction block when the prediction block of the target block is generated.

When the intra-prediction mode is a DC mode, the average of reference samples above the target block and the reference samples to the left of the target block may be used when the prediction block of the target block is generated. Also, filtering using the values of reference samples may be performed on specific rows or specific columns in the target block. The specific rows may be one or more upper rows adjacent to the reference sample. The specific columns may be one or more left columns adjacent to the reference sample.

When the intra-prediction mode is a directional mode, a prediction block may be generated using the above reference samples, left reference samples, above-right reference sample and/or below-left reference sample of the target block.

In order to generate the above-described prediction sample, real-number-based interpolation may be performed.

The intra-prediction mode of the target block may be predicted from intra prediction mode of a neighbor block adjacent to the target block, and the information used for prediction may be entropy-encoded/decoded.

For example, when the intra-prediction modes of the target block and the neighbor block are identical to each other, it may be signaled, using a predefined flag, that the intra-prediction modes of the target block and the neighbor block are identical.

For example, an indicator for indicating an intra-prediction mode identical to that of the target block, among intra-prediction modes of multiple neighbor blocks, may be signaled.

When the intra-prediction modes of the target block and a neighbor block are different from each other, information about the intra-prediction mode of the target block may be encoded and/or decoded using entropy encoding and/or decoding.

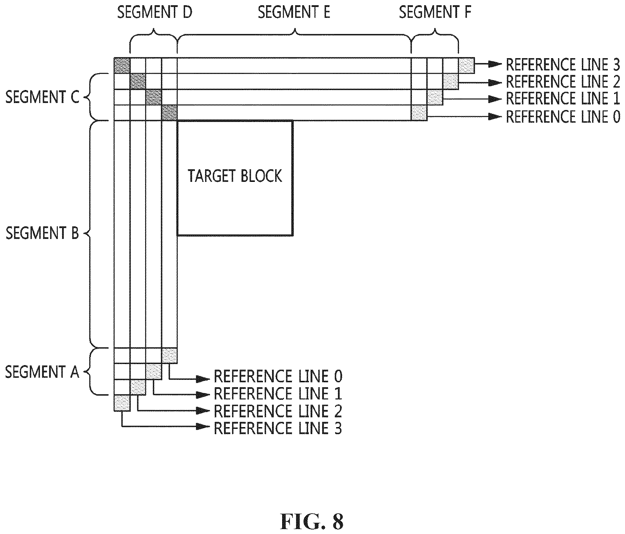

FIG. 8 is a diagram illustrating reference samples used in an intra-prediction procedure.

Reconstructed reference samples used for intra prediction of the target block may include below-left reference samples, left reference samples, an above-left corner reference sample, above reference samples, and above-right reference samples.

For example, the left reference samples may mean reconstructed reference pixels adjacent to the left side of the target block. The above reference samples may mean reconstructed reference pixels adjacent to the top of the target block. The above-left corner reference sample may mean a reconstructed reference pixel located at the above-left corner of the target block. The below-left reference samples may mean reference samples located below a left sample line composed of the left reference samples, among samples located on the same line as the left sample line. The above-right reference samples may mean reference samples located to the right of an above sample line composed of the above reference samples, among samples located on the same line as the above sample line.

When the size of a target block is NxN, the numbers of the below-left reference samples, the left reference samples, the above reference samples, and the above-right reference samples may each be N.

By performing intra prediction on the target block, a prediction block may be generated. The generation of the prediction block may include the determination of the values of pixels in the prediction block. The sizes of the target block and the prediction block may be equal.

The reference samples used for intra prediction of the target block may vary depending on the intra-prediction mode of the target block. The direction of the intra-prediction mode may represent a dependence relationship between the reference samples and the pixels of the prediction block. For example, the value of a specified reference sample may be used as the values of one or more specified pixels in the prediction block. In this case, the specified reference sample and the one or more specified pixels in the prediction block may be the sample and pixels which are positioned in a straight line in the direction of an intra-prediction mode. In other words, the value of the specified reference sample may be copied as the value of a pixel located in a direction reverse to the direction of the intra-prediction mode. Alternatively, the value of a pixel in the prediction block may be the value of a reference sample located in the direction of the intra-prediction mode with respect to the location of the pixel.

In an example, when the intra-prediction mode of a target block is a vertical mode, the above reference samples may be used for intra prediction. When the intra-prediction mode is the vertical mode, the value of a pixel in the prediction block may be the value of a reference sample vertically located above the location of the pixel. Therefore, the above reference samples adjacent to the top of the target block may be used for intra prediction. Furthermore, the values of pixels in one row of the prediction block may be identical to those of the above reference samples.

In an example, when the intra-prediction mode of a target block is a horizontal mode, the left reference samples may be used for intra prediction. When the intra-prediction mode is the horizontal mode, the value of a pixel in the prediction block may be the value of a reference sample horizontally located left to the location of the pixel. Therefore, the left reference samples adjacent to the left of the target block may be used for intra prediction. Furthermore, the values of pixels in one column of the prediction block may be identical to those of the left reference samples.

In an example, when the mode value of the intra-prediction mode of the current block is 34, at least some of the left reference samples, the above-left corner reference sample, and at least some of the above reference samples may be used for intra prediction. When the mode value of the intra-prediction mode is 34, the value of a pixel in the prediction block may be the value of a reference sample diagonally located at the above-left corner of the pixel.

Further, At least a part of the above-right reference samples may be used for intra prediction in a case that an intra prediction mode of which a mode value is a value ranging from 52 to 66.

Further, At least a part of the below-left reference samples may be used for intra prediction in a case that an intra prediction mode of which a mode value is a value ranging from 2 to 17.

Further, the above-left corner reference sample may be used for intra prediction in a case that an intra prediction mode of which a mode value is a value ranging from 19 to 49.

The number of reference samples used to determine the pixel value of one pixel in the prediction block may be either 1, or 2 or more.

As described above, the pixel value of a pixel in the prediction block may be determined depending on the location of the pixel and the location of a reference sample indicated by the direction of the intra-prediction mode. When the location of the pixel and the location of the reference sample indicated by the direction of the intra-prediction mode are integer positions, the value of one reference sample indicated by an integer position may be used to determine the pixel value of the pixel in the prediction block.

When the location of the pixel and the location of the reference sample indicated by the direction of the intra-prediction mode are not integer positions, an interpolated reference sample based on two reference samples closest to the location of the reference sample may be generated. The value of the interpolated reference sample may be used to determine the pixel value of the pixel in the prediction block. In other words, when the location of the pixel in the prediction block and the location of the reference sample indicated by the direction of the intra-prediction mode indicate the location between two reference samples, an interpolated value based on the values of the two samples may be generated.

The prediction block generated via prediction may not be identical to an original target block. In other words, there may be a prediction error which is the difference between the target block and the prediction block, and there may also be a prediction error between the pixel of the target block and the pixel of the prediction block.

Hereinafter, the terms "difference", "error", and "residual" may be used to have the same meaning, and may be used interchangeably with each other.

For example, in the case of directional intra prediction, the longer the distance between the pixel of the prediction block and the reference sample, the greater the prediction error that may occur. Such a prediction error may result in discontinuity between the generated prediction block and neighbor blocks.

In order to reduce the prediction error, filtering for the prediction block may be used. Filtering may be configured to adaptively apply a filter to an area, regarded as having a large prediction error, in the prediction block. For example, the area regarded as having a large prediction error may be the boundary of the prediction block. Further, an area regarded as having a large prediction error in the prediction block may differ depending on the intra-prediction mode, and the characteristics of filters may also differ depending thereon.

As illustrated in FIG. 8, for intra prediction of a target block, at least one of reference line 0 to reference line 3 may be used.

Each reference line in FIG. 8 may indicate a reference sample line comprising one or more reference samples. As the number of the reference line is lower, a line of reference samples closer to a target block may be indicated.

Samples in segment A and segment F may be acquired through padding that uses samples closest to the target block in segment B and segment E instead of being acquired from reconstructed neighbor blocks.

Index information indicating a reference sample line to be used for intra-prediction of the target block may be signaled. The index information may indicate a reference sample line to be used for intra-prediction of the target block, among multiple reference sample lines. For example, the index information may have a value corresponding to any one of 0 to 3.

When the top boundary of the target block is the boundary of a CTU, only reference sample line 0 may be available. Therefore, in this case, index information may not be signaled. When an additional reference sample line other than reference sample line 0 is used, filtering of a prediction block, which will be described later, may not be performed.

In the case of inter-color intra prediction, a prediction block for a target block of a second color component may be generated based on the corresponding reconstructed block of a first color component.

For example, the first color component may be a luma component, and the second color component may be a chroma component.

In order to perform inter-color intra prediction, parameters for a linear model between the first color component and the second color component may be derived based on a template.

The template may include reference samples above the target block (above reference samples) and/or reference samples to the left of the target block (left reference samples), and may include above reference samples and/or left reference samples of a reconstructed block of the first color component, which correspond to the reference samples.

For example, parameters for a linear model may be derived using 1) the value of the sample of a first color component having the maximum value, among the samples in the template, 2) the value of the sample of a second color component corresponding to the sample of the first color component, 3) the value of the sample of a first color component having the minimum value, among the samples in the template, and 4) the value of the sample of a second color component corresponding to the sample of the first color component.

When the parameters for the linear model are derived, a prediction block for the target block may be generated by applying the corresponding reconstructed block to the linear model.

Depending on the image format, sub-sampling may be performed on samples adjacent to the reconstructed block of the first color component and the corresponding reconstructed block of the first color component. For example, when one sample of the second color component corresponds to four samples of the first color component, one corresponding sample may be calculated by performing sub-sampling on the four samples of the first color component. When sub-sampling is performed, derivation of the parameters for the linear model and inter-color intra prediction may be performed based on the sub-sampled corresponding sample.

Information about whether inter-color intra prediction is performed and/or the range of the template may be signaled in an intra-prediction mode.

The target block may be partitioned into two or four sub-blocks in a horizontal direction and/or a vertical direction.

The sub-blocks resulting from the partitioning may be sequentially reconstructed. That is, as intra-prediction is performed on each sub-block, a sub-prediction block for the sub-block may be generated. Also, as dequantization (inverse quantization) and/or an inverse transform are performed on each sub-block, a sub-residual block for the corresponding sub-block may be generated. A reconstructed sub-block may be generated by adding the sub-prediction block to the sub-residual block. The reconstructed sub-block may be used as a reference sample for intra prediction of the subblock having the next priority.

A sub-block may be a block including a specific number (e.g., 16) of samples or more. For example, when the target block is an 8x4 block or a 4x8 block, the target block may be partitioned into two sub-blocks. Also, when the target block is a 4x4 block, the target block cannot be partitioned into sub-blocks. When the target block has another size, the target block may be partitioned into four sub-blocks.

Information about whether intra prediction based on such sub-blocks is performed and/or information about a partition direction (horizontal direction or vertical direction) may be signaled.

Such sub-block-based intra prediction may be limited such that it is performed only when reference sample line 0 is used. When sub-block-based intra-prediction is performed, filtering of a prediction block, which will be described below, may not be performed.

A final prediction block may be generated by performing filtering on the prediction block generated via intra prediction.

Filtering may be performed by applying specific weights to a filtering target sample, which is the target to be filtered, a left reference sample, an above reference sample, and/or an above-left reference sample.

The weights and/or reference samples (e.g., the range of reference samples, the locations of the reference samples, etc.) used for filtering may be determined based on at least one of a block size, an intra-prediction mode, and the location of the filtering target sample in a prediction block.

For example, filtering may be performed only in a specific intra-prediction mode (e.g., DC mode, planar mode, vertical mode, horizontal mode, diagonal mode and/or adjacent diagonal mode).

The adjacent diagonal mode may be a mode having a number obtained by adding k to the number of the diagonal mode, and may be a mode having a number obtained by subtracting k from the number of the diagonal mode. In other words, the number of the adjacent diagonal mode may be the sum of the number of the diagonal mode and k, or may be the difference between the number of the diagonal mode and k. For example, k may be a positive integer of 8 or less.

The intra-prediction mode of a target block may be derived using the intra-prediction mode of a neighboring block present around the target block, and such a derived intra-prediction mode may be entropy-encoded and/or entropy-decoded.

For example, when the intra-prediction mode of the target block is identical to the intra-prediction mode of the neighbor block, information indicating that the intra-prediction mode of the target block is identical to the intra-prediction mode of the neighbor block may be signaled using specific flag information.

Further, for example, indicator information for a neighbor block having an intra-prediction mode identical to the intra-prediction mode of the target block, among intra-prediction modes of multiple neighbor blocks, may be signaled.

For example, when the intra-prediction mode of the target block is different from the intra-prediction mode of the neighbor block, entropy encoding and/or entropy decoding may be performed on information about the intra-prediction mode of the target block by performing entropy encoding and/or entropy decoding based on the intra-prediction mode of the neighbor block.

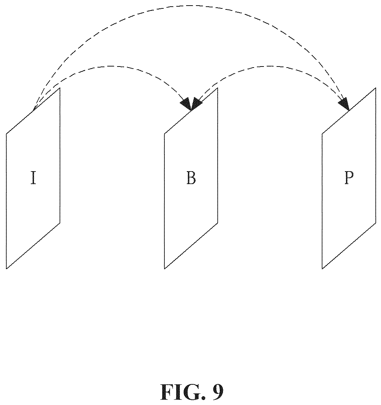

FIG. 9 is a diagram for explaining an embodiment of an inter prediction procedure.

The rectangles shown in FIG. 9 may represent images (or pictures). Further, in FIG. 9, arrows may represent prediction directions. An arrow pointing from a first picture to a second picture means that the second picture refers to the first picture. That is, each image may be encoded and/or decoded depending on the prediction direction.

Images may be classified into an Intra Picture (I picture), a Uni-prediction Picture or Predictive Coded Picture (P picture), and a Bi-prediction Picture or Bipredictive Coded Picture (B picture) depending on the encoding type. Each picture may be encoded and/or decoded depending on the encoding type thereof.

When a target image that is the target to be encoded is an I picture, the target image may be encoded using data contained in the image itself without inter prediction that refers to other images. For example, an I picture may be encoded only via intra prediction.

When a target image is a P picture, the target image may be encoded via inter prediction, which uses reference pictures existing in one direction. Here, the one direction may be a forward direction or a backward direction.

When a target image is a B picture, the image may be encoded via inter prediction that uses reference pictures existing in two directions, or may be encoded via inter prediction that uses reference pictures existing in one of a forward direction and a backward direction. Here, the two directions may be the forward direction and the backward direction.

A P picture and a B picture that are encoded and/or decoded using reference pictures may be regarded as images in which inter prediction is used.

Below, inter prediction in an inter mode according to an embodiment will be described in detail.

Inter prediction or a motion compensation may be performed using a reference image and motion information.

In an inter mode, the encoding apparatus 100 may perform inter prediction and/or motion compensation on a target block. The decoding apparatus 200 may perform inter prediction and/or motion compensation, corresponding to inter prediction and/or motion compensation performed by the encoding apparatus 100, on a target block.

Motion information of the target block may be individually derived by the encoding apparatus 100 and the decoding apparatus 200 during the inter prediction. The motion information may be derived using motion information of a reconstructed neighbor block, motion information of a col block, and/or motion information of a block adjacent to the col block.

For example, the encoding apparatus 100 or the decoding apparatus 200 may perform prediction and/or motion compensation by using motion information of a spatial candidate and/or a temporal candidate as motion information of the target block. The target block may mean a PU and/or a PU partition.

A spatial candidate may be a reconstructed block which is spatially adjacent to the target block.

A temporal candidate may be a reconstructed block corresponding to the target block in a previously reconstructed co-located picture (col picture).

In inter prediction, the encoding apparatus 100 and the decoding apparatus 200 may improve encoding efficiency and decoding efficiency by utilizing the motion information of a spatial candidate and/or a temporal candidate. The motion information of a spatial candidate may be referred to as 'spatial motion information'. The motion information of a temporal candidate may be referred to as 'temporal motion information'.

Below, the motion information of a spatial candidate may be the motion information of a PU including the spatial candidate. The motion information of a temporal candidate may be the motion information of a PU including the temporal candidate. The motion information of a candidate block may be the motion information of a PU including the candidate block.

Inter prediction may be performed using a reference picture.

The reference picture may be at least one of a picture previous to a target picture and a picture subsequent to the target picture. The reference picture may be an image used for the prediction of the target block.

In inter prediction, a region in the reference picture may be specified by utilizing a reference picture index (or refIdx) for indicating a reference picture, a motion vector, which will be described later, etc. Here, the region specified in the reference picture may indicate a reference block.

Inter prediction may select a reference picture, and may also select a reference block corresponding to the target block from the reference picture. Further, inter prediction may generate a prediction block for the target block using the selected reference block.

The motion information may be derived during inter prediction by each of the encoding apparatus 100 and the decoding apparatus 200.

A spatial candidate may be a block 1) which is present in a target picture, 2) which has been previously reconstructed via encoding and/or decoding, and 3) which is adjacent to the target block or is located at the corner of the target block. Here, the "block located at the corner of the target block" may be either a block vertically adjacent to a neighbor block that is horizontally adjacent to the target block, or a block horizontally adjacent to a neighbor block that is vertically adjacent to the target block. Further, "block located at the corner of the target block" may have the same meaning as "block adjacent to the corner of the target block". The meaning of "block located at the corner of the target block" may be included in the meaning of "block adjacent to the target block".

For example, a spatial candidate may be a reconstructed block located to the left of the target block, a reconstructed block located above the target block, a reconstructed block located at the below-left corner of the target block, a reconstructed block located at the above-right corner of the target block, or a reconstructed block located at the above-left corner of the target block.

Each of the encoding apparatus 100 and the decoding apparatus 200 may identify a block present at the location spatially corresponding to the target block in a col picture. The location of the target block in the target picture and the location of the identified block in the col picture may correspond to each other.

Each of the encoding apparatus 100 and the decoding apparatus 200 may determine a col block present at the predefined relative location for the identified block to be a temporal candidate. The predefined relative location may be a location present inside and/or outside the identified block.

For example, the col block may include a first col block and a second col block. When the coordinates of the identified block are (xP, yP) and the size of the identified block is represented by (nPSW, nPSH), the first col block may be a block located at coordinates (xP + nPSW, yP + nPSH). The second col block may be a block located at coordinates (xP + (nPSW >> 1), yP + (nPSH >> 1)). The second col block may be selectively used when the first col block is unavailable.

The motion vector of the target block may be determined based on the motion vector of the col block. Each of the encoding apparatus 100 and the decoding apparatus 200 may scale the motion vector of the col block. The scaled motion vector of the col block may be used as the motion vector of the target block. Further, a motion vector for the motion information of a temporal candidate stored in a list may be a scaled motion vector.

The ratio of the motion vector of the target block to the motion vector of the col block may be identical to the ratio of a first temporal distance to a second temporal distance. The first temporal distance may be the distance between the reference picture and the target picture of the target block. The second temporal distance may be the distance between the reference picture and the col picture of the col block.

The scheme for deriving motion information may change depending on the inter-prediction mode of a target block. For example, as inter-prediction modes applied for inter prediction, an Advanced Motion Vector Predictor (AMVP) mode, a merge mode, a skip mode, a merge mode with a motion vector difference, a sub block merge mode, a triangle partition mode, an inter-intra combined prediction mode, an affine inter mode, a current picture reference mode, etc. may be present. The merge mode may also be referred to as a "motion merge mode". Individual modes will be described in detail below.

1) AMVP mode

When an AMVP mode is used, the encoding apparatus 100 may search a neighbor region of a target block for a similar block. The encoding apparatus 100 may acquire a prediction block by performing prediction on the target block using motion information of the found similar block. The encoding apparatus 100 may encode a residual block, which is the difference between the target block and the prediction block.

1-1) Creation of list of prediction motion vector candidates

When an AMVP mode is used as the prediction mode, each of the encoding apparatus 100 and the decoding apparatus 200 may create a list of prediction motion vector candidates using the motion vector of a spatial candidate, the motion vector of a temporal candidate, and a zero vector. The prediction motion vector candidate list may include one or more prediction motion vector candidates. At least one of the motion vector of a spatial candidate, the motion vector of a temporal candidate, and a zero vector may be determined and used as a prediction motion vector candidate.

Hereinafter, the terms "prediction motion vector (candidate)" and "motion vector (candidate)" may be used to have the same meaning, and may be used interchangeably with each other.

Hereinafter, the terms "prediction motion vector candidate" and "AMVP candidate" may be used to have the same meaning, and may be used interchangeably with each other.

Hereinafter, the terms "prediction motion vector candidate list" and "AMVP candidate list" may be used to have the same meaning, and may be used interchangeably with each other.

Spatial candidates may include a reconstructed spatial neighbor block. In other words, the motion vector of the reconstructed neighbor block may be referred to as a "spatial prediction motion vector candidate".

Temporal candidates may include a col block and a block adjacent to the col block. In other words, the motion vector of the col block or the motion vector of the block adjacent to the col block may be referred to as a "temporal prediction motion vector candidate".

The zero vector may be a (0, 0) motion vector.

The prediction motion vector candidates may be motion vector predictors for predicting a motion vector. Also, in the encoding apparatus 100, each prediction motion vector candidate may be an initial search location for a motion vector.

1-2) Search for motion vectors that use list of prediction motion vector candidates

The encoding apparatus 100 may determine the motion vector to be used to encode a target block within a search range using a list of prediction motion vector candidates. Further, the encoding apparatus 100 may determine a prediction motion vector candidate to be used as the prediction motion vector of the target block, among prediction motion vector candidates present in the prediction motion vector candidate list.

The motion vector to be used to encode the target block may be a motion vector that can be encoded at minimum cost.

Further, the encoding apparatus 100 may determine whether to use the AMVP mode to encode the target block.

1-3) Transmission of inter-prediction information

The encoding apparatus 100 may generate a bitstream including inter-prediction information required for inter prediction. The decoding apparatus 200 may perform inter prediction on the target block using the inter-prediction information of the bitstream.

The inter-prediction information may contain 1) mode information indicating whether an AMVP mode is used, 2) a prediction motion vector index, 3) a Motion Vector Difference (MVD), 4) a reference direction, and 5) a reference picture index.

Hereinafter, the terms "prediction motion vector index" and "AMVP index" may be used to have the same meaning, and may be used interchangeably with each other.

Further, the inter-prediction information may contain a residual signal.

The decoding apparatus 200 may acquire a prediction motion vector index, an MVD, a reference direction, and a reference picture index from the bitstream through entropy decoding when mode information indicates that the AMVP mode is used.

The prediction motion vector index may indicate a prediction motion vector candidate to be used for the prediction of a target block, among prediction motion vector candidates included in the prediction motion vector candidate list.

1-4) Inter prediction in AMVP mode that uses inter-prediction information

The decoding apparatus 200 may derive prediction motion vector candidates using a prediction motion vector candidate list, and may determine the motion information of a target block based on the derived prediction motion vector candidates.

The decoding apparatus 200 may determine a motion vector candidate for the target block, among the prediction motion vector candidates included in the prediction motion vector candidate list, using a prediction motion vector index. The decoding apparatus 200 may select a prediction motion vector candidate, indicated by the prediction motion vector index, from among prediction motion vector candidates included in the prediction motion vector candidate list, as the prediction motion vector of the target block.

The encoding apparatus 100 may generate an entropy-encoded prediction motion vector index by applying entropy encoding to a prediction motion vector index, and may generate a bitstream including the entropy-encoded prediction motion vector index. The entropy-encoded prediction motion vector index may be signaled from the encoding apparatus 100 to the decoding apparatus 200 through a bitstream. The decoding apparatus 200 may extract the entropy-encoded prediction motion vector index from the bitstream, and may acquire the prediction motion vector index by applying entropy decoding to the entropy-encoded prediction motion vector index.

The motion vector to be actually used for inter prediction of the target block may not match the prediction motion vector. In order to indicate the difference between the motion vector to be actually used for inter prediction of the target block and the prediction motion vector, an MVD may be used. The encoding apparatus 100 may derive a prediction motion vector similar to the motion vector to be actually used for inter prediction of the target block so as to use an MVD that is as small as possible.

A Motion Vector Difference (MVD) may be the difference between the motion vector of the target block and the prediction motion vector. The encoding apparatus 100 may calculate the MVD, and may generate an entropy-encoded MVD by applying entropy encoding to the MVD. The encoding apparatus 100 may generate a bitstream including the entropy-encoded MVD.

The MVD may be transmitted from the encoding apparatus 100 to the decoding apparatus 200 through the bitstream. The decoding apparatus 200 may extract the entropy-encoded MVD from the bitstream, and may acquire the MVD by applying entropy decoding to the entropy-encoded MVD.

The decoding apparatus 200 may derive the motion vector of the target block by summing the MVD and the prediction motion vector. In other words, the motion vector of the target block derived by the decoding apparatus 200 may be the sum of the MVD and the motion vector candidate.

Also, the encoding apparatus 100 may generate entropy-encoded MVD resolution information by applying entropy encoding to calculated MVD resolution information, and may generate a bitstream including the entropy-encoded MVD resolution information. The decoding apparatus 200 may extract the entropy-encoded MVD resolution information from the bitstream, and may acquire MVD resolution information by applying entropy decoding to the entropy-encoded MVD resolution information. The decoding apparatus 200 may adjust the resolution of the MVD using the MVD resolution information.

Meanwhile, the encoding apparatus 100 may calculate an MVD based on an affine model. The decoding apparatus 200 may derive the affine control motion vector of the target block through the sum of the MVD and an affine control motion vector candidate, and may derive the motion vector of a sub-block using the affine control motion vector.

The reference direction may indicate a list of reference pictures to be used for prediction of the target block. For example, the reference direction may indicate one of a reference picture list L0 and a reference picture list L1.

The reference direction merely indicates the reference picture list to be used for prediction of the target block, and may not mean that the directions of reference pictures are limited to a forward direction or a backward direction. In other words, each of the reference picture list L0 and the reference picture list L1 may include pictures in a forward direction and/or a backward direction.

That the reference direction is unidirectional may mean that a single reference picture list is used. That the reference direction is bidirectional may mean that two reference picture lists are used. In other words, the reference direction may indicate one of the case where only the reference picture list L0 is used, the case where only the reference picture list L1 is used, and the case where two reference picture lists are used.

The reference picture index may indicate a reference picture that is used for prediction of the target block, among reference pictures present in a reference picture list. The encoding apparatus 100 may generate an entropy-encoded reference picture index by applying entropy encoding to the reference picture index, and may generate a bitstream including the entropy-encoded reference picture index. The entropy-encoded reference picture index may be signaled from the encoding apparatus 100 to the decoding apparatus 200 through the bitstream. The decoding apparatus 200 may extract the entropy-encoded reference picture index from the bitstream, and may acquire the reference picture index by applying entropy decoding to the entropy-encoded reference picture index.

When two reference picture lists are used to predict the target block, a single reference picture index and a single motion vector may be used for each of the reference picture lists. Further, when two reference picture lists are used to predict the target block, two prediction blocks may be specified for the target block. For example, the (final) prediction block of the target block may be generated using the average or weighted sum of the two prediction blocks for the target block.

The motion vector of the target block may be derived by the prediction motion vector index, the MVD, the reference direction, and the reference picture index.

The decoding apparatus 200 may generate a prediction block for the target block based on the derived motion vector and the reference picture index. For example, the prediction block may be a reference block, indicated by the derived motion vector, in the reference picture indicated by the reference picture index.

Since the prediction motion vector index and the MVD are encoded without the motion vector itself of the target block being encoded, the number of bits transmitted from the encoding apparatus 100 to the decoding apparatus 200 may be decreased, and encoding efficiency may be improved.

For the target block, the motion information of reconstructed neighbor blocks may be used. In a specific inter-prediction mode, the encoding apparatus 100 may not separately encode the actual motion information of the target block. The motion information of the target block is not encoded, and additional information that enables the motion information of the target block to be derived using the motion information of reconstructed neighbor blocks may be encoded instead. As the additional information is encoded, the number of bits transmitted to the decoding apparatus 200 may be decreased, and encoding efficiency may be improved.

For example, as inter-prediction modes in which the motion information of the target block is not directly encoded, there may be a skip mode and/or a merge mode. Here, each of the encoding apparatus 100 and the decoding apparatus 200 may use an identifier and/or an index that indicates a unit, the motion information of which is to be used as the motion information of the target unit, among reconstructed neighbor units.

2) Merge mode

As a scheme for deriving the motion information of a target block, there is merging. The term "merging" may mean the merging of the motion of multiple blocks. "Merging" may mean that the motion information of one block is also applied to other blocks. In other words, a merge mode may be a mode in which the motion information of the target block is derived from the motion information of a neighbor block.

When a merge mode is used, the encoding apparatus 100 may predict the motion information of a target block using the motion information of a spatial candidate and/or the motion information of a temporal candidate. The spatial candidate may include a reconstructed spatial neighbor block that is spatially adjacent to the target block. The spatial neighbor block may include a left neighbor block and an above neighbor block. The temporal candidate may include a col block. The terms "spatial candidate" and "spatial merge candidate" may be used to have the same meaning, and may be used interchangeably with each other. The terms "temporal candidate" and "temporal merge candidate" may be used to have the same meaning, and may be used interchangeably with each other.

The encoding apparatus 100 may acquire a prediction block via prediction. The encoding apparatus 100 may encode a residual block, which is the difference between the target block and the prediction block.

<u>2-1) Creation of merge candidate list</u>

When the merge mode is used, each of the encoding apparatus 100 and the decoding apparatus 200 may create a merge candidate list using the motion information of a spatial candidate and/or the motion information of a temporal candidate. The motion information may include 1) a motion vector, 2) a reference picture index, and 3) a reference direction. The reference direction may be unidirectional or bidirectional. The reference direction may mean a inter prediction indicator.

The merge candidate list may include merge candidates. The merge candidates may be motion information. In other words, the merge candidate list may be a list in which pieces of motion information are stored.

The merge candidates may be pieces of motion information of temporal candidates and/or spatial candidates. In other words, the merge candidates list may comprise motion information of a temporal candidates and/or spatial candidates, etc.

Further, the merge candidate list may include new merge candidates generated by a combination of merge candidates that are already present in the merge candidate list. In other words, the merge candidate list may include new motion information generated by a combination of pieces of motion information previously present in the merge candidate list.

Also, a merge candidate list may include history-based merge candidates. The history-based merge candidates may be the motion information of a block which is encoded and/or decoded prior to a target block.

Also, a merge candidate list may include a merge candidate based on an average of two merge candidates.

The merge candidates may be specific modes deriving inter prediction information. The merge candidate may be information indicating a specific mode deriving inter prediction information. Inter prediction information of a target block may be derived according to a specific mode which the merge candidate indicates. Furthermore, the specific mode may include a process of deriving a series of inter prediction information. This specific mode may be an inter prediction information derivation mode or a motion information derivation mode.

The inter prediction information of the target block may be derived according to the mode indicated by the merge candidate selected by the merge index among the merge candidates in the merge candidate list.

For example, the motion information derivation modes in the merge candidate list may be at least one of 1) motion information derivation mode for a subblock unit and 2) an affine motion information derivation mode.

Furthermore, the merge candidate list may include motion information of a zero vector. The zero vector may also be referred to as a "zero-merge candidate".

In other words, pieces of motion information in the merge candidate list may be at least one of 1) motion information of a spatial candidate, 2) motion information of a temporal candidate, 3) motion information generated by a combination of pieces of motion information previously present in the merge candidate list, and 4) a zero vector.

Motion information may include 1) a motion vector, 2) a reference picture index, and 3) a reference direction. The reference direction may also be referred to as an "inter-prediction indicator". The reference direction may be unidirectional or bidirectional. The unidirectional reference direction may indicate L0 prediction or L1 prediction.

The merge candidate list may be created before prediction in the merge mode is performed.

The number of merge candidates in the merge candidate list may be predefined. Each of the encoding apparatus 100 and the decoding apparatus 200 may add merge candidates to the merge candidate list depending on the predefined scheme and predefined priorities so that the merge candidate list has a predefined number of merge candidates. The merge candidate list of the encoding apparatus 100 and the merge candidate list of the decoding apparatus 200 may be made identical to each other using the predefined scheme and the predefined priorities.

Merging may be applied on a CU basis or a PU basis. When merging is performed on a CU basis or a PU basis, the encoding apparatus 100 may transmit a bitstream including predefined information to the decoding apparatus 200. For example, the predefined information may contain 1) information indicating whether to perform merging for individual block partitions, and 2) information about a block with which merging is to be performed, among blocks that are spatial candidates and/or temporal candidates for the target block.

<u>2-2) Search for motion vector that uses merge candidate list</u>

The encoding apparatus 100 may determine merge candidates to be used to encode a target block. For example, the encoding apparatus 100 may perform prediction on the target block using merge candidates in the merge candidate list, and may generate residual blocks for the merge candidates. The encoding apparatus 100 may use a merge candidate that incurs the minimum cost in prediction and in the encoding of residual blocks to encode the target block.

Further, the encoding apparatus 100 may determine whether to use a merge mode to encode the target block.

2-3) Transmission of inter-prediction information

The encoding apparatus 100 may generate a bitstream that includes inter-prediction information required for inter prediction. The encoding apparatus 100 may generate entropy-encoded inter-prediction information by performing entropy encoding on inter-prediction information, and may transmit a bitstream including the entropy-encoded inter-prediction information to the decoding apparatus 200. Through the bitstream, the entropy-encoded inter-prediction information may be signaled to the decoding apparatus 200 by the encoding apparatus 100. The decoding apparatus 200 may extract entropy-encoded inter-prediction information from the bitstream, and may acquire inter-prediction information by applying entropy decoding to the entropy-encoded inter-prediction information.

The decoding apparatus 200 may perform inter prediction on the target block using the inter-prediction information of the bitstream.

The inter-prediction information may contain 1) mode information indicating whether a merge mode is used, 2) a merge index and 3) correction information.

Further, the inter-prediction information may contain a residual signal.

The decoding apparatus 200 may acquire the merge index from the bitstream only when the mode information indicates that the merge mode is used.

The mode information may be a merge flag. The unit of the mode information may be a block. Information about the block may include mode information, and the mode information may indicate whether a merge mode is applied to the block.

The merge index may indicate a merge candidate to be used for the prediction of the target block, among merge candidates included in the merge candidate list. Alternatively, the merge index may indicate a block with which the target block is to be merged, among neighbor blocks spatially or temporally adjacent to the target block.

The encoding apparatus 100 may select a merge candidate having the highest encoding performance among the merge candidates included in the merge candidate list and set a value of the merge index to indicate the selected merge candidate.

Correction information may be information used to correct a motion vector. The encoding apparatus 100 may generate correction information. The decoding apparatus 200 may correct the motion vector of a merge candidate selected by a merge index based on the correction information.

The correction information may include at least one of information indicating whether correction is to be performed, correction direction information, and correction size information. A prediction mode in which the motion vector is corrected based on the signaled correction information may be referred to as a "merge mode having a motion vector difference".

2-4) Inter prediction of merge mode that uses inter-prediction information

The decoding apparatus 200 may perform prediction on the target block using the merge candidate indicated by the merge index, among merge candidates included in the merge candidate list.

The motion vector of the target block may be specified by the motion vector, reference picture index, and reference direction of the merge candidate indicated by the merge index.

3) Skip mode

A skip mode may be a mode in which the motion information of a spatial candidate or the motion information of a temporal candidate is applied to the target block without change. Also, the skip mode may be a mode in which a residual signal is not used. In other words, when the skip mode is used, a reconstructed block may be the same as a prediction block.

The difference between the merge mode and the skip mode lies in whether or not a residual signal is transmitted or used. That is, the skip mode may be similar to the merge mode except that a residual signal is not transmitted or used.

When the skip mode is used, the encoding apparatus 100 may transmit information about a block, the motion information of which is to be used as the motion information of the target block, among blocks that are spatial candidates or temporal candidates, to the decoding apparatus 200 through a bitstream. The encoding apparatus 100 may generate entropy-encoded information by performing entropy encoding on the information, and may signal the entropy-encoded information to the decoding apparatus 200 through a bitstream. The decoding apparatus 200 may extract entropy-encoded information from the bitstream, and may acquire information by applying entropy decoding to the entropy-encoded information.

Further, when the skip mode is used, the encoding apparatus 100 may not transmit other syntax information, such as an MVD, to the decoding apparatus 200. For example, when the skip mode is used, the encoding apparatus 100 may not signal a syntax element related to at least one of an MVD, a coded block flag, and a transform coefficient level to the decoding apparatus 200.

3-1) Creation of merge candidate list

The skip mode may also use a merge candidate list. In other words, a merge candidate list may be used both in the merge mode and in the skip mode. In this aspect, the merge candidate list may also be referred to as a "skip candidate list" or a "merge/skip candidate list".

Alternatively, the skip mode may use an additional candidate list different from that of the merge mode. In this case, in the following description, a merge candidate list and a merge candidate may be replaced with a skip candidate list and a skip candidate, respectively.

The merge candidate list may be created before prediction in the skip mode is performed.

3-2) Search for motion vector that uses merge candidate list

The encoding apparatus 100 may determine the merge candidates to be used to encode a target block. For example, the encoding apparatus 100 may perform prediction on the target block using the merge candidates in a merge candidate list. The encoding apparatus 100 may use a merge candidate that incurs the minimum cost in prediction to encode the target block.

Further, the encoding apparatus 100 may determine whether to use a skip mode to encode the target block.

3-3) Transmission of inter-prediction information

The encoding apparatus 100 may generate a bitstream that includes inter-prediction information required for inter prediction. The decoding apparatus 200 may perform inter prediction on the target block using the inter-prediction information of the bitstream.

The inter-prediction information may include 1) mode information indicating whether a skip mode is used, and 2) a skip index.

The skip index may be identical to the above-described merge index.

When the skip mode is used, the target block may be encoded without using a residual signal. The inter-prediction information may not contain a residual signal. Alternatively, the bitstream may not include a residual signal.

The decoding apparatus 200 may acquire a skip index from the bitstream only when the mode information indicates that the skip mode is used. As described above, a merge index and a skip index may be identical to each other. The decoding apparatus 200 may acquire the skip index from the bitstream only when the mode information indicates that the merge mode or the skip mode is used.

The skip index may indicate the merge candidate to be used for the prediction of the target block, among the merge candidates included in the merge candidate list.

3-4) Inter prediction in skip mode that uses inter-prediction information

The decoding apparatus 200 may perform prediction on the target block using a merge candidate indicated by a skip index, among the merge candidates included in a merge candidate list.

The motion vector of the target block may be specified by the motion vector, reference picture index, and reference direction of the merge candidate indicated by the skip index.

4) Current picture reference mode

The current picture reference mode may denote a prediction mode that uses a previously reconstructed region in a target picture to which a target block belongs.

A motion vector for specifying the previously reconstructed region may be used. Whether the target block has been encoded in the current picture reference mode may be determined using the reference picture index of the target block.

A flag or index indicating whether the target block is a block encoded in the current picture reference mode may be signaled by the encoding apparatus 100 to the decoding apparatus 200. Alternatively, whether the target block is a block encoded in the current picture reference mode may be inferred through the reference picture index of the target block.

When the target block is encoded in the current picture reference mode, the target picture may exist at a fixed location or an arbitrary location in a reference picture list for the target block.

For example, the fixed location may be either a location where a value of the reference picture index is 0 or the last location.

When the target picture exists at an arbitrary location in the reference picture list, an additional reference picture index indicating such an arbitrary location may be signaled by the encoding apparatus 100 to the decoding apparatus 200.

5) subblock merge mode

A sub-block merge mode may be a mode in which motion information is derived from the sub-block of a CU.

When the subblock merge mode is applied, a subblock merge candidate list may be generated using the motion information of a co-located subblock (col-subblock) of a target subblock (i.e., a subblock-based temporal merge candidate) in a reference image and/or an affine control point motion vector merge candidate.

6) Triangle partition mode

In a triangle partition mode, a target block may be partitioned in a diagonal direction, and sub-target blocks resulting from partitioning may be generated. For each sub-target block, motion information of the corresponding sub-target block may be derived, and a prediction sample for each sub-target block may be derived using the derived motion information. A prediction sample for the target block may be derived through a weighted sum of the prediction samples for the sub-target blocks resulting from the partitioning.

7) Combination inter-intra prediction mode

The combination inter-intra prediction mode may be a mode in which a prediction sample for a target block is derived using a weighted sum of a prediction sample generated via inter-prediction and a prediction sample generated via intra-prediction.

In the above-described modes, the decoding apparatus 200 may autonomously correct derived motion information. For example, the decoding apparatus 200 may search a specific area for motion information having the minimum sum of Absolute Differences (SAD) based on a reference block indicated by the derived motion information, and may derive the found motion information as corrected motion information.

In the above-described modes, the decoding apparatus 200 may compensate for the prediction sample derived via inter prediction using an optical flow.

In the above-described AMVP mode, merge mode, skip mode, etc., motion information to be used for prediction of the target block may be specified among pieces of motion information in a list using the index information of the list.

In order to improve encoding efficiency, the encoding apparatus 100 may signal only the index of an element that incurs the minimum cost in inter prediction of the target block, among elements in the list. The encoding apparatus 100 may encode the index, and may signal the encoded index.

Therefore, the above-described lists (i.e. the prediction motion vector candidate list and the merge candidate list) must be able to be derived by the encoding apparatus 100 and the decoding apparatus 200 using the same scheme based on the same data. Here, the same data may include a reconstructed picture and a reconstructed block. Further, in order to specify an element using an index, the order of the elements in the list must be fixed.

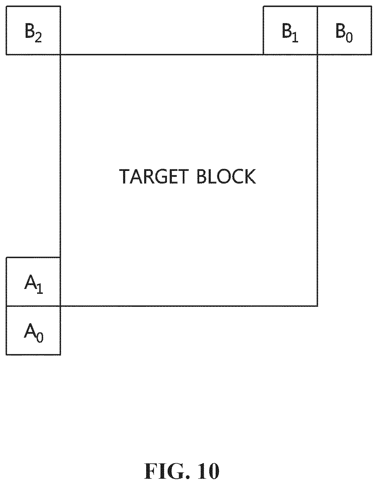

FIG. 10 illustrates spatial candidates according to an embodiment.

In FIG. 10, the locations of spatial candidates are illustrated.

The large block in the center of the drawing may denote a target block. Five small blocks may denote spatial candidates.

The coordinates of the target block may be (xP, yP), and the size of the target block may be represented by (nPSW, nPSH).

Spatial candidate $A_0$ may be a block adjacent to the below-left corner of the target block. $A_0$ may be a block that occupies pixels located at coordinates (xP - 1, yP + nPSH).

Spatial candidate $A_1$ may be a block adjacent to the left of the target block. $A_1$ may be a lowermost block, among blocks adjacent to the left of the target block. Alternatively, $A_1$ may be a block adjacent to the top of $A_0$. $A_1$ may be a block that occupies pixels located at coordinates (xP - 1, yP + nPSH - 1).

Spatial candidate $B_0$ may be a block adjacent to the above-right corner of the target block. $B_0$ may be a block that occupies pixels located at coordinates (xP + nPSW, yP - 1).

Spatial candidate $B_1$ may be a block adjacent to the top of the target block. $B_1$ may be a rightmost block, among blocks adjacent to the top of the target block. Alternatively, $B_1$ may be a block adjacent to the left of $B_0$. $B_1$ may be a block that occupies pixels located at coordinates (xP + nPSW - 1, yP - 1).

Spatial candidate $B_2$ may be a block adjacent to the above-left corner of the target block. $B_2$ may be a block that occupies pixels located at coordinates (xP - 1, yP - 1).

Determination of availability of spatial candidate and temporal candidate

In order to include the motion information of a spatial candidate or the motion information of a temporal candidate in a list, it must be determined whether the motion information of the spatial candidate or the motion information of the temporal candidate is available.

Hereinafter, a candidate block may include a spatial candidate and a temporal candidate.

For example, the determination may be performed by sequentially applying the following steps 1) to 4).

Step 1) When a PU including a candidate block is out of the boundary of a picture, the availability of the candidate block may be set to "false". The expression "availability is set to false" may have the same meaning as "set to be unavailable".

Step 2) When a PU including a candidate block is out of the boundary of a slice, the availability of the candidate block may be set to "false". When the target block and the candidate block are located in different slices, the availability of the candidate block may be set to "false".

Step 3) When a PU including a candidate block is out of the boundary of a tile, the availability of the candidate block may be set to "false". When the target block and the candidate block are located in different tiles, the availability of the candidate block may be set to "false".

Step 4) When the prediction mode of a PU including a candidate block is an intra-prediction mode, the availability of the candidate block may be set to "false". When a PU including a candidate block does not use inter prediction, the availability of the candidate block may be set to "false".

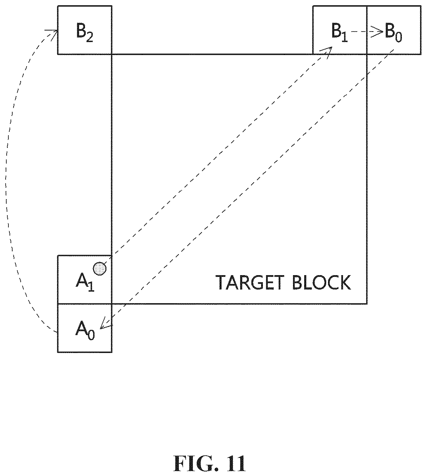

FIG. 11 illustrates the order of addition of motion information of spatial candidates to a merge list according to an embodiment.

As shown in FIG. 11, when pieces of motion information of spatial candidates are added to a merge list, the order of $A_1$, $B_1$, $B_0$, $A_0$, and $B_2$ may be used. That is, pieces of motion information of available spatial candidates may be added to the merge list in the order of $A_1$, $B_1$, $B_0$, $A_0$, and $B_2$.

Method for deriving merge list in merge mode and skip mode

As described above, the maximum number of merge candidates in the merge list may be set. The set maximum number is indicated by "N". The set number may be transmitted from the encoding apparatus 100 to the decoding apparatus 200. The slice header of a slice may include N. In other words, the maximum number of merge candidates in the merge list for the target block of the slice may be set by the slice header. For example, the value of N may be basically 5.

Pieces of motion information (i.e., merge candidates) may be added to the merge list in the order of the following steps 1) to 4).

Step 1) Among spatial candidates, available spatial candidates may be added to the merge list. Pieces of motion information of the available spatial candidates may be added to the merge list in the order illustrated in FIG. 11. Here, when the motion information of an available spatial candidate overlaps other motion information already present in the merge list, the motion information may not be added to the merge list. The operation of checking whether the corresponding motion information overlaps other motion information present in the list may be referred to in brief as an "overlap check".

The maximum number of pieces of motion information that are added may be N.

Step 2) When the number of pieces of motion information in the merge list is less than N and a temporal candidate is available, the motion information of the temporal candidate may be added to the merge list. Here, when the motion information of the available temporal candidate overlaps other motion information already present in the merge list, the motion information may not be added to the merge list.

Step 3) When the number of pieces of motion information in the merge list is less than N and the type of a target slice is "B", combined motion information generated by combined bidirectional prediction (bi-prediction) may be added to the merge list.

The target slice may be a slice including a target block.

The combined motion information may be a combination of L0 motion information and L1 motion information. L0 motion information may be motion information that refers only to a reference picture list L0. L1 motion information may be motion information that refers only to a reference picture list L1.

In the merge list, one or more pieces of L0 motion information may be present. Further, in the merge list, one or more pieces of L1 motion information may be present.

The combined motion information may include one or more pieces of combined motion information. When the combined motion information is generated, L0 motion information and L1 motion information, which are to be used for generation, among the one or more pieces of L0 motion information and the one or more pieces of L1 motion information, may be predefined. One or more pieces of combined motion information may be generated in a predefined order via combined bidirectional prediction, which uses a pair of different pieces of motion information in the merge list. One of the pair of different pieces of motion information may be L0 motion information and the other of the pair may be L1 motion information.

For example, combined motion information that is added with the highest priority may be a combination of L0 motion information having a merge index of 0 and L1 motion information having a merge index of 1. When motion information having a merge index of 0 is not L0 motion information or when motion information having a merge index of 1 is not L1 motion information, the combined motion information may be neither generated nor added. Next, the combined motion information that is added with the next priority may be a combination of L0 motion information, having a merge index of 1, and L1 motion information, having a merge index of 0. Subsequent detailed combinations may conform to other combinations of video encoding/decoding fields.

Here, when the combined motion information overlaps other motion information already present in the merge list, the combined motion information may not be added to the merge list.

Step 4) When the number of pieces of motion information in the merge list is less than N, motion information of a zero vector may be added to the merge list.

The zero-vector motion information may be motion information for which the motion vector is a zero vector.

The number of pieces of zero-vector motion information may be one or more. The reference picture indices of one or more pieces of zero-vector motion information may be different from each other. For example, the value of the reference picture index of first zero-vector motion information may be 0. The value of the reference picture index of second zero-vector motion information may be 1.

The number of pieces of zero-vector motion information may be identical to the number of reference pictures in the reference picture list.

The reference direction of zero-vector motion information may be bidirectional. Both of the motion vectors may be zero vectors. The number of pieces of zero-vector motion information may be the smaller one of the number of reference pictures in the reference picture list L0 and the number of reference pictures in the reference picture list L1. Alternatively, when the number of reference pictures in the reference picture list L0 and the number of reference pictures in the reference picture list L1 are different from each other, a reference direction that is unidirectional may be used for a reference picture index that may be applied only to a single reference picture list.

The encoding apparatus 100 and/or the decoding apparatus 200 may sequentially add the zero-vector motion information to the merge list while changing the reference picture index.

When zero-vector motion information overlaps other motion information already present in the merge list, the zero-vector motion information may not be added to the merge list.

The order of the above-described steps 1) to 4) is merely exemplary, and may be changed. Further, some of the above steps may be omitted depending on predefined conditions.

Method for deriving prediction motion vector candidate list in AMVP mode

The maximum number of prediction motion vector candidates in a prediction motion vector candidate list may be predefined. The predefined maximum number is indicated by N. For example, the predefined maximum number may be 2.

Pieces of motion information (i.e. prediction motion vector candidates) may be added to the prediction motion vector candidate list in the order of the following steps 1) to 3).

Step 1) Available spatial candidates, among spatial candidates, may be added to the prediction motion vector candidate list. The spatial candidates may include a first spatial candidate and a second spatial candidate.

The first spatial candidate may be one of $A_0$, $A_1$, scaled $A_0$, and scaled $A_1$. The second spatial candidate may be one of $B_0$, $B_1$, $B_2$, scaled $B_0$, scaled $B_1$, and scaled $B_2$.

Pieces of motion information of available spatial candidates may be added to the prediction motion vector candidate list in the order of the first spatial candidate and the second spatial candidate. In this case, when the motion information of an available spatial candidate overlaps other motion information already present in the prediction motion vector candidate list, the motion information may not be added to the prediction motion vector candidate list. In other words, when the value of N is 2, if the motion information of a second spatial candidate is identical to the motion information of a first spatial candidate, the motion information of the second spatial candidate may not be added to the prediction motion vector candidate list.

The maximum number of pieces of motion information that are added may be N.

Step 2) When the number of pieces of motion information in the prediction motion vector candidate list is less than N and a temporal candidate is available, the motion information of the temporal candidate may be added to the prediction motion vector candidate list. In this case, when the motion information of the available temporal candidate overlaps other motion information already present in the prediction motion vector candidate list, the motion information may not be added to the prediction motion vector candidate list.

Step 3) When the number of pieces of motion information in the prediction motion vector candidate list is less than N, zero-vector motion information may be added to the prediction motion vector candidate list.

The zero-vector motion information may include one or more pieces of zero-vector motion information. The reference picture indices of the one or more pieces of zero-vector motion information may be different from each other.

The encoding apparatus 100 and/or the decoding apparatus 200 may sequentially add pieces of zero-vector motion information to the prediction motion vector candidate list while changing the reference picture index.

When zero-vector motion information overlaps other motion information already present in the prediction motion vector candidate list, the zero-vector motion information may not be added to the prediction motion vector candidate list.

The description of the zero-vector motion information, made above in connection with the merge list, may also be applied to zero-vector motion information. A repeated description thereof will be omitted.

The order of the above-described steps 1) to 3) is merely exemplary, and may be changed. Further, some of the steps may be omitted depending on predefined conditions.

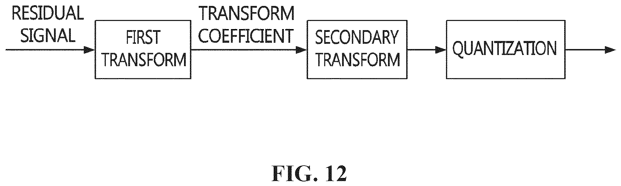

FIG. 12 illustrates a transform and quantization process according to an example.

As illustrated in FIG. 12, quantized levels may be generated by performing a transform and/or quantization process on a residual signal.

A residual signal may be generated as the difference between an original block and a prediction block. Here, the prediction block may be a block generated via intra prediction or inter prediction.

The residual signal may be transformed into a signal in a frequency domain through a transform procedure that is a part of a quantization procedure.

A transform kernel used for a transform may include various DCT kernels, such as Discrete Cosine Transform (DCT) type 2 (DCT-II) and Discrete Sine Transform (DST) kernels.

These transform kernels may perform a separable transform or a twodimensional (2D) non-separable transform on the residual signal. The separable transform may be a transform indicating that a one-dimensional (1D) transform is performed on the residual signal in each of a horizontal direction and a vertical direction.

The DCT type and the DST type, which are adaptively used for a 1D transform, may include DCT-V, DCT-VIII, DST-I, and DST-VII in addition to DCT-II, as shown in each of the following Table 3 and the following table 4.

Table 3

| Transform set | Transform candidates |
|---|---|
| 0 | DST-VII, DCT-VIII |
| 1 | DST-VII, DST-I |
| 2 | DST-VII, DCT-V |

Table 4

| Transform set | Transform candidates |
|---|---|
| 0 | DST-VII, DCT-VIII, DST-I |
| 1 | DST-VII, DST-I, DCT-VIII |
| 2 | DST-VII, DCT-V, DST-I |

As shown in Table 3 and Table 4, when a DCT type or a DST type to be used for a transform is derived, transform sets may be used. Each transform set may include multiple transform candidates. Each transform candidate may be a DCT type or a DST type.

The following Table 5 shows examples of a transform set to be applied to a horizontal direction and a transform set to be applied to a vertical direction depending on intra-prediction modes.

Table 5

| Intra-prediction mode | 0 | 1 | 2 | 3 | 4 | 5 | 6 | 7 | 8 | 9 |
|---|---|---|---|---|---|---|---|---|---|---|
| Vertical transform set | 2 | 1 | 0 | 1 | 0 | 1 | 0 | 1 | 0 | 1 |
| Horizontal transform set | 2 | 1 | 0 | 1 | 0 | 1 | 0 | 1 | 0 | 1 |
| **Intra-prediction mode** | **10** | **11** | **12** | **13** | **14** | **15** | **16** | **17** | **18** | **19** |
| Vertical transform set | 0 | 1 | 0 | 1 | 0 | 0 | 0 | 0 | 0 | 0 |
| Horizontal transform set | 0 | 1 | 0 | 1 | 2 | 2 | 2 | 2 | 2 | 2 |

(continued)

| Intra-prediction mode | 20 | 21 | 22 | 23 | 24 | 25 | 26 | 27 | 28 | 29 |
|---|---|---|---|---|---|---|---|---|---|---|
| Vertical transform set | 0 | 0 | 0 | 1 | 0 | 1 | 0 | 1 | 0 | 1 |
| Horizontal transform set | 2 | 2 | 2 | 1 | 0 | 1 | 0 | 1 | 0 | 1 |
| Intra-prediction mode | 30 | 31 | 32 | 33 | 34 | 35 | 36 | 37 | 38 | 39 |
| Vertical transform set | 0 | 1 | 0 | 1 | 0 | 1 | 0 | 1 | 0 | 1 |
| Horizontal transform set | 0 | 1 | 0 | 1 | 0 | 1 | 0 | 1 | 0 | 1 |
| Intra-prediction mode | 40 | 41 | 42 | 43 | 44 | 45 | 46 | 47 | 48 | 49 |
| Vertical transform set | 0 | 1 | 0 | 1 | 0 | 1 | 2 | 2 | 2 | 2 |
| Horizontal transform set | 0 | 1 | 0 | 1 | 0 | 1 | 0 | 0 | 0 | 0 |
| Intra-prediction mode | 50 | 51 | 52 | 53 | 54 | 55 | 56 | 57 | 58 | 59 |
| Vertical transform set | 2 | 2 | 2 | 2 | 2 | 1 | 0 | 1 | 0 | 1 |
| Horizontal transform set | 0 | 0 | 0 | 0 | 0 | 1 | 0 | 1 | 0 | 1 |
| Intra-prediction mode | 60 | 61 | 62 | 63 | 64 | 65 | 66 | | | |
| Vertical transform set | 0 | 1 | 0 | 1 | 0 | 1 | 0 | | | |
| Horizontal transform set | 0 | 1 | 0 | 1 | 0 | 1 | 0 | | | |

In Table 5, numbers of vertical transform sets and horizontal transform sets that are to be applied to the horizontal direction of a residual signal depending on the intra-prediction modes of the target block are indicated.

As exemplified in FIGS. 4 and 5, transform sets to be applied to the horizontal direction and the vertical direction may be predefined depending on the intra-prediction mode of the target block. The encoding apparatus 100 may perform a transform and an inverse transform on the residual signal using a transform included in the transform set corresponding to the intra-prediction mode of the target block. Further, the decoding apparatus 200 may perform an inverse transform on the residual signal using a transform included in the transform set corresponding to the intra-prediction mode of the target block.

In the transform and inverse transform, transform sets to be applied to the residual signal may be determined, as exemplified in Tables 3, 4, and 5, and may not be signaled. Transform indication information may be signaled from the encoding apparatus 100 to the decoding apparatus 200. The transform indication information may be information indicating which one of multiple transform candidates included in the transform set to be applied to the residual signal is used.

For example, when the size of the target block is 64x64 or less, transform sets, each having three transforms, may be configured depending on the intra-prediction mode. An optimal transform method may be selected from among a total of nine multiple transform methods resulting from combinations of three transforms in a horizontal direction and three transforms in a vertical direction. Through such an optimal transform method, the residual signal may be encoded and/or decoded, and thus coding efficiency may be improved.

Here, information indicating which one of transforms belonging to each transform set has been used for at least one of a vertical transform and a horizontal transform may be entropy-encoded and/or -decoded. Here, truncated unary binarization may be used to encode and/or decode such information.

As described above, methods using various transforms may be applied to a residual signal generated via intra prediction or inter prediction.

The transform may include at least one of a first transform and a secondary transform. A transform coefficient may be generated by performing the first transform on the residual signal, and a secondary transform coefficient may be generated by performing the secondary transform on the transform coefficient.

The first transform may be referred to as a "primary transform". Further, the first transform may also be referred to as an "Adaptive Multiple Transform (AMT) scheme". AMT may mean that, as described above, different transforms are applied to respective 1D directions (i.e. a vertical direction and a horizontal direction).

A secondary transform may be a transform for improving energy concentration on a transform coefficient generated by the first transform. Similar to the first transform, the secondary transform may be a separable transform or a non-separable transform. Such a non-separable transform may be a Non-Separable Secondary Transform (NSST).

The first transform may be performed using at least one of predefined multiple transform methods. For example, the predefined multiple transform methods may include a Discrete Cosine Transform (DCT), a Discrete Sine Transform (DST), a Karhunen-Loeve Transform (KLT), etc.

Further, a first transform may be a transform having various transform types depending on a kernel function that defines a Discrete Cosine Transform (DCT) or a Discrete Sine Transform (DST).

For example, the transform type may be determined based at least one of 1) a prediction mode of a target block (for example, one of an intra prediction and an inter prediction), 2) a size of a target block, 3) a shape of a target block, 4) an intra prediction mode of a target block, 5) a component of a target block (for example, one of a luma component an a chroma component), and 6) a partitioning type applied to a target block (for example, one of a Quad Tree, a Binary Tree and a Ternary Tree).

For example, the first transform may include transforms, such as DCT-2, DCT-5, DCT-7, DST-7, DST-1, DST-8, and DCT-8 depending on the transform kernel presented in the following Table 6. In the following Table 6, various transform types and transform kernel functions for Multiple Transform Selection (MTS) are exemplified.

MTS may refer to the selection of combinations of one or more DCT and/or DST kernels so as to transform a residual signal in a horizontal and/or vertical direction.

Table 6

| Transform type | Transform kernel function $T_i(j)$ |
|---|---|
| DCT-2 | $T_i(j) = \omega_0 \cdot \sqrt{\dfrac{2}{N}} \cdot \cos\left(\dfrac{\pi \cdot i \cdot (2j+1)}{2N}\right) \quad \omega_0 = \sqrt{\dfrac{2}{N}} \ (i=0) \ or \ 1 \ (otherwise)$ where |
| DST-7 | $T_i(j) = \sqrt{\dfrac{4}{2N+1}} \cdot \sin\left(\dfrac{\pi \cdot (2j+1) \cdot (j+1)}{2N+1}\right)$ |
| DCT-5 | $T_i(j) = \omega_0 \cdot \omega_1 \cdot \sqrt{\dfrac{2}{2N-1}} \cdot \cos\left(\dfrac{2\pi \cdot i \cdot j}{2N+1}\right) \quad \omega_{0/1} = \sqrt{\dfrac{2}{N}} \ (i \ or \ j = 0) \ or \ 1 \ (otherwise)$ where |
| DCT-8 | $T_i(j) = \sqrt{\dfrac{4}{2N+1}} \cdot \cos\left(\dfrac{\pi \cdot (2j+1) \cdot (2j+1)}{4N+2}\right)$ |
| DST-1 | $T_i(j) = \sqrt{\dfrac{2}{N+1}} \cdot \sin\left(\dfrac{\pi \cdot (i+1) \cdot (j+1)}{N+1}\right)$ |

In Table 6, i and j may be integer values that are equal to or greater than 0 and are less than or equal to N-1.

The secondary transform may be performed on the transform coefficient generated by performing the first transform.

As in the first transform, transform sets may also be defined in a secondary transform. The methods for deriving and/or determining the above-described transform sets may be applied not only to the first transform but also to the secondary transform.

The first transform and the secondary transform may be determined for a specific target.

For example, a first transform and a secondary transform may be applied to signal components corresponding to one or more of a luminance (luma) component and a chrominance (chroma) component. Whether to apply the first transform and/or the secondary transform may be determined depending on at least one of coding parameters for a target block and/or a neighbor block. For example, whether to apply the first transform and/or the secondary transform may be determined depending on the size and/or shape of the target block.

In the encoding apparatus 100 and the decoding apparatus 200, transform information indicating the transform method to be used for the target may be derived by utilizing specified information.

For example, the transform information may include a transform index to be used for a primary transform and/or a secondary transform. Alternatively, the transform information may indicate that a primary transform and/or a secondary transform are not used.

For example, when the target of a primary transform and a secondary transform is a target block, the transform method(s) to be applied to the primary transform and/or the secondary transform indicated by the transform information may be determined depending on at least one of coding parameters for the target block and/or blocks neighbor the target block.

Alternatively, transform information indicating a transform method for a specific target may be signaled from the encoding apparatus 100 to the decoding apparatus 200.

For example, for a single CU, whether to use a primary transform, an index indicating the primary transform, whether to use a secondary transform, and an index indicating the secondary transform may be derived as the transform information by the decoding apparatus 200. Alternatively, for a single CU, the transform information, which indicates whether to use a primary transform, an index indicating the primary transform, whether to use a secondary transform, and an index indicating the secondary transform, may be signaled.

The quantized transform coefficient (i.e. the quantized levels) may be generated by performing quantization on the result, generated by performing the first transform and/or the secondary transform, or on the residual signal.

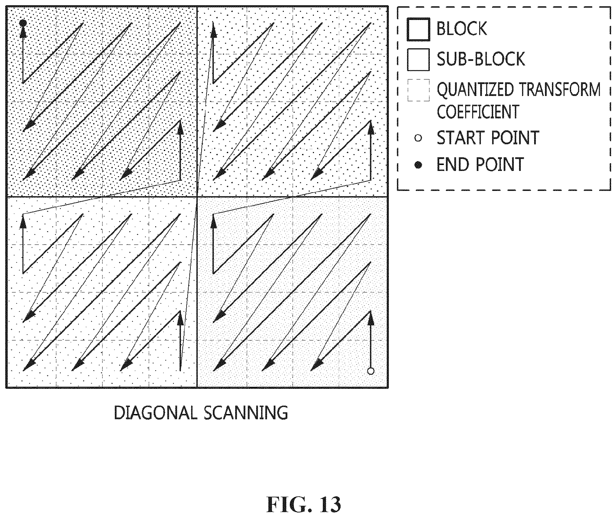

FIG. 13 illustrates diagonal scanning according to an example.

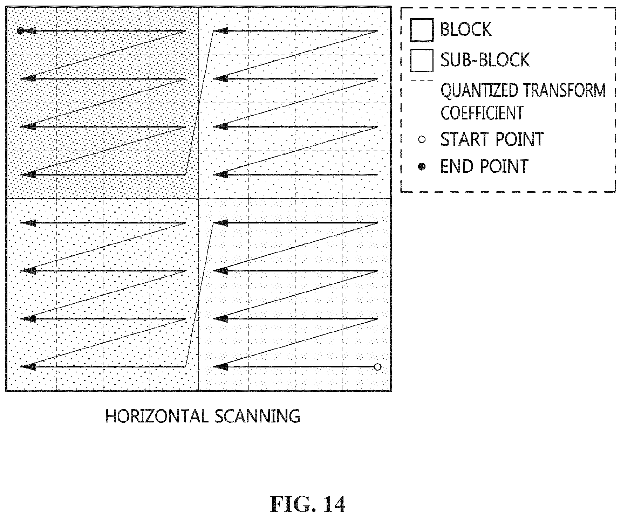

FIG. 14 illustrates horizontal scanning according to an example.

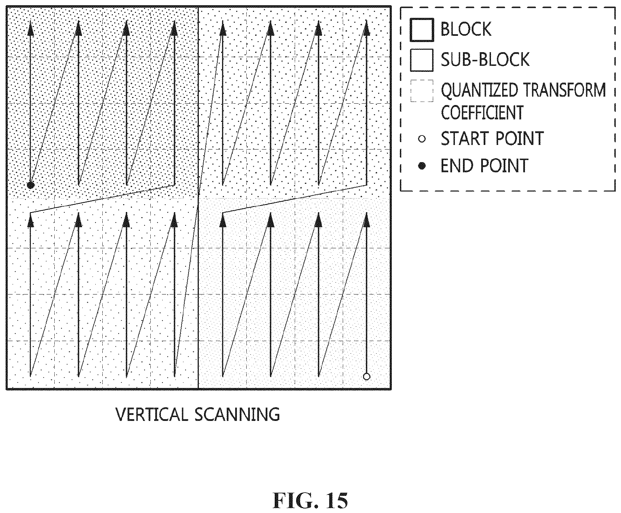

FIG. 15 illustrates vertical scanning according to an example.

Quantized transform coefficients may be scanned via at least one of (upright) diagonal scanning, vertical scanning, and horizontal scanning depending on at least one of an intra-prediction mode, a block size, and a block shape. The block may be a Transform Unit (TU).

Each scanning may be initiated at a specific start point, and may be terminated at a specific end point.

For example, quantized transform coefficients may be changed to 1D vector forms by scanning the coefficients of a block using diagonal scanning of FIG. 13. Alternatively, horizontal scanning of FIG. 14 or vertical scanning of FIG. 15, instead of diagonal scanning, may be used depending on the size and/or intra-prediction mode of a block.

Vertical scanning may be the operation of scanning 2D block-type coefficients in a column direction. Horizontal scanning may be the operation of scanning 2D block-type coefficients in a row direction.

In other words, which one of diagonal scanning, vertical scanning, and horizontal scanning is to be used may be determined depending on the size and/or inter-prediction mode of the block.

As illustrated in FIGS. 13, 14, and 15, the quantized transform coefficients may be scanned along a diagonal direction, a horizontal direction or a vertical direction.

The quantized transform coefficients may be represented by block shapes. Each block may include multiple sub-blocks. Each sub-block may be defined depending on a minimum block size or a minimum block shape.

In scanning, a scanning sequence depending on the type or direction of scanning may be primarily applied to sub-blocks. Further, a scanning sequence depending on the direction of scanning may be applied to quantized transform coefficients in each sub-block.

For example, as illustrated in FIGS. 13, 14, and 15, when the size of a target block is 8x8, quantized transform coefficients may be generated through a first transform, a secondary transform, and quantization on the residual signal of the target block. Therefore, one of three types of scanning sequences may be applied to four 4x4 sub-blocks, and quantized transform coefficients may also be scanned for each 4x4 sub-block depending on the scanning sequence.

The encoding apparatus 100 may generate entropy-encoded quantized transform coefficients by performing entropy encoding on scanned quantized transform coefficients, and may generate a bitstream including the entropy-encoded quantized transform coefficients.

The decoding apparatus 200 may extract the entropy-encoded quantized transform coefficients from the bitstream, and may generate quantized transform coefficients by performing entropy decoding on the entropy-encoded quantized transform coefficients. The quantized transform coefficients may be aligned in the form of a 2D block via inverse scanning. Here, as the method of inverse scanning, at least one of upright diagonal scanning, vertical scanning, and horizontal scanning may be performed.

In the decoding apparatus 200, dequantization may be performed on the quantized transform coefficients. A secondary inverse transform may be performed on the result generated by performing dequantization depending on whether to perform the secondary inverse transform. Further, a first inverse transform may be performed on the result generated by performing the secondary inverse transform depending on whether the first inverse transform is to be performed. A reconstructed residual signal may be generated by performing the first inverse transform on the result generated by performing the secondary inverse transform.

For a luma component which is reconstructed via intra prediction or inter prediction, inverse mapping having a dynamic range may be performed before in-loop filtering.

The dynamic range may be divided into 16 equal pieces, and mapping functions for respective pieces may be signaled. Such a mapping function may be signaled at a slice level or a tile group level.

An inverse mapping function for performing inverse mapping may be derived based on the mapping function.

In-loop filtering, the storage of a reference picture, and motion compensation may be performed in an inverse mapping area.

A prediction block generated via inter prediction may be changed to a mapped area through mapping using a mapping function, and the changed prediction block may be used to generate a reconstructed block. However, since intra prediction is performed in the mapped area, a prediction block generated via intra prediction may be used to generate a reconstructed block without requiring mapping and/or inverse mapping.

For example, when the target block is a residual block of a chroma component, the residual block may be changed to an inversely mapped area by scaling the chroma component of the mapped area.

Whether scaling is available may be signaled at a slice level or a tile group level.

For example, scaling may be applied only to the case where mapping is available for a luma component and where the partitioning of the luma component and the partitioning of the chroma component follow the same tree structure.

Scaling may be performed based on the average of the values of samples in a luma prediction block, which corresponds to a chroma prediction block. Here, when the target block uses inter prediction, the luma prediction block may mean a mapped luma prediction block.

A value required for scaling may be derived by referring to a look-up table using the index of a piece to which the average of sample values of the luma prediction block belongs.

The residual block may be changed to an inversely mapped area by scaling the residual block using a finally derived value. Thereafter, for the block of a chroma component, reconstruction, intra prediction, inter prediction, in-loop filtering, and the storage of a reference picture may be performed in the inversely mapped area.

For example, information indicating whether the mapping and/or inverse mapping of a luma component and a chroma component are available may be signaled through a sequence parameter set.

A prediction block for the target block may be generated based on a block vector. The block vector may indicate displacement between the target block and a reference block. The reference block may be a block in a target image.

In this way, a prediction mode in which the prediction block is generated by referring to the target image may be referred to as an "Intra-Block Copy (IBC) mode".

An IBC mode may be applied to a CU having a specific size. For example, the IBC mode may be applied to an MxN CU. Here, M and N may be less than or equal to 64.

The IBC mode may include a skip mode, a merge mode, an AMVP mode, etc. In the case of the skip mode or the merge mode, a merge candidate list may be configured, and a merge index is signaled, and thus a single merge candidate may be specified among merge candidates present in the merge candidate list. The block vector of the specified merge candidate may be used as the block vector of the target block.

In the case of the AMVP mode, a differential block vector may be signaled. Also, a prediction block vector may be derived from the left neighbor block and the above neighbor block of the target block. Further, an index indicating which neighbor block is to be used may be signaled.

A prediction block in the IBC mode may be included in a target CTU or a left CTU, and may be limited to a block within a previously reconstructed area. For example, the value of a block vector may be limited so that a prediction block for a target block is located in a specific area. The specific area may be an area defined by three 64x64 blocks that are encoded and/or decoded prior to a 64x64 block including the target block. The value of the block vector is limited in this way, and thus memory consumption and device complexity caused by the implementation of the IBC mode may be decreased.

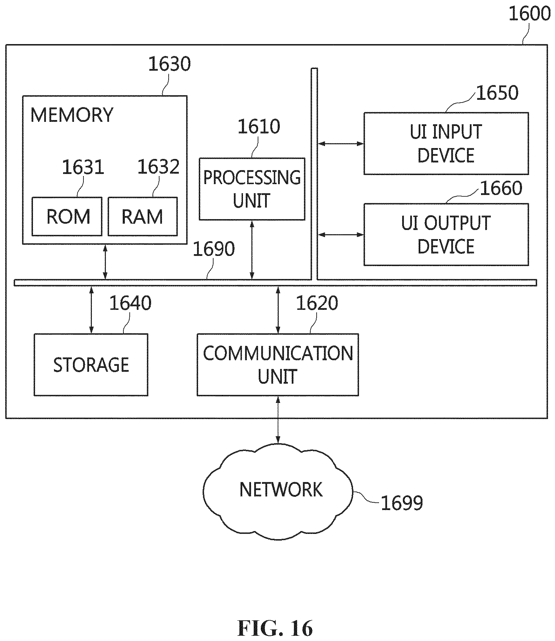

FIG. 16 is a configuration diagram of an encoding apparatus according to an embodiment.

An encoding apparatus 1600 may correspond to the above-described encoding apparatus 100.

The encoding apparatus 1600 may include a processing unit 1610, memory 1630, a user interface (UI) input device 1650, a UI output device 1660, and storage 1640, which communicate with each other through a bus 1690. The encoding apparatus 1600 may further include a communication unit 1620 coupled to a network 1699.

The processing unit 1610 may be a Central Processing Unit (CPU) or a semiconductor device for executing processing instructions stored in the memory 1630 or the storage 1640. The processing unit 1610 may be at least one hardware processor.

The processing unit 1610 may generate and process signals, data or information that are input to the encoding apparatus 1600, are output from the encoding apparatus 1600, or are used in the encoding apparatus 1600, and may perform examination, comparison, determination, etc. related to the signals, data or information. In other words, in embodiments, the generation and processing of data or information and examination, comparison and determination related to data or information may be performed by the processing unit 1610.

The processing unit 1610 may include an inter-prediction unit 110, an intra-prediction unit 120, a switch 115, a subtractor 125, a transform unit 130, a quantization unit 140, an entropy encoding unit 150, a dequantization unit 160, an inverse transform unit 170, an adder 175, a filter unit 180, and a reference picture buffer 190.

At least some of the inter-prediction unit 110, the intra-prediction unit 120, the switch 115, the subtractor 125, the transform unit 130, the quantization unit 140, the entropy encoding unit 150, the dequantization unit 160, the inverse transform unit 170, the adder 175, the filter unit 180, and the reference picture buffer 190 may be program modules, and may communicate with an external device or system. The program modules may be included in the encoding apparatus 1600 in the form of an operating system, an application program module, or other program modules.

The program modules may be physically stored in various types of well-known storage devices. Further, at least some of the program modules may also be stored in a remote storage device that is capable of communicating with the encoding apparatus 1200.

The program modules may include, but are not limited to, a routine, a subroutine, a program, an object, a component, and a data structure for performing functions or operations according to an embodiment or for implementing abstract data types according to an embodiment.

The program modules may be implemented using instructions or code executed by at least one processor of the encoding apparatus 1600.

The processing unit 1610 may execute instructions or code in the inter-prediction unit 110, the intra-prediction unit 120, the switch 115, the subtractor 125, the transform unit 130, the quantization unit 140, the entropy encoding unit 150, the dequantization unit 160, the inverse transform unit 170, the adder 175, the filter unit 180, and the reference picture buffer 190.

A storage unit may denote the memory 1630 and/or the storage 1640. Each of the memory 1630 and the storage 1640 may be any of various types of volatile or nonvolatile storage media. For example, the memory 1630 may include at least one of Read-Only Memory (ROM) 1631 and Random Access Memory (RAM) 1632.

The storage unit may store data or information used for the operation of the encoding apparatus 1600. In an embodiment, the data or information of the encoding apparatus 1600 may be stored in the storage unit.

For example, the storage unit may store pictures, blocks, lists, motion information, inter-prediction information, bitstreams, etc.

The encoding apparatus 1600 may be implemented in a computer system including a computer-readable storage medium.

The storage medium may store at least one module required for the operation of the encoding apparatus 1600. The memory 1630 may store at least one module, and may be configured such that the at least one module is executed by the processing unit 1610.

Functions related to communication of the data or information of the encoding apparatus 1600 may be performed through the communication unit 1620.

For example, the communication unit 1620 may transmit a bitstream to a decoding apparatus 1600, which will be described later.

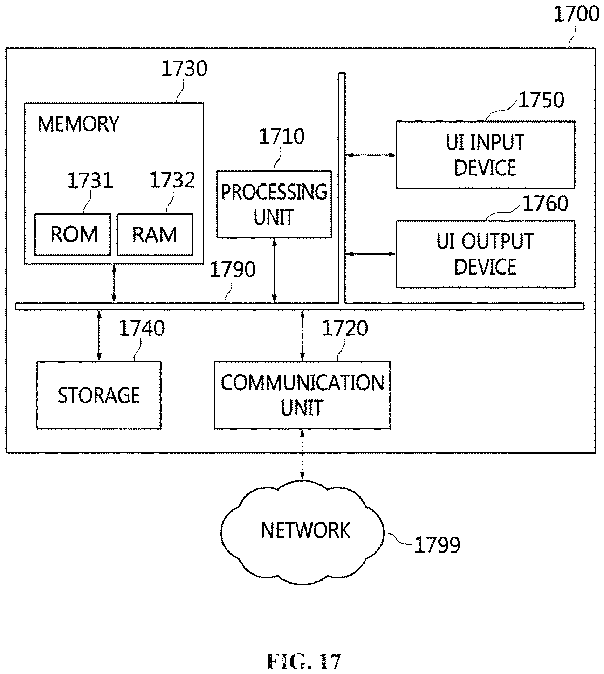

FIG. 17 is a configuration diagram of a decoding apparatus according to an embodiment.

The decoding apparatus 1700 may correspond to the above-described decoding apparatus 200.

The decoding apparatus 1700 may include a processing unit 1710, memory 1730, a user interface (UI) input device 1750, a UI output device 1760, and storage 1740, which communicate with each other through a bus 1790. The decoding apparatus 1700 may further include a communication unit 1720 coupled to a network 1799.

The processing unit 1710 may be a Central Processing Unit (CPU) or a semiconductor device for executing processing instructions stored in the memory 1730 or the storage 1740. The processing unit 1710 may be at least one hardware processor.

The processing unit 1710 may generate and process signals, data or information that are input to the decoding apparatus 1700, are output from the decoding apparatus 1700, or are used in the decoding apparatus 1700, and may perform examination, comparison, determination, etc. related to the signals, data or information. In other words, in embodiments, the generation and processing of data or information and examination, comparison and determination related to data or information may be performed by the processing unit 1710.

The processing unit 1710 may include an entropy decoding unit 210, a dequantization unit 220, an inverse transform unit 230, an intra-prediction unit 240, an inter-prediction unit 250, a switch 245, an adder 255, a filter unit 260, and a reference picture buffer 270.

At least some of the entropy decoding unit 210, the dequantization unit 220, the inverse transform unit 230, the intra-prediction unit 240, the inter-prediction unit 250, the adder 255, the switch 245, the filter unit 260, and the reference picture buffer 270 of the decoding apparatus 200 may be program modules, and may communicate with an external device or system. The program modules may be included in the decoding apparatus 1700 in the form of an operating system, an application program module, or other program modules.

The program modules may be physically stored in various types of well-known storage devices. Further, at least some of the program modules may also be stored in a remote storage device that is capable of communicating with the decoding apparatus 1700.

The program modules may include, but are not limited to, a routine, a subroutine, a program, an object, a component, and a data structure for performing functions or operations according to an embodiment or for implementing abstract data types according to an embodiment.

The program modules may be implemented using instructions or code executed by at least one processor of the decoding apparatus 1700.

The processing unit 1710 may execute instructions or code in the entropy decoding unit 210, the dequantization unit 220, the inverse transform unit 230, the intra-prediction unit 240, the inter-prediction unit 250, the switch 245, the adder 255, the filter unit 260, and the reference picture buffer 270.

A storage unit may denote the memory 1730 and/or the storage 1740. Each of the memory 1730 and the storage 1740 may be any of various types of volatile or nonvolatile storage media. For example, the memory 1730 may include at least one of ROM 1731 and RAM 1732.

The storage unit may store data or information used for the operation of the decoding apparatus 1700. In an embodiment, the data or information of the decoding apparatus 1700 may be stored in the storage unit.

For example, the storage unit may store pictures, blocks, lists, motion information, inter-prediction information, bitstreams, etc.

The decoding apparatus 1700 may be implemented in a computer system including a computer-readable storage medium.

The storage medium may store at least one module required for the operation of the decoding apparatus 1700. The memory 1730 may store at least one module, and may be configured such that the at least one module is executed by the processing unit 1710.

Functions related to communication of the data or information of the decoding apparatus 1700 may be performed through the communication unit 1720.

For example, the communication unit 1720 may receive a bitstream from the encoding apparatus 1700.

Hereinafter, a processing unit may represent the processing unit 1610 of the encoding apparatus 1600 and/or the processing unit 1710 of the decoding apparatus 1700. For example, as to functions relating to prediction, the processing unit may represent the switch 115 and/or the switch 245. As to functions relating to inter prediction, the processing unit may represent the inter-prediction unit 110, the subtractor 125 and the adder 175, and may represent the inter prediction unit 250 and the adder 255. As to functions relating to intra prediction, the processing unit may represent the intra prediction unit 120, the subtractor 125, and the adder 175, and may represent the intra prediction unit 240 and the adder 255. As to functions related to transform, the processing unit may represent the transform unit 130 and the inverse transform unit 170, and may represent the inverse transform unit 230. As to functions relating quantization, the processing unit may represent the quantization unit 140 and the inverse quantization unit 160, and may indicate the inverse quantization unit 220. As to functions relating to entropy encoding and/or entropy decoding, the processing unit may represent the entropy encoding unit 150 and/or the entropy decoding unit 210. As to functions relating filtering, the processing unit may represent the filter unit 180 and/or the filter unit 260. As to functions relating a reference picture, the processing unit may indicate the reference picture buffer 190 and/or the reference picture buffer 270.

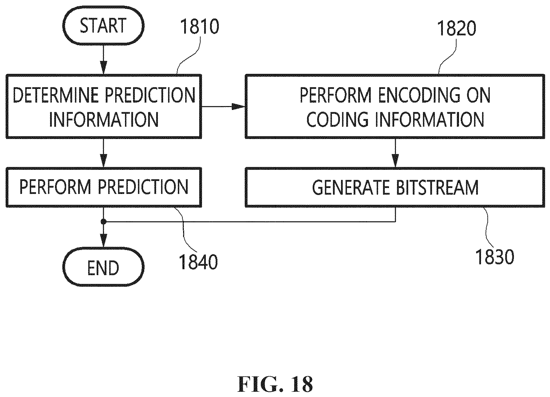

FIG. 18 is a flowchart illustrating a target block prediction method and a bitstream generation method according to an embodiment.

The target block prediction method and the bitstream generation method according to the embodiment may be performed by the encoding apparatus 1600. The embodiment may be a part of a target block encoding method or a video encoding method.

Prediction may be one of prediction methods described above in embodiments. For example, prediction may be inter-prediction or intra-prediction.

At step 1810, the processing unit 1610 may determine prediction information to be used for the encoding of the target block.

The prediction information may include information used for prediction, described in embodiments.

For example, the prediction information may include inter-prediction information. For example, the prediction information may include intra-prediction information.

At step 1820, encoded coding information may be generated by performing encoding on the coding information.

The coding information may refer to signaled/encoded/decoded information, described in embodiments. In other words, the coding information may be information that is used to allow the decoding apparatus 1700 to perform decoding corresponding to encoding performed by the encoding apparatus 1600.

The coding information may comprise syntax elements described in embodiments.

The coding information may comprise prediction information. The prediction information may mean information used for prediction for a block among coding information.

At step 1830, the processing unit 1610 may generate a bitstream.

The bitstream may include information about the target block. Also, the bitstream may include the information, described above in the embodiments.

For example, the bitstream may include either the encoded coding information or the coding information.

For example, the bitstream may include either the encoded prediction information or the prediction information.

For example, the bitstream may include coding parameters related to the target block and/or the attributes of the target block.

The information included in the bitstream may be generated at step 1820, or may be at least partially generated at steps 1810 and 1820.

The processing unit 1610 may store the generated bitstream in the storage 1640. Alternatively, the communication unit 1620 may transmit the bitstream to the decoding apparatus 1700.

The bitstream may include the encoded information about the target block. The processing unit 1610 may generate the encoded information about the target block by performing entropy encoding on the information about the target block.

At step 1840, the processing unit 1610 may perform prediction for the target block using the information about the target block.

The processing unit 1610 may use the coding information when performing prediction for the target block. Alternatively, the coding information may be generated to correspond to information used in prediction for the target block.

A prediction block may be generated by prediction for the target block. A residual block that is the difference between the target block and the prediction block may be generated. The information about the target block may be generated by applying transform and quantization to the residual block.

The information about the target block may include transformed and quantized coefficients for the target block. A reconstructed residual block may be generated by applying dequantization and inverse transform to the transformed and quantized coefficients for the target block. A reconstructed block that is the sum of the prediction block and the reconstructed residual block may be generated.

In the embodiments, the terms "reconstructed", "reconstructed", and "reconstruction" may be used to have the same meaning, and may be used interchangeably with each other.

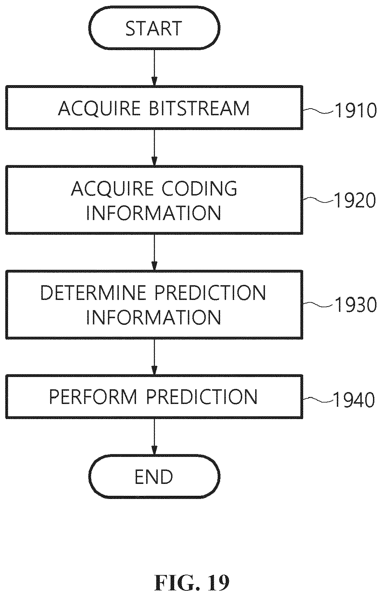

FIG. 19 is a flowchart illustrating a target block prediction method using a bitstream according to an embodiment.

The target block prediction method using a bitstream according to the embodiment may be performed by the decoding apparatus 1700. The embodiment may be a part of a target block decoding method or a video decoding method.

Prediction may be one of prediction methods, described above in embodiments. For example, second prediction may be inter-prediction or intra-prediction.

At step 1910, the communication unit 1720 may acquire a bitstream. The communication unit 1720 may receive the bitstream from the encoding apparatus 1600. The processing unit 1710 may store the acquired bitstream in the storage 1740.

The processing unit 1710 may read the bitstream from the storage 1740.

The bitstream may include information about a target block.

The information about the target block may include transformed and quantized coefficients for the target block.

Also, the bitstream may include the information, described above in the embodiments.

For example, the bitstream may include either encoded coding information or coding information.

For example, the bitstream may include coding parameters related to the target block and/or the attributes of the target block.

A computer-readable storage medium may include the bitstream, and prediction and decoding for the target block may be performed using the information about the target block included in the bitstream.

The computer-readable storage medium may be a non-transitory computer-readable storage medium.

The bitstream may include the encoded information about the target block. The processing unit 1710 may generate information about the target block by performing entropy decoding on the encoded information about the target block.

At step 1920, the processing unit 1710 may acquire coding information from the bitstream.

The processing unit 1710 may generate coding information by performing decoding on the encoded coding information of the bitstream.

The coding information may refer to signaled/encoded/decoded information, described in embodiments. In other words, the coding information may be information that is used to allow the decoding apparatus 1700 to perform decoding corresponding to encoding performed by the encoding apparatus 1600.

The processing unit 1710 may perform decoding corresponding to encoding performed in the encoding apparatus 1600 using the coding information.

The coding information may comprise syntax elements described in embodiments.

At step 1930, the processing unit 1710 may determine prediction information to be used for the decoding of the target block.

The prediction information may include information used for prediction, described in embodiments.

The prediction information in the decoding apparatus 1700 may be identical to the prediction information in the encoding apparatus 1600. In other words, the processing unit 1710 may generate prediction information identical to the prediction information used at step 1840 so as to perform the same prediction as that performed at step 1840.

The processing unit 1710 may determine the prediction information using the methods used in embodiments.

The processing unit 1710 may determine the prediction information for the target block based on prediction method-related information acquired from the bitstream.

The prediction information may include inter-prediction information. The prediction information may include intra-prediction information.

At step 1940, the processing unit 1710 may perform prediction for the target block using the information about the target block and the prediction information.

The processing unit 1710 may use the coding information when performing prediction for the target block. A prediction block may be generated by prediction for the target block.

The information about the target block may include transformed and quantized coefficients for the target block. A reconstructed residual block may be generated by applying dequantization and inverse transform to the transformed and quantized coefficients for the target block. A reconstructed block that is the sum of the prediction block and the reconstructed residual block may be generated.

## Template matching prediction

Prediction in an embodiment may include template matching prediction.

In embodiments, image encoding/decoding using template matching prediction is described, and a method, an apparatus and a storage medium for storing a bitstream, which use a template matching block vector determined through template matching prediction for an image encoding/decoding process, are described.

In embodiments, template matching prediction may refer to Intra Template Matching Prediction (IntraTMP).

In the encoding/decoding process in embodiments, one image may be predicted/encoded/decoded in one of various modes described in the embodiments, such as intra-prediction, inter-prediction, template matching prediction, and Intra Block Copy (IBC) modes. Further, an image may be predicted/encoded/decoded through a combination of various modes described in embodiments.

In the encoding/decoding process in embodiments, one block may be encoded/decoded in modes other than one of models described in mode embodiments, such as intra-prediction, inter-prediction, template matching prediction, and Intra Block Copy (IBC) modes. These modes may include a template matching prediction mode using template matching prediction.

Template matching prediction may determine part of a reconstructed region (reconstruction region) around a current block to be encoding/decoded to be a template, and may determine a location having minimum error cost by searching a search area which is all or part of the reconstructed region within the same image for a region most similar to the template by through the use of the template. Template matching prediction may use a region corresponding to the current block at the determined location as a reference block for the current block.

A block vector derived by template matching prediction may be a template matching block vector.

The same image may be a current image including the current block. In other words, a range referenced for prediction may be excluded from the current image.

However, the current image described in an embodiment may be extended to another image. In other words, the block vector in embodiments may be regarded as motion information indicating another reference image.

The reconstructed region around the current block may indicate some of spatial regions adjacent to the current block or spatial regions around the current block, such as a region located above the current block, a region located to the right-above of the current block, a region located to the left-above of the current block, a region located to the left of the current block, and a region located to the left-below of the current block. Alternatively, the reconstructed region around the current block may be a region specified based on the location of the current block.

The search area may be all or part of the reconstructed region around the current block, and may be an area determined based on a specific criterion. Here, the specific criterion may be determined based on the attributes and coding parameters of the current block.

The terms "search area (search region)" and "search range" may be used as the same meaning, and may be used interchangeably with each other.

## Derivation of search area

The search area may be derived as follows depending on the horizontal length and the vertical length of a current block.

The search area may be determined based on the top-left position of a current CTB including the current block.

The search area may include a left-above rectangular area, a right-above rectangular area, and a left rectangular area.

The left-above rectangular area may be a rectangular area located above and to the left of the current CTU.

The right-above rectangular area may be a rectangular area located above and to the right of the current CTU.

The left rectangular area may be a rectangular area located to the left of the current CTU.

The size of the left-above rectangular area, the right-above rectangular area, and the left rectangular area may be (horizontal length of the current block $\times$ M, vertical length of the current block $\times$ N).

M may be an integer greater than 0. For example, M may be 5. N may be an integer greater than 0. For example, N may be 5.

The search area may be an area in which reconstructed pixels are present within an area composed of the left-above rectangular area, the right-above rectangular area, and the left rectangular area. In other words, the search area may include only a previously encoded/decoded area.

The search area may further include a reconstructed region in the current CTB, in addition to the area composed of the left-above rectangular area, the right-above rectangular area, and the left rectangular area.

In an embodiment, the previously encoded/decoded area within the current image may be a reconstructed region on which at least one of first specific encoding/decoding processes is not performed.

The first specific encoding/decoding processes may include in-loop filtering such as chroma scaling and luma mapping; deblocking filtering; adaptive sample offset; and adaptive in-loop filtering.

In an embodiment, the previously encoded/decoded area within the current image may be a reconstructed region on which at least one of second specific encoding/decoding processes is performed.

The second specific encoding/decoding processes may include in-loop filtering such as chroma scaling and luma mapping; deblocking filtering; adaptive sample offset; adaptive in-loop filtering; and bilateral filtering.

The reconstructed region may be a region configured using at least one of a prediction sample and a residual sample.

The prediction sample may refer to a sample encoded/decoded by at least one of predictions in embodiments, such as intra-prediction, inter-prediction, intra block copy, and template matching prediction.

For example, when the reconstructed region is a reconstructed region composed of prediction samples, the reconstructed region may not include samples generated by inter-prediction.

For example, when the reconstructed region is a reconstructed region composed of prediction samples, an area encoded/decoded by inter-prediction may be replaced with a specific value.

For example, the specific value may be a value determined through padding based on the values of surrounding prediction samples.

For example, the specific value may be a statistical value of the values of surrounding prediction samples, or a result calculated using the statistical value.

### Partitioning structure of components of block

A template matching prediction encoding/decoding method may be used in at least one of the case where a luma component and a chroma component have independent block partitioning structures, respectively (i.e., the case where a dual tree structure is applied to the current block) and the case where a luma component and a chroma component have the same block partitioning structure (i.e., the case where a single tree structure is applied to the current block).

An encoding/decoding method using template matching prediction may be used in at least one of the case where a luma component and a chroma component have independent block partitioning structures, respectively (i.e., the case where a dual tree structure is applied to the current block) and the case where a luma component and a chroma component have the same block partitioning structure (i.e., the case where a single tree structure is applied to the current block).

### Case where luma component and chroma component have independent block partitioning structures

Hereinafter, embodiments of the case where a luma component and a chroma component have independent block partitioning structures, respectively (i.e., the case where a dual tree structure is applied to the current block) will be described;

Template matching prediction mode information for the luma component and template matching prediction mode information for the chroma component may be independently encoded/decoded for the luma component and the chroma component, respectively. In other words, different template matching predictions may be applied to the luma component and the chroma component of the current block, respectively. The template matching prediction mode information for the luma component may specify template matching prediction for the luma component. The template matching prediction mode information for the chroma component may specify template matching prediction for the chroma component.

In embodiments, the chroma component may be plural. A plurality of chroma components may include a Cb component and a Cr component.

In embodiments, the template matching prediction mode information may be a template matching prediction mode flag.

In an embodiment, for two chroma components (Cb, Cr), one piece of template matching prediction mode information may be encoded/decoded, and the two chroma components may be encoded/decoded using the same mode depending on the one piece of template matching prediction mode information.

In embodiments, the one piece of template matching prediction mode information for the two components may mean that the template matching prediction mode information is used in common for two components.

In an embodiment, template matching prediction mode information may be independently encoded/decoded for each of two chroma components (Cb, Cr), and the two chroma components may be encoded/decoded in independent modes depending on the independent template matching prediction mode information.

When template matching prediction is applied to each of the luma component and the chroma components, a template for each component may be configured within a reconstructed region around the current block for the corresponding component. In other words, for the respective components, templates may be separately configured.

In the case where a luma component corresponding to the current chroma component is encoded/decoded using a template matching prediction mode when the intra-prediction mode of the current chroma component is the same intra-prediction mode as the intra-prediction mode of the luma component, the current chroma component may be encoded/decoded using the template matching prediction mode of the luma component. Here, signaling/encoding/decoding of the template matching prediction mode flag of the chroma component may be skipped.

In the case where the corresponding luma component is encoded/decoded using the template matching prediction mode when the intra-prediction mode of the current chroma component is the same intra-prediction mode as the intra-prediction mode of the corresponding luma component, the current chroma component may be encoded/decoded using a non-directional mode among intra-prediction modes. Here, signaling/encoding/decoding of the template matching prediction mode flag of the chroma component may be skipped.

When the template matching prediction mode is independently applied to the luma component and the chroma component, template matching block vectors may be derived for the luma component and the chroma component, respectively, and encoding/decoding may be respectively performed on the luma component and the chroma component using the template matching block vectors. In this case, the template matching block vector of the luma component and the template matching block vector of the chroma component may be identical to or different from each other.

Further, when the template matching prediction mode is independently applied to the Cb component and the Cr component, template matching block vectors may be respectively derived for the Cb component and the Cr component, and encoding/decoding may be respectively performed on the two components using the template matching block vectors. In this case, the template matching block vector of the Cb component and the template matching block vector of the Cr component may be identical to or different from each other.

When template matching prediction is performed, a search area in template matching for the luma component may be larger than a search area in template matching for the chroma component. Alternatively, the search area in template matching for the luma component may be equal to the search area in template matching for the chroma component.

Further, the search area in template matching for the chroma component may be included in the search area in template matching for the luma component.

Furthermore, the size of the template for the luma component may be larger than the size of the template for the chroma component. Alternatively, the size of the template for the luma component may be equal to the size of the template for the chroma component.

## Case where luma component and chroma component have same block partitioning structure

Hereinafter, embodiments of the case where a luma component and a chroma component have the same block partitioning structure, respectively (i.e., the case where a single tree structure is applied to a current block) will be described.

Template matching prediction mode information for the luma component and template matching prediction mode information for the chroma component may be independently encoded/decoded for the luma component and the chroma component, respectively. Here, whether a template matching prediction mode is used for each of the luma component and the chroma component may be individually indicated.

In embodiments, the template matching prediction mode information may be a template matching prediction mode flag.

One piece of template matching prediction mode information for the luma component and the chroma component may be encoded/decoded. Here, whether a template matching prediction mode is used for each of the luma component and the chroma component may be indicted by one piece of template matching prediction mode information.

For two chroma components (Cb, Cr), one piece of template matching prediction mode information may be encoded/decoded, and the two chroma components may be encoded/decoded in one mode depending on the one piece of template matching prediction mode information.

For the two chroma components (Cb, Cr), the template matching prediction mode information may be independently encoded/decoded, and each of the two chroma components may be encoded/decoded in an independent mode depending on the independent template matching prediction mode information.

When template matching prediction is applied to each of the luma component and the chroma component, respective templates for the corresponding components may be configured within a reconstructed region around the current block for respective components.

For the two chroma components (Cb, Cr), the template matching prediction mode information may be independently encoded/decoded, and each of the two chroma components may be encoded/decoded in an independent mode depending on the independent template matching prediction mode information.

In the case where a luma component corresponding to the current chroma component is encoded/decoded using a template matching prediction mode when the intra-prediction mode of the current chroma component is the same intra-prediction mode as the intra-prediction mode of the luma component, the current chroma component may be encoded/decoded using the template matching prediction mode of the luma component. Here, signaling/encoding/decoding of the template matching prediction mode flag of the chroma component may be skipped.

In the case where the corresponding luma component is encoded/decoded using the template matching prediction mode when the intra-prediction mode of the current chroma component is the same intra-prediction mode as the intra-prediction mode of the corresponding luma component, the current chroma component may be encoded/decoded using a non-directional mode among intra-prediction modes. Here, signaling/encoding/decoding of the template matching prediction mode flag of the chroma component may be skipped.

When the template matching prediction mode is indicated and applied by one piece of template matching prediction mode information for both the luma component and the chroma component, the chroma component may be encoded/decoded using the same template matching block vector as the template matching block vector of the luma component.

When the template matching prediction mode is indicated and applied by one piece of template matching prediction mode information for both the luma component and the chroma component, different template matching block vectors may be derived for the luma component and the chroma component, respectively, and the luma component and the chroma component may be encoded/decoded using the derived template matching block vectors. In this case, the template matching block vector of the luma component and the template matching block vector of the chroma component may be identical to or different from each other.

Further, when the template matching prediction mode is indicated and applied by one piece of template matching prediction mode information for both the Cb component and the Cr component, different template matching block vectors may be derived for the luma component and the chroma component, respectively, and the Cb component and the Cr component may be encoded/decoded using the derived template matching block vectors, respectively. In this case, the template matching block vector of the Cb component and the template matching block vector of the Cr component may be identical to or different from each other.

When the template matching prediction mode is independently applied to the luma component and the chroma component, template matching block vectors may be derived for the luma component and the chroma component, respectively, and encoding/decoding may be respectively performed on the luma component and the chroma component using the template matching block vectors. In this case, the template matching block vector of the luma component and the template matching block vector of the chroma component may be identical to or different from each other.

Further, when the template matching prediction mode is independently applied to the Cb component and the Cr component, template matching block vectors may be respectively derived for the Cb component and the Cr component, and encoding/decoding may be respectively performed on the two components using the template matching block vectors. In this case, the template matching block vector of the Cb component and the template matching block vector of the Cr component may be identical to or different from each other.

When template matching prediction is performed, a search area in template matching for the luma component may be larger than a search area in template matching for the chroma component. Alternatively, the search area in template matching for the luma component may be equal to the search area in template matching for the chroma component.

Furthermore, the search area in template matching for the chroma component may be included in the search area in template matching for the luma component.

Furthermore, the size of the template for the luma component may be larger than the size of the template for the chroma component. Alternatively, the size of the template for the luma component may be equal to the size of the template for the chroma component.

### Storage of template matching block vector

A template matching block vector determined by template matching prediction encoding/decoding may be stored in a motion information buffer of a current block.

The template matching block vector stored in the motion information buffer may be used for a next block to be encoded/decoded after encoding/decoding of the current block. The template matching block vector for the next block, stored in the motion information buffer, may be added to a block vector candidate list of intra block copy in intra block copy for the next block.

The motion information buffer may refer to memory or a buffer in which encoded/decoded information is stored.

The block vector candidate list of intra block copy may be used for block vector prediction in an intra block copy AMVP mode and an intra block copy merge mode.

Template matching block vectors determined by template matching prediction encoding/decoding may be stored in units of a lower-level block.

In embodiments, the lower-level block may refer to a subblock. The lower-level block may be a block included in a higher-level block. For example, the higher-level block may be the current block, and the lower-level block may be the subblock of the current block.

Here, the template matching block vector may be stored in memory, a line buffer, an array, or the like.

Alternatively, the template matching block vector may be stored in the buffer of a CTU row including the current block.

The lower-level block may be a block having an integer magnitude greater than 0, and may be, for example, a 4x4 block.

The template matching block vector of the lower-level block may be stored in a line buffer which stores encoding/decoding information about the lowermost column of a CTU including the current block.

When intra block copy is applied to specific blocks in the CTU adjacent to the bottom of the line buffer, the template matching block vector included in the line buffer may be referenced at the step of configuring the block vector candidate list of intra block copy for the specific blocks, and may be added to the block vector candidate list of intra block copy.

Here, the expression "adjacent to the bottom of the line buffer" may mean that the specific blocks are adjacent to the bottom of the CTU from which the information stored in the line buffer is derived.

The template matching block vector may be stored in a history block vector buffer for intra block copy.

The template matching block vector included in the history block vector buffer for intra block copy may be referenced at the step of configuring the block vector candidate list for intra block copy, and may be added to the block vector candidate list for intra block copy.

## Configuration of block vector list

When a block vector list for intra block copy is configured for intra block copy for a current block, one or more of block vectors of blocks encoded/decoded by intra block copy among blocks adjacent to the current block may be referenced, and the referenced block vectors may be added to the block vector list.

When a block vector list for intra block copy is configured for intra block copy for the current block, one or more of template matching block vectors of blocks encoded/decoded through template matching prediction among blocks adjacent to the current block may be referenced, and the referenced template matching block vectors may be added to the block vector list.

When the block vector list for intra block copy is configured for intra block copy for the current block, one or more of block vectors of blocks encoded/decoded through intra block copy and template matching block vectors of blocks encoded/decoded through template matching prediction, among blocks adjacent to the current block, may be referenced, and the referenced block vectors and the referenced template matching block vectors may be added to the block vector list.

When the block vector list for intra block copy is configured for intra block copy for the current block, one or more of block vectors present in a history block vector buffer for intra block copy may be referenced, and the reference block vectors may be added to the block vector list. The history block vector buffer for intra block copy may include at least one of a block vector generated in the intra block copy mode and a template matching block vector.

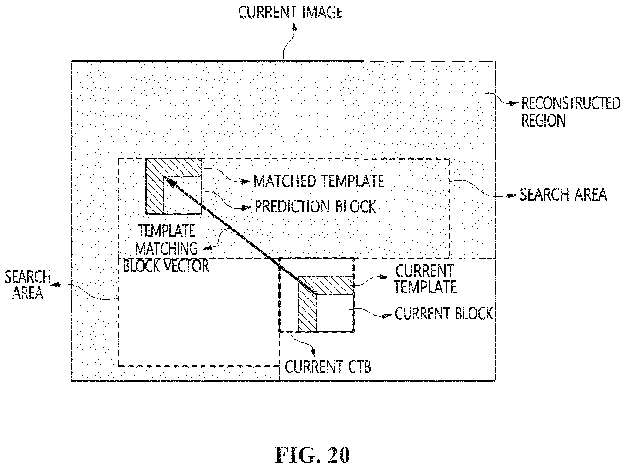

FIG. 20 conceptually illustrates a template matching prediction method according to an embodiment.

As illustrated in FIG. 20, a reconstructed region composed of surrounding reconstructed pixels of a current block may be determined based on the location of a current block. In the reconstructed region, the current template area may be determined.

Some reconstructed regions in a current CTB including the current block may be used to configure a current template area.

Some reconstructed regions in the current CTB including the current block may be included in a search area in template matching of the current block.

In the reconstructed region, a matched template in which error cost with the current template is minimized may be determined. In other words, a region having the lowest error cost may be searched for in regions in the search area, and the found region may be determined to be the matched template.

In embodiments, the error cost of the region may be error cost between the current template and the region.

In embodiments, the error cost of the matched template may be error cost between the current template and the matched template.

In embodiments, error cost between a first entity and a second entity may be error cost between pixels in the first entity and pixels in the second entity.

A reference block for the current block may be determined by the matched template and the current template.

A difference between a specific position in the current block and a specific position in the reference block may be determined to be a template matching block vector.

In embodiments, the specific position in the current block may be the position of a top-left pixel in the current block. The specific position in the reference block may be the position of the top-left pixel in the reference block.

**Scaling of template matching block vector**

When a template matching block vector is used to configure a block vector candidate list of intra block copy, scaling or rounding may be performed on the template matching block vector such that the resolution of the template matching block vector becomes identical to that of the block vector of intra block copy.

In embodiments, the resolution may be 1) a resolution in units of sub-pixels such as 1/4-pel or 1/2-pel or 2) a resolution in units of integer multiples such as 1-pel or 4-pel.

Scaling may be applied, as will be described below, so that the resolution of the template matching block vector becomes identical to the resolution of the block vector in intra block copy.

For example, when the block vector resolution of intra block copy is 1/2-pel and the resolution of the template matching block vector is 1-pel, a horizontal element value $BV_{TMP,hor}$ and a vertical element value $BV_{TMP,ver}$ of the template matching block vector having the 1-pel pixel resolution may be scaled to a horizontal element value $BV\_half_{TMP,hor}$ and a vertical element value $BV\_half_{TMP,ver}$ of a template matching block vector having the 1/2-pel resolution according to the following [Equation 1] and [Equation 2].

$$[\text{Equation 1}]$$
$$BV\_half_{TMP,hor} = BV_{TMP,hor} << shift,\ shift = 1$$

$$[\text{Equation 2}]$$
$$BV\_half_{TMP,ver} = BV_{TMP,ver} << shift,\ shift = 1$$

Rounding, which will be described below, may be applied such that the resolution of the template matching block vector becomes identical to that of the block vector of intra block copy.

For example, when the block vector resolution of intra block copy is 4-pel and the resolution of the template matching block vector is 1-pel, a horizontal element value $BV_{TMP,hor}$ and a vertical element value $BV_{TMP,ver}$ of the template matching block vector having the 1-pel pixel resolution may be rounded to a horizontal element value $BV\_int4_{TMP,hor}$ and a vertical element value $BV\_int4_{TMP,ver}$ of the template matching block vector having the 4-pel resolution according to the following [Equation 3] to [Equation 5].

$$[\text{Equation 3}]$$
$$offset = (\ shift == 0\ )\ ?\ 0 : (\ 1 << (\ shift - 1\ )\ )$$

$$[\text{Equation 4}]$$
$$BV\_int4_{TMP,hor} = (BV_{TMP,hor} + offset) >> shift,\ shift = 2$$

$$[\text{Equation 5}]$$
$$BV\_int4_{TMP,ver} = (BV_{TMP,ver} + offset) >> shift,\ shift = 2$$

**Scaling of block vector**

When a template matching block vector is used to configure a block vector candidate list in intra block copy, scaling or rounding may be performed on the block vector of intra block copy such that the resolution of the block vector of intra block copy becomes identical to that of the template matching block vector.

In embodiments, the resolution may be 1) a resolution in units of sub-pixels such as 1/4-pel or 1/2-pel or 2) a resolution in units of integer multiples such as 1-pel or 4-pel.

Scaling such as that described below may be applied such that the resolution of the block vector of intra block copy becomes identical to that of the template matching block vector.

For example, when the resolution of the template matching block vector is 1/2-pel and the resolution of the block vector of intra block copy is 1-pel, a horizontal element value $BV_{IBC,hor}$ and a vertical element value $BV_{IBC,ve}$, of the block vector of intra block copy having the 1-pel resolution may be scaled to a horizontal element value $BV\_half_{IBC,hor}$ and a vertical element value $BV\_half_{IBC,ver}$ of the block vector of intra block copy having the 1/2-pel resolution, according to the following [Equation 6] and [Equation 7].

$$\textbf{[Equation 6]}$$
$$BV\_half_{IBC,hor} = BV_{IBC,hor} << shift,\ shift = 1$$

$$\textbf{[Equation 7]}$$
$$BV\_half_{IBC,ver} = BV_{IBC,ver} << shift,\ shift = 1$$

Rounding, such as that described below, may be applied such that the resolution of the block vector of intra block copy becomes identical to that of the template matching block vector.

For example, when the resolution of the template matching block vector is 4-pel and the resolution of the block vector of intra block copy is 1-pel and, a horizontal element value $BV_{IBC,hor}$ and a vertical element value $BV_{IBC,ver}$ of the block vector of intra block copy having the 1-pel pixel resolution may be rounded to a horizontal element value $BV\_int4_{IBC,hor}$ and a vertical element value $BV\_int4_{IBC,ver}$ of the block vector of intra block copy having the 4-pel resolution according to the following [Equation 8] to [Equation 10].

$$\textbf{[Equation 8]}$$
$$offset = (\ shift == 0\ )\ ?\ 0 : (\ 1 << (\ shift - 1\ )\ )$$

$$\textbf{[Equation 9]}$$
$$BV\_int4_{IBC,hor} = (BV_{IBC,hor} + offset) >> shift,\ shift = 2$$

$$\textbf{[Equation 10]}$$
$$BV\_int4_{IBC,ver} = (BV_{IBC,ver} + offset) >> shift,\ shift = 2$$

### Resolution of block vector

A block vector may have a resolution in units of a sub-pixel or a resolution in units of integer multiples.

For example, the unit of the sub-pixel may be at least one of 1/16-pel, 1/8-pel, 1/4-pel, and 1/2-pel.

For example, the unit of integer multiples may be at least one of 1-pel, 2-pel, 4-pel, 8-pel, and 16-pel.

The block vector may refer to at least one of a template matching block vector and the block vector of intra block copy.

When the block vector is stored in the block vector buffer, the block vector may have a first resolution that is at least one of a sub-pixel unit and the unit of integer multiples.

When the block vector is used for template matching or intra block copy, the block vector may include at least one second resolution.

The first resolution and the second resolution may be identical to or different from each other.

When the first resolution and the second resolution are different from each other, the first resolution may be converted to comply with the second resolution. Alternatively, the second resolution may be converted to comply with the first resolution.

For example, when a template matching block vector having a second resolution of 1/2-pel is stored in the block vector buffer, the resolution of the template matching block vector may be converted into a first resolution of 1-pel, as shown in the following [Equation 11] to [Equation 13].

$$\textbf{[Equation 11]}$$
$$offset = (\ shift == 0\ )\ ?\ 0 : (\ 1 << (\ shift - 1\ )\ )$$

[Equation 12]

$$BV\_int1_{TMP,hor} = (BV_{TMP,hor} + offset) \gg shift, shift = 1$$

[Equation 13]

$$BV\_int1_{TMP,ver} = (BV_{TMP,ver} + offset) \gg shift, shift = 1$$

For example, when a template matching block vector having a second resolution of 1/2-pel is stored in the block vector buffer, the resolution of the template matching block vector may be converted into a first resolution of 4-pel, as shown in the following [Equation 14] to [Equation 16].

[Equation 14]

$$offset = ( shift == 0 ) ? 0 : ( 1 \ll ( shift - 1 ) )$$

[Equation 15]

$$BV\_int4_{TMP,hor} = (BV_{TMP,hor} + offset) \gg shift, shift = 3$$

[Equation 16]

$$BV\_int4_{TMP,ver} = (BV_{TMP,ver} + offset) \gg shift, shift = 3$$

For example, when a template matching block vector having a second resolution of 1/4-pel is stored in the block vector buffer, the resolution of the template matching block vector may be converted into the first resolution of 1-pel, as shown in the following [Equation 17] to [Equation 19].

[Equation 17]

$$offset = ( shift == 0 ) ? 0 : ( 1 \ll ( shift - 1 ) )$$

[Equation 18]

$$BV\_int1_{TMP,hor} = (BV_{TMP,hor} + offset) \gg shift, shift = 2$$

[Equation 19]

$$BV\_int1_{TMP,ver} = (BV_{TMP,ver} + offset) \gg shift, shift = 2$$

For example, when a template matching block vector having a second resolution of 1-pel is stored in the block vector buffer, the resolution of the template matching block vector may be converted into a first resolution of 1/2-pel, as shown in the following [Equation 20] and [Equation 21].

[Equation 20]

$$BV\_half_{TMP,hor} = BV_{TMP,hor} \ll shift, shift = 1$$

[Equation 21]

$$BV\_half_{TMP,ver} = BV_{TMP,ver} \ll shift, shift = 1$$

For example, when a template matching block vector having a second resolution of 1-pel is stored in the block vector buffer, the resolution of the template matching block vector may be converted into a first resolution of 1/4-pel, as shown in the following [Equation 22] and [Equation 23].

[Equation 22]

$$BV\_quater_{TMP,hor} = BV_{TMP,hor} << shift, \; shift = 2$$

[Equation 23]

$$BV\_quater_{TMP,ver} = BV_{TMP,ver} << shift, \; shift = 2$$

For example, when a template matching block vector having a second resolution of 2-pel is stored in the block vector buffer, the resolution of the template matching block vector may be changed to a first resolution of 1/2-pel, as shown in the following [Equation 24] and [Equation 25].

[Equation 24]

$$BV\_half_{TMP,hor} = BV_{TMP,hor} << shift, \; shift = 2$$

[Equation 25]

$$BV\_half_{TMP,ver} = BV_{TMP,ver} << shift, \; shift = 2$$

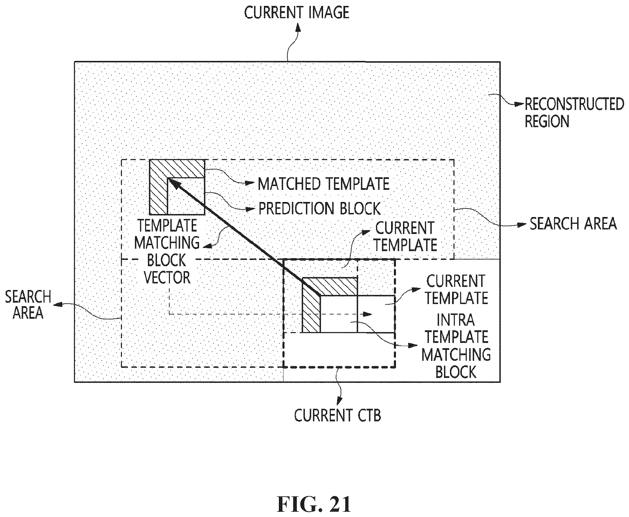

FIG. 21 illustrates the case where a template matching block vector derived by a template matching prediction method according to an example is referenced by a current block to which an intra block copy mode is applied.

One or more blocks among neighbor blocks adjacent to a current block may be intra template matching blocks encoded/decoded by intra template matching prediction.

A template matching block vector may be derived from template matching prediction for each intra template matching block, and the derived template matching block vector may be stored.

The current block may be encoded/decoded in the intra block copy mode.

When an adjacent block adjacent to the current block is an intra template matching block encoded/decoded by intra template prediction, a template prediction block vector of the intra template matching block may be added to the block vector candidate list for the current block, and the block vector candidate list of the current block may be configured using the template prediction block vector of the intra template matching block.

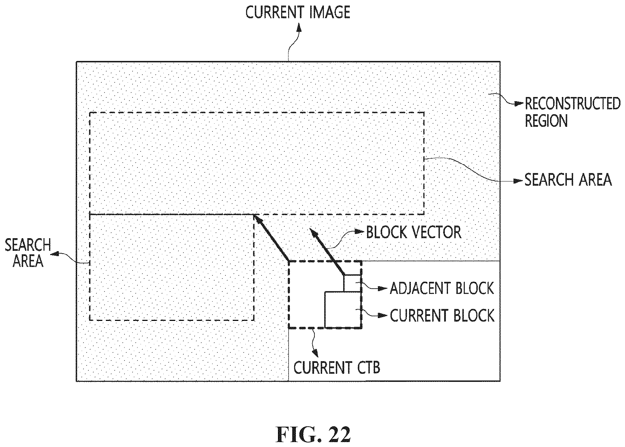

FIG. 22 illustrates a search area determined using a block vector of an adjacent block of the current block according to an example.

When a template matching prediction method is applied, a search area may be determined using the block vector of the adjacent block of the target block.

One or more blocks among neighbor blocks adjacent to the current block may be encoded/decoded by intra template matching prediction or intra block copy.

One or more blocks among blocks adjacent to the current block may be blocks encoded/decoded by intra template matching prediction or intra block copy. The block vector of each block encoded/decoded by the template matching prediction or the intra block copy method may be stored.

When there is a block vector stored in an encoded/decoded area around the current block and intra template matching prediction is applied to the current block, at least one of block vectors stored in the encoded/decoded area may be referenced, and the search area may be shifted by the referenced block vector. Within the shifted search area, intra template matching may be performed.

In embodiments, the block vector stored in the encoded/decoded area may refer to the block vector of a block in the encoded/decoded area. The block vector stored in the encoded/decoded area may refer to the block vector of the block in the encoded/decoded area.

The current block may store a template matching block vector derived from template matching prediction.

In embodiments, the case where a block stores specific information may mean that specific information generated in the encoding/decoding process on the block is stored as information related to the block. Alternatively, the case where specific information of the block is stored may mean that the specific information is stored as information related to the specific position (or specific pixel) of the block. For example, motion information and/or a motion vector of each sample in the block may be stored.

In this sense, the information stored in the block may refer to information specified by referring to the corresponding block.

Among the block vectors of the encoded/decoded area around the current block, a block vector present in an intra block vector merge candidate list may be determined to be the block vector to be used for determination of a search area for template matching prediction for the current block.

Here, an index corresponding to the block vector to be used for determination of a search area for template matching prediction for the current block may be signaled/encoded/decoded.

Among the block vectors of the encoded/decoded area around the current block, one of block vectors at a bottom-left position and an a top-right position of the current block may be determined to be the block vector to be used for determination of the search area for template matching prediction for the current block.

Here, a flag corresponding to the block vector to be used for determination of the search area for template matching prediction for the current block may be signaled/encoded/decoded.

Alternatively, when a block vector is present at the bottom-left position of the current block, the block vector at the bottom-left position of the current block may be used. Alternatively, when a block vector is not present at the bottom-left position of the current block, a block vector at the top-right position of the current block may be used.

Alternatively, when a block vector is present at the top-right position of the current block, the block vector at the top-right position of the current block may be used. Alternatively, when a block vector is not present at the top-right position of the current block, a block vector at the bottom-left position of the current block may be used.

Alternatively, when block vectors are present both at the top-right position and the bottom-left position of the current block, information (or flag) indicating the block vector to be used for determination of a search area for template matching prediction for the current block may be signaled/encoded/decoded.

When a block vector is present at neither the top-right position nor the bottom-left position of the current block, the above-described information (or flag) may be omitted.

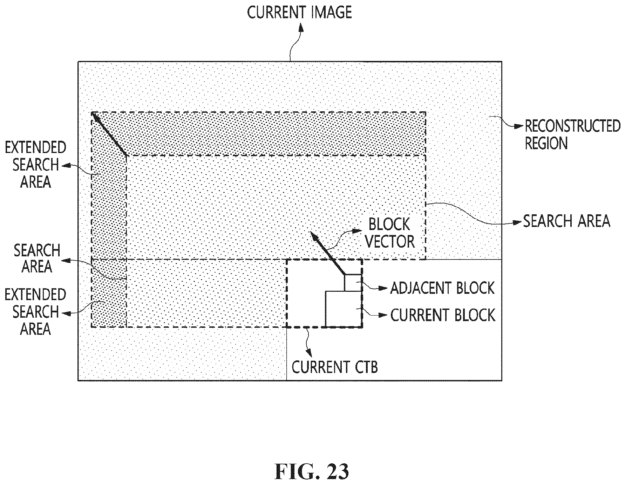

FIG. 23 illustrates a method for extending a search area using a block vector of an adjacent block according to an example.

When a template matching prediction method is applied, a search area may be extended using the block vector of a block adjacent to a current block.

One or more blocks among neighbor blocks adjacent to the current block may be encoded/decoded by intra template matching prediction or intra block copy.

One or more blocks among blocks adjacent to the current block may be blocks encoded/decoded by intra template matching prediction or intra block copy. The block vector of each block encoded/decoded by the template matching prediction or the intra block copy method may be stored.

When there is a block vector stored in an encoded/decoded area around the current block and intra template matching prediction is applied to the current block, at least one of block vectors stored in the encoded/decoded area may be referenced, and the search area may be extended by the referenced block vector. Within the extended search area including an existing search area, intra template matching may be performed.

The current block may store a template matching block vector derived from template matching prediction.

Among the block vectors of the encoded/decoded area around the current block, a block vector present in an intra block vector merge candidate list may be determined to be the block vector to be used for determination of a search area for template matching prediction for the current block.

Here, an index corresponding to the block vector to be used for determination of a search area for template matching prediction for the current block may be signaled/encoded/decoded.

Among the block vectors of the encoded/decoded area around the current block, one of block vectors at a bottom-left position and an a top-right position of the current block may be determined to be the block vector to be used for determination of the search area for template matching prediction for the current block.

Here, a flag corresponding to the block vector to be used for determination of the search area for template matching prediction for the current block may be signaled/encoded/decoded.

Alternatively, when a block vector is present at the bottom-left position of the current block, the block vector at the bottom-left position of the current block may be used. Alternatively, when a block vector is not present at the bottom-left position of the current block, a block vector at the top-right position of the current block may be used.

Alternatively, when a block vector is present at the top-right position of the current block, the block vector at the top-right position of the current block may be used. Alternatively, when a block vector is not present at the top-right position of the current block, a block vector at the bottom-left position of the current block may be used.

Alternatively, when block vectors are present both at the top-right position and the bottom-left position of the current block, information (or flag) indicating the block vector to be used for determination of a search area for template matching prediction for the current block may be signaled/encoded/decoded.

When a block vector is present at neither the top-right position nor the bottom-left position of the current block, the above-described information (or flag) may be omitted.

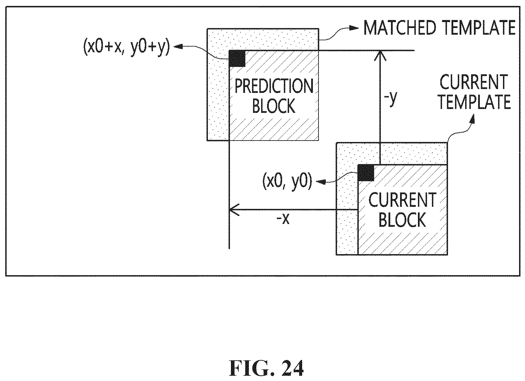

FIG. 24 illustrates determination of a prediction block using a matched template according to an example.

A current block may be encoded/decoded by template matching prediction, and a matched template at which error cost with a current template in a search area is minimized may be determined. A block vector by which the matched template is determined may be derived. The block vector may be a vector from the current template to the matched template.

(x, y) may denote the derived block vector.

A block indicated by the derived block vector may be used as a reference block or a prediction block for the current block. A reference block indicated by the derived block vector may be used as a prediction block. Alternatively, a prediction block may be derived based on the reference block indicated by the derived block vector.

A reference block spaced apart from the current block by x samples in a horizontal direction and spaced apart from the current block by y samples in a vertical direction may be used as the reference block or the prediction block for the current block.

Here, the size of the reference block or the prediction block may be identical to the size of the current block. The reference block may be a block in a previously encoded/decoded area.

Here, when x is a positive integer, the reference block may be spaced apart from the current block by x samples in a right horizontal direction, whereas when x is a negative integer, the reference block may be spaced apart from the current block by -x samples in a left horizontal direction. When y is a positive integer, the reference block may be spaced apart from the current block by y samples in a downward vertical direction, whereas when y is a negative integer, the reference block may be spaced apart from the current block by -y samples in an upward vertical direction.

Alternatively, a movement direction may be opposite to that described above depending on the signs of x and y. For example, when x is a positive integer, the reference block may be spaced apart from the current block by x samples in the left horizontal direction, whereas when x is a negative integer, the reference block may be spaced apart from the current block by -x samples in the right horizontal direction. When y is a positive integer, the reference block may be spaced apart from the current block by y samples in the upward vertical direction, whereas when y is a negative integer, the reference block may be spaced apart from the current block by -y samples in the downward vertical direction.

The size of the current block may be different from the size of the reference block. For example, the size of the current block may be reduced by performing downsampling or sub-sampling on the current block.

Here, reduction in the size of the specific block may refer to reduction in the size of information referenced as the specific block. In other words, it may mean that a block having the reduced size corresponding to the specific block is used as the specific block.

The reference block may be determined using the reduced current block. The size of the reference block may be enlarged by performing upsampling or interpolation on the determined reference block. The reference block having the enlarged size may be used as a prediction block for the current block. Alternatively, a prediction block for the current block may be derived using the reference block having the enlarged size.

Here, the enlargement of the size of the specific block may mean that the information referenced by the specific block is being enlarged. In other words, it may mean that a block having the enlarged size corresponding to the specific block is used as the specific block.

At least one of the size of the current block and the size of the reference block may be determined depending on at least one of the coding parameters of current block/CTB/CTU.

As illustrated in FIG. 19, when both of x and y are negative integers and the position of a top-left sample in the current block is (x0, y0), the position of a top-left sample in the prediction block for the current block may be (x0 + x, y0 + y).

Here, the prediction block for the current block may refer to a reference block for the current block.

In embodiments, the reference block may refer to a block at a position determined depending on the encoding/decoding method applied to the current block among blocks in a previously encoded/decoded area.

In embodiments, the prediction block may refer to a block used in a prediction process for encoding/decoding of the current block. The prediction block in embodiments may be a final prediction block for the target block, and may be a block used to derive the final prediction block. In other words, the prediction block in embodiments may be an intermediate block used for prediction for the target block.

In embodiments, in at least one of prediction modes that can be applied to the current block, the reference block and the prediction block may be regarded as the same block. Alternatively, in at least one of prediction modes that can be applied to the current block, the values of corresponding pixels in the reference block and the prediction block may be identical to each other.

In embodiments, the corresponding pixels in the blocks may be pixels present at the same position in the blocks.

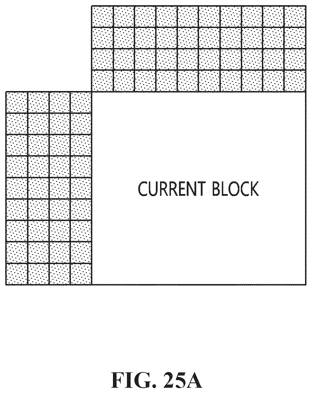

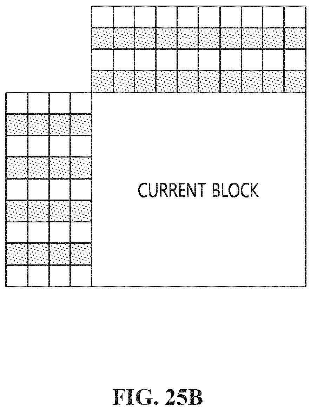

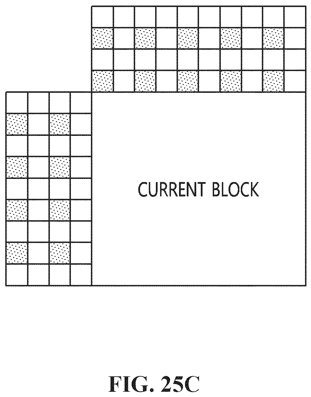

FIGS. 25A, 25B, and FIG. 25C illustrate configurations of a current template for a current block according to an example.

In embodiments, in template matching, the position of a corresponding region corresponding to a current template may be adjusted in the search area using the current template for the current block. Template matching may be configured to determine a region in which error cost is minimized, among corresponding regions in the search area, to be a matched template. The corresponding region may be a region having the same shape as the current template. Here, the error cost of the corresponding region may be error cost between the current template and the corresponding region. The corresponding block specified by the matched template may be determined to be a reference block for the current block. Here, the relative position of the current block to the current template may be the same as the relative position of the corresponding block to the matched template.

## Configuration of template

In FIGS. 25A to 25C, a template configuration method according to an embodiment is illustrated.

In template matching, a current template for a current block may be configured using neighboring (surrounding) pixels of the current block. The current template may be configured, and a reference template matching the current template may be configured using pixels in a search area of a reference image. The reference template may be the matched template described above in embodiments. Alternatively, the reference template may be a template configured using the matched template.

Upon configuring the current template to which template matching is to be applied, as illustrated in FIGS. 25B and 25C, the current template may be configured by emptying one or more pixels or one or more lines in each region of the current template. That is, the current template may not include one or more of pixels and lines in the region of the current template. The pixels or lines that are not included may be pixels or lines that are not used to calculate the error cost of the current template.

The number of pixels constituting the corresponding template, the number of lines, and the shape of the template may be determined differently based on coding parameters.

For example, the shape of the corresponding template may be configured differently depending on attributes such as the partitioning shape and size of the current block or a neighbor block and statistical values of the attributes.

For example, a template having a side of a size equal to that of a side coming into contact with the current block or the neighbor block may be configured.

For example, a template having a side of a size smaller than that of the side coming into contact with the current block or the neighbor block may be configured.

For example, a template having a side of a size larger than that of the side coming into contact with the current block or the neighbor block may be configured.

For example, a template that uses a value, calculated based on the sizes of the sides of the current block and the neighbor block, as the size of the side may be configured. Here, the calculated value may be any of statistical values such as a maximum value, a minimum value, and a median value.

For example, when the size of the current block or the neighbor block is less than a threshold, the template may be configured by reducing the number of lines or pixels, and the size of the template may be reduced.

For example, when the size of the current block or the neighbor block is less than the threshold, the template may be configured by increasing the number of lines or pixels, or the size of the template may be increased.

For example, when the size of the current block or the neighbor block is greater than the threshold, the template may be configured by reducing the number of lines or pixels, and the size of the template may be reduced.

For example, when the size of the current block or the neighbor block is greater than the threshold, the template may be configured by increasing the number of lines or pixels, and the size of the template may be increased.

The threshold may be a value preset by the encoder/decoder, and may be a value signaled from the encoder to the decoder.

The number of pixels constituting the template, the number of lines, and the shape of the template may be determined differently based on the motion information of the neighbor block.

For example, the shape of the template may be configured differently depending on the motion information of the neighbor block and the statistical values of the motion information.

For example, when one of statistical values of the motion vector of the neighbor block is less than a threshold, the template may be configured by reducing the number of lines or pixels, and the size of the template may be further reduced.

For example, when one of statistical values of the motion vector of the neighbor block is less than the threshold, the template may be configured by increasing the number of lines or pixels, and the size of the template may be reduced.

For example, when one of statistical values of the motion vector of the neighbor block is greater than the threshold, the template may be configured by reducing the number of lines or pixels, and the size of the template may be reduced.

For example, when one of statistical values of the motion vector of the neighbor block is greater than the threshold, the template may be configured by increasing the number of lines or pixels, and the size of the template may be reduced.

The threshold may be a value preset by the encoder/decoder, and may be a value signaled from the encoder to the decoder.

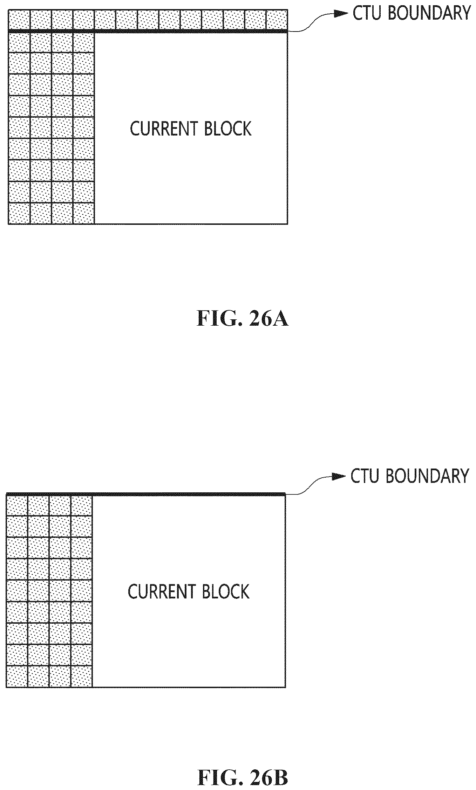

FIGS. 26A and 26B illustrate a method for configuring a template when a top side is a CTU boundary.

In template matching, a current template for a current block may be configured using neighboring (surrounding) pixels of the current block. A reference template matching the current template may be configured using pixels in a search area of a reference image.

The reference template may be the matched template described above in embodiments. Alternatively, the reference template may be a template configured using the matched template.

Upon configuring the current template to which template matching is to be applied, when a top boundary of the current block is a CTU boundary, a region adjacent to the top of the current block may not be used as a template.

Alternatively, when the top boundary of the current block is a CTU boundary, the template may be configured using a number of above pixel lines less than the number of left pixel lines referenced for a left template for the current block.

For example, the number of left pixel lines may be 4, and the number of above pixel lines may be 2.

FIG. 26A illustrates an embodiment in which one above pixel line is used when the top side of the current block is a CTU boundary. In other words, the number of above pixel lines used to configure an above template may be less than the number of left pixel lines used to configure a left template.

FIG. 26B illustrates an embodiment in which above pixel lines are not used when the top side of the current block is a CTU boundary.

The template configuration method used when the top boundary of the current block, described above in embodiments, is the CTU boundary may also be applied to the case where the left boundary of the current block is the CTU boundary. However, description of the above pixel lines and description of left pixel lines may be interchanged.

**Error cost**

In embodiments, error cost may be a value derived by differences between one or more pixel values of comparison targets. Each pixel value difference may be the difference between the pixel values of the corresponding pixels in the targets.

For example, the error cost may be calculated by at least one of the methods listed below:

- Sum of Absolute Differences (SAD) / Sum of Absolute Errors (SAE)
- Mean Absolute Difference (MAD) / Mean Absolute Error (MAE)
- Sum of Squared Differences (SSD)/ Sum of Squared Errors (SSE)
- Mean Squared Difference (MSD)/ Mean Squared Error (MSE)
- Mean Removed Sum of Absolute Differences (MR-SAD)
- Sum of Absolute Transformed Differences (SATD)

**Information in embodiments**

In embodiments, motion information may refer to information including at least one of a prediction list utilization flag, reference image list information, a reference image, a motion vector candidate, a motion vector candidate index, a merge candidate, and a merge index, or information that can be derived using such information, as well as a motion vector, a block vector, a reference image index, and an inter-prediction indicator. Also, the motion information may include coding parameters related to inter-prediction and intra block copy.

In embodiments, intra-prediction information may include at least one of intra luma prediction mode/direction, intra chroma prediction mode/direction, an intra-prediction mode candidate list (or Most Probable Mode: MPM), an intra-prediction mode candidate index (or MPM index), intra partitioning information, a gradient/prediction mode derived through a Decoder-side Intra Mode Derivation (DIMD) method, a prediction mode derived through a Template-based Intra Mode Derivation (TIMD) method, a template matching prediction flag, and a template matching block vector, or information that can be derived using such information.

In embodiments, candidate list management may refer to a process of configuring a candidate list, reducing a candidate list, and adding a candidate to the candidate list and a process of removing a candidate from the candidate list.

In embodiments, the final candidate list may refer to a list including final candidates (i.e., candidate blocks) used to determine a reference block at a reference block determination step.

Image encoding/decoding using template matching prediction and a method of using a template matching block vector determined through template matching prediction for an image encoding/decoding process may be applied to at least one of a luma component and a chroma component of the current block.

Further, image encoding/decoding using template matching prediction and a method of using a template matching block vector determined through template matching prediction for an image encoding/decoding process may be applied to at least one of a Cb component and a Cr component of the current block.

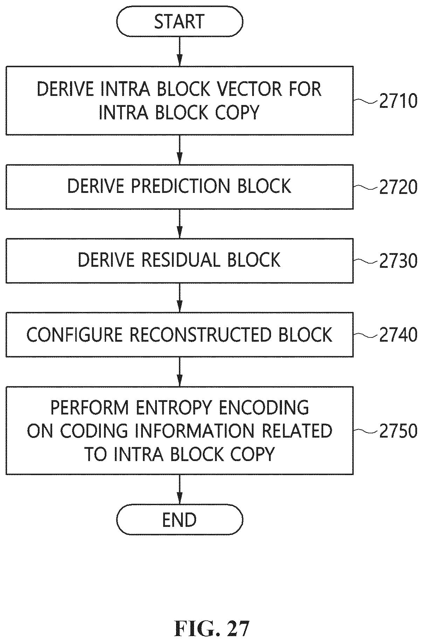

FIG. 27 is a flowchart of an image encoding method according to an embodiment.

The following steps 2710 to 2750 may be performed by the processing unit 1610 of the encoding apparatus 1600.

Step 1810, described above with reference to FIG. 18, may include step 2710.

At step 2710, a block vector may be derived.

For example, the block vector may be an intra block vector for intra block copy.

For example, the block vector may be a block vector, motion information or a motion vector used in a specific prediction mode described in embodiments.

The block vector may be information used for prediction in the prediction mode determined by the encoding apparatus 1600.

Step 1840, described above with reference to FIG. 18, may include step 2720.

At step 2720, a prediction block for a target block may be derived by performing prediction based on the block vector.

At step 2730, a residual block for the target block may be derived.

At step 2740, a reconstructed block for the target block may be derived based on the prediction block and the residual block.

Step 1820, described above with reference to FIG. 18, may include step 2750.

At step 2750, encoding may be performed on information related to intra block copy. The information related to intra block copy may refer to information used to perform intra block copy described in embodiments. The information related to intra block copy may refer to information for specifying intra block copy described in embodiments.

The prediction information may include prediction mode information. The prediction mode information may represent at least one of prediction modes described in embodiments. The prediction mode information may indicate whether the specific prediction mode described in embodiments is used.

The prediction modes may be modes that use intra block copy. In this regard, the prediction mode information may be included in the information related to intra block copy.

The prediction information may include the information related to intra block copy.

Encoded information related to intra block copy may be generated by performing encoding on the information related to intra block copy. The encoded information about the target block may include the encoded information related to the intra block copy.

When step 2750 is performed, a bitstream may be generated.

The bitstream may include the encoded information about the target block used to perform decoding on the target block.

Alternatively, a bitstream including the encoded prediction information and/or the encoded information related to intra block copy may be generated.

Alternatively, the bitstream may include the prediction information and/or the information related to intra block copy.

The bitstream may be transmitted from the communication unit 1620 of the encoding apparatus 1600 to the communication unit 1720 of the decoding apparatus 1700.

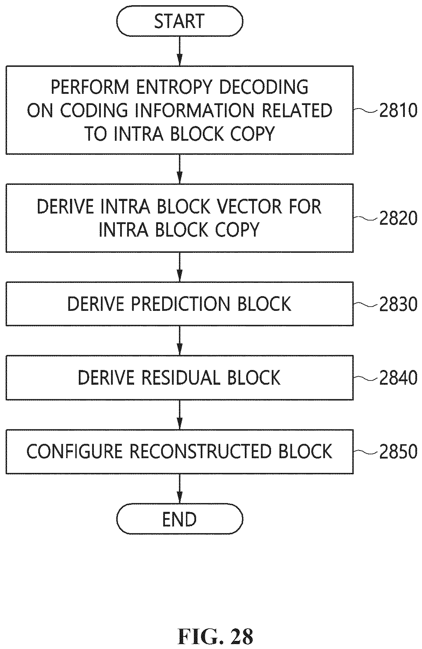

FIG. 28 is a flowchart of an image decoding method according to an embodiment.

The bitstream may be transmitted from the communication unit 1620 of the encoding apparatus 1600 to the communication unit 1720 of the decoding apparatus 1700.

As described above, the bitstream may include encoded information about a target block used to perform decoding on the target block.

Alternatively, the bitstream may include encoded prediction information and/or encoded information related to intra block copy.

Alternatively, the bitstream may include prediction information, prediction mode information, and/or information related to intra block copy.

The following steps 2810 to 2850 may be performed by the processing unit 1610 of the encoding apparatus 1600.

Step 1920, described above with reference to FIG. 19, may include step 2810.

At step 2810, decoding may be performed on information related to intra block copy.

Information related to intra block copy may be generated by performing decoding on the encoded information related to intra block copy. The information about the target block may include the information related to the intra block copy.

The prediction information may include the information related to intra block copy.

The prediction information may include prediction mode information. The prediction mode information may represent at least one of prediction modes described in embodiments. The prediction mode information may indicate a prediction mode used to perform decoding on the target block. The prediction mode information may indicate whether the specific prediction mode described in embodiments is used.

The information related to intra block copy may refer to information used to perform intra block copy described in embodiments. The information related to intra block copy may refer to information for specifying intra block copy described in embodiments.

The prediction modes may be modes that use intra block copy. In this regard, the prediction mode information may be included in the information related to intra block copy.

The bitstream may include prediction mode information, prediction information and/or the information related to intra block copy.

The information related to intra block copy may refer to information used to perform intra block copy described in embodiments. The information related to intra block copy may refer to information for specifying intra block copy described in embodiments.

Step 1930, described above with reference to FIG. 19, may include step 2820.

At step 2820,

a block vector may be derived based on the prediction information.

Further, a block vector for intra block copy may be derived based on the information related to intra block copy.

Step 1940, described above with reference to FIG. 19, may include step 2830.

At step 2830, a prediction block for the target block may be derived by performing prediction based on the block vector.

For example, the block vector may be an intra block vector for intra block copy.

At step 2840, a residual block for the target block may be derived.

At step 2850, a reconstructed block for the target block may be derived based on the prediction block and the residual block.

## Method for performing intra block copy

Hereinafter, embodiments of an image encoding/decoding method, apparatus, and storage medium for storing a bitstream, which perform intra block copy, will be described.

Descriptions of the image encoding/decoding method, apparatus, and storage medium for storing a bitstream, which perform intra block copy, described in embodiments, may also be applied equally or similarly to a template matching prediction mode.

A single image may be encoded/decoded in one of the prediction modes described in embodiments, such as an intra-prediction mode, an inter-prediction mode, an intra block copy mode, and a template matching prediction mode.

Also, a single image may be encoded/decoded in one of the prediction modes described in embodiments, such as an intra-prediction mode, an inter-prediction mode, an intra block copy mode, and a template matching prediction mode.

An encoding/decoding method based on intra block copy prediction may be used in at least one of the case where a luma component and a chroma component have independent block partitioning structures, respectively (i.e., the case where a dual tree structure is applied to the current block) and the case where a luma component and a chroma component have the same block partitioning structure (i.e., the case where a single tree structure is applied to the current block).

The intra block copy mode may be a method for deriving a prediction block from a previously encoded/decoded region in the same picture using a Block Vector (BV). Here, the same picture may be the current picture. Therefore, the intra block copy mode may be regarded as one of intra-prediction modes.

Here, the block vector may refer to an intra block vector.

Here, the block vector may be derived from a block vector generated by intra block copy.

Here, the block vector may be derived from a block vector generated by template matching.

Here, the block vector generated by template matching may be at least one of a prediction value of the block vector used in the intra block copy mode and the value of the block vector itself.

The block vector generated by template matching may include at least one of a luma block vector generated by template matching, a chroma block vector generated by template matching, a chroma Cb block vector generated by template matching, and a chroma Cr block vector generated by template matching.

Here, the previously encoded/decoded region may be a region within a reconstructed image or a decoded image for the current image. Here, a region in the reconstructed image may refer to a reconstructed region, and a region in the decoded image may refer to a decoded region.

Here, the previously encoded/decoded region in the current image may be a reconstructed region in the current image, on which at least one of in-loop filtering such as chroma scaling and luma mapping; deblocking filtering; adaptive sample offset filtering; and adaptive in-loop filtering is not performed.

Alternatively, the previously encoded/decoded region in the current picture may be a reconstructed/decoded region in the current image on which at least one of in-loop filtering such as chroma scaling and luma mapping; deblocking filtering; adaptive sample offset filtering; and adaptive in-loop filtering is performed.

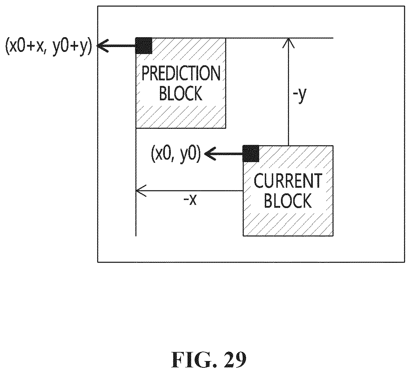

FIG. 29 illustrates a method for selecting a prediction block according to an example.

A current block may be encoded/decoded in an intra block copy mode, and the block vector (x, y) may be derived.

A block indicated by the derived block vector may be used as a reference block or a prediction block for the current block. A reference block indicated by the derived block vector may be used as a prediction block.

A reference block spaced apart from the current block by x samples in a horizontal direction and spaced apart from the current block by y samples in a vertical direction may be used as the reference block or the prediction block for the current block.

Here, the size of the reference block or the prediction block may be identical to the size of the current block. The reference block may be a block in a previously encoded/decoded area.

Here, when x is a positive integer, the reference block may be spaced apart from the current block by x samples in a right horizontal direction, whereas when x is a negative integer, the reference block may be spaced apart from the current block by -x samples in a left horizontal direction. When y is a positive integer, the reference block may be spaced apart from the current block by y samples in a downward vertical direction, whereas when y is a negative integer, the reference block may be spaced apart from the current block by -y samples in an upward vertical direction.

Alternatively, a movement direction may be opposite to that described above depending on the signs of x and y. For example, when x is a positive integer, the reference block may be spaced apart from the current block by x samples in the left horizontal direction, whereas when x is a negative integer, the reference block may be spaced apart from the current block by -x samples in the right horizontal direction. When y is a positive integer, the reference block may be spaced apart from the current block by y samples in the upward vertical direction, whereas when y is a negative integer, the reference block may be spaced apart from the current block by -y samples in the downward vertical direction.

The size of the current block may be different from the size of the reference block. For example, the size of the current block may be reduced by performing downsampling or sub-sampling on the current block. The reference block may be determined using the reduced current block. The size of the reference block may be enlarged by performing upsampling or interpolation on the determined reference block. The reference block having the enlarged size may be used as a prediction block for the current block. Alternatively, a prediction block for the current block may be derived using the reference block having the enlarged size.

At least one of the size of the current block and the size of the reference block may be determined depending on at least one of the coding parameters of current block/CTB/CTU.

As illustrated in FIG. 29, when both of x and y are negative integers and the position of a top-left sample in the current block is (x0, y0), the position of a top-left sample in the prediction block for the current block may be (x0 + x, y0 + y).

Here, the prediction block for the current block may refer to a reference block for the current block.

## Intra block copy mode for luma component

When prediction using an intra block copy mode is used for a current luma component block, the block may be encoded/decoded by one of the following methods.

- Similar to a skip mode in an inter-prediction mode, an intra block copy skip mode in which a block vector of the current block is derived from a block vector of a block encoded/decoded before the current block and in which entropy encoding/decoding is not performed on a residual block
- Similar to a merge mode in an inter-prediction mode, an intra block copy merge mode in which a block vector of the current block is derived from a block vector of a block encoded/decoded before the current block and in which entropy encoding/decoding is performed on a residual block
- Similar to an Advanced Motion Vector Prediction (AMVP) mode in an inter-prediction mode, an intra block copy AMVP mode in which a block vector is encoded/decoded
- Similar to an Adaptive Motion Vector Resolution (AMVR) mode in an inter-prediction mode, an intra block copy AMVR mode in which the resolution of a block vector is encoded/decoded depending on one of one or more resolutions In embodiments, the intra block copy AMVP mode may also refer to the intra block copy AMVR mode.
- Multi-hypothesis intra block copy mode in which one or more block vectors or reference blocks are used and in which a weighted sum of sample values in one or more reference blocks is used as a prediction block for the current block. Here, instead of the weighted sum of the sample values, statistical values of the sample values may be used.

Information indicating whether at least one of the intra block copy skip mode, the intra block copy merge mode, the intra block copy AMVP mode, and the multi-hypothesis intra block copy mode is used may be utilized. Such information may be entropy encoded/decoded depending on at least one of the coding parameters of the current block/CTB/CTU and a neighbor block/CTB/CTU adjacent to the current block/CTB/CTU.

## Deblocking filtering

Based on whether an intra block copy mode is performed, deblocking filtering may be performed on a block boundary.

In an example, when the intra block copy mode is used in at least one of neighbor blocks adjacent to the boundary of a block, the boundary of the block may be set to a target block boundary on which deblocking filtering is to be performed in deblocking filtering, and deblocking filtering may be performed on the boundary of the block.

In another example, when an intra block copy mode is used in none of neighbor blocks adjacent to the boundary of a block, the boundary of the block may not be set to a target block boundary on which deblocking filtering is to be performed in deblocking filtering, and deblocking filtering may not be performed on the boundary of the block.

In a further example, when an intra block copy mode is used in at least one of neighbor blocks adjacent to the boundary of the block, it may be considered that inter-prediction is used for the block, in which the intra block copy mode is used, in deblocking filtering. Furthermore, in deblocking filtering, the boundary of the block may be set to the target block boundary on which deblocking filtering is to be performed, and deblocking filtering may be performed on the boundary of the block.

In yet another example, when an intra block copy mode is used in at least one of neighbor blocks adjacent to the boundary of the block, it may be considered that the block in which the intra block copy mode is used may be regarded as an intra-prediction block in deblocking filtering. Furthermore, in deblocking filtering, the boundary of the block may be set to the target block boundary on which deblocking filtering is to be performed, and deblocking filtering may be performed on the boundary of the block.

When it is determined that deblocking filtering is to be performed on the boundary of the block, deblocking filtering may be performed on the boundary of an 8x8-unit block among regions in the block in which the intra block copy mode is used.

Performance or non-performance of deblocking filtering on the boundary of the block, the filtering strength of deblocking filtering, etc. may be determined depending on at least one of coding parameters for the intra block copy mode.

In embodiments in which deblocking filtering is performed on the block boundary depending on whether the intra block copy mode is performed, the intra block copy mode may be replaced with a template matching prediction mode. Therefore, deblocking filtering may be performed on the boundary of the block depending on whether the template matching prediction mode is performed.

**Derivation of coding mode**

In the encoder/decoder, the coding mode of a current luma component block may be derived, as will be described below.

In order to determine the mode of the current luma component block, at least one or more of pieces of information in [information 1] to [information 3] described below may be used, and at least one or more of the pieces of information may be encoded/decoded.

**[Information** 1] information in which a luma component block indicates a skip mode (e.g., a skip mode identifier/flag/index, skip_flag/cu_skip_flag, or the like)

The case where the information indicating the skip mode has a specific value may mean that the skip mode is used in the current block. For example, the case where identifier/flag/index has a first value (e.g., 1) may indicate that the skip mode is used, and the case where identifier/flag/index has a second value (e.g., 0) may indicate that the mode of the current block is not a skip mode.

**[Information 2]** prediction mode information of a luma component block (e.g., index/flag/identifier or the like)

At least one of an intra-prediction mode, an inter-prediction mode, and an intra block copy mode may be indicated in the prediction mode information.

In an example, a first value (e.g., 0), a second value (e.g., 1), and a third value (e.g., 2) of a syntax element indicating the prediction mode information may indicate the intra-prediction mode, the inter-prediction mode, and the intra block copy mode, respectively.

In another example, first prediction mode information (e.g., index/flag/identifier, pred_mode_flag or the like) may indicate whether the intra-prediction mode is used. The first prediction mode information equal to a first value (e.g., 1) may indicate that the prediction mode of the current block is the intra-prediction mode. The first prediction mode information equal to a second value (e.g., 0) may indicate that the prediction mode of the current block is not an intra-prediction mode.

When the first prediction mode information indicates that the prediction mode of the current block is not an intra-prediction mode, whether the prediction mode of the current block is the inter-prediction mode or the intra block copy mode may be determined by additionally encoding/decoding second prediction mode information (e.g., index/flag/identifier, pred _mode_ibc_flag, or the like).

The second prediction mode information equal to a first value (e.g., 1) may indicate that the prediction mode of the current block is the intra block copy mode. The second prediction mode information equal to a second value (e.g., 0) may indicate that the prediction mode of the current block is the inter-prediction mode.

In a further example, the first prediction mode information (e.g., index/flag/identifier, pred_mode_flag or the like) may indicate whether the prediction mode of the current block is an intra-prediction mode or an inter-prediction mode.

The first prediction mode information equal to a first value (e.g., 1) may indicate that the prediction mode of the current block is the intra-prediction mode. The first prediction mode information equal to a second value (e.g., 0) may indicate that the prediction mode of the current block is the inter-prediction mode.

Whether the prediction mode of the current block is the inter-prediction mode or the intra block copy mode may be determined by additionally deriving/encoding/decoding the second prediction mode information (e.g., index/flag/identifier, pred _mode_ibc_flag, or the like).

When the value of the second prediction mode information is a first value (e.g., 1), the intra block copy mode may be determined to be the prediction mode of the current block. When the value of the second prediction mode information is a second value (e.g., 0), the intra-prediction mode or the inter-prediction mode determined by the first prediction mode information may be determined to be the prediction mode of the current block without change.

[Information 3] information indicating whether a merge mode is used in a luma component block (e.g., a merge mode identifier/flag/index, merge_flag, or the like)

When a skip mode is not used in a current luma component block, but an intra block copy mode is used therein, the case where information indicating whether the merge mode is used has a specific value may indicate that the merge mode is used in the current block. For example, the case where identifier/flag/index that is information indicating the merge mode has a first value (e.g., 1) may indicate that the prediction mode of the current block is the merge mode. The identifier/flag/index having a second value (e.g., 0) may indicate that the prediction mode of the current block is not a merge mode.

The coding mode of the current luma component block may be derived depending on at least one of the coding parameters of the current block/CTB/CTU and a neighbor block/CTB/CTU adjacent to the current block/CTB/CTU.

The first value and the second value, described in embodiments, may be different from the exemplified values. For example, the first value may be 0, and the second value may be 1.

In embodiments, instead of the luma component block, a chroma component block may be used. For example, the current luma component block described in embodiments may be replaced with the current chroma component block.

The coding mode of the current luma component block may be determined using the coding information, described above in embodiments, as will be described later. Here, the coding mode may refer to a prediction mode. Also, the coding information may refer to prediction mode information.

When a skip mode is applied to the current luma component block and the sub-picture/brick/tile group/slice/tile of the block is an I-type, the prediction mode information may not be entropy encoded/decoded, and an intra block copy skip mode may be determined to be the prediction mode of the block.

Here, prediction modes that can be used for the I-type may be an intra-prediction mode and an intra block copy mode. The reason for this is that a skip mode is not used for the I-type.

When the skip mode is applied to the luma component block and the subpicture/brick/tile group/slice/tile of the block is not an I-type, the prediction mode information may be encoded/decoded.

Here, when the intra block copy mode is applied to the luma component block depending on the prediction mode information, the intra block copy skip mode may be determined to be the prediction mode of the luma component block.

When a skip mode is not applied to the luma component block and the intra block copy mode is applied to the luma component block depending on the prediction mode information, information indicating whether a merge mode is applied may be encoded/decoded.

In this case, when the information indicating whether the merge mode is applied represents that the merge mode is applied to the luma component block, the intra block copy merge mode may be determined to be the prediction block of the luma component block.

Furthermore, in the case where a skip mode is not applied to the luma component block and the residual block of the luma component block and the chroma component block is encoded/decoded and where the intra block copy mode is applied to the luma component block depending on the prediction mode information, information indicating whether the merge mode is applied may be encoded/decoded.

In this case, when the information indicating whether the merge mode is applied represents that the merge mode is applied to the luma component block, the intra block copy merge mode may be determined to be the prediction block of the luma component block.

When a skip mode and a merge mode are not applied to the luma component block, and the intra block copy mode is applied to the luma component block, the intra block copy AMVP mode may be determined to be the prediction mode of the luma component block.

The coding mode of the luma component block may be derived depending on at least one of pieces of coding information described in embodiments; and at least one of encoding parameters of the current block/CTB/CTU and the neighbor block/CTB/CTU adjacent to the current block/CTB/CTU.

## Tree structure

qtbtt_dual_tree_intra_flag may be used to indicate that each CTU is partitioned into 64x64 coding units for an I slice and each 64x64 coding unit is used as the root node of a luma component and a chroma component.

For example, qtbtt_dual_tree_intra_flag equal to a first value (e.g., 0) may indicate that 1) each CTU is partitioned into 64x64 coding units and 2) each 64x64 coding unit is not used as the root node of a luma component and a chroma component. qtbtt_dual_tree_intra_flag equal to a second value (e.g., 1) may indicate that 1) each CTU is partitioned into 64x64 coding units, and 2) each 64x64 coding unit is used as the root node of a luma component and a chroma component.

When the value of qtbtt_dual_tree_intra_flag is the first value (e.g., 0), the block partitioning structure of the luma component and the block partitioning structure of the chroma component may be identical to each other. However, depending on the format of the chroma component, the block size of the luma component and the block size of the chroma component may be different from each other. In this case, it may be considered that a single tree structure is used. The single tree type may be identified by a specific value SINGLE_TREE. The value of the tree type equal to SINGLE_TREE may indicate that a single tree is used for partitioning of the block.

When a slice type is an I-slice, and qtbtt_dual_tree_intra_flag has a second value (e.g., 1), the block partitioning structures of a luma component and a chroma component from the 64x64 coding unit may be different from each other. In this case, the block partitioning structure of the luma component and the block partitioning structure of the chroma component may be independent of each other. In this case, it may be considered that a dual tree structure is used. The tree type of the luma component in the dual tree structure may be identified by a specific value DUAL_TREE_LUMA, and the tree type of the chroma component in the dual tree structure may be identified by a specific value DUAL_TREE_CHROMA. The value of the tree type equal to DUAL_TREE_LUMA may indicate that the luma component is currently processed. The value of the tree type equal to DUAL_TREE_CHROMA may indicate that the chroma component is currently processed.

When a single tree structure is used, a minimum block of a chroma component that uses at least one of an intra block copy mode and a template matching prediction mode may be set to a 2x2 block. Here, for the chroma component, a block having a size smaller than that of the 2x2 block may not be used. That is, when at least one of the intra block copy mode and the template matching prediction mode is used for a block having a size equal to or greater than that of the 2x2 block, partitioning from the block into blocks having a size smaller than that of the 2x2 block may not be allowed.

Further, when a single tree structure is used, a minimum block of a chroma component that uses at least one of an intra block copy mode and a template matching prediction mode may be set to a 4x4 block. In this case, for the chroma component, a 2x2 block, a 2x4 block, and a 4x2 block may not be used. That is, when at least one of the intra block copy mode and the template matching prediction mode is used for a block having a size equal to or greater than at least one of the 2x2 block size, the 2x4 block size, and the 4x2 block size, partitioning from the block into at least one of a 2x2 block, a 2x4 block, and a 4x2 block may not be allowed.

Also, when a dual tree structure is used, the minimum block of the chroma component that uses at least one of the intra block copy mode and the template matching prediction mode may be set to a 4x4 block. Here, for the chroma component, a 2x2 block, a 2x4 block, and a 4x2 block may not be used. That is, when at least one of the intra block copy mode and the template matching prediction mode is used for a chroma block having a size equal to or greater than at least one of a 2x2 block size, a 2x4 block size, and a 4x2 block size, partitioning from the chroma block into at least one of a 2x2 block, a 2x4 block, and a 4x2 block may not be allowed.

## Transform and inverse transform

**In** order to improve subjective/objective image quality of an image, the encoder may generate a primary transform coefficient by performing primary transform on a residual block, may generate a secondary transform coefficient by performing secondary transform on the primary transform coefficient, may generate a quantized coefficient level by applying quantization to the secondary transform coefficient, and may perform entropy encoding on the quantized coefficient level.

The decoder may perform entropy decoding on the quantized coefficient level, may generate a secondary transform coefficient by applying dequantization to the quantized coefficient level, may generate a primary transform coefficient by performing secondary inverse transform on the secondary transform coefficient, and may generate a reconstructed residual block by performing primary inverse transform on the primary transform coefficient.

The secondary transform may be performed by the encoder between the primary transform and quantization, and the secondary inverse transform may be performed by the decoder between dequantization and primary inverse transform. Here, the secondary transform may be referred to as a reduced secondary transform or lowfrequency non-separable transform (LFNST).

When the current block uses at least one of an intra block copy mode or a template matching prediction mode, the secondary transform/inverse transform may be performed on the current block. Here, the secondary transform/inverse transform may be performed on at least one of a luma component block and a chroma component block.

Further, a transform matrix set may be determined depending on at least one of the intra block copy mode or the template matching prediction mode of the current block.

Here, when the secondary transform is performed on the current block, a transform matrix index indicating which one of transform matrixes in the transform matrix set is to be used for the secondary transform/inverse transform may be signaled/encoded/decoded.

## Derivation of coding mode of chroma component block

By the encoder/decoder, the coding mode of a current chroma component block may be derived, as described below.

In embodiments, the coding mode may refer to a prediction mode. Also, coding information may refer to prediction mode information.

When a luma component and a chroma component have the 'same block partitioning structure (i.e., a single tree type, SINGLE_TREE)', the coding mode may be determined, as described below.

The prediction mode (e.g., an intra-prediction mode, an inter-prediction mode or an intra block copy mode) of a chroma component block may be identical to the prediction mode of the corresponding luma component block.

In embodiments, the intra block copy mode may refer to at least one of an intra block copy skip mode, an intra block copy merge mode, an intra block copy AMVP mode, and a template matching prediction mode.

Further, when the prediction mode of the corresponding luma component block is the intra block copy skip mode, a residual block may not be encoded/decoded for the chroma component block, and residual block information may not be signaled. Here, information indicating that the residual block information is not signaled (e.g., cu_cbf, d tu_cbf, or the like) may not be encoded/decoded. tu_cbf may include at least one of tu_cbf_cb and tu_cbf_cr.

Further, when the prediction mode of the corresponding luma component block is the intra block copy merge mode, a residual block may not be encoded/decoded for the chroma component block, and residual block information may not be signaled. Here, information indicating that the residual block information is not signaled (e.g., cu_cbf, d tu_cbf, or the like) may not be encoded/decoded. tu_cbf may include at least one of tu_cbf cb and tu_cbf_cr.

When the luma component and the chroma component have the same block partitioning structure, and the prediction mode of the current chroma component block is an intra block copy mode or a template matching prediction mode (or when the prediction mode of the luma component block corresponding to the current chroma component block is an intra block copy mode or a template matching prediction mode), information required for encoding/decoding of the current chroma component block may be derived from coding information of the luma component block corresponding to the current chroma component block.

Here, the information required for encoding/decoding of the current chroma component block may be derived from the coding information of the luma component block corresponding to a sample position corresponding to the center of the chroma component block. Alternatively, the information required for encoding/decoding of the current chroma component block may be derived from the coding information of the luma component block corresponding to a sample position corresponding to the top-left of the chroma component block.

The coding mode of the current chroma component block may be derived depending on at least one of coding parameters of the current chroma component block/CTB and a luma component block/CTB corresponding to the chroma component block/CTB.

When each of a luma component and a chroma component has an 'independent block partitioning structure (i.e., the tree type of the dual tree structure DUAL_TREE_LUMA or DUAL_TREE_CHROMA)', the coding mode of the chroma component block may be determined from the encoded/decoded coding mode information of the chroma component block. The coding modes of the chroma component block may be an intra-prediction mode, an inter-prediction mode, an intra block copy mode, a template matching prediction mode, and the like (as in the case of the coding modes of the luma component block). Here, the coding mode may refer to a prediction mode.

In an example, a first value (e.g., 0), a second value (e.g., 1), and a third value (e.g., 2) of a syntax element indicating the prediction mode information may indicate the intra-prediction mode, the inter-prediction mode, and the intra block copy mode, respectively.

In another example, first prediction mode information (e.g., index/flag/identifier, pred_mode_flag or the like) may indicate whether the intra-prediction mode is used. The first prediction mode information equal to a first value (e.g., 1) may indicate that the prediction mode of the chroma component block is the intra-prediction mode. The first prediction mode information equal to a second value (e.g., 0) may indicate that the prediction mode of the chroma component block is not an intra-prediction mode.

When the first prediction mode information indicates that the prediction mode of the chroma component block is not an intra-prediction mode, whether the prediction mode of the chroma component block is an inter-prediction mode or an intra block copy mode may be determined by additionally encoding/decoding second prediction mode information (e.g., index/flag/identifier, pred_mode_ibc_flag, or the like).

The second prediction mode information equal to a first value (e.g., 1) may indicate that the prediction mode of the chroma component block is the intra block copy mode. The second prediction mode information equal to a second value (e.g., 0) may indicate that the prediction mode of the chroma component block is the inter-prediction mode.

In a further example, the first prediction mode information (e.g., index/flag/identifier, pred_mode_flag, or the like) may indicate whether the prediction mode of the chroma component block is an intra-prediction mode or an inter-prediction mode.

The first prediction mode information equal to a first value (e.g., 1) may indicate that the prediction mode of the chroma component block is the intra-prediction mode. The first prediction mode information equal to a second value (e.g., 0) may indicate that the prediction mode of the chroma component block is the inter-prediction mode.

Whether the prediction mode of the chroma component block is the inter-prediction mode or the intra block copy mode may be determined by additionally deriving/encoding/decoding the second prediction mode information (e.g., index/flag/identifier, pred _mode_ibc_flag, or the like).

When the value of the second prediction mode information is a first value (e.g., 1), the intra block copy mode may be determined to be the prediction mode of the chroma component block. When the value of the second prediction mode information is a second value (e.g., 0), the intra-prediction mode or the inter-prediction mode determined by the first prediction mode information may be determined to be the prediction mode of the chroma component block without change.

In yet another example, the second prediction mode information (e.g., index/flag/identifier, pred _mode_ibc_flag or the like) may be signaled/derived. When the second prediction mode information has a first value (e.g., 1), the intra block copy mode may be determined to be the prediction mode of the chroma component block, whereas when the second prediction mode information has a second value (e.g., 0), the intra-prediction mode may be determined to be the prediction mode of the chroma component block.

In yet another example, when the second prediction mode information indicates an intra-prediction mode (i.e., when the second prediction mode information has a second value), a template matching prediction mode may be determined to be the prediction mode of the chroma component block through a template matching prediction mode flag.

When the luma component and the chroma component have independent block partitioning structures and the prediction mode of the current chroma component block is an intra block copy mode or a template matching prediction mode, information required for encoding/decoding of the current chroma component block (e.g., a block vector) may be derived from the coding information of a luma component block corresponding to the current chroma component block.

Here, the information required for encoding/decoding of the current chroma component block may be derived from the coding information of the luma component block corresponding to a sample position corresponding to the center of the chroma component block. Alternatively, the information required for encoding/decoding of the current chroma component block may be derived from the coding information of the luma component block corresponding to a sample position corresponding to the top-left of the chroma component block.

The coding mode of the chroma component block may be derived depending on at least one of coding parameters of the current chroma component block/CTB and a neighbor block/CTB adjacent to the current chroma component block/CTB.

### Block vector derivation step for intra block copy prediction

Hereinafter, block vector derivation at steps 2710 and 2820 will be described.

The block vector derivation step for prediction using an intra block copy mode may include at least one of the step of deriving a block vector of a luma component block; and the step of deriving a block vector of a chroma component block.

### Step of deriving block vector of luma component block

When the current block is a luma component block and is encoded/decoded in an intra block copy skip mode or an intra block copy merge mode, a block vector derivation method may be performed as described below.

Further, when the current block is a luma component block and is encoded/decoded in a template matching prediction mode, the block vector derivation method may be performed as described below.

Further, in the block vector derivation method in embodiments, at least one of candidate list configuration and block vector derivation may be performed using at least one of a block vector based on intra block copy and a template matching block vector.

In order to derive the block vector of a luma component block, a block vector candidate list may be configured from block vector candidates of a luma component block encoded/decoded before the current block is encoded/decoded.

At least one of the candidates included in the configured block vector candidate list may be used as a block vector of the current block. Here, block vector candidate information (e.g., identifier/index/flag, merge_idx, or the like) for identifying a candidate to be used in the block vector candidate list may be entropy encoded/decoded, and may be derived based on at least one of coding parameters.

Here, as the block vector candidate list, at least one or more lists may be configured. At least one or more block vector candidates may be used in the current block, and at least one or more pieces of block vector candidate information may be entropy encoded/decoded.

The block vector candidate list may be configured using a maximum of N candidates. Here, N may be a positive integer.

Here, N may denote the maximum number of candidates in the block vector candidate list. N may be derived depending on at least one of the coding parameters of the current block/CTB/CTU.

Further, at least one of multiple candidates, which will be described below, may be included in the block vector candidate list.

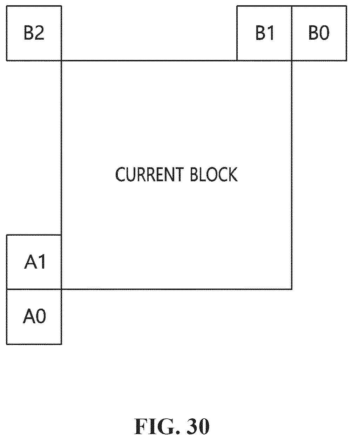

FIG. 30 illustrates spatial candidates according to an example.

A block vector may be derived from at least one of block B1 adjacent to the top of the current block, block A1 adjacent to the left of the current block, block B0 diagonally adjacent to a top-right corner of the current block, block B2 diagonally adjacent to a top-left corner of the current block, and block A0 diagonally adjacent to a bottom-left corner of the current block. The derived block vector may be determined to be a block vector candidate for the current block.

In FIG. 30, the illustrated rectangles A0, A1, B0, B1 and B2 may indicate blocks adjacent to the target block, and may indicate positions relative to the target block. For example, block A0 may be a block occupying position A0.

Here, at least one of the derived block vectors may be included in a block vector candidate list.

Here, the derived block vector may be a block vector candidate of an adjacent block that is adjacent to the current block.

Here, the block vectors of the adjacent blocks may be block vectors encoded/decoded via prediction that uses intra block copy.

Here, the block vectors of the adjacent blocks may be block vectors determined by template matching.

#### Priority between blocks

The block vector of block B2 adjacent to the top-left corner of the current block may not be used as a block vector candidate when all of blocks A1, B1, B0, and A0 have block vectors. That is, the block vector of block B2 may not be included in a block vector candidate list.

Further, for at least one of blocks A0, A1, B0, B1 and B2, whether a block vector is present in the corresponding block may be determined depending on priority. In other words, for each block, whether the corresponding block is encoded/decoded using the intra block copy mode or whether the prediction mode of the block is the intra block copy mode may be determined.

When the block vector of the corresponding block is present, the block vector of the block may be determined to be a block vector candidate.

At least one of determined block vectors may be included in the block vector candidate list.

For example, the priority between the blocks constituting the block vector candidate list may be (A1, B1, B0, A0, B2). Among the blocks listed in parentheses, blocks listed earlier may have higher priority than blocks listed later or may be processed before the blocks listed later.

#### Redundancy check

When the block vector candidate list is configured depending on priority, a redundancy check between block vector candidates already present in the block vector candidate list and block vector candidates to be newly added to the block vector candidate list may be performed. For example, when a block vector candidate to be newly added to the block vector candidate list overlaps a block vector candidate already present in the block vector candidate list, the overlapping block vector candidate may not be added to the block vector candidate list.

For example, when the block vector candidate list is configured in the order of (A1, B1, B0, A0, B2), a redundancy check with block A1 may be performed on block B1. A redundancy check with block B1 may be performed on block B. Also, a redundancy check with block A1 may be performed on block A0. A redundancy check with block A1 and a redundancy check with block B1 may be performed on block B2. A redundancy check on a block may be performed only when a block vector is present in the corresponding block.

For example, redundancy checks between a block vector to be added to the block vector candidate list and all block vectors already present in the block vector candidate list may be performed.

#### Availability determination

In embodiments, when a block vector is present in at least one of blocks A0, A1, B0, B1 and B2, the availability of the block vector for the method, described in embodiments, may be determined.

The availability of the block vector may indicate whether the corresponding block vector can be used in the method according to the embodiment.

For example, the block vector of the block may be determined to be a block vector candidate only when the block vector is available. When the block vector of the corresponding block is not available, the block vector may not be used as a block vector candidate. Here, whether the block vector is available may be determined depending on whether a reference sample (or a reference block) at a position indicated by the block vector is available.

When the reference sample (or reference block) at the position indicated by the block vector is available, it may be determined that the block vector is available. When the reference sample (or reference block) at the position indicated by the block vector is unavailable, it may be determined that the block vector is unavailable.

For example, when a region/position indicated by the block vector includes at least one of samples included in the current block, it may be determined that the block vector is unavailable.

For example, when a region/position indicated by the block vector includes at least one of a region/position/sample that falls out of the boundary of a picture/sub-picture/slice/tile group/tile/brick, it may be determined that the block vector is unavailable.

For example, when the block vector indicates a reference block, in the case where the position of the entire region or a certain pixel of the indicated reference block is present outside the reference region of the intra block copy, it may be determined that the block vector is unavailable. Here, the reference region of intra block copy may be configured to include specific units. For example, the reference region may include a current CTB line including the current block and N CTB lines adjacent to the top of the current CTB line. N may be an integer. For example, N may be 2. N may be explicitly transmitted in a higher-level syntax such as a parameter set/slice header/picture header, and may be a predefined value.

Description of the above-described block vector availability may be applied to each of various types of block vectors, described in embodiments. When a method for determining availability of a specific block vector is described in a specific embodiment, the above-described method for determining the availability of a block vector may be additionally applied as the method for determining the availability of the specific block vector according to the specific embodiment.

## History-based block vector

At least one of block vectors of at least one of blocks encoded/decoded before the current block is encoded/decoded may be stored in a buffer. At least one of the block vectors stored in the buffer may be determined to be a block vector candidate for the current block. At least one of the determined block vector candidates may be included in a block vector candidate list.

The block vectors may be block vectors encoded/decoded through intra block copy prediction.

The block vectors may be block vectors determined by template matching.

The block vectors may be stored in a buffer having a specific size depending on the order of encoding/decoding.

When the buffer is full, a specific block vector in the buffer may be deleted. The specific block vector may be a block vector stored first among the block vectors in the buffer. When the specific block vector is deleted, a new block vector (i.e., the block vector of the most recently encoded/decoded block) may be stored in the buffer.

The priority of the block vectors stored in the buffer may be determined depending on the order in which the block vectors are stored in the buffer. Here, the priority may indicate which one of block vectors is to be preferentially selected when the block vectors in the stored in the buffer are added to the block vector candidate list.

For example, the order may be designated such that, the longer the block vector is stored, the more preferentially the block vector is selected.

For example, the order may be designated such that, the more recently the block vector is stored, the more preferentially the block vector is selected.

For example, in the order in which the block vectors are stored in the buffer, the more recently stored block vector may be more preferentially added to the block vector candidate list.

Alternatively, in the order in which the block vectors are stored in the buffer, a block vector stored earlier may be more preferentially added to the block vector candidate list.

Such a block vector candidate may be referred to as a history-based block vector candidate. That is, each block vector stored in the buffer may refer to a history-based block vector candidate.

The buffer including a history-based block vector may be managed and used as a separate buffer from a buffer used in an inter-prediction mode.

The buffer including a history-based block vector may be divided into a buffer for block vectors encoded/decoded by intra block copy prediction and a buffer for block vectors determined by template matching prediction, and the divided buffers may be separately managed and used.

When a block vector candidate list is configured using at least one of history-based block vector candidates, whether each history-based block vector candidate is available for the current block may be determined, and the history-based block vector candidate may be added to the block vector candidate list only when the history-based block vector candidate is available.

Here, whether the history-based block vector is available may be determined depending on whether a reference sample (or a reference block) at a position indicated by the block vector is available.

For example, when the region/position indicated by the history-based block vector includes at least one of the samples included in the current block, it may be determined that the history-based block vector is unavailable.

For example, when the region/position indicated by the history-based block vector includes at least one of region/position/sample falling out of the boundary of a picture/sub-picture/slice/tile group/tile/brick, it may be determined that the history-based block vector is unavailable.

In the case where a block vector candidate list is configured using at least one of history-based block vector candidates, redundancy checks may be performed between each history-based block vector candidate and block vector candidates present in the block vector candidate list, and the history-based block vector candidate may be added to the block vector candidate list when a block vector candidate identical to the history-based block vector candidate is not present.

In another example, when the block vector candidate list is configured using at least one of history-based block vector candidates, redundancy checks between the history-based block vector candidate and block vector candidates may be performed.

When a block vector candidate identical to the history-based block vector candidate is not present among the block vector candidates after the redundancy checks are performed, the history-based block vector candidate may be added to the block vector candidate list.

In a further example, when the block vector candidate list is configured using at least one of history-based block vector candidates, redundancy checks between the history-based block vector candidate and block vector candidates present in the block vector candidate list may not be performed. Without performing redundancy checks, the history-based block vector candidate may be added to the block vector candidate list.

The buffer including history-based block vector candidates may be maintained while a specific unit is encoded/decoded. In other words, the buffer may be generated/used/managed for the specific unit. The specific unit may be one or more of a picture, a slice, a sub-picture, a brick, a tile group, a tile, a CTU, a CTU row, and a CTU column.

Furthermore, the buffer may include at least one of pieces of coding information of blocks encoded/decoded before the current block is encoded/decoded within the specific unit.

Furthermore, when the buffer is configured for the above-described specific unit, the buffer may be initialized at one or more of the start position, start region, start block, and start unit of the specific unit.

When the buffer is initialized, all of block vectors present in the buffer may be deleted. Alternatively, when the buffer is initialized, all of block vectors present in the buffer may be set to specific values. Here, the specific values may be the x value and the y value of block vector (x, y). Each of x and y may be an integer.

## Configuration of block vector candidate list

A block vector candidate list may be configured using a spatial block vector, as described below.

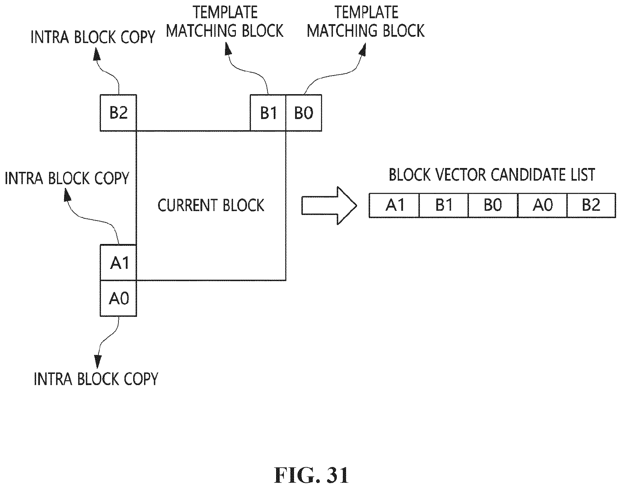

FIG. 31 illustrates encoding/decoding methods for adjacent blocks according to an example.

In order to configure a block vector candidate list for a current block, a spatial block vector may be referenced by adjacent blocks around the current block.

Here, when each adjacent block is encoded/decoded by an intra block copy method or is encoded/decoded by a template matching prediction method, the block vector of the adjacent block may be stored in a block vector candidate list.

For example, in the case where the block vectors of the adjacent blocks adjacent to the current block, illustrated in FIG. 31, are referenced, the block vector candidate list may be configured, as shown on the right side of FIG. 31 when the order of block vectors to be added to the block vector candidate list is (A1, B1, B0, A0, B2).

When the block vectors of the adjacent blocks are stored in the block vector candidate list, the maximum number of first block vectors that can be stored in the block vector candidate list may be N. The first block vectors may be the block vectors of the adjacent blocks encoded/decoded by the intra block copy method.

The maximum number of second block vectors that can be stored in the block vector candidate list may be M. The second block vectors may be block vectors derived by template matching prediction among the block vectors of the adjacent blocks. Each of M and N may be an integer greater than 0. For example, N may be 4. M may be 2.

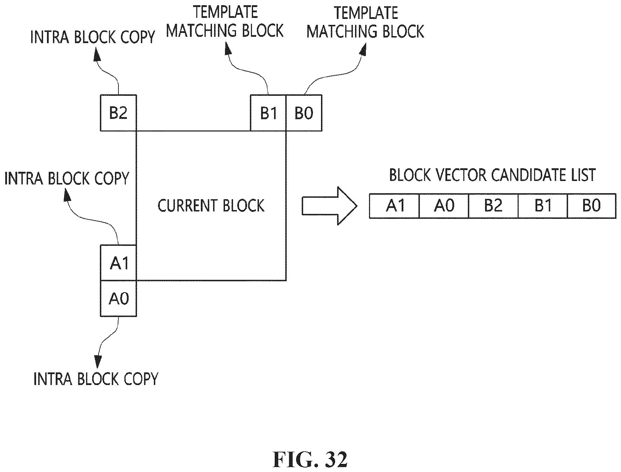

FIG. 32 illustrates other encoding/decoding methods for adjacent blocks according to an example.

In order to configure a block vector candidate list for a current block, a spatial block vector may be referenced by adjacent blocks around the current block.

When first block(s) encoded/decoded by an intra block copy method are present among the adjacent blocks, the block vector(s) of the first block(s) may be stored in a block vector candidate list. Next, when second block(s) encoded/decoded by a template matching prediction method are present among the adjacent blocks, block vector(s) derived through template matching prediction for the second block(s) may be stored in the block vector candidate list.

For example, in the case where the block vectors of the adjacent blocks adjacent to the current block, illustrated in FIG. 32, are referenced, the block vector candidate list may be configured, as shown on the right side of FIG. 32 when the order of block vectors to be added to the block vector candidate list is (A1, B1, B0, A0, B2).

When the block vectors of the adjacent blocks are stored in the block vector candidate list, the maximum number of first block vectors that can be stored in the block vector candidate list may be N. The first block vectors may be the block vectors of the adjacent blocks encoded/decoded by the intra block copy method. The maximum number of second block vectors that can be stored in the block vector candidate list may be M. The second block vectors may be block vectors derived by template matching prediction among the block vectors of the adjacent blocks. Each of M and N may be an integer greater than 0. For example, N may be 4. M may be 2.

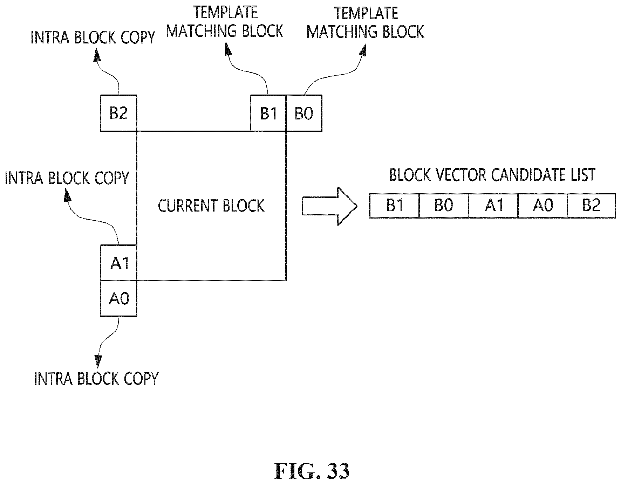

FIG. 33 illustrates additional encoding/decoding methods for adjacent blocks according to an example.

In order to configure a block vector candidate list for a current block, a spatial block vector may be referenced by adjacent blocks around the current block.

When first block(s) encoded/decoded by a template matching prediction method are present among the adjacent blocks, block vector(s) derived through template matching prediction for the first block(s) may be stored in the block vector candidate list. Next, when second block(s) encoded/decoded by an intra block copy method are present among the adjacent blocks, the block vector(s) of the second block(s) may be stored in the block vector candidate list.

For example, in the case where the block vectors of the adjacent blocks adjacent to the current block, illustrated in FIG. 33, are referenced, the block vector candidate list may be configured, as shown on the right side of FIG. 33 when the order of block vectors to be added to the block vector candidate list is (A1, B1, B0, A0, B2).

When the block vectors of the adjacent blocks are stored in the block vector candidate list, the maximum number of first block vectors that can be stored in the block vector candidate list may be N. The first block vectors may be the block vectors of the adjacent blocks encoded/decoded by the intra block copy method. The maximum number of second block vectors that can be stored in the block vector candidate list may be M. The second block vectors may be block vectors derived by template matching prediction among the block vectors of the adjacent blocks. Each of M and N may be an integer greater than 0. For example, N may be 4. M may be 2.

**Limitation on size of adjacent template matching block referenced in process of configuring block vector candidate list using spatial block vector**

The size of an adjacent template matching block referenced in a process of configuring a block vector candidate list using a spatial block vector may be limited.

For example, when the width W of the adjacent template matching block is less than or equal to N, the block vector of the adjacent template matching block may be added to the block vector candidate list. For example, the positive integer N may be at least one of 4, 8, 16, 32, and 64.

For example, when the height H of the adjacent template matching block is less than or equal to M, the block vector of the adjacent template matching block may be added to the block vector candidate list. For example, the positive integer M may be at least one of 4, 8, 16, 32, and 64.

For example, when the product of the width W and the height H of the adjacent template matching block is less than or equal to K, the block vector of the adjacent template matching block may be added to the block vector candidate list. For example, the positive integer K may be at least one of 16, 32, 64, 96, 128, 256, 512 and 1024.

For example, when the width W of the adjacent template matching block is equal to or greater than N, the block vector of the adjacent template matching block may be added to the block vector candidate list. For example, the positive integer N may be at least one of 4, 8, 16, 32, and 64.

For example, when the height H of the adjacent template matching block is equal to or greater than M, the block vector of the adjacent template matching block may be added to the block vector candidate list. For example, the positive integer M may be at least one of 4, 8, 16, 32, and 64.

For example, when the product of the width W and the height H of the adjacent template matching block is equal to or greater than K, the block vector of the adjacent template matching block may be added to the block vector candidate list. For example, the positive integer K may be at least one of 16, 32, 64, 96, 128, 256, 512 and 1024.

**Method for configuring block vector candidate list using history block vector**

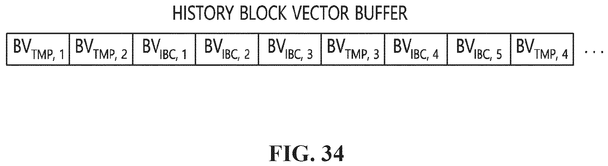

FIG. 34 illustrates a history block vector buffer in which block vectors are stored according to an example.

A block vector candidate list may be configured using a history block vector, as described below.

In order to configure a history block vector candidate list for a current block, the block vectors of blocks encoded/decoded by intra block copy in a current image including the current block and the block vectors of blocks encoded/decoded by template matching prediction in the current image may be stored in the history block vector buffer. The history block vector candidate list may be configured with reference to stored block vectors.

In embodiments, an intra block copy block vector may refer to the block vector of a block encoded/decoded by intra block copy.

The intra block copy block vector and the block vector derived by template matching may be stored in the same history block vector buffer.

The size of the history block vector buffer may be limited to N. N may be an integer greater than 0. N may be 5.

For example, i and j may denote the order values of block vectors input to the history block vector buffer. As illustrated in FIG. 34, block vectors $BV_{IBC,i}$ of blocks encoded/decoded by intra block copy prediction and block vectors $BV_{TMP,j}$ of blocks encoded/decoded by template matching prediction may be stored in one buffer.

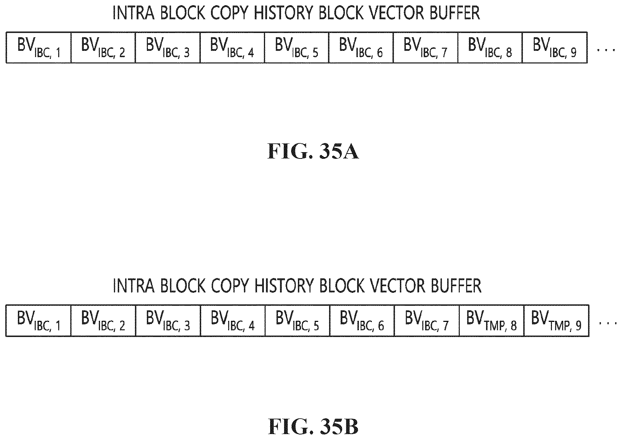

FIG. 35A illustrates an intra block copy history block vector buffer in which block vectors are stored according to another example.

FIG. 35B illustrates a template matching history block vector buffer in which block vectors are stored according to a further example.

A block vector candidate list may be configured using a history block vector, as described below.

In order to configure a history block vector candidate list for a current block, the block vectors of blocks encoded/decoded by intra block copy in a current image including the current block and the block vectors of blocks encoded/decoded by template matching prediction in the current image may be stored in the history block vector buffer. The history block vector candidate list may be configured with reference to stored block vectors.

In embodiments, an intra block copy block vector may refer to the block vector of a block encoded/decoded by intra block copy.

The intra block copy block vector and the block vector derived by template matching may be separately stored in different history block vector buffers.

The size of the intra block copy history block vector buffer in which intra block copy block vectors are stored may be limited to N. N may be an integer greater than 0. N may be 25.

The size of the template matching history block vector buffer in which block vectors derived by template matching are stored may be limited to M. M may be an integer greater than 0. M may be 15.

For example, i may denote the order in which intra block copy block vectors are input to the intra block copy history block vector buffer. As shown in FIG. 35A, the block vector $BV_{IBC, i}$ of the block encoded/decoded by intra block copy prediction may be stored in the intra block copy history block vector buffer depending on the order i.

j may denote the order in which the block vectors of blocks encoded/decoded by template matching prediction are input to the template matching history block vector buffer. As illustrated in FIG. 35B, the block vector $BV_{TMP, j}$ of the block encoded/decoded by template matching prediction may be stored in a separate template matching history block vector buffer.

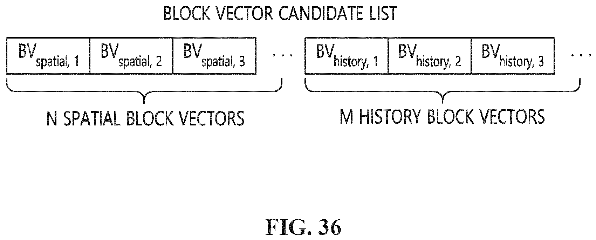

FIG. 36 illustrates a history block vector buffer in which block vectors are stored according to a further example.

A block vector candidate list may be configured using a history block vector, as described below.

In order to configure the block vector candidate list for the current block, spatial block vectors from adjacent blocks around the current block may be stored in the block vector candidate list.

Here, the number of spatial block vectors added to the block vector candidate list may be limited to N. N may be an integer greater than 0. N may be 4.

In order to configure the block vector candidate list for the current block, a block vector in the history block vector buffer in which the block vectors of blocks encoded/decoded before the current block is encoded/decoded are stored may be stored in the block vector candidate list.

Here, the number of history block vectors added to the block vector candidate list may be limited to M. M may be an integer greater than 0. M may be 10.

In FIG. 36, the method for configuring the block vector candidate list for the current block with reference to the spatial block vectors and the history block vectors is illustrated.

**Reference to history block vector buffer for configuration of block vector candidate list**

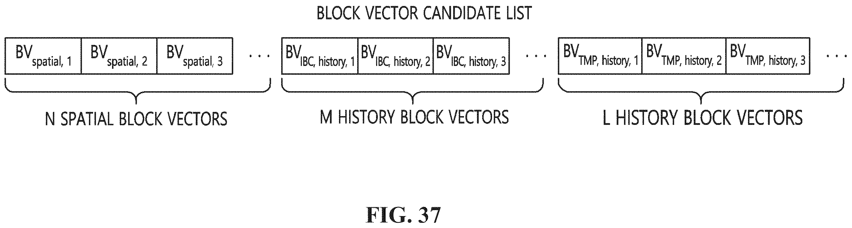

FIG. 37 illustrates a first method for configuring a block vector candidate list for a current block using spatial block vectors and history block vectors.

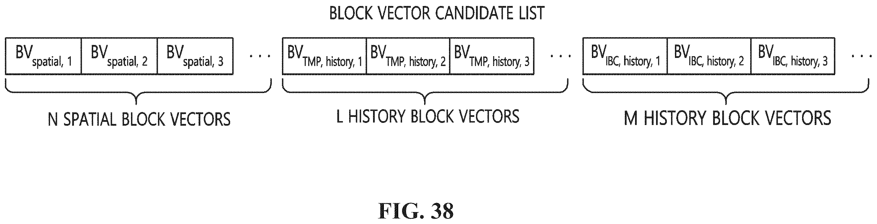

FIG. 38 illustrates a second method for configuring a block vector candidate list for the current block using spatial block vectors and history block vectors.

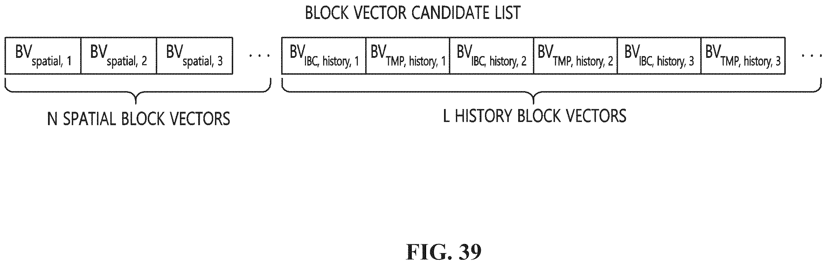

FIG. 39 illustrates a third method for configuring a block vector candidate list for the current block using spatial block vectors and history block vectors.

In order to configure the block vector candidate list for the current block, spatial block vectors from adjacent blocks around the current block may be stored in the block vector candidate list.

Here, the number of spatial block vectors added to the block vector candidate list may be limited to N. N may be an integer greater than 0. N may be 4.

In order to configure the block vector candidate list for the current block, a block vector in the history block vector buffer in which the block vectors of blocks encoded/decoded before the current block is encoded/decoded are stored may be stored in the block vector candidate list.

The history block vector buffer may be divided into a history block vector buffer for intra block copy and a history block vector buffer for template matching.

Each history block vector stored in the block vector candidate list may be referenced by the history block vector buffer for intra block copy and the history block vector buffer for template matching, and the referenced history block vector may be added to the block vector candidate list.

When the history block vector is stored in the block vector candidate list, a maximum of M history block vectors for intra block copy and a maximum of L history block vectors for template matching may be added to the block vector candidate list.

Each of M and L may be an integer greater than 0. M may be 10. L may be 5.

As illustrated in FIGS. 37 and 38, history block vectors for intra block copy and history block vectors for template matching may be sequentially added to the block vector candidate list.

As illustrated in FIG. 39, history block vectors for intra block copy and history block vectors for template matching may be alternately added to the block vector candidate list.

## Refinement of block vector candidates using template matching

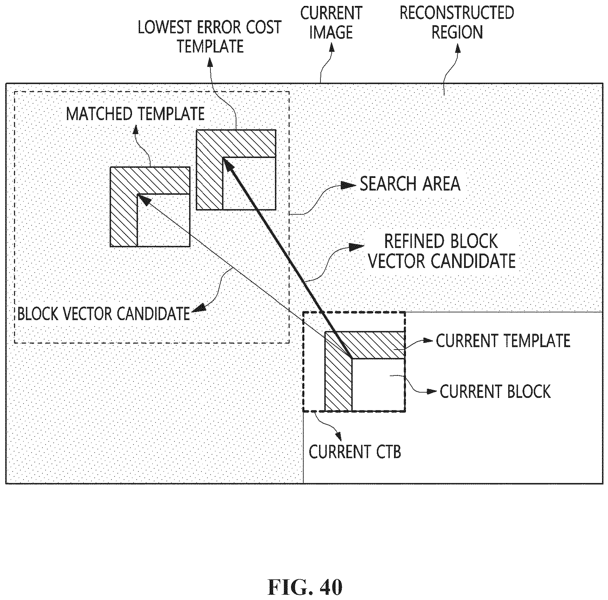

FIG. 40 illustrates a method for determining a refined block vector candidate by applying template matching to block vector candidates in a block vector candidate list according to an example.

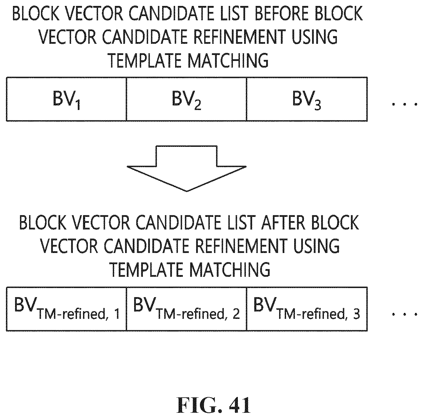

FIG. 41 illustrates a block vector candidate list before template matching is applied and a block vector candidate list after template matching is applied.

The block vector candidates in the block vector candidate list, described in embodiments, may be refined using template matching.

The block vector candidate list for intra block copy encoding/decoding may include one or more block vectors. Each block vector may be the block vector of a spatial block vector or the block vector of history intra block copy.

The block vector candidate list for intra block copy encoding/decoding may include one or more block vectors. Each block vector may be a spatial block vector or a history template matching block vector.

The block vector candidates in the block vector candidate list may be refined by applying template matching.

A current template may be configured using a reconstructed region around the current block, and a template having the same shape as the current template may be configured in a reconstructed region around a corresponding block at a position indicated by a block vector candidate in the block vector candidate list.

The location of the corresponding region corresponding to the current template in a search area may be adjusted. Among the corresponding regions in the search area, a corresponding region having minimized error cost may be determined to be a minimum error cost template. The corresponding region may be a region having the same shape as the current template.

Here, the error cost of the corresponding region may be error cost between the current template and the corresponding region. When the location of a minimum error cost template is determined, the corresponding block corresponding to the current block may be determined based on the determined minimum error cost template. A block vector indicating a top-left position of the corresponding block may be used as a refined block vector candidate.

The method for refining a block vector using template matching in embodiments may be applied to all or some of block vector candidates present in the block vector candidate list.

The refined block vector candidates illustrated in FIG. 40 may replace the block vector candidates of FIG. 41.

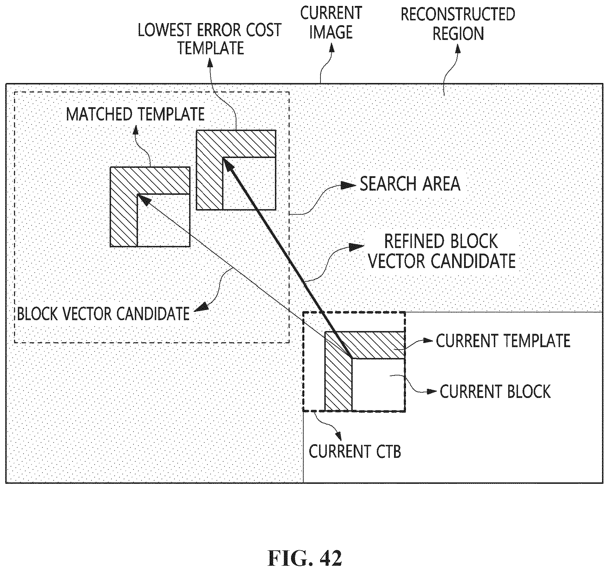

FIG. 42 illustrates another method for determining a refined block vector candidate by applying template matching to block vector candidates in a block vector candidate list according to an example.

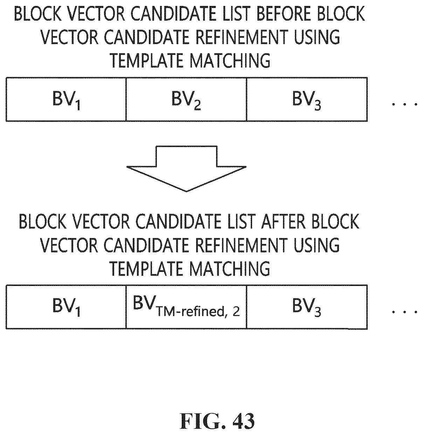

FIG. 43 illustrates a block vector candidate list before template matching is applied and a block vector candidate list after template matching is applied.

The refined block vector candidates illustrated in FIG. 42 may replace one or some of the block vector candidates of FIG. 43.

A search area for refinement of block vector candidates described in embodiments may be limited to a range of a predefined size.

For example, the predefined size may have a pixel range of N pixels in up/down/left/right directions around the position indicated by the block vector candidate. N may be a positive integer. N may be 8.

Information for determining the search area may be signaled/encoded/decoded in a high-level syntax such as a parameter set.

The search area may be limited to the inside of the search area for intra block copy.

**Reordering of block vector candidates using template matching**

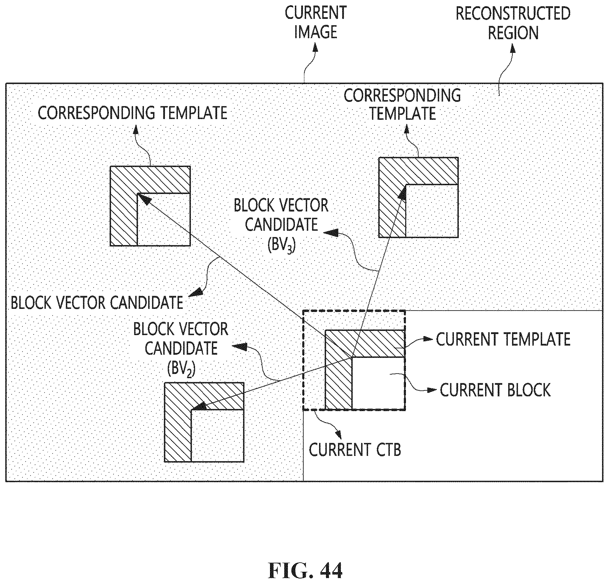

FIG. 44 illustrates a method for deriving reordered block vector candidates by applying template matching to block vector candidates in a block vector candidate list according to an example.

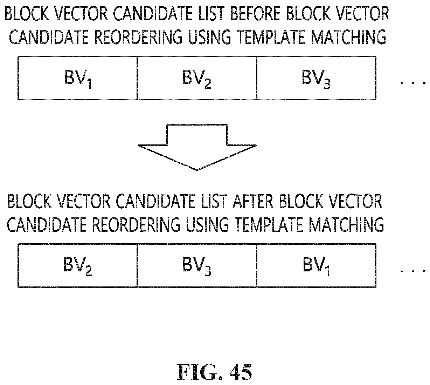

FIG. 45 illustrates a block vector candidate list before block vector candidate reordering using template matching is applied and a block vector candidate list after block vector candidate reordering using template matching is applied.

The block vector candidates in the block vector candidate list, described in embodiments, may be reordered using template matching.

A block vector candidate list for intra block copy encoding/decoding may include one or more block vectors. Each block vector may be the block vector of a spatial block vector or the block vector of history intra block copy.

A block vector candidate list for intra block copy encoding/decoding may include one or more block vectors. Each block vector may be a spatial block vector or a history template matching block vector.

The block vector candidates in the block vector candidate list may be reordered by applying template matching.

The current template may be configured using a reconstructed region around the current block, and the corresponding template having the same shape as the current template may be configured in a reconstructed region around a corresponding block at a position indicated by a block vector candidate in the block vector candidate list.

Here, for each of the block vector candidates, error cost between the current template and the corresponding template may be calculated. In other words, error cost of each block vector candidate may be calculated. The error cost of the block vector may refer to error cost between the corresponding template for the block vector and the current template.

The error costs of the block vector candidates may be compared with each other. Based on the costs, the block vector candidates may be reordered in the order from a block vector candidate having lowest error cost to a block vector candidate having highest error cost. In other words, the block vector candidates in the block vector candidate list may be sorted in ascending order of error cost.

In FIG. 44, the current template is illustrated, and corresponding templates for respective block vector candidates present in the block vector candidate list before block vector candidate reordering using template matching is applied are illustrated.

As illustrated in FIG. 44, the block vector candidates may be configured, and corresponding templates at positions respectively corresponding to the block vector candidates may be configured. For each corresponding template, error cost between the corresponding template and the current template may be calculated.

Based on the error costs of the block vector candidates, the block vector candidate list may be configured, as illustrated in FIG. 45, by performing reordering from a block vector candidate having the lowest error cost to a block vector candidate having the highest error cost. In other words, the block vector candidates in the block vector candidate list may be reordered in ascending order of error cost.

**Combined block vector candidate**

A combined block vector candidate may be configured using at least two of block vector candidates present in a block vector candidate list. The combined block vector candidate may be added to the block vector candidate list.

The combined block vector candidate may have a statistical value for x components and a statistical value for y components of at least two block vectors among block vector candidates present in the block vector candidate list.

When the combined block vector candidate is configured, history-based block vector candidates may not be used.

When the combined block vector candidate is configured, at least one of block vector candidates of neighbor blocks adjacent to the current block may not be used.

Whether the combined block vector candidate configured using block vector candidates is available for the current block may be determined, and only the available combined block vector candidate may be determined to be the combined block vector candidate for the current block. Here, whether a block vector is available may be determined depending on whether a reference sample (or a reference block) at a position indicated by the block vector is available.

At least one of block vector candidates present in the block vector candidate list may be a template matching block vector.

For example, when the region/position indicated by the combined block vector candidate includes at least one of the samples included in the current block, it may be determined that the combined block vector candidate is unavailable.

For example, when the region/position indicated by the combined block vector candidate includes at least one of a region/position/sample falling out of the boundary of a picture/sub-picture/slice/tile group/tile/brick, it may be determined that the combined block vector candidate is unavailable.

**Fixed default block vector candidate**

W may be the horizontal length of a current luma component block. H may be the horizontal length of the current luma component block.

A block vector (-(W << n) + a, -( H << n) + b), a block vector (-(W << n) + c, 0) or a block vector (0, -(H << n) + d) may be included, as a block vector candidate, in the block vector candidate list.

Here, n may be a positive integer. Each of a, b, c and d may be an integer.

Each of the above-described block vectors may be referred to as a fixed default block vector candidate. The fixed default block vector candidate may be added to the block vector candidate list.

**Ranking used to configure block vector candidate list**

A block vector candidate list may be configured depending on specific ranking using at least one of a block vector candidate for a neighbor block adjacent to the current block; a history-based block vector candidate; a combined block vector candidate; and a fixed default block vector candidate.

For example, the block vector candidate list may be configured in the order of the block vector candidate for the neighbor block adjacent to the current block, the history-based block vector candidate, the combined block vector candidate, and the fixed default block vector candidate.

For example, fixed default block vector candidates may be configured such that, until the number of candidates in the block vector candidate list reaches the maximum number of candidates, [candidate 1-1] to [candidate 1-10] are sequentially included in the block vector candidate list in the order listed below.

$$\text{[candidate 1-1]} \ (-(W{<}{<}1), 0)$$

$$\text{[candidate 1-2]} \ (0, -(H{<}{<}1))$$

$$\text{[candidate 1-3]} \ (-(W{<}{<}1)\text{-}1, 0)$$

$$\text{[candidate 1-4]} \ (0, -(H{<}{<}1)\text{-}1)$$

$$\text{[candidate 1-5]} \ (-(W{<}{<}1)\text{-}2, 0)$$

$$\text{[candidate 1-6]} \ (0, -(H{<}{<}1)\text{-}2)$$

$$\text{[candidate 1-7]} \ (-(W{<}{<}1)\text{-}3, 0)$$

$$\text{[candidate 1-8]} \ (0, -(H{<}{<}1)\text{-}3)$$

$$\text{[candidate 1-9]} \ (-(W{<}{<}1)\text{-}4, 0)$$

$$\text{[candidate 1-10]} \ (0, -(H{<}{<}1)\text{-}4)$$

In embodiments, the maximum number may represent the maximum number of candidates that can be stored in the block vector candidate list.

In another example, the fixed default block vector may be a (0, 0) vector. Until the number of candidates in the block vector candidate list reaches the maximum number, a block vector candidate list having the maximum number of candidates may be configured by adding each fixed default block vector to the block vector candidate list.

The maximum number of block vector candidates may be the maximum number of block vector candidates of neighbor blocks adjacent to the current block, which can be included in the block vector candidate list when the block vector candidate list is configured.

Here, the maximum number of block vector candidates may be N or N - m. N may be a positive integer. m may be a positive integer. Further, N may be greater than m.

The maximum number of block vector candidates may be the maximum number of history-based block vector candidates, which can be included in the block vector candidate list when the block vector candidate list is configured.

Here, the maximum number of block vector candidates may be N or N - m. N may be a positive integer. m may be a positive integer. Further, N may be greater than m.

The maximum number of block vector candidates may be the maximum number of combined block vector candidates, which can be included in the block vector candidate list when the block vector candidate list is configured.

Here, the maximum number of block vector candidates may be N or N - m. N may be a positive integer. m may be a positive integer. Further, N may be greater than m.

The maximum number of block vector candidates may be the maximum number of fixed default block vector candidates, which can be included in the block vector candidate list when the block vector candidate list is configured.

Here, the maximum number of block vector candidates may be N or N - m. N may be a positive integer. m may be a positive integer. Further, N may be greater than m.

For the block vector candidates for neighbor blocks adjacent to the current block, the history-based block vector candidates, the combined block vector candidates, and the fixed default block vector candidates, which are described above, the different maximum numbers of block vector candidates may be separately set and used.

In embodiments, the maximum number of candidates in the block vector candidate list may be a value preset by the encoder/decoder, and may be a value signaled from the encoder to the decoder.

## Derivation and addition of block vector candidate

A block vector candidate may be derived by at least one of coding parameters of the current block/CTB/CTU.

The block vector candidate may be added to a block vector candidate list by at least one of the coding parameters of the current block/CTB/CTU.

## Partitioning of block

Multiple lower-level blocks may be generated by partitioning a higher-level block. In the case where each lower-level block is encoded/decoded in an intra block copy skip mode, an intra block copy merge mode or an intra block copy AMVP mode, when the subblock of at least one of lower-level blocks partitioned from the higher-level block is less than a threshold, a block vector candidate list configured for the higher-level block may be shared with the subblock of at least one of the partitioned lower-level blocks. The subblock may use the shared block vector candidate list.

Whether the block vector candidate list configured for the higher-level block is shared may be determined based on the attributes of the higher-level block or the lower-level blocks. For example, the attributes may include at least one of the horizontal length W and the vertical length H of the corresponding block.

For example, when at least one condition of [Condition 1-1] to [Condition 1-3] listed below is satisfied, the block vector candidate list configured for the higher-level block may be used for at least one of lower-level blocks partitioned from the higher-level block.

**[Condition 1-1]** Quad-tree partitioning from the higher-level block to lower-level blocks is performed and the following [Equation 26] is established.

$$\text{(horizontal length of higher-level block} \times \text{vertical length of higher-level block) / 4} < \text{threshold} \qquad \text{[Equation 26]}$$

**[Condition 1-2]** Horizontal or vertical binary-tree partitioning from the higher-level block to lower-level blocks is performed and the following [Equation 27] is established.

$$\text{(horizontal length of higher-level block} \times \text{vertical length of higher-level block) / 2} < \text{threshold} \qquad \text{[Equation 27]}$$

**[Condition 1-3]** Ternary-tree partitioning from the higher-level block to lower-level blocks is performed and the following [Equation 28] is established.

$$\text{(horizontal length of higher-level block} \times \text{vertical length of higher-level block) / 4} < \text{threshold} \qquad \text{[Equation 28]}$$

Here, the threshold may be a value preset by the encoder/decoder, and may be a value signaled from the encoder to the decoder.

Here, the threshold may be a positive integer. Further, the threshold may be at least one of values indicating the length, size or shape of the block, such as the horizontal length of the block; the vertical length of the block; the product of the horizontal length and the vertical length of the block (i.e., the area of the block).

- The threshold may be determined depending on at least one of the coding parameters of the current block/CTB/CTU.

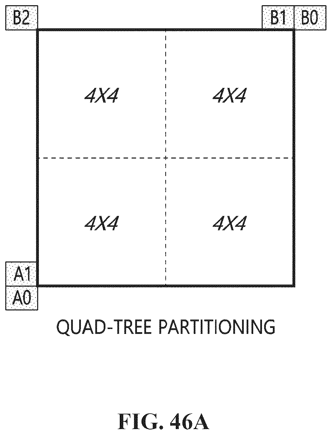

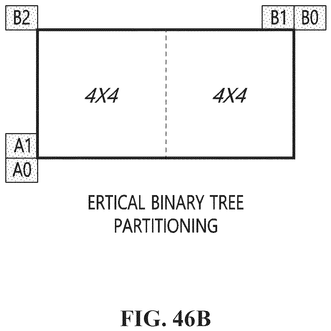

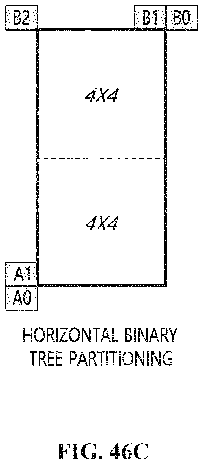

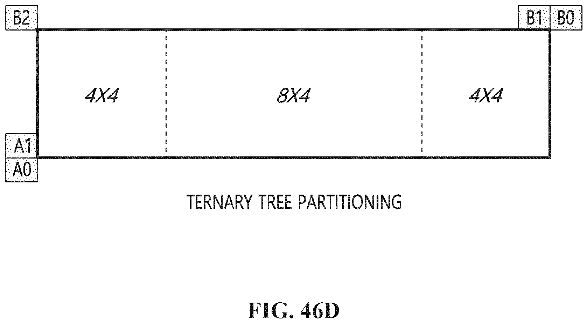

FIGS. 46A, 46B, 46C, and 46D illustrate block partitioning methods according to an example.

For example, in block partitioning illustrated in FIGS. 46A, 46B, 46C, and 46D, a threshold may be 32.

As quad-tree partitioning; vertical or horizontal binary tree partitioning; or ternary tree partitioning is applied to a higher-level block, multiple lower-level blocks may be generated.

When the area of at least one of the multiple lower-level blocks is less than the threshold, the block vector candidate list for the higher-level block may be used for each lower-level block encoded/decoded in a specific mode.

Here, the specific mode may be an intra block copy skip mode, an intra block copy merge mode, or an intra block copy AMVP mode.

Here, the block vector candidate list for the higher-level block may be configured using at least one of block vector candidate(s) of neighbor blocks adjacent to the higher-level block (e.g., A1, B1, B0, A0 and B2 illustrated in FIG. 46A, 46B, 46C, and 46D), history-based block vector candidate(s) encoded/decoded before the higher-level block is encoded/decoded and then stored in a buffer, combined block vector candidate(s), and fixed default block vector(s).

Here, the fixed default block vector may be derived from the horizontal length and the vertical length of the higher-level block.

When the block vector candidate list configured for the higher-level block is shared with at least one of the lower-level blocks, and the shared block vector candidate list is used for the lower-level block, a reference block indicated by the block vector of the lower-level block may be restricted so that it is not located in the higher-level block.

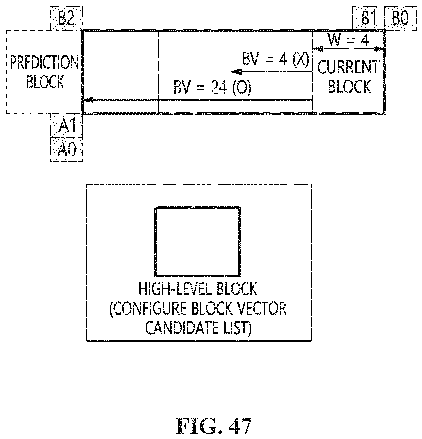

FIG. 47 illustrates the case where the block vector candidate list of a higher-level block is shared with a lower-level block according to an example.

A block vector candidate list for a higher-level block position (bold solid line of FIG. 47) may be shared and used with at least one lower-level block (thin solid line of FIG. 47). In this case, in at least one of multiple lower-level blocks, the block vector of the lower-level block encoded/decoded in an intra block copy mode may be determined to be valid only when region/position/sample indicated by the block vector corresponds to a region encoded/decoded before the higher-level block is encoded/decoded.

That is, when the region/position/sample indicated by the block vector of the lower-level block includes at least one of samples included in the higher-level block, the block vector of the lower-level block may be determined to be unavailable.

When the block vector candidate list configured for the higher-level block is shared and used with at least one of the lower-level blocks, at least one of the partitioned lower-level blocks may have one of the intra block copy skip mode and the intra block copy merge mode.

When the block vector candidate list for the higher-level block is shared and used with at least one of the lower-level blocks, at least one of the partitioned lower-level blocks may be encoded/decoded in the intra block copy skip mode or the intra block copy merge mode.

When the block vector candidate list for the higher-level block is shared and used with at least one of the lower-level blocks, the partitioned lower-level blocks may not be encoded/decoded in the intra block copy skip mode and the intra block copy merge mode. Here, the partitioned lower-level blocks may be encoded/decoded in the intra block copy AMVP mode, but, in the case, the block vector may be determined to be valid only when the block vector indicates a region encoded/decoded before the higher-level block is encoded/decoded.

A merge candidate list in embodiments may refer to a list configured using at least one of motion vectors, such as a spatial motion vector, a temporal motion vector, a history-based motion vector, a combined motion vector, and a zero vector, rather than the block vector.

When the horizontal length and/or the vertical length of the current block are less than or equal to a threshold (or when the horizontal length and/or the vertical length of the current block are less than the threshold), at least one of the intra block copy skip mode and the intra block copy merge mode may not be allowed. The threshold may be a positive integer preset by the encoder/decoder, and may be a value signaled from the encoder to the decoder.

For example, when the horizontal length and the vertical length of the current block is less than 8, at least one of the intra block copy skip mode and the intra block copy merge mode may not be allowed.

When the product of the horizontal length and the vertical length of the current block is less than or equal to the specific threshold, at least one of the intra block copy skip mode and the intra block copy merge mode may not be allowed. Here, the specific threshold may be a threshold corresponding to a condition in which the merge candidate list configured for the higher-level block can be used for the lower-level block.

For example, in the case where the threshold corresponding to the condition in which the merge candidate list configured for the higher-level block can be used for the lower-level block is 32, at least one of the intra block copy skip mode and the intra block copy merge mode may be allowed only when the product of the horizontal length and the vertical length of the current block is greater than 32.

When the product of the horizontal length and the vertical length of the current block is less than or equal to the specific threshold, at least one of the skip mode and the merge mode may not be allowed. Here, the specific threshold may be a threshold corresponding to a condition in which the merge candidate list configured for the higher-level block can be used for the lower-level block.

At least one of the skip mode and the merge mode may refer to a mode related to motion compensation in which the corresponding block is encoded/decoded by a motion vector other than the block vector of the spatial/temporal neighbor block of the current block.

For example, in the case where the threshold corresponding to the condition in which the merge candidate list configured for the higher-level block can be used is 32, at least one of the skip mode and the merge mode based on the motion vector other than the block vector may be allowed only when the product of the horizontal length and the vertical length of the current block is greater than 32.

In embodiments, the fact that a specific mode is not allowed may mean that the specific mode is not used as the coding mode of the current block.

A unified merge candidate list may be configured for the higher-level block using a motion vector and block vectors. When at least one of lower-level blocks partitioned from the higher-level block is less than the threshold, the unified merge candidate list configured for the higher-level block may be shared and used with at least one of the partitioned sub-blocks.

The unified merge candidate list may be configured using at least one of a motion vector candidate of a neighbor block adjacent to the higher-level block; a block vector candidate of the neighbor block adjacent to the higher-level block; a temporal motion vector candidate; a history-based motion vector candidate; a history-based block vector candidate; a (0, 0) motion vector candidate; and a fixed default block vector candidate. Thereafter, the block vector candidate list configured for the higher-level block may be shared and used with at least one of the lower-level blocks.

For example, when the block is encoded/decoded in the intra block copy skip mode or the intra block copy merge mode, the block may be encoded/decoded using only at least one of candidates corresponding to a block vector, other than a motion vector, in the unified merge candidate list. Here, when the block is encoded/decoded in the intra block copy skip mode or the intra block copy merge mode, information for identifying the candidate used for encoding/decoding among candidates in the unified merge candidate list may indicate only a block vector candidate.

For example, when the block is encoded/decoded in the skip mode or merge mode, the block may be encoded/decoded using only at least one of candidates corresponding to a motion vector, other than a block vector, in the unified merge candidate list. Here, when the block is encoded/decoded in the skip mode or the merge mode, information for identifying a candidate used for encoding/decoding among candidates in the unified merge candidate list may indicate only a motion vector candidate.

When the block vector candidate list configured for the higher-level block is shared and used with at least one of the lower-level blocks, the block vector of the lower-level block may not be added to a buffer used to derive a history-based block vector candidate.

Also, when the block vector candidate list configured for the higher-level block is not shared and used with at least one of the lower-level blocks, the block vector of the block may be added to the buffer used to derive the history-based block vector candidate.

## Luma component block encoded/decoded in intra block copy AMVP mode

When a current block is a luma component block and is a block encoded/decoded in an intra block copy AMVP mode, a block vector derivation method, such as that described below, may be performed.

Alternatively, when the current block is a luma component block and is a block encoded/decoded in a template matching prediction mode, a block vector derivation method, such as that described below, may be performed.

In the block vector derivation method which will be described below, at least one of candidate list configuration and block vector derivation may be performed using at least one of a block vector, derived by intra block copy, and a template matching block vector.

Similar to an intra block copy skip mode or an intra block copy merge mode, a prediction block vector candidate list may be configured using a maximum of N prediction block vector candidates.

Here, N may be a positive integer. Here, N may denote the maximum number of candidates in the prediction block vector candidate list.

At least one of the candidates included in the configured prediction block vector candidate list may be used as a prediction block vector of the current block. Here, information (e.g., identifier/index/flag, mvp_10_flag, or the like) for identifying the corresponding prediction candidate to be used in the prediction block vector candidate list may be encoded/decoded, and may be derived based on at least one of coding parameters.

Here, one or more prediction block vector candidate lists may be configured, and one or more prediction block vector candidates may be used for the current block. One or more pieces of prediction block vector candidate information may be encoded/decoded.

Here, when a prediction block vector candidate is used for the current block by the prediction block vector candidate information, the prediction block vector candidate may refer to a prediction block vector.

The encoder may calculate a block vector difference (BVD) between the block vector of the current block and the prediction block vector, and may generate an encoded BVD by encoding the calculated BVD. The encoded BVD may be signaled through a bitstream.

The decoder may derive a BVD by performing decoding on the encoded BVD, and may derive the block vector of the current block by summing the BVD and the prediction block vector of the current block.

Further, at least one of block vectors of the blocks illustrated in FIG. 33 may be included as a candidate in the prediction block vector candidate list.

First, in the order of (A0, A1), whether each block has been encoded/decoded in an intra block copy mode may be determined, and the block vector of a block encoded/decoded in the intra block copy mode may be determined to be prediction block vector candidate A.

Alternatively, whether block A1 has been encoded/decoded in the intra block copy mode may be determined, and the block vector of block A1 may be determined to be prediction block vector candidate A when block A1 has been encoded/decoded in the intra block copy mode.

Subsequently, in the order of (B0, B1, B2), whether each block has been encoded/decoded in an intra block copy mode may be determined, and the block vector of a block encoded/decoded in the intra block copy mode may be determined to be prediction block vector candidate B.

Alternatively, whether block B1 has been encoded/decoded in the intra block copy mode may be determined, and the block vector of block B1 may be determined to be prediction block vector candidate B when block B1 has been encoded/decoded in the intra block copy mode.

Here, at least one of the determined prediction block vector candidates may be included in the prediction block vector candidate list.

Here, the determined prediction block vector candidate may be a prediction block vector candidate of a neighbor block adjacent to the current block.

Here, the prediction block vector candidate list may be configured depending on priority (A, B).

In the block vector derivation method described in embodiments, when a block is encoded/decoded in the intra block copy AMVP mode depending on whether an intra block copy mode is performed on the block, the intra block copy mode described in the block vector derivation method may be replaced with a template matching prediction mode. By means of this replacement, a block vector derivation method may be performed depending on whether the template matching prediction mode is performed.

Further, at least one of block vectors of blocks encoded/decoded before the current block is encoded/decoded may be stored in the buffer. At least one of the block vectors stored in the buffer may be determined to be a prediction block vector candidate for the current block.

Here, at least one of the determined prediction block vector candidates may be included in the prediction block vector candidate list.

Here, the block vectors may be stored in a buffer having a specific size depending on the order of encoding/decoding of the block vectors.

When the buffer is full, a specific block vector in the buffer may be deleted. The specific block vector may be a block vector stored first among the block vectors in the buffer. When the specific block vector is deleted, a new block vector (i.e., the block vector of the most recently encoded/decoded block) may be stored in the buffer.

The priority of the block vectors stored in the buffer may be determined depending on the order in which the block vectors are stored in the buffer. Here, the priority may indicate which one of block vectors is to be preferentially selected when the block vectors in the stored in the buffer are added to the prediction block vector candidate list.

For example, depending on the priority order, the longer a block vector has been stored, the more preferentially the block vector may be selected.

For example, depending on the priority order, the more recently a block vector has been stored, the more preferentially the block vector may be selected.

For example, depending on the order in which the block vectors are stored in the buffer, the more recently stored block vector may be more preferentially added to the prediction block vector candidate list.

Such a prediction block vector candidate may be referred to as a history-based prediction block vector candidate. That is, each block vector stored in the buffer may refer to the history-based prediction block vector candidate.

When a prediction block vector candidate list is configured using at least one of history-based prediction block vector candidates, whether each history-based prediction block vector candidate is available for the current block may be determined, and the history-based prediction block vector candidate may be added to the prediction block vector candidate list only when the history-based prediction block vector candidate is available.

Here, whether the history-based prediction block vector candidate is available may be determined depending on whether a reference sample (or a reference block) at a position indicated by the prediction block vector candidate is available.

For example, when the region/position indicated by the history-based prediction block vector candidate includes at least one of samples included in the current block, it may be determined that the history-based prediction block vector candidate is unavailable.

For example, when the region/position indicated by the history-based prediction block vector candidate includes at least one of a region/position/sample falling out of the boundary of a picture/sub-picture/slice/tile group/tile/brick, it may be determined that the history-based prediction block vector candidate is unavailable.

When the prediction block vector candidate list is configured using at least one of history-based prediction block vector candidates, redundancy checks between the history-based prediction block vector candidate; and prediction block vector candidates already present in the prediction block vector candidate list may be performed. When a prediction block vector candidate identical to the history-based prediction block vector candidate is not present in the prediction block vector candidate list, the history-based prediction block vector candidate may be added to the prediction block vector candidate list.

In another example, when the prediction block vector candidate list is configured using at least one of history-based prediction block vector candidates, redundancy checks between the history-based prediction block vector candidate and prediction block vector candidates may be performed. When a prediction block vector candidate identical to the history-based prediction block vector candidate is not present among the prediction block vector candidates, the history-based prediction block vector candidate may be added to the prediction block vector candidate list.

In a further example, when the prediction block vector candidate list is configured using at least one of history-based prediction block vector candidates, redundancy checks between the history-based prediction block vector candidate; and prediction block vector candidates present in the prediction block vector candidate list may not be performed, and the history-based prediction block vector candidate may be added to the prediction block vector candidate list.

The buffer including history-based prediction block vector candidates may be maintained while a specific unit is encoded/decoded. In other words, the buffer may be generated/used/managed for the specific unit. The specific unit may be one or more of a picture, a slice, a sub-picture, a brick, a tile group, a tile, a CTU, a CTU row, and a CTU column.

Furthermore, the buffer may include at least one of pieces of coding information of blocks encoded/decoded before the current block is encoded/decoded within the specific unit.

Furthermore, when the buffer is configured for the above-described specific unit, the buffer may be initialized at one or more of the start position, start region, start block, and start unit of the specific unit.

When the buffer is initialized, all of block vectors present in the buffer may be deleted. Alternatively, when the buffer is initialized, all of block vectors present in the buffer may be set to specific values. Here, the specific values may be the x value and the y value of block vector (x, y). Each of x and y may be an integer.

### Combined prediction block vector candidate

A combined prediction block vector candidate may be configured using two or more of prediction block vector candidates present in a prediction block vector candidate list. The combined prediction block vector candidate may be added to the prediction block vector candidate list.

The combined block vector candidate may have a statistical value for x components and a statistical value for y components of at least two block vectors among block vector candidates present in the block vector candidate list.

When the combined prediction block vector candidate is configured, history-based prediction block vector candidates may not be used.

When the combined prediction block vector candidate is configured, at least one of prediction block vector candidates of neighbor blocks adjacent to the current block may not be used.

Whether the combined prediction block vector candidate configured using prediction block vector candidates is available for the current block may be determined, and only an available combined prediction block vector candidate may be determined to be a combined prediction block vector candidate for the current block. Here, whether a prediction block vector is available may be determined depending on whether a reference sample (or a reference block) at a position indicated by the prediction block vector is available.

For example, when the region/position indicated by the combined prediction block vector candidate includes at least one of the samples included in the current block, it may be determined that the combined prediction block vector candidate is unavailable.

For example, when the region/position indicated by the combined prediction block vector candidate includes at least one of a region/position/sample falling out of the boundary of a picture/sub-picture/slice/tile group/tile/brick, it may be determined that the combined prediction block vector candidate is unavailable.

**Fixed default prediction block vector candidate**

W may be the horizontal length of a current luma component block. H may be the horizontal length of the current luma component block.

A prediction block vector (-(W << n) + a, -( H << n) + b), a prediction block vector (-(W << n) + c, 0) or a prediction block vector (0, -(H << n) + d) may be included, as a prediction block vector candidate, in a prediction block vector candidate list.

Here, n may be a positive integer. Each of a, b, c and d may be an integer.

Each of the above-described prediction block vectors may be referred to as a fixed default prediction block vector candidate. The fixed default prediction block vector candidate may be added to the prediction block vector candidate list.

**Ranking used to configure prediction block vector candidate list**

A prediction block vector candidate list may be configured depending on specific ranking using at least one of a prediction block vector candidate of a neighbor block adjacent to the current block; a history-based prediction block vector candidate; a combined prediction block vector candidate; and a fixed default prediction block vector candidate.

For example, the prediction block vector candidate list may be configured in the order of the prediction block vector candidate of the neighbor block adjacent to the current block, the history-based prediction block vector candidate, the combined prediction block vector candidate, and the fixed default prediction block vector candidate.

For example, the fixed default prediction block vector candidates may be configured such that, until the number of candidates in the prediction block vector candidate list reaches the maximum number of candidates, [candidate 2-1] to [candidate 2-10] are sequentially included in the order of listing described below.

$$\textbf{[candidate 2-1]}\ (-(W{<}{<}1),\ 0)$$

$$\textbf{[candidate 2-2]}\ (0,\ -(H{<}{<}1))$$

$$\textbf{[candidate 2-3]}\ (-(W{<}{<}1)\text{-}1,\ 0)$$

$$\textbf{[candidate 2-4]}\ (0,\ -(H{<}{<}1)\text{-}1)$$

$$\textbf{[candidate 2-5]}\ (-(W{<}{<}1)\text{-}2,\ 0)$$

$$\textbf{[candidate 2-6]}\ (0,\ -(H{<}{<}1)\text{-}2)$$

$$\textbf{[candidate 2-7]}\ (-(W{<}{<}1)\text{-}3,\ 0)$$

$$\textbf{[candidate 2-8]}\ (0,\ -(H{<}{<}1)\text{-}3)$$

$$\textbf{[candidate 2-9]}\ (-(W{<}{<}1)\text{-}4,\ 0)$$

$$\textbf{[candidate 2-10]}\ (0,\ -(H{<}{<}1)\text{-}4)$$

In embodiments, the maximum number may represent the maximum number of candidates that can be stored in the block vector candidate list.

In another example, the fixed default prediction block vector may be a (0, 0) vector. Until the number of candidates in the prediction block vector candidate list reaches the maximum number, a prediction block vector candidate list having the maximum number of candidates may be configured by adding each fixed default prediction block vector to the prediction block vector candidate list.

The maximum number of prediction block vector candidates may be the maximum number of prediction block vector candidates of neighbor blocks adjacent to the current block, which can be included in the prediction block vector candidate list when the prediction block vector candidate list is configured.

Here, the maximum number of prediction block vector candidates may be N or N - m. N may be a positive integer. m may be a positive integer. Further, N may be greater than m.

The maximum number of prediction block vector candidates may be the maximum number of history-based prediction block vector candidates, which can be included in the prediction block vector candidate list when the prediction block vector candidate list is configured.

Here, the maximum number of prediction block vector candidates may be N or N - m. N may be a positive integer. m may be a positive integer. Further, N may be greater than m.

The maximum number of prediction block vector candidates may be the maximum number of combined prediction block vector candidates, which can be included in the prediction block vector candidate list when the prediction block vector candidate list is configured.

The maximum number of prediction block vector candidates may be the maximum number of combined prediction block vector candidates, which can be included in the prediction block vector candidate list when the prediction block vector candidate list is configured.

Here, the maximum number of prediction block vector candidates may be N or N - m. N may be a positive integer. m may be a positive integer. Further, N may be greater than m.

The maximum number of prediction block vector candidates may be the maximum number of fixed default prediction block vector candidates, which can be included in the prediction block vector candidate list when the prediction block vector candidate list is configured.

Here, the maximum number of prediction block vector candidates may be N or N - m. N may be a positive integer. m may be a positive integer. Further, N may be greater than m.

The maximum numbers of prediction block vector candidates, respectively corresponding to the prediction block vector candidates of neighbor blocks adjacent to the current block, the history-based prediction block vector candidates, the combined prediction block vector candidates, and the fixed default prediction block vector candidates, which are described above, may be set and used.

The maximum number of candidates in the prediction block vector candidate list may be a value preset by the encoder/decoder, and may be a value signaled from the encoder to the decoder.

In embodiments, the prediction block vector candidate list and the block vector candidate list may have the same meaning, and may be replaced with each other. The prediction block vector candidate and the block vector candidate may have the same meaning, and may be replaced with each other.

**Derivation and addition of prediction block vector candidate**

A prediction block vector candidate may be derived by at least one of coding parameters of the current block/CTB/CTU.

A prediction block vector candidate may be added to a prediction block vector candidate list by at least one of coding parameters of the current block/CTB/CTU.

**Step of deriving block vector of luma component block**

When the current block is a luma component block and is encoded/decoded in an intra block copy skip mode, an intra block copy merge mode, or an intra block copy AMVP mode, a block vector derivation method may be performed as described below.

The block vector candidate list may be configured using a maximum of N candidates. Here, N may be a positive integer.

Here, N may denote the maximum number of candidates in the block vector candidate list. N may be derived depending on at least one of the coding parameters of the current block/CTB/CTU.

The maximum number of candidates in the block vector candidate list may be determined based on the maximum number of candidates in a merge candidate list in an inter-prediction mode.

For example, information six_minus_max_num_merge_cand indicating the maximum number of candidates in the merge candidate list in the inter-prediction mode may be signaled/encoded/decoded.

Based on the following Equation 29, the maximum number of candidates MaxNumMergeCand in the merge candidate list in the inter-prediction mode may be derived.

maximum number of candidates in merge candidate list in inter-prediction mode (MaxNumMerge-Cand) = N - six_minus_max_num_merge_cand　　　　[Equation 29]

MaxNumMergeCand may have one of values ranging from 1 to N. Here, N may be a positive integer. For example, N may be 6.

Based on the following Equation 30, the derived maximum number MaxNumMergeCand may be used as the maximum number of candidates MaxNumIBCCand in the block vector candidate list.

$$\text{maximum number of candidates in block vector candidate list (MaxNumIBCCand) = MaxNumMergeCand} \qquad \text{[Equation 30]}$$

In another example, information indicating the maximum number of candidates six_minus_max_num_merge_cand in the merge candidate list in the inter-prediction mode may be signaled/encoded/decoded.

Based on the following Equation 31, the maximum number of candidates MaxNumMergeCand in the merge candidate list in the inter-prediction mode may be derived.

$$\text{maximum number of candidates in merge candidate list in inter-prediction mode (MaxNumMergeCand) = N - six\_minus\_max\_num\_merge\_cand} \qquad \text{[Equation 31]}$$

MaxNumMergeCand may have one of values ranging from 1 to N. Here, N may be a positive integer. For example, N may be 6.

Depending on the following Equation 32, the maximum number of candidates MaxNumIBCCand in the block vector candidate list may be defined based on the derived maximum number MaxNumMergeCand.

$$\text{maximum number of candidates in block vector candidate list (MaxNumIBCCand) = Max(M, MaxNumMergeCand)} \qquad \text{[Equation 32]}$$

Here, M may be a positive integer. For example, M may be 2.

In a further example, information indicating the maximum number of candidates six_minus_max_num_merge_cand in the merge candidate list in the inter-prediction mode may be signaled/encoded/decoded.

Based on the following Equation 33, the maximum number of candidates MaxNumMergeCand in the merge candidate list in the inter-prediction mode may be derived.

$$\text{maximum number of candidates in merge candidate list in inter-prediction mode (MaxNumMergeCand) = N - six\_minus\_max\_num\_merge\_cand} \qquad \text{[Equation 33]}$$

MaxNumMergeCand may have one of values ranging from 1 to N. Here, N may be a positive integer. For example, N may be 6.

Based on the derived maximum number MaxNumMergeCand and the coding mode of the current block, the maximum number of candidates in the block vector candidate list may be defined.

When the coding mode of the current block is an intra block copy skip mode or an intra block copy merge mode, the maximum number of candidates in the block vector candidate list may be defined by the following Equation 34.

$$\text{maximum number of candidates in block vector candidate list (MaxNumIBCCand) = MaxNumMergeCand} \qquad \text{[Equation 34]}$$

When the coding mode of the current block is an intra block copy AMVP mode, the maximum number of candidates in the block vector candidate list may be defined by the following Equation 35.

$$\text{maximum number of candidates in block vector candidate list (MaxNumIBCCand) = Max(M, MaxNumMergeCand)} \qquad \text{[Equation 35]}$$

Here, M may be a positive integer. For example, M may be 2.

For example, when M is 2 and MaxNumMergeCand is 1, the maximum number of candidates in the block vector candidate list for the intra block copy skip mode or the intra block copy merge mode may be determined to be 1, and the maximum number of candidates in the block vector candidate list in the intra block copy AMVP mode may be determined to be 2.

In yet another example, information indicating the maximum number of candidates six_minus_max_num_merge_cand in the merge candidate list in the inter-prediction mode may be entropy encoded/decoded.

Based on the following Equation 36, the maximum number of candidates MaxNumMergeCand in the merge candidate list in the inter-prediction mode may be derived.

maximum number of candidates in merge candidate list in inter-prediction mode (MaxNumMerge-Cand) = N - six_minus_max_num_merge_cand                [Equation 36]

MaxNumMergeCand may have one of values ranging from 1 to N. Here, N may be a positive integer. For example, N may be 6.

Based on the derived maximum number MaxNumMergeCand and the coding mode of the current block, the maximum number of candidates in the block vector candidate list may be defined.

When the coding mode of the current block is an intra block copy skip mode or an intra block copy merge mode, the maximum number of candidates in the block vector candidate list may be defined by the following Equation 37.

maximum number of candidates in block vector candidate list (MaxNumIBCCand) = MaxNumMerge-Cand                [Equation 37]

When the coding mode of the current block is an intra block copy AMVP mode, the maximum number of candidates in the block vector candidate list may be defined by the following Equation 38.

Maximum number of candidates in block vector candidate list (MaxNumIBCCand) = M                [Equation 38]

Here, M may be a positive integer.

For example, when the coding mode of the current block is an intra block copy AMVP mode, the maximum number of candidates in the block vector candidate list may be determined to be 2.

For example, when MaxNumMergeCand is 6, the maximum number of candidates in the block vector candidate list for the intra block copy skip mode or the intra block copy merge mode may be 6, and the maximum number of candidates in the block vector candidate list in the intra block copy AMVP mode may be determined to be 2.

Information indicating the maximum number of candidates in the block vector candidate list may be signaled/encoded/decoded.

In a further example, information indicating the maximum number of candidates six_minus_max_num_ibc_cand in the block vector candidate list may be signaled/encoded/decoded.

Depending on the following Equation 39, the maximum number of candidates in the block vector candidate list may be derived.

maximum number of candidates in block vector candidate list (MaxNumIBCCand) = N - six_minus_-max_num_ibc_cand                [Equation 39]

MaxNumIBCCand may have one of values ranging from 0 to N. Here, N may be a positive integer. For example, N may be 6.

In yet another example, information indicating the maximum number of candidates max_num_merge_cand_minus_max_num_ibc_cand in the block vector candidate list may be signaled/encoded/decoded.

Depending on the following Equation 40, the maximum number of candidates in the block vector candidate list may be derived.

maximum number of candidates in block vector candidate list (MaxNumIBCCand) = MaxNumMerge-Cand - max_num_merge_cand_minus_max_num_ibc_cand                [Equation 40]

MaxNumIBCCand may have one of values ranging from 2 to MaxNumMergeCand.

In embodiments, the information indicating the maximum number of candidates in the block vector candidate list (e.g., at least one of six_minus_max_num_ibc_cand and max_num_merge_cand_minus_max_num_ibc_cand) may be signaled/encoded/decoded only when the use of the intra block copy function is indicated in a high-level parameter or a header in a bitstream.

For example, the information indicating the maximum number of candidates in the block vector candidate list may be signaled/encoded/decoded only when the value of the signaled/encoded/decoded sps_ibc_enabled_flag is a second value (e.g., 1) in a sequence parameter set.

At least one of N and M may be derived depending on at least one of the coding parameters of the current block/CTB/CTU.

As the maximum number of candidates in the block vector candidate list, the value N predefined (or fixed) by the encoder/decoder may be used. N may be a positive integer.

N may be derived depending on at least one of the coding parameters of the current block/CTB/CTU.

For example, the maximum number of candidates in the block vector candidate list may be 2.

For example, the maximum number of candidates in the block vector candidate list may be 5.

For example, the maximum number of candidates in the block vector candidate list may be 6.

As the maximum number of candidates in the block vector candidate list, the value N predefined (or fixed) by the encoder/decoder may be used. N may be a positive integer. Depending on the coding mode of the current block, one of different N values may be used. Here, the coding mode of the current block may refer to the intra block copy mode. Further, for the intra block copy skip mode, the intra block copy merge mode, and the intra block copy AMVP mode, respectively, different values of N may be used.

N may be derived depending on at least one of the coding parameters of the current block/CTB/CTU.

For example, when the coding mode of the current block is the intra block copy skip mode or the intra block copy merge mode, N may be 6.

For example, when the coding mode of the current block is the intra block copy AMVP mode, N may be 2.

At least one of the candidates, which will be described below, may be included in the block vector candidate list.

As described above with reference to FIG. 30, a block vector may be derived from at least one of block A1 adjacent to the left of the current block and block B1 adjacent to the top of the current block. The derived block vector may be determined to be a block vector candidate for the current block.

Here, at least one of the derived block vectors may be included in a block vector candidate list.

Here, the derived block vector may be a block vector candidate of a neighbor block that is adjacent to the current block.

For blocks occupying at least one of positions A1 and B1, whether the block vector of each block is present (i.e., whether the block has been encoded/decoded in the intra block copy mode or whether the coding mode of the block is the intra block copy mode) may be determined depending on the specific priority between the blocks. When the block vector of the corresponding block is present, the block vector of the block may be determined to be a block vector candidate.

Here, the specific priority between the blocks constituting the block vector candidate list may be (A1, B1).

When a block vector candidate list is configured depending on the specific priority, a redundancy check between a block vector candidate already present in the block vector candidate list and a block vector candidate to be newly added to the block vector candidate list may be performed.

For example, when the block vector candidate to be newly added to the block vector candidate list overlaps the block vector candidate already present in the block vector candidate list, the overlapping block vector candidate may not be added to the block vector candidate list.

For example, when the block vector candidate list is configured in the order of (A1, B1), a redundancy check with block A1 may be performed on block B1. The block vector of block B1 may be added to the block vector candidate list only when the block vector of block B1 is different from that of block A1.

The above-described redundancy check may be performed only when the block vector of the corresponding block is present.

Further, when the block vector of at least one of blocks occupying at least one of positions A1 and B1 is present, whether the block vector of the block is available for the current block may be determined.

The block vector of the block may be determined to be a block vector candidate only when the block vector of the corresponding block is available. When the block vector of the block is not available, the block vector of the block may not be used as a block vector candidate.

Here, whether a block vector is available may be determined depending on whether a reference sample (or a reference block) at a position indicated by the block vector is available.

For example, when a region/position indicated by the block vector includes at least one of samples included in the current block, it may be determined that the block vector is unavailable.

For example, when a region/position indicated by the corresponding block vector includes at least one of a region/position/sample that falls out of the boundary of a picture/sub-picture/slice/tile group/tile/brick, it may be determined that the block vector is unavailable.

### History-based block vector candidate

When the number of candidates in a block vector candidate list is less than the maximum number of candidates in the block vector candidate list, at least one of block vectors of blocks encoded/decoded before the current block is encoded/decoded may be stored in a buffer. At least one of the block vectors stored in the buffer may be added, as a block vector candidate, to the block vector candidate list.

At least one of block vectors of at least one of blocks encoded/decoded before the current block is encoded/decoded may be stored in the buffer. At least one of the block vectors stored in the buffer may be determined to be a block vector candidate for the current block. At least one of the determined block vector candidates may be included in a block vector candidate list.

The block vectors may be stored in the buffer having a specific size depending on the order of encoding/decoding.

When the buffer is full, a specific block vector in the buffer may be deleted. The specific block vector may be a block vector stored first among the block vectors in the buffer. When the specific block vector is deleted, a new block vector (i.e., the block vector of the most recently encoded/decoded block) may be stored in the buffer.

The priority of the block vectors stored in the buffer may be determined depending on the order in which the block vectors are stored in the buffer. Here, the priority may indicate which one of block vectors is to be preferentially selected when the block vectors in the stored in the buffer are added to the block vector candidate list.

For example, depending on the priority order, the longer the block vector has been stored, the more preferentially the block vector may be selected.

For example, depending on the priority order, the more recently a block vector has been stored, the more preferentially the block vector may be selected.

For example, in the order in which the block vectors are stored in the buffer, the more recently stored block vector may be more preferentially added to the block vector candidate list.

Alternatively, in the order in which the block vectors are stored in the buffer, a block vector stored earlier may be more preferentially added to the block vector candidate list.

Such a block vector candidate may be referred to as a history-based block vector candidate. That is, each block vector stored in the buffer may refer to a history-based block vector candidate.

When a block vector candidate list is configured using at least one of history-based block vector candidates, whether each history-based block vector candidate is available for the current block may be determined, and the history-based block vector candidate may be added to the block vector candidate list only when the history-based block vector candidate is available.

Here, whether the history-based block vector is available may be determined depending on whether a reference sample (or a reference block) at a position indicated by the block vector is available.

For example, when the region/position indicated by the history-based block vector includes at least one of samples included in the current block, it may be determined that the history-based block vector is unavailable.

For example, when the region/position indicated by the history-based block vector includes at least one of a region/position/sample that falls out of the boundary of a picture/sub-picture/slice/tile group/tile/brick, it may be determined that the history-based block vector is unavailable.

When the number of candidates in the block vector candidate list is less than the maximum number of candidates in the block vector candidate list, and one or more block vectors are present in the buffer in which the block vectors of blocks, encoded/decoded before the current block is encoded/decoded, are stored, the history-based block vector candidate may be added to the block vector candidate list until the number of candidates in the block vector candidate list reaches the maximum number of candidates in the block vector candidate list.

**Redundancy check**

When a block vector candidate list is configured using at least one of history-based block vector candidates, redundancy checks between the history-based block vector candidate; and block vector candidates already present in the prediction block vector candidate list may be performed. When a block vector candidate identical to the history-based block vector candidate is not present in the block vector candidate list, the history-based block vector candidate may be added to the block vector candidate list.

In another example, when the block vector candidate list is configured using at least one of history-based block vector candidates, redundancy checks between the history-based block vector candidate and block vector candidates may be performed. When a block vector identical to the history-based block vector candidate is not present among the block vector candidates, the history-based block vector candidate may be added to the block vector candidate list.

For example, redundancy checks between the history-based block vector candidate and the block vectors of blocks A1 and B1 that are neighbor blocks adjacent to the current block may be performed.

In a further example, redundancy checks with the block vectors of blocks A1 and B1 may be performed only on a first history-based block vector candidate among history-based block vector candidates.

In yet another example, redundancy checks with the block vectors of blocks A1 and B1 may be performed only on the first history-based block vector candidate and a second history-based block vector candidate.

In yet another example, redundancy checks with the block vectors of blocks A1 and B1 that are neighbor blocks adjacent to the current block may be performed on all of the history-based block vector candidates.

After the redundancy checks are performed, when there is no block vector identical to the history-based block vector candidate, the history-based block vector candidate may be added to the block vector candidate list.

In yet another example, when the block vector candidate list is configured using at least one of history-based block vector candidates, a redundancy check between the history-based block vector candidate; and block vector candidates present in the block vector candidate list or block vector candidates or between block vector candidates may not be performed, and the history-based block vector candidate may be added to the block vector candidate list.

A buffer including the history-based block vector candidates may be maintained while a specific unit is encoded/decoded. In other words, the buffer may be generated/used/managed for the specific unit. The specific unit may be one or more of a picture, a slice, a sub-picture, a brick, a tile group, a tile, a CTU, a CTU row, and a CTU column.

Furthermore, the buffer may include at least one of pieces of coding information of blocks encoded/decoded before the current block is encoded/decoded within the specific unit.

Furthermore, when the buffer is configured for the above-described specific unit, the buffer may be initialized at one or more of the start position, start region, start block, and start unit of the specific unit.

When the buffer is initialized, all of block vectors present in the buffer may be deleted. Alternatively, when the buffer is initialized, all of block vectors present in the buffer may be set to specific values. Here, the specific values may be the x value and the y value of block vector (x, y). Each of x and y may be an integer.

## Combined prediction block vector candidate

A combined prediction block vector candidate may be configured using two or more of prediction block vector candidates present in a prediction block vector candidate list. The combined prediction block vector candidate may be added to the prediction block vector candidate list.

The combined prediction block vector candidate may have a statistical value for x components of two block vectors and a statistical value for y components thereof.

When the combined prediction block vector candidate is configured, history-based prediction block vector candidates may not be used.

When the combined prediction block vector candidate is configured, at least one of prediction block vector candidates of neighbor blocks adjacent to the current block may not be used.

Whether the combined prediction block vector candidate configured using prediction block vector candidates is available for the current block may be determined, and only an available combined prediction block vector candidate may be determined to be a combined prediction block vector candidate for the current block. Here, whether a prediction block vector is available may be determined depending on whether a reference sample (or a reference block) at a position indicated by the prediction block vector is available.

For example, when the region/position indicated by the combined prediction block vector candidate includes at least one of the samples included in the current block, it may be determined that the combined prediction block vector candidate is unavailable.

For example, when the region/position indicated by the combined prediction block vector candidate includes at least one of a region/position/sample falling out of the boundary of a picture/sub-picture/slice/tile group/tile/brick, it may be determined that the combined prediction block vector candidate is unavailable.

In an example, when the number of candidates in the block vector candidate list is less than the maximum number of candidates in the block vector candidate list, a fixed default block vector may be added to the block vector candidate list until the number of candidates in the block vector candidate list reaches the maximum number of candidates in the block vector candidate list. The fixed default block vector may be (0, 0).

Adding the fixed default block vector to the block vector candidate list may be performed when the coding mode of the current block is an intra block copy skip mode or an intra block copy merge mode.

In another example, fixed default block vector candidates may be configured such that, until the number of candidates in the block vector candidate list reaches the maximum number of candidates in the block vector candidate list, [candidate 3-1] to [candidate 3-10] are sequentially included depending on the order of listing described below.

$$\text{[candidate 3-1]} \ (-(W<<1), 0)$$

$$\text{[candidate 3-2]} \ (0, -(H<<1))$$

$$\text{[candidate 3-3]} \ (-(W<<1)-1, 0)$$

$$[\text{candidate 3-4}]\ (0,\ -(H<<1)-1)$$

$$[\text{candidate 3-5}]\ (-(W<<1)-2,\ 0)$$

$$[\text{candidate 3-6}]\ (0,\ -(H<<1)-2)$$

$$[\text{candidate 3-7}]\ (-(W<<1)-3,\ 0)$$

$$[\text{candidate 3-8}]\ (0,\ -(H<<1)-3)$$

$$[\text{candidate 3-9}]\ (-(W<<1)-4,\ 0)$$

$$[\text{candidate 3-10}]\ (0,\ -(H<<1)-4)$$

In a further example, when the coding mode of the current block is an intra block copy AMVP mode, and the number of candidates in the block vector candidate list is less than the maximum number of candidates N (e.g., the predefined maximum number of AMVP candidates) in the block vector candidate list, the fixed default block vector may be added to the block vector candidate list until the number of candidates in the block vector candidate list reaches the maximum number N. The fixed default block vector may be a (0, 0) vector. N may be a positive integer. For example, N may be 2.

For example, when [Condition 2-1] to [Condition 2-3] listed below are satisfied, a fixed default block vector may be added to the block vector candidate list so as to meet the setting that the maximum number of AMVP candidates is 2. The fixed default block vector may be a (0, 0) vector.

[Condition 2-1] The coding mode of the current block is an intra block copy AMVP mode.

[Condition 2-2] The maximum number of candidates MaxNumMergeCand in a merge candidate list of an inter-prediction mode is derived by encoded/decoded information six_minus_max_num_merge_cand indicating the maximum number of candidates in the merge candidate list of the inter-prediction mode. Here, the maximum number of candidates in the block vector candidate list may be defined to be identical to the maximum number of candidates MaxNumMergeCand in the merge candidate list of the prediction mode.

[Condition 2-3] The maximum number of candidates MaxNumMergeCand in the merge candidate list of the inter-prediction mode is 1. (i.e., the number of candidates in the block vector candidate list is less than the predefined maximum number of AMVP candidates of 2)

**Ranking used to configure block vector candidate list**

A block vector candidate list may be configured depending on specific ranking using at least one of a block vector candidate for a neighbor block adjacent to the current block; a history-based block vector candidate; a combined block vector candidate; and a fixed default block vector candidate. For example, the block vector candidate list may be configured in the order of the block vector candidate for the neighbor block adjacent to the current block, the history-based block vector candidate, the combined block vector candidate, and the fixed default block vector candidate.

The maximum number of block vector candidates may be the maximum number of block vector candidates of neighbor blocks adjacent to the current block, which can be included in the block vector candidate list when the block vector candidate list is configured.

Here, the maximum number of block vector candidates may be N or N - m. N may be a positive integer. m may be a positive integer. Further, N may be greater than m.

The maximum number of block vector candidates may be the maximum number of history-based block vector candidates, which can be included in the block vector candidate list when the block vector candidate list is configured.

Here, the maximum number of block vector candidates may be N or N - m. N may be a positive integer. m may be a positive integer. Further, N may be greater than m.

The maximum number of block vector candidates may be the maximum number of fixed default block vector candidates, which can be included in the block vector candidate list when the block vector candidate list is configured.

Here, the maximum number of block vector candidates may be N or N - m. N may be a positive integer. m may be a positive integer. Further, N may be greater than m.

For the block vector candidates of neighbor blocks adjacent to the current block, history-based block vector candidates, and fixed default block vector candidates, which are described above, the different maximum numbers of block vector candidates may be separately set and used.

**Derivation and addition of block vector candidate**

A block vector candidate may be derived by at least one of coding parameters of the current block/CTB/CTU.
The block vector candidate may be added to a block vector candidate list by at least one of the coding parameters of the current block/CTB/CTU.

**Signaling/encoding/decoding of information**

At least some of the pieces of information described in embodiments may be signaled/encoded/decoded for specific units.
For example, the pieces of information described in embodiments may include information indicating the maximum number of candidates in a block vector candidate list; information indicating the maximum number of candidates in a merge candidate list of an inter-prediction mode; block vector candidate information; a merge index; an L0 motion prediction flag; and AMVP resolution-related information (e.g., amvr_precision_flag, amvr_precision_idx, and amvr_flag), and may include other coding parameters.
In embodiments, the specific units may include at least one of a parameter set, a header, a brick, CTU, CU, PU, TU, CB, PB, and TB. Further, the specific units may include units determined for signaling/encoding/decoding described in embodiments.
Here, signaling/encoding/decoding the information in a specific unit may mean that the information is used in the specific unit or at the level of the specific unit. Further, the information may also be used in a sub-unit of the specific unit.
Information indicating the maximum value of amvr_precision_idx (max_amvr_precision_idx) and/or information indicating the maximum integer sample unit size which the block vector can have (max_amvr_precision) may be signaled/encoded/decoded for the specific unit.
The information indicating the maximum value of amvr_precision_idx (max_amvr_precision_idx) may be an integer of N or more.
Here, max_amvr_precision indicating the maximum integer sample unit size of the block vector may refer to the difference between the maximum sample unit size and N.
Here, the maximum integer sample unit size determined by max_amvr_precision may be derived as $2^{max\_amvr\_precision}$.
Different integer sample unit sizes may be applied to the horizontal direction and the vertical direction of the block vector, respectively.
In order to apply different integer sample unit sizes to the horizontal direction and the vertical direction of the block vector, respectively, information amvr_separate_precision indicating integer N equal to or greater than 0 may be signaled/encoded/decoded for a specific unit when the horizontal integer sample unit size is $2^N$ times the vertical integer sample unit size.
Alternatively, in order to apply different integer sample unit sizes to the horizontal direction and the vertical direction of the block vector, respectively, the information amvr_separate_precision indicating integer N equal to or greater than 0 may be signaled/encoded/decoded for a specific unit when the vertical integer sample unit size is $2^N$ times the horizontal integer sample unit size.
Alternatively, in order to apply different integer sample unit sizes to the horizontal direction and the vertical direction of the block vector, respectively, the information amvr_separate_precision indicating integer N may be signaled/encoded/decoded for a specific unit when the horizontal integer sample unit size is $2^N$ times the vertical integer sample unit size.
Here, when N is 2, the horizontal integer sample unit size of the block vector may be 4 (= $2^2$) times the vertical integer sample unit size.
Here, when N is -1, the horizontal integer sample unit size of the block vector may be 2/1 (= $2^{-1}$) times the vertical integer sample unit size.
The number of integer sample unit sizes that can be applied to the block vector may be explicitly signaled/encoded/decoded.
num_additional_amvr_precisions may indicate a difference value between the total number of integer sample unit size values that can be applied to the block vector; and the predefined number M of integer sample unit size values. num_additional_amvr_precisions may be signaled/encoded/decoded for a specific unit.
num_additional_amvr_precisions may refer to the number of integer sample unit size values that can be additionally used, in addition to the predefined M integer sample unit size values.

Here, the sum of a value, indicated by num_additional_amvr_precisions, and M may be determined to be the number of integer sample unit size values that can be applied to the block vector.

Here, the set additional_amvr_precisions [num_additional_amvr_precisions] configured using a number of integers identical to the number indicated by num_additional_amvr_precisions may be signaled/encoded/decoded.

Here, the integer sample unit size values that can be additionally used may be determined to be $2^{additional\_amvr\_precisions[i]}$ by parameter i. Here, i may be a parameter indicating integer sample unit size values that can be applied to the current block vector and can be additionally used.

A set of integer sample unit size values that can be applied to the block vector, that is, additional_amvr_precisions, may be signaled/encoded/decoded for a specific unit.

num_amvr_precisions may denote the number of integer sample unit size values.

Here, the sum of a value, indicated by the above-described num_additional_amvr_precisions, and M may be determined to be the number of integer sample unit size values that can be applied to the block vector. M may be the predefined number of integer sample unit size values.

The number of integer sample unit size values that can be applied to the block vector may be explicitly signaled/encoded/decoded.

Information num _amvr_precisions indicating the total number of integer sample unit size values that can be applied to the block vector may be signaled/encoded/decoded for a specific unit.

num_amvr_precisions may denote the total number of integer sample unit size values that can be applied to the block vector.

Here, a set configured using a number of integers identical to the number of num_amvr_precisions, that is, amvr_amvr_precisions], may be signaled/encoded/decoded.

Here, the integer sample unit size values that can be used may be determined to be $2^{amvr\_precisions[i]}$ by index i. Here, i may be an index indicating integer sample unit size values that can be applied to the current block vector.

Here, index i may be one of amvr_precision_idx and/or amvr_flag.

A set of integer sample unit size values that can be applied to the block vector, that is, amvr_precisions, may be signaled/encoded/decoded for a specific unit.

### Embodiments of information signaling and rounding shift

In the embodiments of signaling and rounding shift of the information, which will be described below, a specific unit may include at least one of a parameter set, a header, a brick, CTU, CU, PU, TU, CB, PB, and TB. Further, the specific unit may include units determined for signaling/encoding/decoding described in embodiments.

Here, signaling/encoding/decoding the information in the specific unit may mean that the information is used in the specific unit or at the level of the specific unit. Furthermore, the information may also be used in a sub-unit of the specific unit.

### First embodiment of information signaling and rounding shift

At least one of information indicating the maximum number of candidates in a block vector candidate list; information indicating the maximum number of candidates in a merge candidate list of an inter-prediction mode; block vector candidate information; a merge index; an L0 motion prediction flag; and AMVP resolution-related information (e.g., amvr_precision_flag, amvr_precision_idx, and amvr_flag) may be signaled/encoded/decoded for in specific unit.

The following [Table 7] may show the magnitude of a rounding shift value corresponding to an integer sample unit size applied to a block vector depending on the value of amvr_flag and amvr_precision_flag when the prediction mode of a current block is an intra block copy mode.

[Table 7]

| amvr_flag | amvr_precision_flag | AMVR rounding shift |
|---|---|---|
| | | CuPredMode[ chType ][x0][y0] == MODE_IBC |
| 0 | - | - |
| 1 | 0 | 4 (1 luma sample) |
| 1 | 1 | 6 (4 luma samples) |

Here, when the value of amvr_flag is 0, block vector rounding may not be applied to the current block.

Here, when the value of amvr_flag is 1, the integer sample unit size that is applied to the block vector may be changed depending on the value of amvr_precision_flag.

Here, when the value of amvr_precision_flag is 0, the integer sample unit size of the block vector of the current block may be identical to the size of 1 integer sample.

Here, when the value of amvr_precision_flag is 1, the integer sample unit size of the block vector of the current block may be identical to the size of 4 integer samples.

For example, when the prediction mode of the current block is an intra block copy skip mode or an intra block copy merge mode, a block vector candidate identified by block vector candidate information in the block vector candidate list may be used as the block vector of the current block.

In another example, when the prediction mode of the current block is an intra block copy AMVP mode, a block vector difference that is signaled/encoded/decoded may be added to a prediction block vector identified by the block vector candidate information in the block vector candidate list. The sum of the identified prediction block vector and the block vector difference may be used as the block vector of the current block.

As shown in the example in the following [Table 7], rounding such as that shown in the following [Equation 41] to [Equation 45] may be performed on the identified prediction block vector (i.e., mvX[0] and mvX[1]) depending on the value of amvr_precision_flag that is signaled/encoded/decoded.

**[Equation 41]**
$$offset = ( \, rightShift == 0 \, ) \, ? \, 0 : ( \, 1 << ( \, rightShift - 1 \, ) \, )$$

mvX[ 0 ] = ( ( mvX[ 0 ] + offset - ( mvX[ 0 ] >= 0 ) ) >> rightShift ) << leftShift    [Equation 42]

mvX[ 1 ] = ( ( mvX[ 1 ] + offset - ( mvX[ 1 ] >= 0 ) ) » rightShift ) << leftShift    [Equation 43]

When amvr_precision_flag has first value (e.g., 0) (or when size of 1 integer sample unit is used for block vector), rightshift = 4, leftshift = 4    [Equation 44]

When amvr_precision_flag has second value (e.g., 1) (or when size of 4 integer sample units is used for block vector), rightshift = 6, leftshift = 6    [Equation 45]

Here, the resolution of the block vector difference and the resolution of the prediction block vector may be determined depending on the value of amvr_precision_flag.

Here, when amvr_precision_flag has a first value (e.g., 0), the block vector may have the size of N integer sample units.

Here, when amvr_precision _flag has a second value (e.g., 1), the block vector may have the size of M integer sample units.

Here, each of N and M may be a positive integer. For example, N may be 1. M may be 4. Further, N may be less than M. Alternatively, M may be less than N.

At least one of amvr_precision_flag, the resolution of the block vector difference, and the resolution of the prediction block vector may be derived depending on at least one of the coding parameters of the current block/CTB/CTU.

**Second embodiment of information signaling and rounding shift**

At least one of information indicating the maximum number of candidates in a block vector candidate list; information indicating the maximum number of candidates in a merge candidate list of an inter-prediction mode; block vector candidate information; a merge index; an L0 motion prediction flag; and AMVP resolution-related information (e.g., amvr_precision_flag, amvr_precision_idx, and amvr_flag) may be signaled/encoded/decoded for in specific unit.

The following Table 8 may show the magnitude of a rounding shift value corresponding to an integer sample unit size applied to a block vector depending on the value of amvr_flag and amvr_precision_idx when the prediction mode of the current block is an intra block copy mode.

**[Table 8]**

| amvr_flag | amvr_precision_idx | AMVR rounding shift<br>CuPredMode[ chType ][x0][y0] == MODE_IBC |
|---|---|---|
| 0 | - | - |
| 1 | 0 | 4 (1 luma sample) |
| 1 | 1 | 6 (4 luma samples) |
| 1 | 2 | 7 (8 luma samples) |
| ... | ... | ... |

Here, when the value of amvr_flag is 0, block vector rounding may not be applied to the current block.

Here, when the value of amvr_flag is 1, the integer sample unit size that is applied to the block vector may be changed depending on the value of amvr_precision_idx.

Here, when the value of amvr_precision_idx is 0, the integer sample unit size of the block vector of the current block may be identical to the size of 1 integer sample.

Here, when the value of amvr_precision_idx is 1, the integer sample unit size of the block vector of the current block may be identical to the size of 4 integer samples.

Here, when the value of amvr_precision_idx is 2, the integer sample unit size of the block vector of the current block may be identical to the size of 8 integer samples.

Information indicating the maximum value of amvr_precision_idx (max_amvr_precision_idx) may be signaled/encoded/decoded for the specific unit.

The information indicating the maximum value of amvr_precision_idx (max_amvr_precision_idx) may be an integer of 0 or more.

In another example, when the prediction mode of the current block is an intra block copy AMVP mode, a block vector difference that is signaled/encoded/decoded may be added to a prediction block vector identified by the block vector candidate information in the block vector candidate list. The sum of the identified prediction block vector and the block vector difference may be used as the block vector of the current block.

As shown in the example in the following [Table 9], rounding such as that shown in the following [Equation 46] to [Equation 52] may be performed on the identified prediction block vector (i.e., mvX [0] and mvX[1]) depending on the value of at least one of amvr_flag and amvr_precision_idx that are signaled/encoded/decoded.

**[Table 9]**

| coding unit( x0, y0, cbWidth, cbHeight, treeType ) { | Descriptor |
|---|---|
| ... | |
| } else if ( CuPredMode[ x0 ][ y0 ] == MODE IBC ) { | |
| mvd coding( x0, y0, 0, 0 ) | |
| **mvp_l0_flag**[ x0 ][ y0 ] | ac(v) |
| if( sps_amvr_enabled_flag && <br> ( MvdL0[ x0 ][ y0 ][ 0 ] != 0 \|\| MvdL0[ x0 ][ y0 ][ 1 ] != 0 )) { | |
| **amvr_flag**[ x0 ][ y0 ] | ae(v) |
| if( amvr_flag[ x0 ][ y0 ] ) | |
| **amvr_precision_idx**[ x0 ][ v0 ] | ae(v) |
| } | |
| } else { | |
| ... | |

**[Equation 46]**

$$offset = ( rightShift == 0 ) ? 0 : ( 1 << ( rightShift - 1 )$$

$$mvX[ 0 ] = ( ( mvX[ 0 ] + offset - ( mvX[ 0 ] >= 0 ) ) >> rightShift ) << leftShift \qquad \text{[Equation 47]}$$

$$mvX[ 1 ] = (( mvX[ 0 ] + offset - ( mvX[ 1 ] >= 0 ) ) >> rightShift ) << leftShift \qquad \text{[Equation 48]}$$

When amvr_flag has first value (e.g., 0) (or when size of 1 integer sample unit is used for block vector), rightshift = 4, leftshift = 4     [Equation 49]

When amvr_flag has first value (e.g., 1) and amvr_precision _idx has 0 (or when size of 4 integer sample units is used for block vector), rightshift = 6, leftshift = 6     [Equation 50]

When amvr_flag has second value (e.g., 1) and amvr_precision_idx has 1 (or when size of 8 integer sample units is used for block vector), rightshift = 7, leftshift = 7     [Equation 51]

When amvr_flag has second value (e.g., 1) and amvr_precision_idx has 2 (or when size of 16 integer sample units is used for block vector), rightshift = 8, leftshift = 8     [Equation 52]

Here, the resolution of the block vector difference and the resolution of the prediction block vector may be determined depending on the value of at least one of amvr_flag and amvr_precision_idx.

Here, when amvr_flag has a first value (e.g., 0), the block vector may have the size of N integer sample units.

Further, when amvr_flag has a second value (e.g., 1), the block vector may have the size of M integer sample units or more.

When amvr_flag has a second value (e.g., 1) and amvr_precision_idx is 0, the block vector may have the size of M integer sample units.

When amvr_flag has a second value (e.g., 1) and amvr_precision_idx is 1, the block vector may have the size of P integer sample units.

When amvr_flag has a second value (e.g., 1) and amvr_precision_idx is 2, the block vector may have the size of Q integer sample units.

Here, each of N, M, P, and Q may be a positive integer. For example, N may be 1, M may be 4, P may be 8, and Q may be 16.

The range or maximum value of amvr_precision_idx may be derived by a high-level syntax.

The magnitudes of the values of N, M, P, and Q may be different from each other. The order of the values of N, M, P, and Q may not be proportional to the value of amvr_precision _idx. The order of the values of N, M, P, and Q may be determined depending on the performance of video encoding, the properties of input video, statistical probability, etc.

At least one of amvr_precision_idx, the resolution of the block vector difference, and the resolution of the prediction block vector may be derived depending on at least one of the coding parameters of the current block/CTB/CTU.

Here, the block vector resolution (e.g., unit of 1, 4, 8, or 16 integer samples) used in the intra block copy AMVP mode may be identical to a result derived by applying a specific operation to motion vector resolution (e.g., unit of 1/4, 1 or 4 integer samples) used in an inter AMVP mode or an affine AMVP mode. Here, the specific operation may be an operation of multiplying K by a target. Alternatively, the specific operation may be an operation of applying a left shift of J bits to a target. Each of K and J may be a positive integer. For example, K may be 4. J may be 2.

At least one of amvr_flag, amvr_precision_idx, the resolution of the block vector difference, and the resolution of the prediction block vector may be derived depending on at least one of the coding parameters of the current block/CTB/CTU.

The maximum value of amvr_precision_idx may be less than or equal to the value of max_amvr_precision_idx indicating the maximum value of amvr_precision_idx.

For example, when the prediction mode of the current block is an intra block copy skip mode or an intra block copy merge mode, a block vector candidate identified by block vector candidate information in the block vector candidate list may be used as the block vector of the current block.

In another example, when the prediction mode of the current block is an intra block copy AMVP mode, a block vector difference that is signaled

/encoded/decoded may be added to a prediction block vector identified by the block vector candidate information in the block vector candidate list. The sum of the identified prediction block vector and the block vector difference may be used as the block vector of the current block.

As shown in the example in the following [Table 10], rounding such as that shown in the following [Equation 53] to [Equation 58] may be performed on the identified prediction block vector (i.e., mvX[0] and mvX[1]) depending on the value of amvr_precision_idx that is signaled/encoded/decoded.

**[Table 10]**

| | |
|---|---|
| } else if ( CuPredMode[ x0 ][ y0 ] == MODE IBC ) { | |
| mvd_coding( x0, y0, 0, 0 ) | |
| if( MaxNumMergeCand > 1 ) | |
| **mvp_l0_flag**[ x0 ][ y0 ] | ae(v) |
| if( sps_amvr_enabled_flag && <br> ( MvdL0[ x0 ][ y0 ][ 0 ] != 0 \| \| MvdL0[ x0 ][ y0 ][ 1 ] != 0 ) ) { | |
| **amvr_precision_idx**[ x0 ][ y0 ] | ae(v) |
| } | |

**[Equation 53]**

$$ offset = ( \, rightShift == 0 \, ) \, ? \, 0 : ( \, 1 << ( \, rightShift - 1 \, ) \, ) $$

$$ mvX[\,0\,] = ( \, ( \, mvX[\,0\,] + offset - ( \, mvX[\,0\,] >= 0 \, ) \, ) >> rightShift \, ) << leftShift \qquad \text{[Equation 54]} $$

$$ mvX[\,1\,] = ( \, ( \, mvX[\,1\,] + offset - ( \, mvX[\,1\,] >= 0 \, ) \, ) >> rightShift \, ) << \text{-->} leftShift \qquad \text{[Equation 55]} $$

When amvr_precision_idx has first value (e.g., 0) (or when size of 1 integer sample unit is used for block vector), rightshift = 4, leftshift = 4      [Equation 56]

When amvr_precision_idx has second value (e.g., 1) (or when size of 4 integer sample units is used for block vector), rightshift = 6, leftshift = 6      [Equation 57]

When amvr_precision_idx has third value (e.g., 2) (or when size of 8 integer sample units is used for block vector), rightshift = 7, leftshift = 7 [Equation 58]

Here, the resolution of the block vector difference and the resolution of the prediction block vector may be determined depending on the value of amvr_precision_idx.

Here, when amvr_precision_idx has a first value (e.g., 0), the block vector may have the size of N integer sample units.

Also, when amvr_precision_idx has a second value (e.g., 1), the block vector may have the size of M integer sample units.

Further, when amvr_precision_idx has a second value (e.g., 2), the block vector may have the size of L integer sample units.

Here, each of N, M, and L may be a positive integer. For example, N may be 1. M may be 4. L may be 8.

At least one of amvr_precision_idx, the resolution of the block vector difference, and the resolution of the prediction block vector may be derived depending on at least one of the coding parameters of the current block/CTB/CTU.

**Third embodiment of information signaling and rounding shift**

At least one of information indicating the maximum number of candidates in a block vector candidate list; information indicating the maximum number of candidates in a merge candidate list of an inter-prediction mode; block vector candidate information; a merge index; an L0 motion prediction flag; and AMVP resolution-related information (e.g., amvr_precision_flag, amvr_precision_idx, and amvr_flag) may be signaled/encoded/decoded for in specific unit.

The following Table 11 may show the magnitude of a rounding shift value corresponding to an integer sample unit size applied to a block vector depending on the value of amvr_flag and amvr_precision_idx when the prediction mode of the current block is an intra block copy mode.

[Table 11]

| amvr_flag | amvr_precision_idx | AMVR rounding shift |
|---|---|---|
| | | CuPredMode[ chType ][x0][y0] == MODE_IBC |
| 0 | - | - |
| 1 | 0 | 4 (1 luma sample) |
| 1 | 1 | 5 (2 luma samples) |
| 1 | 2 | 6 (4 luma samples) |
| 1 | 3 | 7 (8 luma samples) |
| ... | ... | ... |

Here, when the value of amvr_flag is 0, block vector rounding may not be applied to the current block.

Here, when the value of amvr_flag is 1, the integer sample unit size that is applied to the block vector may be changed depending on the value of amvr_precision_idx.

Here, when the value of amvr_precision_idx is 0, the integer sample unit size of the block vector of the current block may be identical to the size of 1 integer sample.

Here, when the value of amvr_precision_idx is 1, the integer sample unit size of the block vector of the current block may be identical to the size of 2 integer samples.

Here, when the value of amvr_precision_idx is 2, the integer sample unit size of the block vector of the current block may be identical to the size of 4 integer samples.

Here, when the value of amvr_precision _idx is 3, the integer sample unit size of the block vector of the current block may be identical to the size of 8 integer samples.

Information indicating the maximum value of amvr_precision_idx (max_amvr_precision_idx) may be signaled/encoded/decoded for the specific unit.

The information indicating the maximum value of amvr_precision_idx (max_amvr_precisionidx) may be an integer of 0 or more.

In another example, when the prediction mode of the current block is an intra block copy AMVP mode, a block vector difference that is signaled/encoded/decoded may be added to a prediction block vector identified by the block vector candidate information in the block vector candidate list. The sum of the identified prediction block vector and the block vector difference may be used as the block vector of the current block.

As shown in the example in the following [Table 12], rounding such as that shown in the following [Equation 59] to [Equation 66] may be performed on the identified prediction block vector (i.e., mvX[0] and mvX[1]) depending on the value of amvr_precision_idx that is signaled/encoded/decoded.

[Table 12]

| coding unit( x0, y0, cbWidth, cbHeight, treeType ) { | Descriptor |
|---|---|
| ... | |
| } else if ( CuPredMode[ x0 ][ y0 ] = = MODE IBC ) { | |
| mvd_coding( x0, y0, 0, 0 ) | |
| **mvp l0_flag**[ x0 ][ y0 ] | ae(v) |
| if( sps_amvr_enabled _flag && <br>    ( MvdL0[ x0 ][ y0 ][ 0 ] != 0 \|\| MvdL0[ x0 ][ y0 ][ 1 ] != 0 ) ) { | |
| **amvr_flag**[ x0 ][ v0 ] | ae(v) |
| if( amvr_flag[ x0 ][ y0 ] ) | |
| **amvr_precision_idx[** x0 ][ y0 ] | ae(v) |
| } | |
| } else { | |
| ... | |

$$\text{[Equation 59]}$$
$$\text{offset} = ( \text{rightShift} = = 0 ) \ ? \ 0 : ( \ 1 << ( \text{rightShift} - 1 ) )$$

$$\text{mvX[ 0 ] = ( ( mvX[ 0 ] + offset - ( mvX[ 0 ] >= 0 ) ) >> rightShift ) << leftShift} \qquad \text{[Equation 60]}$$

$$\text{mvX[ 1 ] = ( ( mvX[ 1 ] + offset - ( mvX[ 1 ] >= 0 ) ) >> rightShift ) << leftShift} \qquad \text{[Equation 61]}$$

When amvr_flag has first value (e.g., 0) (or when size of 1 integer sample unit is used for block vector), rightshift = 4, leftshift = 4                    [Equation 62]

When amvr_flag has second value (e.g., 1) and amvr_precision _idx has first value (e.g., 0) (or when size of 1 integer sample unit is used for block vector), rightshift = 4, leftshift = 4                    [Equation 63]

When amvr_flag has second value (e.g., 1) and amvr_precision_idx has second value (e.g., 1) (or when size of 2 integer sample units is used for block vector), rightshift = 5, leftshift = 5                    [Equation 64]

When amvr_flag has second value (e.g., 1) and amvr_precision _idx has second value (e.g., 1) (or when size of 4 integer sample units is used for block vector), rightshift = 6, leftshift = 6                    [Equation 65]

When amvr_flag has second value (e.g., 1) and amvr_precision_idx has second value (e.g., 1) (or when size of 8 integer sample units is used for block vector), rightshift = 7, leftshift = 7    [Equation 66]

Here, the resolution of the block vector difference and the resolution of the prediction block vector may be determined depending on the value of at least one of amvr_flag and amvr_precision_flag.

Here, when amvr_flag has a first value (e.g., 0), the block vector may have the size of N integer sample units.

Further, when amvr_flag has a second value (e.g., 1), the block vector may have the size of M integer sample units or P integer sample units.

When amvr_flag has a second value (e.g., 1) and amvr_precision_flag has a first value (e.g., 0), the block vector may have the size of M integer sample units.

When amvr_flag has a second value (e.g., 1) and amvr_precision_flag has a second value (e.g., 1), the block vector may have the size of P integer sample units.

Here, each of N, M, and P may be a positive integer. For example, N may be 1. M may be 4. P may be 16. Further, N may be less than M, and may be less than P. P may be greater than N, and may be greater than M.

At least one of amvr_flag, amvr_precision_idx, the resolution of the block vector difference, and the resolution of the prediction block vector may be derived depending on at least one of the coding parameters of the current block/CTB/CTU.

**Fourth embodiment of information signaling and rounding shift**

At least one of information indicating the maximum number of candidates in a block vector candidate list; information indicating the maximum number of candidates in a merge candidate list of an inter-prediction mode; block vector candidate information; a merge index; an L0 motion prediction flag; and AMVP resolution-related information (e.g., amvr_precision_flag, amvr_precision_idx, and amvr_flag) may be signaled/encoded/decoded for in specific unit.

The following Table 13 may indicate the magnitude of the rounding shift value corresponding to the integer sample unit size applied to the block vector depending on the value of amvr_precision_idx when the prediction mode of the current block is an intra block copy.

[Table 13]

| amvr_precision_idx | AMVR rounding shift<br>CuPredMode[ chType ][x0][y0] == MODE_IBC |
|---|---|
| 0 | 4 (1 luma sample) |
| 1 | 5 (2 luma samples) |
| 2 | 6 (4 luma samples) |
| 3 | 7 (8 luma samples) |
| . . . | . . . |

Here, the integer sample unit size that is applied to the block vector may be changed depending on the value of amvr_precision_idx.

Here, when the value of amvr_precision_idx is 0, the integer sample unit size of the block vector of the current block may be identical to the size of 1 integer sample.

Here, when the value of amvr_precision_idx is 1, the integer sample unit size of the block vector of the current block may be identical to the size of 2 integer samples.

Here, when the value of amvr_precision_idx is 2, the integer sample unit size of the block vector of the current block may be identical to the size of 4 integer samples.

Here, when the value of amvr_precision_idx is 3, the integer sample unit size of the block vector of the current block may be identical to the size of 8 integer samples.

Information indicating the maximum value of amvr_precision_idx (max_amvr_precision_idx) may be signaled/encoded/decoded for the specific unit.

The information indicating the maximum value of amvr_precision_idx (max_amvr_precision_idx) may be an integer of 0 or more.

For example, when the prediction mode of the current block is an intra block copy skip mode or an intra block copy merge mode, a block vector candidate identified by block vector candidate information in the block vector candidate list may be used as the block vector of the current block.

In another example, when the prediction mode of the current block is an intra block copy AMVP mode, a block vector difference that is signaled/encoded/decoded may be added to a prediction block vector identified by the block vector candidate information in the block vector candidate list. The sum of the identified prediction block vector and the block vector difference may be used as the block vector of the current block.

As shown in the example in the following [Table 14], rounding such as that shown in the following [Equation 67] to [Equation 73] may be performed on the identified prediction block vector (i.e., mvX[0] and mvX[1]) depending on the value of amvr_precision_idx that is signaled/encoded/decoded.

**[Table 14]**

| | |
|---|---|
| } else if ( CuPredMode[ x0 ][ y0 ] = = MODE IBC ) { | |
| mvd coding( x0, y0, 0, 0 ) | |
| if( MaxNumMergeCand > 1 ) | |
| **mvp_l0_flag[** x0 ][ y0 ] | ae(v) |
| if( sps_amvr_enabled_flag && <br> ( MvdL0[ x0 ][ y0 ][ 0 ] != 0 \|\| MvdL0[ x0 ][ y0 ][ 1 ] != 0 ) ) { | |
| **amvr_precision_idx**[ x0 ][ y0 ] | ae(v) |
| } | |

**[Equation 67]**

$$offset = ( \, rightShift == 0 \, ) \, ? \, 0 : ( \, 1 << ( \, rightShift - 1 \, ) \, )$$

$$mvX[ \, 0 \, ] = ( ( \, mvX[ \, 0 \, ] + offset - ( \, mvX[ \, 0 \, ] >= 0 \, ) \, ) >> rightShift \, ) << leftShift \qquad \text{[Equation 68]}$$

$$mvX[ \, 1 \, ] = ( ( \, mvX[ \, 1 \, ] + offset - ( \, mvX[ \, 1 \, ] >= 0 \, ) \, ) >> rightShift \, ) << leftShift \qquad \text{[Equation 69]}$$

When amvr_precision_idx has first value (e.g., 0) (or when size of 1 integer sample unit is used for block vector), rightshift = 4, leftshift = 4 [Equation 70]

When amvr_precision_idx has second value (e.g., 1) (or when size of 2 integer sample units is used for block vector), rightshift = 5, leftshift = 5 [Equation 71]

When amvr_precision_idx has third value (e.g., 2) (or when size of 4 integer sample units is used for block vector), rightshift = 6, leftshift = 6 [Equation 72]

When value of amvr_precision_idx is fourth value (e.g., 3) (or when size of 8 integer sample units is used for block vector), rightshift = 7, leftshift = 7 [Equation 73]

At least one of amvr_precision_idx, the resolution of the block vector difference, and the resolution of the prediction block vector may be derived depending on at least one of the coding parameters of the current block/CTB/CTU.

Here, the resolution of the block vector difference and the resolution of the prediction block vector may be determined depending on the value of amvr_precision_idx.

Here, when amvr_precision_idx has a first value (e.g., 0), the block vector may have the size of N integer sample units.

Also, when amvr_precision_idx has a second value (e.g., 1), the block vector may have the size of M integer sample units.

Further, when amvr_precision_idx has a third value (e.g., 2), the block vector may have the size of L integer sample units.

Further, when amvr_precision_idx has a fourth value (e.g., 3), the block vector may have the size of K integer sample units.

Here, each of N, M, L, and K may be a positive integer. For example, N may be 1. M may be 2. L may be 4. K may be 8.

In another example, when the prediction mode of the current block is an intra block copy AMVP mode, a block vector difference that is signaled/encoded/decoded may be added to a prediction block vector identified by the block vector candidate information in the block vector candidate list. The sum of the identified prediction block vector and the block vector difference may be used as the block vector of the current block. It may be used as the block vector.

As shown in the example in the following [Table 15], rounding such as that shown in the following [Equation 74] to [Equation 80] may be performed on the identified prediction block vector (i.e., mvX[0] and mvX[1]) depending on the value of amvr_precision_idx that is signaled/encoded/decoded.

**[Table 15]**

| | |
|---|---|
| } else if ( CuPredMode[ x0 ][ y0 ] = = MODE IBC ) { | |
| mvd coding( x0, y0, 0, 0 ) | |
| if( MaxNumMergeCand > 1 ) | |
| **mvp_l0_flag[** x0 ][ y0 ] | ac(v) |
| if( sps_amvr_enabled_flag &&<br>( MvdL0[ x0 ][ y0 ][ 0 ] != 0 \| \| MvdL0[ x0 ][ y0 ][ 1 ] != 0 ) ) { | |
| **amvr_precision_idx[** x0 ][ y0 ] | ae(v) |
| } | |

**[Equation 74]**
$$offset = ( \ rightShift = = 0 \ ) \ ? \ 0 : ( \ 1 << ( \ rightShift \ - 1 \ ) \ )$$

mvX[ 0 ] = ( ( mvX[ 0 ] + offset - ( mvX[ 0 ] >= 0 ) ) >> rightShift ) << leftShift                    [Equation 75]

mvX[ 1 ] = ( ( mvX[ 1 ] + offset - ( mvX[ 1 ] >= 0 ) ) » rightShift ) << --> leftShift                    [Equation 76]

When value of amvr_precision_idx is first value (e.g., 0) (or when size of 1 integer sample unit is used for block vector), rightshift = 4, leftshift = 4                    [Equation 77]

When amvr_precision_idx has second value (e.g., 1) (or when size of 4 integer sample units is used for block vector), rightshift = 6, leftshift = 6                    [Equation 78]

When amvr_precision_idx has third value (e.g., 2) (or when size of 8 integer sample units is used for block vector), rightshift = 7, leftshift = 7                    [Equation 79]

When value of amvr_precision_idx is fourth value (e.g., 3) (or when size of 16 integer sample units is used for block vector), rightshift = 8, leftshift = 8                    [Equation 80]

Here, the resolution of the block vector difference and the resolution of the prediction block vector may be determined depending on the value of amvr_precision_idx.

Here, amvr_precision_idx may be an integer of 0 or more.

Here, when the value of amvr_precision_idx is 0, the block vector may have the size of N integer sample units.

Further, when the value of amvr_precision_idx is 1, the block vector may have the size of M integer sample units.

Further, when the value of amvr_precision_idx is 2, the block vector may have the size of O integer sample units.

The maximum value of amvr_precision_idx may be derived based on max_amvr_precision_idx.

Here, the integer sample unit size of each of N, M and O may be a positive integer. For example, N may be 1. M may be 4. O may be 8.

When max_amvr_precision_idx and amvr_precision_idx are identical to each other, and the maximum integer sample unit size derived from max_amvr_ precision is 32, processing corresponding to the following [Equation 81] may be performed.

$$\text{When value of amvr\_precision\_idx is fourth value (e.g., 3) (or when size of 32 integer sample units is used for block vector), rightshift = 9, leftshift = 9} \qquad \text{[Equation 81]}$$

At least one of amvr_precision_idx, max_amvr_precision_idx, the resolution of the block vector difference, and the resolution of the prediction block vector may be derived depending on at least one of the coding parameters of the current block/CTB/CTU.

The maximum value of amvr_precision _idx may be less than or equal to the value of max_amvr_precision_idx indicating the maximum value of amvr_precision_idx.

**Fifth embodiment of information signaling and rounding shift**

At least one of information indicating the maximum number of candidates in a block vector candidate list; information indicating the maximum number of candidates in a merge candidate list of an inter-prediction mode; block vector candidate information; a merge index; an L0 motion prediction flag; and AMVP resolution-related information (e.g., amvr_precision_flag, amvr_precision_idx, and amvr_flag) may be signaled/encoded/decoded for in specific unit.

The following Table 16 may show the magnitude of the rounding shift value corresponding to the integer sample unit size applied to the block vector depending on the value of amvr_precision_idx when the prediction mode of the current block is an intra block copy.

**[Table 16]**

| amvr_precision_idx | AMVR rounding shift |
| --- | --- |
| | CuPredMode[ chType ][x0][y0] = = MODE_IBC |
| 0 | 4 (1 luma sample) |
| 1 | 5 (2 luma samples) |
| 2 | 6 (4 luma samples) |
| 3 | 7 (8 luma samples) |
| 4 | 8 (16 luma samples) |
| 5 | 9 (32 luma samples) |
| . . . | . . . |

Information indicating the maximum value of amvr_precision_idx (max_amvr_precision_idx) may be signaled/encoded/decoded for the specific unit. The information indicating the maximum value of amvr_precision_idx (max_amvr_precision_idx) may be an integer of 0 or more.

Here, when the value of max_amvr_precision_idx is 4, the value of amvr_precision_idx may not be greater than 4.

Here, when the value of max_amvr_precision_idx is 4, clipping that enables the size of 16 integer sample units to be used may be applied even in the case where the value of amvr_precision _idx is 5 or more.

**Sixth embodiment of information signaling and rounding shift**

At least one of information indicating the maximum number of candidates in a block vector candidate list; information indicating the maximum number of candidates in a merge candidate list of an inter-prediction mode; block vector candidate information; a merge index; an L0 motion prediction flag; and AMVP resolution-related information amvr_precision_flag and/or amvr_precision_idx and/or amvr_flag may be signaled/encoded/decoded for a specific unit.

The following Table 17 may show the magnitude of the rounding shift value corresponding to the integer sample unit size applied to the block vector depending on the value of amvr_precision_idx when the prediction mode of the current block is an intra block copy.

[Table 17]

| amvr_precision_idx | AMVR rounding shift |
| --- | --- |
| | CuPredMode[ chType ][x0][y0] = = MODE_IBC |
| 0 | 4 (1 luma sample) |
| 1 | 5 (2 luma samples) |
| 2 | 6 (4 luma samples) |

| | |
| --- | --- |
| 3 | 7 (8 luma samples) |
| 4 | 8 (16 luma samples) |
| 5 | 9 (32 luma samples) |
| . . . | . . . |

Information indicating the maximum value of amvr_precision_idx (max amvr_precision_idx) and/or information indicating the maximum integer sample unit size which the block vector can have (max_amvr_precision) may be signaled/encoded/decoded for the specific unit.

The information indicating the maximum value of amvr_precision_idx (max_amvr_precision_idx) may be an integer equal to or greater than a certain value.

max_amvr_ precision indicating the maximum integer sample unit size of the block vector may be an integer of N or more.

Here, max_amvr_precision indicating the maximum integer sample unit size of the block vector may refer to the difference between the maximum sample unit size and N.

Here, the maximum integer sample unit size determined by max_amvr_ precision may be derived as $2^{max\_amvr\_precision}$.

Here, when the value of max_amvr_precision_idx is 4, the value of amvr_precision_idx may not be greater than 4.

Here, when the value of max_amvr_precision_idx for amvr_precision_idx is 4 or more, the size of $2^{max\_amvr\_precision}$ integer sample units may be applied depending on the value of amvr_precision_idx.

The values of different integer sample unit sizes may be applied to the horizontal direction and the vertical direction of the block vector, respectively.

## Seventh embodiment of information signaling and rounding shift

In order to apply the values of different integer sample unit sizes to the horizontal direction and the vertical direction of the block vector, respectively, information amvr_separate_prec_flag indicating a reference direction out of the horizontal direction and the vertical direction may be signaled/encoded/decoded for a specific unit.

Here, when the value of amvr_separate_prec_flag is 0, the reference direction may be the vertical direction.

Here, when the value of amvr_separate_prec_flag is 1, the reference direction may be the horizontal direction.

Here, when the value of amvr_separate_prec_flag is 0, the reference direction may be the horizontal direction.

Here, when the value of amvr_separate_prec_flag is 1, the reference direction may be the vertical direction.

When there is no amvr_separate_prec_flag, the reference direction may be derived as the horizontal direction.

When there is no amvr_separate_prec_flag, the reference direction may be derived as the vertical direction.

The other direction of the reference direction may be a direction other than the reference direction out of the horizontal direction and the vertical direction.

The reference direction may be determined by amvr_separate_prec_flag. The integer sample unit size of the other direction may be $2^N$ times that of the reference direction. Here, the information amvr_separate_precision indicating N may be signaled/encoded/decoded for the specific unit. N may be an integer of 0 or more.

Here, when the value of N is 0, the horizontal integer sample unit size of the block vector may be identical to the vertical integer sample unit size of the block vector.

Here, when the value of N is 1, the horizontal integer sample unit size of the block vector may be 2 (= $2^1$) times the vertical integer sample unit size.

Here, when the value of N is 2, the horizontal integer sample unit size of the block vector may be 4 (= $2^2$) times the vertical integer sample unit size.

The following [Table 18] shows the integer sample unit size of the block vector depending on the value of amvr_separate_precision when the reference direction is the vertical direction (or when the value of amvr_separate_prec_flag is 0).

### [Table 18]

| amvr_precision_idx | AMVR rounding shift | | | |
| --- | --- | --- | --- | --- |
| | CuPredMode[ chType ][x0][y0] = = MODE_IBC | | | |
| | amvr_separate_prec_flag = = 0 && amvr_separate_precision = = 0 | | amvr_separate_prec_flag = = 0 && amvr_separate_precision = = 1 | |
| | Vertical precision | Horizontal precision | Vertical precision | Horizontal precision |
| 0 | 4 (1 luma sample) | 4 (1 luma sample) | 4 (1 luma samples) | 5(2 luma samples) |
| 1 | 5 (2 luma samples) | 5 (2 luma samples) | 5 (2 luma samples) | 6 (4 luma samples) |
| 2 | 6 (4 luma samples) | 6 (4 luma samples) | 6 (4 luma samples) | 7 (8 luma samples) |
| 3 | 7 (8 luma samples) | 7( 8 luma samples) | 7 (8 luma samples) | 8 (16 luma samples) |
| … | … | … | … | … |

## Eighth embodiment of information signaling and rounding shift

The values of different integer sample unit sizes may be applied to the horizontal direction and the vertical direction of the block vector, respectively.

The following [Table 19] shows an integer sample unit size depending on the value of amvr_separate_precision when the reference direction is the horizontal direction (or when the value of amvr_separate_prec_flag is 1).

[Table 19]

| amvr_precision_idx | AMVR rounding shift | | | |
| --- | --- | --- | --- | --- |
| | CuPredMode[ chType ][x0][y0] == MODE_IBC | | | |
| | Amvr_separate_prec_flag == 1 && amvr_separate_precision == 0 | | Amvr_separate_prec_flag == 1 && amvr_separate_precision == 1 | |
| | Vertical precision | Horizontal precision | Vertical precision | Horizontal precision |
| 0 | 4 (1 luma sample) | 4 (1 luma sample) | 5 (2 luma samples) | 4 (1 luma samples) |
| 1 | 5 (2 luma samples) | 5 (2 luma samples) | 6 (4 luma samples) | 5 (2 luma samples) |
| 2 | 6 (4 luma samples) | 6 (4 luma samples) | 7 (8 luma samples) | 6 (4 luma samples) |
| 3 | 7 (8 luma samples) | 7 (8 luma samples) | 8 (16 luma samples) | 7 (8 luma samples) |
| … | … | … | … | … |

In another example, when the prediction mode of the current block is an intra block copy AMVP mode, a block vector difference that is signaled/encoded/decoded may be added to a prediction block vector identified by the block vector candidate information in the block vector candidate list. The sum of the identified prediction block vector and the block vector difference may be used as the block vector of the current block.

Rounding such as that in the following [Equation 82] to [Equation 90] may be performed on an identified prediction block vector (i.e., mvX[0] and mvX[1]); the horizontal element value of the block vector (i.e., mvX[0].hor, mvX[1].hor); and the vertical element value of the block vector (i.e., mvX[0].ver, mvX[1].ver) depending on the value of amvr_precision_idx that is signaled/encoded/decoded.

[Equation 82]

$$\text{offset\_hor} = ( \text{rightShift\_hor} == 0 ) ? 0 : ( 1 << ( \text{rightShift\_hor} - 1 ) )$$

[Equation 83]

$$\text{offset\_ver} = ( \text{rightShift\_ver} == 0 ) ? 0 : ( 1 << ( \text{rightShift\_ver} - 1 ) )$$

mvX[ 0 ] = ( ( mvX[ 0 ].hor + offset_hor - ( mvX[ 0 ].hor >= 0 ) ) >> rightShift_hor ) << leftShift_hor          [Equation 84]

mvX[ 0 ] = ( ( mvX[ 0 ].ver + offset_ver - ( mvX[ 0 ].ver >= 0 ) ) >> rightshift_ver ) << leftShift_ver          [Equation 85]

mvX[ 1 ] = ( ( mvX[ 1 ].hor + offset_hor - ( mvX[ 1 ].hor >= 0 ) ) >> rightShift_hor ) << leftShift_hor          [Equation 86]

mvX[ 1 ] = ( ( mvX[ 1 ].ver + offset_ver - ( mvX[ 1 ].ver >= 0 ) ) >> rightshift_ver ) << leftShift_ver          [Equation 87]

when amvr_precision_idx has first value (e.g., 0) (or when size of 4 integer sample units is used for horizontal direction of block vector and the size of 1 integer sample unit is used for vertical direction of block vector), rightshift_hor = leftshift_hor = 6, rightshift_ver = leftshift_ver = 4          [Equation 88]

when amvr_precision_idx has first value (e.g., 0) (or when size of 8 integer sample units is used for horizontal direction of block vector and size of 4 integer sample units is used for vertical direction of block vector), rightshift_hor = leftshift_hor = 7, --> rightshift_ver = leftshift_ver = 6          [Equation 89]

when amvr_precision_idx has first value (e.g., 0) (or when size of 16 integer sample units is used for horizontal direction of block vector and the size of 8 integer sample units is used for vertical direction [Equation 90] of block vector), rightshift_hor = leftshift_hor = 8, rightshift_ver = leftshift_ver = 7

Here, the resolution of the block vector difference and the resolution of the prediction block vector may be determined depending on the value of amvr_precision_idx.

Here, amvr_precision_idx may be an integer of 0 or more.

Here, the horizontal sample unit size/vertical sample unit size of the block vector may be changed depending on the value of amvr_precision_idx.

Here, when the value of amvr_precision_idx is 0, the block vector may have the size of N integer sample units.

Furthermore, when the value of amvr_precision_idx is 1, the block vector may have an M integer sample unit size for the horizontal sample unit, and may have an O integer sample unit size for the vertical sample unit. Here, M and O may be different from each other.

Furthermore, when the value of amvr_precision_idx is 2, the block vector may have a P integer sample unit size for the horizontal sample unit, and may have a Q integer sample unit size for the vertical sample unit. Here, P and Q may be different from each other.

The range and/or the maximum value of amvr_precision_idx may be derived through a high-level syntax.

Here, the integer sample unit size of each of N, M, O, P, and Q may be a positive integer.

For example, the horizontal sample unit size and the vertical sample unit size according to an embodiment may be configured as a predefined value-pair. The predefined value-pair may include value-pairs such as (1, 4), (1, 8), (1, 16), (4, 8), (4, 16), (4, 32), and (8, 16). Alternatively, the predefined value-pair may be some of the above-listed value-pairs.

At least one of amvr_precision_idx, the resolution of the block vector difference, and the resolution of the prediction block vector may be derived depending on at least one of the coding parameters of the current block/CTB/CTU.

The maximum value of amvr_precision_idx may be less than or equal to the value of max_amvr_precision_idx indicating the maximum value of amvr_precision_idx.

## Ninth embodiment of information signaling and rounding shift

The values of different integer sample unit sizes may be applied to the horizontal direction and the vertical direction of the block vector, respectively.

When the integer sample unit size of the other direction for the reference direction is $2^N$, information amvr_separate_precision indicating integer N may be signaled/encoded/decoded for a specific unit.

The reference direction may be fixed at one of a horizontal direction and a vertical direction.

Here, when the reference direction is the vertical direction and the value of N is 0, the horizontal integer sample unit size of the block vector may be identical to the vertical integer sample unit size of the block vector.

Here, when the reference direction is the vertical direction and the value of N is 1, the horizontal integer sample unit size of the block vector may be twice (=2') the vertical integer sample unit size of the block vector.

Here, when the reference direction is the vertical direction and the value of N is 2, the horizontal integer sample unit size of the block vector may be four times (=$2^2$) the vertical integer sample unit size of the block vector.

Here, when the reference direction is the vertical direction and the value of N is -1, the horizontal integer sample unit size of the block vector may be 1/2 (=$2^{-1}$) of the vertical integer sample unit size of the block vector.

Here, when the reference direction is the vertical direction and the value of N is -2, the horizontal integer sample unit size of the block vector may be 1/4 (=$2^{-2}$) of the vertical integer sample unit size of the block vector.

The following [Table 20] shows the integer sample unit size of the block vector depending on the value of amvr _separate_precision when the reference direction is the vertical direction.

[Table 20]

| amvr_precision_idx | AMVR rounding shift | | | | | |
| | CuPredMode[ chType ][x0][y0] = = MODE_IBC | | | | | |
| | amvr_separate_precision = = 0 | | amvr_separate_precision = = 1 | | amvr_separate_precision = = -1 | |
| | Vertical precision | Horizontal precision | Vertical precision | Horizontal precision | Vertical precision | Horizontal precision |
|---|---|---|---|---|---|---|
| 0 | 4 (1 luma sample) | 4 (1 luma sample) | 4 (1 luma sample) | 5 (2 luma samples) | 4 (1 luma sample) | 3 (1/2 luma sample) |
| 1 | 5 (2 luma samples) | 5 (2 luma samples) | 5 (2 luma samples) | 6 (4 luma samples) | 5 (2 luma samples) | 4 (1 luma samples) |
| 2 | 6 (4 luma samples) | 6 (4 luma samples) | 6 (4 luma samples) | 7 (8 luma samples) | 6 (4 luma samples) | 5 (2 luma samples) |
| 3 | 7 (8 luma samples) | 7( 8 luma samples) | 7 (8 luma samples) | 8 (16 luma samples) | 7 (8 luma samples) | 6 (4 luma samples) |
| … | … | … | … | … | … | … |

## Tenth embodiment of information signaling and rounding shift

As shown in the following [Table 21], the values of different integer sample unit sizes may be applied to the horizontal direction and the vertical direction of the block vector, respectively.

## [Table 21]

| amvr_precision_idx | AMVR rounding shift | | | |
| | CuPredMode[ chType ][x0][y0] = = MODE_IBC | | | |
| | amvr_separate_precision = = 2 | | amvr_separate_precision = = -2 | |
| | Vertical precision | Horizontal precision | Vertical precision | Horizontal precision |
|---|---|---|---|---|
| 0 | 4 (1 luma sample) | 5 (2 luma sample) | 4 (1 luma samples) | 3 (1/2 luma sample) |
| 1 | 5 (2 luma samples) | 6 (4 luma samples) | 5 (2 luma samples) | 4 (1 luma sample) |
| 2 | 6 (4 luma samples) | 7 (8 luma samples) | 6 (4 luma samples) | 5 (2 luma samples) |
| 3 | 7 (8 luma samples) | 8 (16 luma samples) | 7 (8 luma samples) | 6 (4 luma samples) |
| … | … | … | … | … |

## Eleventh embodiment of information signaling and rounding shift

The number of integer sample unit size values that can be applied to a block vector may be explicitly signaled/encoded/decoded.

Information num_amvr_precisions indicating the total number of integer sample unit size values that can be applied to the block vector may be signaled/encoded/decoded for a specific unit.

Here, the number of integer sample unit size values that can be applied to the block vector may be M. M may be a positive integer.

Here, a set configured using a number of integers identical to the number of num_amvr_precisions, that is, amvr_precisions[num_amvr_precisions], may be signaled/encoded/decoded.

Here, each integer sample unit size value may be determined to be $2^{amvr\_precisions[i]}$ for parameter i. i may be a parameter indicating a sample unit size value that can be applied to the current block vector and can be additionally used.

amvr_precisions may be a set of integer sample unit size values that can be applied to the block vector. The amvr_precisions set may be signaled/encoded/decoded for a specific unit.

The following [Equation 22] may show an embodiment in which the value of num_amvr_precision is 4, and the amvr_precisions set that is signaled/encoded/decoded is configured using the size of 1 integer sample unit, the size of 2 integer sample units, the size of 4 integer sample units, and the size of 8 integer sample units.

[Table 22]

| amvr_precision_idx | AMVR rounding shift | | |
| --- | --- | --- | --- |
| | CuPredMode[ chType ][ x0 ][ y0 ] == MODE_IBC | | |
| 0 | | 4 (1 luma sample ) | |
| 1 | | 5 (2 luma samples ) | |
| 2 | | 6 (4 luma samples ) | |
| 3 | | 7 (8 luma samples ) | |

num_amvr_precisions = 4

amvr_pprecisions[num_amvr_precisions] = {1, 2, 4, 8}

## Twelfth embodiment of information signaling and rounding shift

Information indicating the number of integer sample unit size values that can be applied to the block vector may be explicitly signaled/encoded/decoded.

num_additional_amvr_precisions may indicate a difference value between the total number of integer sample unit size values that can be applied to the block vector; and the predefined number M of integer sample unit size values. num_additional_amvr_precisions may be signaled/encoded/decoded for a specific unit.

num_additional_amvr_precisions may refer to the number of integer sample unit size values that can be additionally used, in addition to the predefined M integer sample unit size values.

Here, the sum of a value, indicated by num_additional_amvr_precisions, and M may be determined to be the number of integer sample unit size values that can be applied to the block vector.

Here, the set additional_amvr_precisions[num_additional_amvr_precisions] configured using a number of integers identical to the number indicated by num_additional_amvr_precisions may be signaled/encoded/decoded.

Here, the integer sample unit size values that can be additionally used may be determined to be $2^{additional\_amvr\_precisions[i]}$ by parameter i. Here, i may be a parameter indicating integer sample unit size values that can be applied to the current block vector and can be additionally used.

A set of integer sample unit size values that can be applied to the block vector, that is, additional_amvr_precisions, may be signaled/encoded/decoded for a specific unit.

num_amvr_precisions may denote the number of integer sample unit size values.

Here, the sum of a value, indicated by the above-described num_additional_amvr_precisions, and M may be determined to be the number of integer sample unit size values that can be applied to the block vector. M may be the predefined number of integer sample unit size values.

The following Table 23 shows a rounding shift value applied to the block vector when M is 4 and O is 3.

**[Table 23]**

| amvr_precision_idx | **AMVR** rounding shift |
| --- | --- |
| | CuPredMode[ chType ][ x0 ][ y0 ] == MODE_IBC |
| 0 | 4 (1 luma sample ) |
| 1 | 5 (2 luma samples ) |
| 2 | 6 (4 luma samples ) |
| 3 | 7 (8 luma samples ) |

M(=4)

+

| 4 | | 8 (16 luma samples ) |
| --- | --- | --- |
| 5 | | 10 (64 luma samples ) |
| 6 | | 9 (42 luma samples ) |

O(=3)

additional_amvr_precisions[num_additional_amvr_precisions] = {8, 10, 9}

### Signaling, use, derivation, and inference of information

In embodiments, at least one of the parameter set, header, brick, CTU, CU, PU, TU, CB, PB, and TB, described as the specific unit, may be at least one of a video parameter set, a decoding parameter set, a sequence parameter set, an adaptation parameter set, a picture parameter set, a picture header, a sub-picture header, a slice header, a tile group header, a tile header, a brick, a Coding Tree Unit (CTU), a Coding Unit (CU), a Prediction Unit (PU), a Transform Unit (TU), a Coding Block (CB), a Prediction Block (PB), and a Transform Block (TB).

Here, prediction using an intra block copy mode may be performed in at least one of signaled specific units using at least one of information indicating the maximum number of candidates in a block vector candidate list; information indicating the maximum number of candidates in a merge candidate list of an inter-prediction mode; block vector candidate information; a merge index; an L0 motion prediction flag; and AMVP resolution-related information (e.g., amvr_precision_flag, amvr_precision_idx, amvr_flag, max _amvr_precision_idx, max_amvr_precision, amvr_separate_precision, num_additional_amvr_precisions, additional_amvr_precisions set, num_amvr_precisions and/or amvr_precisions set).

Here, at least one of information indicating the maximum number of candidates in a block vector candidate list; information indicating the maximum number of candidates in a merge candidate list of an inter-prediction mode; block vector candidate information; a merge index; an L0 motion prediction flag; and AMVP resolution-related information (e.g., amvr_precision_flag, amvr_precision_idx, amvr_flag, max_amvr_precision_idx, max_amvr_precision, amvr_separate_precision, num_additional_amvr_precisions, additional _amvr_precisions set, num_amvr_precisions and/or amvr_precisions set) may be derived depending on at least one of coding parameters of a current block/CTB/CTU.

When at least one of information indicating the maximum number of candidates in a block vector candidate list; information indicating the maximum number of candidates in a merge candidate list of an inter-prediction mode; block vector candidate information; a merge index; an L0 motion prediction flag; and AMVP resolution-related information (e.g., amvr_precision _flag, amvr_precision_idx, amvr_flag, max_amvr_precision_idx, max_amvr_precision, amvr_separate_precision, num_additional_amvr_precisions, additional_amvr_precisions set, num_amvr_precisions and/or amvr_precisions set) is not present in a bitstream, at least one of the information indicating the maximum number of candidates in the block vector candidate list; information indicating the maximum number of candidates in the merge candidate list of the inter-prediction mode; the block vector candidate information; the merge index; the L0 motion prediction flag; and the AMVP resolution-related information (e.g., amvr_precision_flag, amvr_precision_idx, amvr_flag, max _amvr_precision _idx, max_amvr_precision, amvr_separate_precision, num_additional_amvr_precisions, additional_amvr_precisions set, num _amvr_precisions and/or amvr_precisions set) may be inferred as a first value (e.g., 0).

### Block vector candidate information

Block vector candidate information identifying a specific candidate from the block vector candidate list configured as described above may be signaled/encoded/decoded, and may be derived based on at least one of coding parameters.

For example, the block vector candidate information may be an identifier, an index, a flag, or the like.

For example, when the prediction mode of the current block corresponds to an intra block copy skip mode or an intra block copy merge mode, a merge index merge_idx may be block vector candidate information.

The block vector candidate may be identified based on merge index information signaled/encoded/decoded/inferred for the current block. Here, the merge index may refer to a merge index for a block vector.

The following [Table 24] shows code for identifying the block vector candidate.

**[Table 24]**

| | |
|---|---|
| } else if ( CuPredMode[ x0 ][ y0 ] = = MODE IBC ) { | |
| mvd coding( x0, y0, 0, 0 ) | |
| if( MaxNumMergeCand > 1 ) | |
| **mvp_l0_flag[** x0 ][ y0 ] | ae(v) |
| if( sps_amvr_enabled _flag && <br> ( MvdL0[ x0 ][ y0 ][ 0 ] != 0 \| \| MvdL0[ x0 ][ y0 ][ 1 ] != 0 ) ) { | |
| **amvr_precision_flag[** x0 ][ y0 ] | ae(v) |
| } | |

As shown in [Table 24], when the prediction mode of the current block corresponds to the intra block copy AMVP mode, the block vector candidate may be identified based on an L0 motion prediction flag mvp_l0_flag that is signaled/encoded/decoded/inferred in a process of encoding/decoding the current block. The L0 motion prediction flag may be block vector candidate information.

Here, the L0 motion prediction flag may refer to an L0 block vector prediction flag.

When the maximum number of candidates in the block vector candidate list is 1, the L0 motion prediction flag may not be signaled/encoded/decoded, but may be inferred as a value of 0.

For example, when MaxNumMergeCand indicates the maximum number of candidates in the block vector candidate list, and MaxNumMergeCand = 1, signaling/encoding/decoding on the L0 motion prediction flag may not be performed, and the L0 motion prediction flag may be inferred as a value of 0.

In other words, the L0 motion prediction flag may be signaled/encoded/decoded only when the value of MaxNumMergeCand is greater than 1.

The following [Table 25] may indicate code for signaling a merge index.

**[Table 25]**

| | |
|---|---|
| if ( CuPredMode[ x0 ][ y0 ] = = MODE IBC ) { | |
| **merge_idx[** x0 ][ y0 ] | ac(v) |
| } else { | |

As shown in the example in [Table 25], when the maximum number of candidates MaxNumIBCCand in the block vector candidate list is always greater than 1, and the prediction mode of the current block corresponds to an intra block copy skip mode or an intra block copy merge mode, merge index information may always be signaled/encoded/decoded regardless of the maximum number of candidates in the block vector candidate list.

In another example, when the prediction mode of the current block is an intra block copy AMVP mode, a block vector difference that is signaled/encoded/decoded may be added to a prediction block vector identified by the block vector candidate information in the block vector candidate list. The sum of the identified prediction block vector and the block vector difference may be used as the block vector of the current block.

The following [Table 26] shows code for identifying the block vector candidate.

**[Table 26]**

| coding unit( x0, y0, cbWidth, cbHeight, treeType ) { | Descriptor |
|---|---|

(continued)

| ... | |
|---|---|
| } else if ( CuPredMode[ x0 ][ y0 ] = = MODE IBC ) { | |
| mvd coding( x0, y0, 0, 0 ) | |
| **mvp_l0_flag[** x0 ][ y0 ] | ae(v) |
| if( sps_amvr_enabled_flag && <br> ( MvdL0[ x0 ][ y0 ][ 0 ] != 0 \|\| MvdL0[ x0 ][ y0 ][ 1 ] != 0 ) ) { | |
| **amvr_flag[** x0 ][ y0 ] | ae(v) |
| if( amvr_flag[ x0 ][ y0 ] ) | |
| **amvr_precision_flag[** x0 ][ y0 ] | ae(v) |
| } | |
| } else { | |
| ... | |

As shown in the example in the following [Table 26], rounding such as that shown in the following [Equation 91] to [Equation 96] may be performed on the identified prediction block vector (i.e., mvX[0] and mvX[1]) depending on the value of at least one of amvr_flag and amvr_precision_flag that are signaled/encoded/decoded.
**[Equation 91]**
$$offset = ( \ rightShift = = 0 \ ) \ ? \ 0 : ( \ 1 << ( \ rightShift - 1 \ ) \ )$$

mvX[ 0 ] = (( mvX[ 0 ] + offset - ( mvX[ 0 ] >= 0 ) ) >> rightShift ) << leftShift          [Equation 92]

mvX[ 1 ] = ( ( mvX[ 1 ] + offset - ( mvX[ 1 ] >= 0 ) ) >> rightShift ) << leftShift          [Equation 93]

When amvr_flag has first value (e.g., 0) (or when size of 1 integer sample unit is used for block vector), rightshift = 4, leftshift = 4          [Equation 94]

When amvr_flag has second value (e.g., 1) and amvr_precision_flag has first value (e.g., 0) (or when size of 4 integer sample units is used for block vector), rightshift = 6, leftshift = 6          [Equation 95]

When amvr_flag has second value( e.g., 1) and amvr_precision_flag has --> second value (e.g., 1) (or when size of 16 integer sample units is used for block vector), rightshift = 8, leftshift = 8          [Equation 96]

Here, the resolution of the block vector difference and the resolution of the prediction block vector may be determined depending on the value of at least one of amvr_flag and amvr_precision_flag.
Here, when amvr_flag has a first value (e.g., 0), the block vector may have the size of N integer sample units.
Further, when amvr_flag has a second value (e.g., 1), the block vector may have the size of M integer sample units or P integer sample units.
When amvr_flag has a second value (e.g., 1) and amvr_precision_flag has a first value (e.g., 0), the block vector may have the size of M integer sample units.
When amvr_flag has a second value (e.g., 1) and amvr_precision_flag has a second value (e.g., 1), the block vector may have the size of P integer sample units.
Here, each of N, M, and P may be a positive integer. For example, N may be 1. M may be 4. P may be 16. Further, N may be less than M, and may be less than P. P may be greater than N, and may be greater than M.
Here, the block vector resolution (e.g., unit of 1, 4, 8, or 16 integer samples) used in the intra block copy AMVP mode may be identical to a result derived by applying a specific operation to motion vector resolution (e.g., unit of 1/4, 1 or 4 integer samples) used in an inter AMVP mode or an affine AMVP mode. Here, the specific operation may be an operation of multiplying K by a target. Alternatively, the specific operation may be an operation of applying a left shift of J bits to a target. Each of K and J may be a positive integer.

At least one of amvr_flag, amvr_precision_idx, the resolution of the block vector difference, and the resolution of the prediction block vector may be derived depending on at least one of the coding parameters of the current block/CTB/CTU.

### Limitation on location of reference block

In an intra block copy mode, the range of values which a block vector can have or the location of a reference block indicated by the block vector may be limited.

When the range of the block vector is not limited or when the location of the reference block indicated by the block vector is not limited, reconstructed images in all regions encoded/decoded before the current block is encoded/decoded in the same picture (i.e., the current picture) need to be stored in order to generate a prediction block in the intra block copy mode.

In this case, in implementation of the encoder/decoder, a large amount of memory may be required for storing reconstructed images. Therefore, in order to guarantee the simplicity of implementation, the range of values that the block vector can have or the location of the reference block indicated by the block vector in the intra block copy mode may be limited.

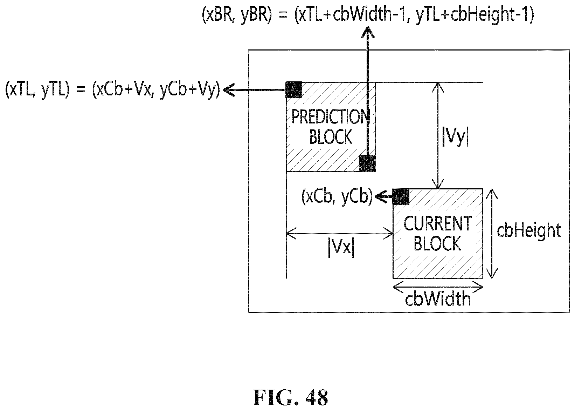

FIG. 48 illustrates a prediction block selection method according to an embodiment.

In an intra block copy mode, the coordinates of the top-left sample position of a current block in a picture may be (xCb, yCb). The horizontal length of the current block may be cbWidth. The vertical length of the current block may be cbHeight. The block vector of the current block may be (Vx, Vy).

Here, the coordinates (xTL, yTL) of the top-left sample position of the reference block obtained using the block vector may be determined to be (xCb+Vx, yCb+Vy), and coordinates (xBR, yBR) of the bottom-right sample position of the reference block may be determined to be (xTL+cbWidth-1, yTL+cbHeight-1).

Based on at least one of the methods, which will be described below, the range of the values that the block vector has or the location of the reference block indicated by the block vector may be limited.

The range of the values that the block vector has or the location of the reference block indicated by the block vector may be limited based on the coding parameters of at least one of the current block and a neighbor block adjacent to the current block.

Also, the range of the values that the block vector has or the location of the reference block indicated by the block vector may be limited based on the coding parameters of at least one of the current CTU and the neighbor CTU adjacent to the current CTU.

A region including the coordinates (xTL, yTL) of the top-left sample position of the reference block and a region including the coordinates (xBR, yBR) of the bottom-right sample position need to be available. Here, the region being available may mean that the corresponding region is present. Alternatively, the region being available may mean that a reconstructed image/reconstructed sample for the region is present.

In embodiments, the top-left coordinates of the reference block may refer to the coordinates of the top-left sample position of the reference block. The bottom-right coordinates of the reference block may refer to the coordinates of the bottom-right sample position of the reference block.

Because the bottom-right coordinates of the reference block are located to the left of, above or left-above of the top-left coordinates of the current block, the location of the reference block may be limited such that an overlapping portion between the current block and the reference block does not occur. In order to meet such a limitation, at least one condition of the following [Condition 3-1] and [Condition 3-2] needs to be satisfied.

$$[\textbf{Condition 3-1}] \ \mathrm{Vx} + \mathrm{cbWidth} \leq 0$$

$$[\textbf{Condition 3-2}] \ \mathrm{Vy} + \mathrm{cbHeight} \leq 0$$

The reference block may be included in a CTB identical to the CTU of the current block or in (N-1) CTBs to the left of the CTB of the current block.

When the size of CTB is 128x128, N may be 2.

When the size of CTB is smaller than 128x128, or when the size of CTB is smaller than or equal to 64x64, the following [Equation 97] may be established for N. Alternatively, N may be determined depending on the following [Equation 97].

**[Equation 97]**

$$(\text{vertical length of CTB} \times (N \times \text{horizontal length of CTB})) = 128 \times 128$$

Alternatively, N may be determined based on the coding parameters of at least one of the current CTU and a neighbor CTU adjacent to the current CTU.

When the size of the CTB is 128x128, the reference block may be included in a CTB identical to the CTB of the current block or in a CTB to the left of the CTB of the current block.

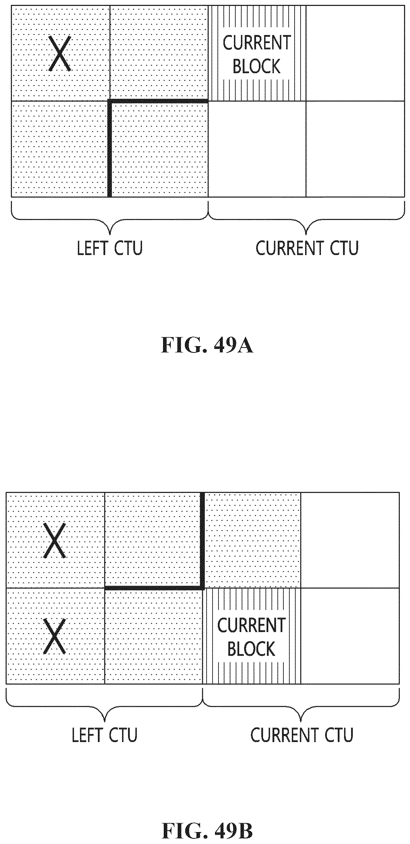

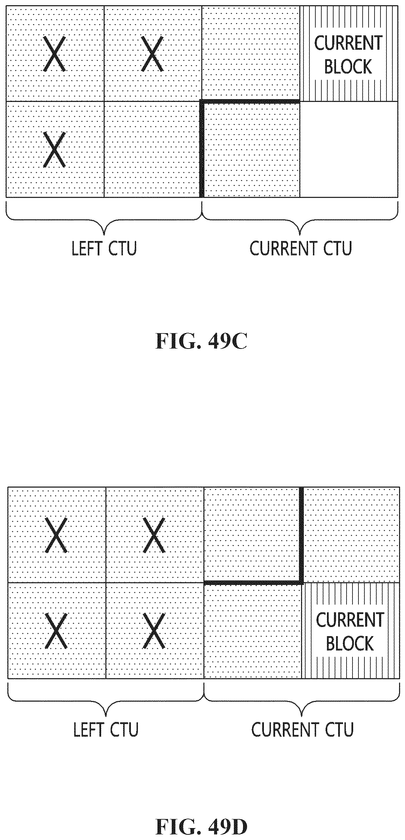

FIGS. 49A, 49B, 49C, and 49D illustrate an available area of a reference block determined by the location of a current block according to an example.

When the reference block is included in the CTB identical to the CTB of the current block, the reference block may be included in a region encoded/decoded before the current block is encoded/decoded.

Each of the current CTB and the left CTB of the current CTB may be partitioned into four portions in units of 64x64. A reference block may be present in at least one of three other 64x64 blocks encoded/decoded before a 64x64 block to which the current block belongs is encoded/decoded.

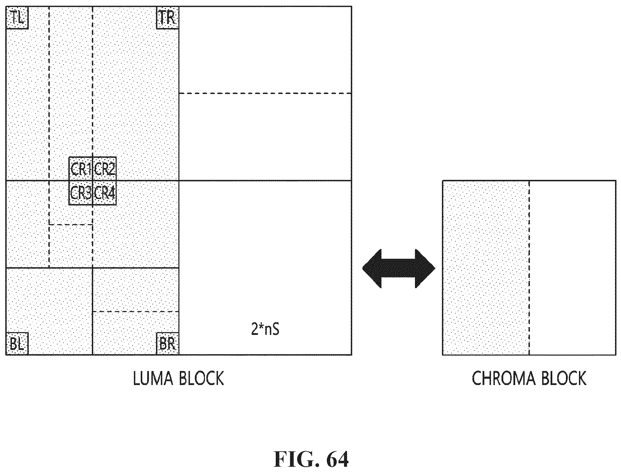

In FIGS. 49A, 49B, 49C, and 49D, 64x64 blocks to which the reference block can belong are represented in gray color depending on the location of the 64x64 block to which the current block in a CTB belongs.

A region marked with "x" may indicate a region that cannot include the reference block.

Further, the reference block may be present in a region encoded/decoded before the current block is encoded/decoded in the 64x64 block to which the current block belongs.

By applying this limitation, the number of reconstructed samples to be stored to generate a reference block may be limited to the number of samples included in a maximum of four 64x64 blocks, that is, a 128x128 block.

When the size of the CTB is smaller than 128x128 or when the size of the CTB is 64x64 or smaller than 64x64, the reference block may be included in one of left N-1 CTBs of the CTB to which the current block belongs.

Here, the following [Equation 98] needs to be satisfied for N. Alternatively, N may be determined depending on the following [Equation 98].

**[Equation 98]**

$$(\text{vertical length of CTB} \times (N \times \text{horizontal length of CTB})) = 128 \times 128$$

For example, when the size of the CTB is 64x64, N may be 4. Further, the reference block may be present in a region encoded/decoded before the current block is encode/decoded.

By applying this limitation, reconstructed samples to be stored to generate the reference block, including the CTB to which the current block belongs, may be limited to 128x128 samples.

The range of the reference block may be limited by storing an available reference region in the intra block copy mode in an independent buffer. In this regard, the buffer according to an embodiment may be referred to as a reference region buffer. In an embodiment related to the storage of information in the reference region, the buffer may refer to the reference region buffer, and may be separated from a buffer used for other purposes in embodiments.

The range of the reference block may refer to the locations of the reference block that can be indicated by a block vector.

The reference region may be a region in which the reference block indicated by the block vector can be included.

The range of the reference block may be limited based on coding parameters of at least one of the current block and a neighbor block adjacent to the current block.

Also, the range of the values that the block vector has or the location of the reference block indicated by the block vector may be limited based on the coding parameters of at least one of the current CTU and the neighbor CTU adjacent to the current CTU.

In this case, the size of the buffer for intra block copy may be $M1 \times M2$. Further, information corresponding to M3 bits per sample may be stored in the buffer. That is, M1 may be the horizontal size of the buffer. M2 may be the vertical size of the buffer.

Here, each of M1 and M2 may be a positive integer that is a multiple of 2. For example, each of M1 and M2 may be 8, 16, 32, 64, 128, or the like. M3 may be a positive integer. For example, M3 may be 3, 4, 5, 6, 7, 8, 9, 10, 11, 12 or the like.

The values stored in the buffer may be at least one of samples in a reconstructed image to which in-loop filtering is not applied. When these samples are not represented by M3 bits per sample, the values of samples may be converted to obtain M3 bits per sample.

At least one of M1, M2, and M3 may be determined based on the coding parameters of at least one of the current block and the neighbor block adjacent to the current block.

Furthermore, at least one of M1, M2 and M3 may be determined based on the coding parameters of at least one of the current CTU/CTB and a neighbor CTU/CTB adjacent to the current CTU/CTB.

The buffer may be newly set for a specific unit. Here, newly setting the buffer may mean that the buffer is reset or initialized. The specific unit may be one or more of a brick, a tile, a slice, a sub-picture, a picture, CTB a tile group, and a CTU row.

The buffer may be configured using at least one of the methods described below.

The size of the buffer for a luma component may be identical to the size of a CTB including the current block. For example, when the size of the CTB is 128x128, the size of the buffer may be 128x128. Alternatively, the size of the buffer may be smaller than that of the CTB.

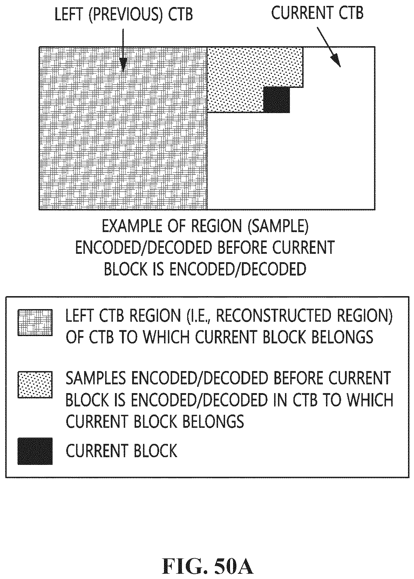

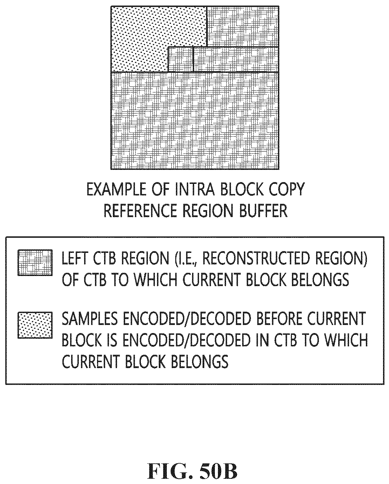

FIGS. 50A and 50B illustrate a buffer configuration method according to an example.

The buffer may be configured, as shown in FIG. 50B, to include regions encoded/decoded before a current block is encoded/decoded in a current CTB, shown in FIG. 50A, and regions of a left CTB that is located to the left of the current CTB.

In embodiments, the current CTB may be a CTB including the current block.

First reconstructed samples in the region encoded/decoded before the current block is encode/decoded in the current CTB may be stored in the buffer. Here, the first reconstructed samples may be stored at positions in the buffer, corresponding to the relative positions of the first reconstructed samples in the current CTB. In other words, the positions of the first reconstructed samples in the current CTB and the positions of the first reconstructed samples stored in the buffer may be identical to each other.

Second reconstructed samples included in the left CTB that is located to the left of the current CTB may be included at positions corresponding to a region, other than the region encoded/decoded before the current block is encoded/decoded, out of the entire region in the buffer. Here, the second reconstructed samples may be stored at positions in the buffer, corresponding to the relative positions of the second reconstructed samples in the left CTB.

In other words, a region corresponding to the previously encoded/decoded region in the current CTU out of the entire region in the buffer may be filled with the first reconstructed samples of the current CTU, and a region that does not correspond to the previously encoded/decoded region in the current CTU out of the entire region of the buffer may be filled with the second reconstructed samples of the left CTU. Alternatively, the specific position of the buffer may be filled with a first sample at the corresponding position in the current CTU or a second sample at the corresponding position in the left CTU, wherein, when the first sample is available, the buffer may be preferentially filled with the first sample. When the first sample is not available, the buffer may be filled with the second sample (which is always available).

When a sample having coordinates (x, y) is included in the buffer, the coordinates of a position within the buffer filled with the sample may be (x % CTB length, y % CTB length), (x % M1, y % M2) or (x % M1, y % CTB vertical length).

Here, the CTB length may be the horizontal length of the CTB or the vertical length of the CTB.

Here, the operation result of the modulo operation "%" may always be a positive value. That is, when x is a negative value, the following [Equation 99] may be established.

**[Equation 99]**

$$x \% L = -(-x \% L)$$

For example, when M1, CTB horizontal length, or CTB vertical length is 128, the result of the modulo operation may be represented by the following Equation 100.

**[Equation 100]**

$$-3 \% 128 = 125$$

When the block vector is (Vx, Vy), the position of a prediction sample for a sample at the position (x, y) may be ((x + Vx) % 128, (y + Vy) % 128).

The current block region may be the region of the current block in the current CTU. A corresponding buffer region may be region in the buffer, corresponding to the current block region. A corresponding CTB region may be region in the left CTB, corresponding to the current block region. The values of samples in the buffer corresponding region of the buffer may be reconstructed sample values in the CTB corresponding region in the left CTB.

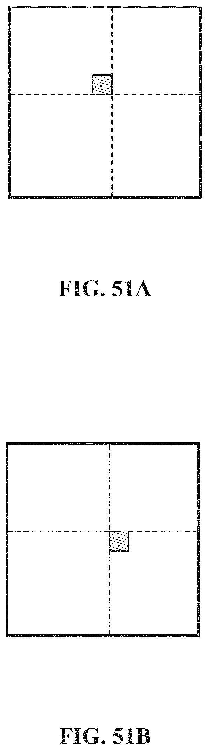

FIGS. 51A and 51B illustrate limitations on a block vector according to an example.

A limitation may be applied to a block vector so that a signaled or derived block vector indicates a region included in a buffer.

When the signaled or derived block vector is (Vx, Vy), the range of the block vector may be limited to satisfy the following [Equation 101].

**[Equation 101]**

$$\mathrm{MinVx} \leq \mathrm{Vx} \leq \mathrm{MaxVx}, \ \mathrm{MinVy} \leq \mathrm{Vy} \leq \mathrm{MaxVy}$$

Here, each of MinVx, MaxVx, MinVy, and MaxVy may be set depending on one of the following [setting 1-1], [setting 1-2], and [setting 1-3].

**[Setting 1-1]** When the top-left position of the buffer is set to (0, 0), the range of the block vector may be limited according to the following Equation 102.

MinVx = 0, MaxVx = (buffer horizontal length - 1), MinVy=0, MaxVy = (buffer vertical length - 1)   [Equation 102]

**[Setting 1-2]** When, among the positions of the buffer, a shaded position in FIG. 51A (i.e., a sample diagonally adjacent to the left-above of the central point of the buffer) is set to (0, 0), the range of the block vector may be limited by the following Equation 103.

MinVx = -((buffer horizontal length/2) - 1), MaxVx = (buffer horizontal length/2), MinVy = -((buffer horizontal length/2) - 1), MaxVy = (buffer vertical length/2)   [Equation 103]

**[Setting 1-3]** When, among the positions of the buffer, a shaded position in FIG. 51B (i.e., a sample diagonally adjacent to the right-below of the central point of the buffer) is set to (0, 0), the range of the block vector may be limited by the following Equation 104.

MinVx = -(buffer horizontal length/2), MaxVx = ((buffer horizontal length/2) - 1), MinVy = -(buffer horizontal length/2), MaxVy = ((buffer vertical length/2) - 1)   [Equation 104]

At least one of MinVx, MaxVx, MinVy, and MaxVy may be determined based on the coding parameters of at least one of the current block and the neighbor block adjacent to the current block.

Also, at least one of MinVx, MaxVx, MinVy, and MaxVy may be determined based on the coding parameters of at least one of the current CTU and the neighbor CTU adjacent to the current CTU.

Whether an invalid block vector is signaled or used for the current block may be determined by limiting the value that the block vector can have based on the buffer.

When the signaled or derived block vector indicates an invalid range falling out of the limited range, at least one of the methods described below may be used to enable the region indicated by the block vector to fall within the limited range or generate a prediction block based on the block vector.

Here, the invalid block vector may mean that the region indicated by the block vector falls out of the range of the buffer. Further, the (0, 0) block vector may be an invalid block vector. Alternatively, the invalid block vector may refer to the (0, 0) block vector.

The invalid block vector falling out of the limited range may be replaced with a block vector closest to the invalid block vector within the range that can be indicated by the block vector.

That is, when the signaled or derived block vector is (V1x, V1y), settings may be made such that the block vector indicates a position falling within the limited range depending on the following [setting 2-1] to [setting 2-4].

**[setting 2-1]** when $\mathrm{V1x} < \mathrm{MinVx}, \ \mathrm{V1x} = \mathrm{MinVx}$

**[setting 2-2]** when $\mathrm{V1x} > \mathrm{MaxVx}, \ \mathrm{V1x} = \mathrm{MaxVx}$

**[setting 2-3]** when $\mathrm{V1y} < \mathrm{MinVy}, \ \mathrm{V1y} = \mathrm{MinVy}$

**[setting 2-4]** when $\mathrm{V1y} > \mathrm{MaxVy}, \ \mathrm{V1y} = \mathrm{MaxVy}$

Padding may be performed on the region indicated by the invalid block vector falling out of the limited range. A sample used for padding may be a reconstructed sample closest to the region, indicated by the invalid block vector, within the limited range that can be indicated by the block vector.

The invalid block vector may be designated to have a specific value. In embodiments, the specific value may be a fixed value.

For example, the specific value may be (0, 0), a vector value indicating the location of the current block, (0, P1), (P2, 0), (P3, P4), or the like. Here, each of P1, P2, P3, and P4 may be a specific integer.

When the invalid block vector is not replaced with a specific value, and the region indicated by the block vector does not fall within the limited range, all of sample values of the prediction block to be obtained using the block vector may be set to the specific value.

Here, the specific value may be one of values ranging from 0 to $2^{bitdepth}-1$.

Here, bitdepth may be a positive integer greater than 5. For example, bitdepth may be 5, 6, 7, 8, 9, 10, 11, 12, or the like.

Furthermore, in an example, the sample values of the prediction block may be 0, $2^{bitdepth-1}$, $2^{bitdepth}-1$, or the like.

In another example, when all of sample values of the prediction block to be obtained using the block vector are set to the specific value, the specific value may be one of values ranging from 0 to (2 << bitdepth) - 1.

Here, bitdepth may be a positive integer. For example, bitdepth may be 1, 2, 3, 4, 5, 6, 7, 8, 9, 10, 11, 12 or the like.

Furthermore, in an example, all of the sample values of the prediction block may be 0, (2 << (bitdepth - N - 1)) or (2 << (bitdepth - N)) - 1.

Here, N may be an integer of 0 or more. Further, N may be a value preset by the encoder/decoder, and may be a value signaled from the encoder to the decoder.

bitdepth may denote the bit depth of an input sample. In addition, bitdepth may be a value preset by the encoder/decoder, and may be a value signaled from the encoder to the decoder.

At least one of N and bitdepth may have different values for a luma component block and a chroma component (Cb and/or Cr) block.

At least one of N and bitdepth may have different values depending on at least one the coding modes of the current block (e.g., an intra block copy skip mode, an intra block copy merge mode, and an intra block copy AMVP mode).

At least one of N and bitdepth may be determined depending on at least one of the coding parameters of the current block/CTB/CTU.

After the current block is encoded/decoded, the buffer may store the reconstructed sample values of the current block at/in location/region in the buffer, corresponding to the location/region of the current block. This process may be referred to as a buffer update process.

After the buffer update process is performed, encoding/decoding on the next block may be performed. By means of this processing, incremental update may be performed on the sample values included in the buffer.

Through the incremental update, at a time point at which encoding/decoding on all blocks in the current CTB is terminated, the buffer may be configured using only the reconstructed samples in the current CTB.

M1 may be the horizontal size of the buffer. M2 may be the vertical size of the buffer. M1 and M2 may be set by the following [Equation 105] or [Equation 109].

**[Equation 105]**

$$M1 = (N \times \text{horizontal length of CTB}), M2 = (\text{vertical length of CTB})$$

**[Equation 106]**

$$M1 = (\text{vertical length of CTB}), M2 = (N \times \text{horizontal length of CTB})$$

Here, N may be a positive integer satisfying the following [Equation 107].

**[Equation 107]**

$$M1 \times M2 = 128 \times 128$$

Alternatively, N may be derived to satisfy the following Equation 108.

**[Equation 108]**

$$(N \times \text{horizontal length of CTB}) \times (\text{vertical length of CTB}) = 128 \times 128$$

Further, the horizontal length M1 of the buffer may be less than or equal to (N × horizontal length of CTB).

The vertical length M2 of the buffer may be equal to the vertical length of CTB.

Alternatively, M1 may be set by the following [Equation 109].

**[Equation 109]**

$$M1 = (128 \,/\, \text{horizontal length of CTB}) \times K$$

Here, K may be the horizontal length of the buffer when the horizontal length of CTB is 128.

At least one of M1, M2, N, and K may be determined based on the coding parameters of at least one of the current block and the neighbor block adjacent to the current block.

Further, at least one of M1, M2, N, and K may be determined based on the coding parameters of at least one of the current CTU/CTB and a neighbor CTU/CTB adjacent to the current CTU/CTB.

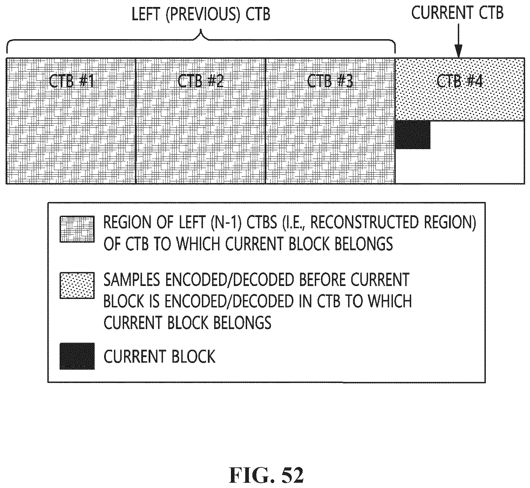

FIG. 52 illustrates a region encoded/decoded before the current block is encoded/decoded according to an example.

As shown in FIG. 52, a reference buffer may be configured to include left (N-1) CTBs on which encoding/decoding is completed before the current CTB is encoded/decoded.

Further, regions encoded/decoded before the current block in the current CTB is encoded/decoded may also be included in the buffer.

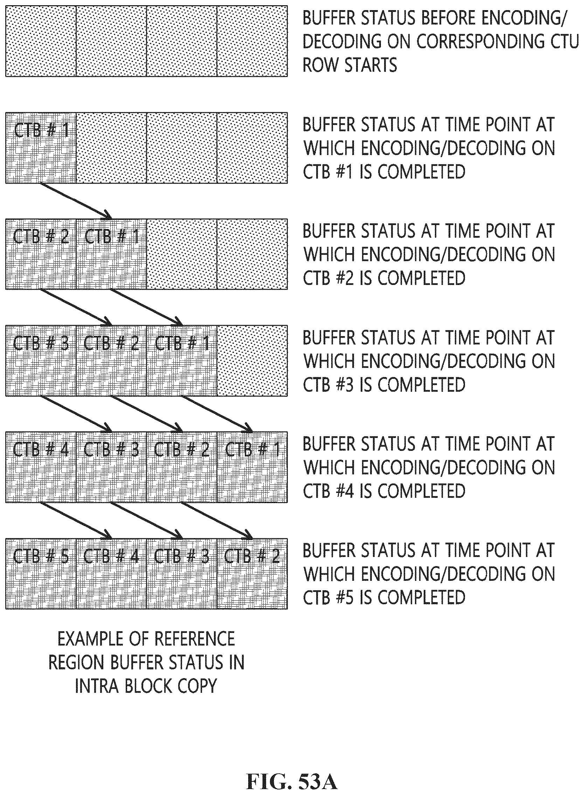

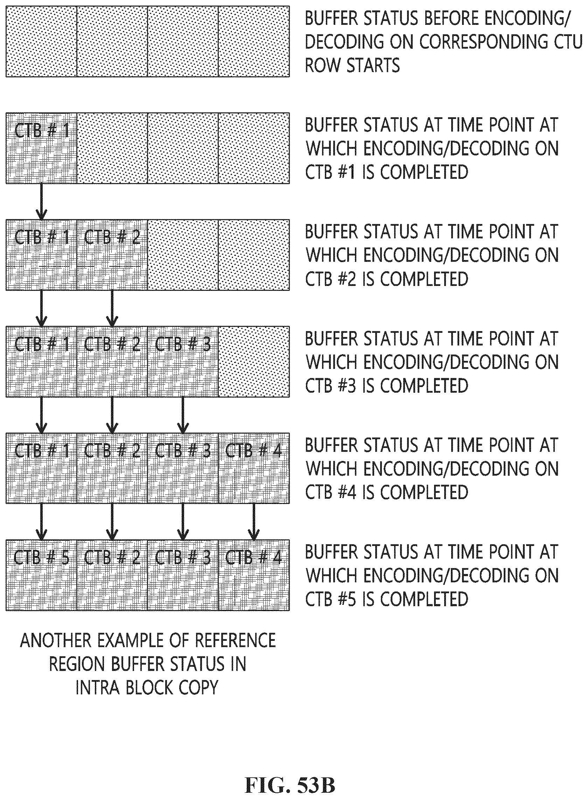

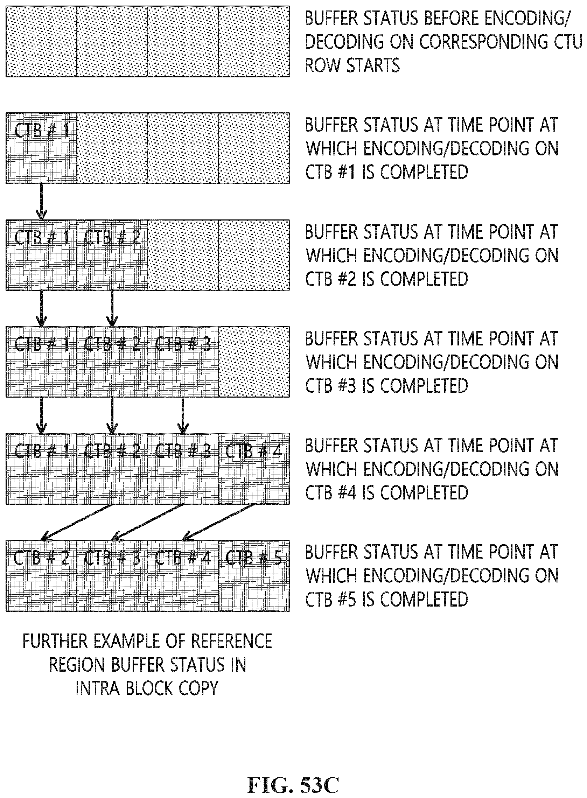

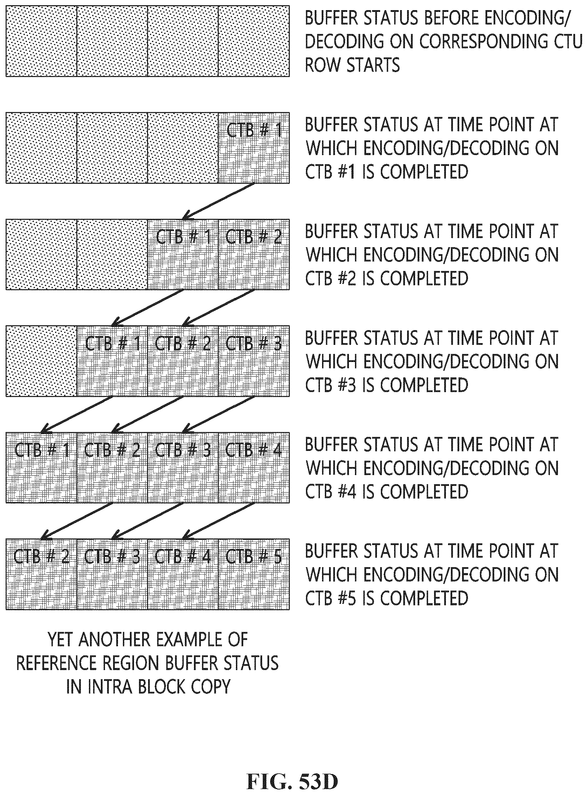

FIGS. 53A, 53B, 53C, and 53D illustrate methods for configuring a buffer using CTBs encoded/decoded before the current block is encoded/decoded according to an example.

In FIGS. 53A, 53B, 53C, and 53D, as described above with reference to FIG. 52, examples in which a buffer is configured to include left (N-1) CTBs on which encoding/decoding is completed before the current CTB is encoded/decoded are illustrated.

Here, (N-1) CTBs may be a plurality of CTBs that are horizontally successive to each other.

When CTB #1 is a current CTU row or a first CTB in the CTB row, the buffer present before encoding/decoding on CTB #1 starts may be empty or may be set to an initial value.

The initial value may be an integer value that is equal to or greater than 0 and less than or equal to $2^{bitdepth}-1$.

The initial value may be a specific value falling within the range of values that a reconstructed sample can have. Furthermore, the initial value may be 0, $2^{bitdepth-1}$, $2^{bitdepth-1}$, or the like.

The buffer being empty may mean that the block vector is limited to prevent the block vector from indicating an empty region in the buffer. Alternatively, it may mean that the block vector indicating the empty region is regarded as an invalid block vector.

The case where the initial value of the buffer is set may mean that the block vector is capable of indicating a region set using the initial value, and may mean that, when the block vector indicates the set region, the initial value used in the set region is used and set as the value of the prediction sample.

In another example, the initial value of the buffer may be one of values ranging from 0 to (2 << bitdepth) - 1.

Here, bitdepth may be a positive integer. For example, bitdepth may be 1, 2, 3, 4, 5, 6, 7, 8, 9, 10, 11, 12 or the like.

Further, in an example, the initial value of the buffer may be (2 << (bitdepth - N - 1)) or (2 << (bitdepth - N)) - 1.

Here, N may be an integer of 0 or more. Further, N may be a value preset by the encoder/decoder, and may be a value signaled from the encoder to the decoder.

bitdepth may refer to the bit depth of an input sample. In addition, bitdepth may be a value preset by the encoder/decoder, and may be a value signaled from the encoder to the decoder.

At least one of N and bitdepth may have different values for a luma component block and a chroma component (Cb and/or Cr) block.

At least one of N and bitdepth may have different values depending on at least one the coding modes of the current block (e.g., an intra block copy skip mode, an intra block copy merge mode, and an intra block copy AMVP mode).

At least one of N and bitdepth may be determined depending on at least one of the coding parameters of the current block/CTB/CTU.

At a time point at which encoding/decoding on CTB #1 is completed, all reconstructed samples of CTB #1 may be stored in the buffer.

At a time point at which encoding/decoding on CTB #2 is completed, all reconstructed samples of CTB #2 may be additionally stored in the buffer.

In FIG. 53A, 53B, 53C, and 53D, a buffer may be illustrated in the state in which reconstructed samples in a specific CTB are added to the buffer at a time point at which encoding/decoding on the specific CTB is completed.

At a time point at which encoding/decoding on CTB #2 is completed, a position at which samples in CTB #1 are stored in the buffer may be shifted to the right by one CTB size, as shown in FIG. 53A. Alternatively, reconstructed samples in CTB #2 may be stored at the position at which CTB #1 is stored.

Alternatively, as illustrated in FIG. 53B, the position at which samples in CTB #1 are stored may be maintained without change, and reconstructed samples in CTB #2 may be stored in a region to the right of the region in which CTB #1 is stored. Here, at a time point at which encoding/decoding on CTB #4 is completed, the buffer may become full. At a time point at which encoding/decoding on CTB #5 is completed, reconstructed samples in CTB #5 may be stored at the position at which reconstructed samples in CTB #1 were stored. Thereafter, reconstructed samples in CTB #6 may be stored at the position at which the reconstructed samples in CTB #2 were stored.

In a further embodiment illustrated in FIG. 53C, until encoding/decoding on CTB #4 is completed and the buffer becomes full, reconstructed samples in encoded/decoded CTBs may be stored in the buffer in the same manner as that illustrated in FIG. 53B. Thereafter, at a time point at which encoding/decoding on CTB #5 is completed, the position at which the reconstructed samples in CTB #4 are stored may be shifted to the left by the size of one CTB. The reconstructed samples in CTB #5 may be stored at the position at which the reconstructed samples in CTB #4 were stored. In this case, reconstructed samples in CTB #2 and CTB #3 may also be shifted to the left by the size of one CTB.

By means of this scheme, relative positions between CTBs in the image may remain the same in the buffer. By the maintenance of the positions, a prediction block may be derived using a signaled block vector without requiring a separate transform process.

In yet another embodiment illustrated in FIG. 53D, at a time point at which encoding/decoding on CTB #2 is completed, a position at which samples in CTB #1 are stored in the buffer may be shifted to the left by the size of one CTB. The reconstructed samples in CTB #2 may be stored at the position at which CTB #1 was stored. At a time point at which encoding/decoding on CTB #4 is completed, the reference image buffer may be full, and at a time point at which encoding/decoding on CTB #5 is completed, the position at which reconstructed samples in CTB #4 are stored may be shifted to the left by the size of one CTB, as illustrated in FIG. 53C. The reconstructed samples in CTB #5 may be stored at the position at which the reconstructed samples in CTB #4 were stored. In this case, reconstructed samples in CTB #2 and reconstructed samples in CTB #3 may also be shifted to the left by the size of one CTB.

At a time point at which encoding/decoding on a K5-th CTB starts (i.e., a time point at which encoding/decoding on a first block in the K5-th CTB starts), reconstructed samples in K5-1-th, K5-2-th, ..., K5-N-th CTBs may be stored in the buffer.

For example, when the size of the CTB is 64x64, N may be set to 4. In this case, reconstructed samples in the K5-1-th CTB, the K5-2-th CTB, the K5-3-th CTB, and the K5-4-th CTB may be stored in the buffer.

Here, K5 may be a specific positive integer.

A first block of the K5-th CTB may be encoded/decoded with reference to the buffer. When encoding/decoding on the block is completed, the status of the buffer and the range that can be indicated by the block vector may be configured and limited, as will be described below.

In an embodiment, reconstructed samples in the K5-(N-1)-th CTB may be deleted from the buffer, and reconstructed samples of a first block in the K5-th CTB may be stored in the buffer. A reference region for an A-th block in the K5-th CTB may be limited to the left (N-1) CTBs of the current CTB. Here, A may be an integer greater than 1. In other words, the top-left coordinates (or position) and the bottom-right coordinates (or position) of the prediction block derived by the block vector may be limited to be included in the left (N-1) CTBs.

In an embodiment, reconstructed samples in the K5-(N-1)-th CTB may be deleted from the buffer, and the reconstructed samples of the first block in the K5-th CTB may be stored in the buffer. The reference region for the A-th block in the K5-th CTB may be limited to a region of blocks encoded/decoded before the current block in the CTB is encoded/decoded and the left (N-1) CTBs of the current CTB. Here, A may be an integer greater than 1. In other words, the top-left coordinates (or position) and the bottom-right coordinates (or position) of the prediction block derived by the block vector may be limited to be included in a specific region. Here, the specific region may include a region including the left (N-1) CTBs and a block encoded/decoded before the A-th block in the current CTB is encoded/decoded.

In an embodiment, only samples at a specific position among reconstructed samples in the K5-(N-1)-th CTB may be deleted. The specific position may be a position corresponding to the position of the first block in the K5-th CTB. When the samples at the specific position are deleted, reconstructed samples in the first block in the K5-th CTB may be stored at the specific position. In this case, a reference region for the current block may be limited to a specific region. The specific region may include blocks, encoded/decoded before the current block in the current CTB is encoded/decoded, and the left (N-1) CTBs of the current CTB. In this method, all regions of the buffer may be composed of reconstructed samples. Therefore, this method may be useful in terms of coding efficiency.

At the time point at which encoding/decoding on the K5-th CTB starts (i.e., the time point at which encoding/decoding on the first block in the K5-th CTB starts), reconstructed samples in K5-1-th, K5-2-th, ..., K5-(N-1)-th CTBs may be stored in the buffer. For example, when the CTB size is 64x64, N may be 4, wherein reconstructed samples in K5-1-th, K5-2-th, and K5-3-th CTBs may be stored in the buffer. One of the methods, which will be described below, may be applied to encoding/decoding on blocks in the K5-th CTB.

The reference region for the A-th block in the K5-th CTB may be limited to the left (N-1) CTBs of the current CTB. Here, A may be an integer of 0 or more. Positions indicated by the top-left coordinates (or position) and the bottom-right coordinates (or position) of the prediction block derived by the block vector may be limited to be included in the left (N-1) CTBs.

The reference region for the A-th block in the K5-th CTB may be limited to a specific region. The specific region may include a region of blocks, encoded/decoded before the current block is encoded/decoded in the current CTB, and the left (N-1) CTBs of the current CTB. It may mean that the positions indicated by the top-left coordinates (or position) vector and the bottom-right coordinates (or position) of a prediction block derived by the block are limited to be included in left (N-1) CTBs and a block encoded/decoded before an A-th block in the current CTB is encoded/decoded.

In the embodiment of the above-described buffer, a corresponding CTB region may be empty and may be initialized to an initial value at a time point at which encoding/decoding on the first block in the K5-th CTB starts or before the first block is encode/decoded. The corresponding CTB region may be a CTB region in which reconstructed samples in an encoded/decoded block for the K5-th CTB are to be stored.

For example, the initial value may be a fixed value.

The initial value may be an integer value that is equal to or greater than 0 and less than or equal to $2^{bitdepth}$-1.

The initial value may be a specific value falling within the range of values that a reconstructed sample can have. Furthermore, the initial value may be 0, $2^{bitdepth-1}$, $2^{bitdepth}$-1, or the like.

The buffer being empty may mean that the block vector is limited to prevent the block vector from indicating an empty region in the buffer. Alternatively, it may mean that the block vector indicating the empty region is regarded as an invalid block vector.

The case where the initial value of the buffer is set may mean that the block vector is capable of indicating a region set using the initial value, and may mean that, when the block vector indicates the set region, the initial value used in the set region is used and set as the value of the prediction sample. After the specific block in the current CTB region is encoded/decoded, reconstructed samples in the specific block may be stored at the corresponding position which is empty or is set to an initial value in the buffer. The corresponding position may be a position in a region corresponding to the specific block in the buffer. The corresponding region may be a region in the buffer corresponding to a region that is not yet encoded/decoded in the current CTB. The corresponding region may be either empty or set to an initial value.

In another example, the initial value of the buffer may be one of values ranging from 0 to (2 << bitdepth) - 1.

Here, bitdepth may be a positive integer. For example, bitdepth may be 1, 2, 3, 4, 5, 6, 7, 8, 9, 10, 11, 12 or the like.

Further, in an example, the initial value of the buffer may be 0, (2 << (bitdepth - N - 1)), or (2 << (bitdepth - N)) - 1.

Here, N may be an integer of 0 or more. Further, N may be a value preset by the encoder/decoder, and may be a value signaled from the encoder to the decoder.

bitdepth may refer to the bit depth of an input sample. In addition, bitdepth may be a value preset by the encoder/decoder, and may be a value signaled from the encoder to the decoder.

At least one of N and bitdepth may have different values for a luma component block and a chroma component (Cb and/or Cr) block.

At least one of N and bitdepth may have different values depending on at least one the coding modes of the current block (e.g., an intra block copy skip mode, an intra block copy merge mode, and an intra block copy AMVP mode).

At least one of N and bitdepth may be determined depending on at least one of the coding parameters of the current block/CTB/CTU.

K5 may be determined depending on at least one of the coding parameters of the current block/CTB/CTU.

In addition, the buffer may be newly set for a specific unit. Here, newly setting the buffer may mean that the buffer is emptied or initialized. The specific unit may be one or more of a brick, a tile, a slice, a sub-picture, a picture, CTB a tile group, and a CTU row.

C1 may be the horizontal length of a CTB. C2 may be the vertical length of the CTB. When the current CTB and left (N-1) CTBs can be included in the buffer, and the coordinates of the block included in the CTB in the picture are (x, y), the position in the buffer at which the block is stored may set, as described below. Here, N may be determined depending on at least one of the coding parameters of the current block/CTB/CTU. The buffer may be operated, as shown in FIG. 53A. Here, when the coordinates of the block, included in the K5-th CTB, in the image are (x, y), the block may be stored at the position corresponding to (x % C1, y % C2). When the coordinates of the blocks included in left CTBs are (x1, y1) at a time point at which the blocks included in the K5-th CTB are stored, the position in the buffer may be identical to those described in the following [setting 3-1] to [setting 3-4].

**[setting 3-1]** The position of blocks included in the (K5-1)-th CTB may be (x1 % C1 + C1, y1 % C2).

**[setting 3-2]** The position of blocks included in the (K5-2)-th CTB may be (x1 % C1 + (C1 × 2), y1 % C2).

**[setting 3-3]** The position of blocks included in the (K5-3)-th CTB may be (x1 % C1 + (C1 × 3), y1 % C2).

**[setting 3-4]** The position of blocks included in the (K5-A)-th CTB may be (x1 % C1 + (C1 × A), y1 % C2).

In [setting 3-1] to [setting 3-4], A may be a positive integer that is equal to or greater than 0 and less than or equal to N-1.

The buffer may be operated, as shown in FIG. 53B. Here, when the coordinates of the block, included in the K5-th CTB, in the image are (x, y), the block may be stored at a position corresponding to (x % C1, y % C2). When the coordinates of the blocks included in left CTBs are (x1, y1) at a time point at which the blocks included in the K5-th CTB are stored, the position in the buffer may be identical to those described in the following [setting 3-5] to [setting 3-8].

**[setting 3-5]** The position of blocks included in the (K5-1)-th CTB may be (x1 % C1 + (C1 × 3), y1 % C2).

**[setting 3-6]** The location of blocks included in the (K5-2)-th CTB may be (x1 % C1 + (C1 × 2), y1 % C2).

**[setting 3-7]** The position of blocks included in the (K5-3)-th CTB may be (x1 % C1 + (C1 × 1), y1 % C2).

**[setting 3-8]** The position of blocks included in the (K5-A)-th CTB may be (x1 % C1 + (C1 × (N-A)), y1 % C2).

In [setting 3-5] to [setting 3-8], A may be a positive integer that is equal to or greater than 0 and less than or equal to N-1.

The buffer may be operated, as shown in FIGS. 53C and 53D. Here, when the coordinates of the block, included in the K5-th CTB, in the image are (x, y), the block may be stored at a position corresponding to (x % C1 + (C1 × (N - 1)), y % C2). When the coordinates of the blocks, included in left CTBs, in the picture are (x1, y1) at a time point at which the blocks included in the K5-th CTB are stored, the position in the buffer may be identical to those described in the following [setting 3-9] to [setting 3-12].

**[setting 3-9]** The position of blocks included in the (K5-1)-th CTB may be (x1 % C1 + (C1 × (N - 2), y1 % C2).

**[setting 3-10]** The position of blocks included in the (K5-2)-th CTB may be (x1 % C1 + (C1 × (N - 3)), y1 % C2).

**[setting 3-11]** The position of blocks included in the (K5-3)-th CTB may be (x1 % C1 + (C1 × (N - 4)), y1 % C2).

**[setting 3-12]** The position of blocks included in the (K5-A)-th CTB may be (x1 % C1 + (C1 × (N - (A + 1))), y1 % C2).

In [setting 3-9] to [setting 3-12], A may be a positive integer that is equal to or greater than 0 and less than or equal to N-1.

### Representation of block vector

The block vector may be represented by one of the methods, which will be described below. Further, the block vector may be signaled and derived such that it can be represented by the method which will be described below.

When the coordinates of the top-left position of the current block in a picture are (x, y) and the coordinates of the top-left position of a prediction block in the picture are (x + VPx, y + VPy), the block vector may be represented and signaled by (VPx, VPy) which is the difference between the coordinates of the current block and the coordinates of the prediction block, or alternatively, information used to derive such a block vector may be signaled.

When the coordinates of the top-left position of the current block in a picture are (x, y) and the coordinates of the top-left position of a prediction block in the picture are (x + VBx, y + VBy), the block vector may be represented and signaled by (VBx, VBy) which is the difference between the coordinates of the current block and the coordinates of the prediction block, or alternatively, information used to derive such a block vector may be signaled.

When an empty region is present in the buffer, the range that the block vector can have may be limited so that the prediction block does not include the empty region.

In detail, the block vector (VBx, VBy) may be limited such that neither of the top-left coordinates (x+VBx, y+VBy) nor the bottom-right coordinates (x+VBx+cbWidth-1, y+Vby+cbHeight-1) of the prediction block are included in the empty region of the buffer. The block vector may be limited such that, when the top-left coordinates of the prediction block are (x+VBx, y+VBy), an equation in the following [limitation 1-1] is satisfied, and when the bottom-right coordinates are (x+VBx+cbWidth-1, y+Vby+cbHeight-1), an equation in the following [limitation 1-2] is satisfied.

$$\text{[limitation 1-1]} \quad 0 \leq x + VBx, \; 0 \leq y + VByx$$

[limitation 1-2] x + VBx + cbWidth - 1 ≤ ((C1 × (N - 1)) - 1), y + VBy + cbHeight - 1 ≤ (C2 - 1)  [limitation 1-2]

Alternatively, when the reference region is set to an initial value, the range of the block vector may be limited such that the prediction block is included in a reference buffer region. That is, the block vector may be limited such that, when the top-left coordinates of the prediction block are (x+VBx, y+VBy), an equation in the following [limitation 1-3] is satisfied, and when the bottom-right coordinates are (x+VBx+cbWidth-1, y+Vby+cbHeight-1), an equation in the following [limitation 1-4] is satisfied.

$$\text{[limitation 1-3]} \quad 0 \leq x + VBx, \; 0 \leq y + VBy$$

[limitation 1-4] x + VBx + cbWidth - 1 ≤ ((C1 × N) - 1), y + VBy + cbHeight - 1 ≤ (C2 - 1)  [limitation 1-4]

**Derivation of block vector of chroma component block**

When CTU is a single tree type (i.e., SINGLE_TREE), block partitioning for a luma component and block partitioning for a chroma component in a CTU may be equally performed.

When the current CTU is a single tree type and the current block is a chroma component block and is encoded/decoded in an intra block copy mode, derivation of a block vector for the chroma component block may be performed in the same manner as the above-described derivation of the block vector for the luma component block.

When CTU is a dual tree type (i.e., DUAL_TREE), block partitioning for a luma component and block partitioning for a chroma component in a CTU may be independently performed.

When the current CTU is a dual tree type, and the current block is a chroma component block and is encoded/decoded in an intra block copy mode, derivation of a block vector for the chroma component block may be performed in the same manner as the above-described derivation of the block vector for the luma component block.

When the current CTU is a single tree type and the current block is a chroma component block and is encoded/decoded in an intra block copy mode, derivation of a block vector for the chroma component block may be performed, as will be described below.

Alternatively, for example, when the current CTU is a single tree type and the current block is a chroma component block and is encoded/decoded in a template matching prediction mode, derivation of a block vector for the chroma component block may be performed, as will be described below.

Further, in the block vector derivation method described below, at least one of candidate list configuration and block vector derivation may be performed using at least one of a block vector based on intra block copy and a template matching block vector.

A luma component block corresponding to the current chroma component may be determined, as will be described below.

When the top-left sample position of the current chroma component block is $(x_c, y_c)$, the horizontal length thereof is $W_c$, and the vertical length thereof is $H_c$, the top-left sample position of a luma component block corresponding to the current chroma component block may be $(x_c/K1, y_c/K2)$, the horizontal length thereof may be $K1 \times W_c$, and the vertical length thereof may be $K2 \times H_c$. Here, K1 and K2 may be values changing with the format of the chroma component.

In an example, when the chroma component format of the current picture is a 4:2:0 format, both of K1 and K2 may be 2.

In another example, when the chroma component format of the current picture is a 4:2:2 format, K1 may be 2, and K2 may be 1.

In a further example, when the chroma component format of the current picture is a 4:4:4 format, both of K1 and K2 may be 1.

Because the block partitioning structure of the chroma component block and the block partitioning structure of the luma component block are identical to each other, the region of the luma component corresponding to the current chroma component block may be implemented using one luma component block.

When the block vector of the luma component block corresponding to the chroma component block is (MVL[0], MVL[1]), the block vector of the corresponding chroma component block may be (MVL[0] / K1, MVL[1]/K2).

In an example, when the chroma component format of the current picture is a 4:2:0 format, both of K1 and K2 may be 2.

In another example, when the chroma component format of the current picture is a 4:2:2 format, K1 = 2 and K2 = 1.

In a further example, when the chroma component format of the current picture is a 4:2:2 format, K1 may be 2 and K2 may be 1.

Here, although embodiments have been described on the assumption that the default unit of MVL[0] and MVL[1] is 1 sample, the default unit may be 1/16 sample, 1/N sample, N samples, or the like. N may be a positive integer.

When the current CTU has a tree type for a dual tree structure (DUAL_TREE_LUMA or DUAL_TREE_CHROMA), and the current block is a chroma component block and is encoded/decoded in an intra block copy mode, the block vector of the chroma component block may be derived, as will be described below.

Alternatively, for example, when the current CTU has a tree type for a dual tree structure (DUAL_TREE_LUMA or DUAL_TREE_CHROMA), and the current block is a chroma component block and is encoded/decoded in a template matching prediction mode, derivation of the block vector of the chroma component block may be performed, as will be described below.

A luma component region corresponding to the current chroma component may be determined, as will be described below.

When the top-left sample position of the current chroma component block is $(x_c, y_c)$, the horizontal length thereof is $W_c$, and the vertical length thereof is $H_c$, the top-left sample position of a luma component region corresponding to the current chroma component block may be $(x_c/K1, y_c/K2)$, the horizontal length thereof may be $K1 \times W_c$, and the vertical length thereof may be $K2 \times H_c$. Here, K1 and K2 may be values changing with the format of the chroma component.

In an example, when the chroma component format of the current picture is a 4:2:0 format, both of K1 and K2 may be 2.

In a further example, when the chroma component format of the current picture is a 4:2:2 format, K1 may be 2 and K2 may be 1.

In a further example, when the chroma component format of the current picture is a 4:4:4 format, both of K1 and K2 may be 1.

Here, the region of the luma component corresponding to the current chroma component block may include only some of the partitioned luma component blocks. Further, the region of the luma component corresponding to the current chroma component block may be partitioned into at least one or more luma component blocks.

The current chroma component block may be partitioned into units of NxM subblocks. In this case, a luma subblock of a luma component region corresponding to the chroma subblock of the chroma component region may be obtained by partitioning the luma component region into units of (N×K1)x(M×K2) subblocks. Here, each of N and M may be an integer of 1 or more.

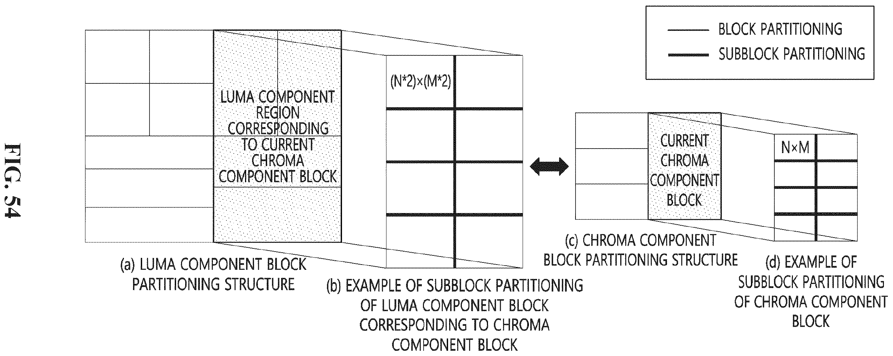

FIG. 54 illustrates subblock partitioning depending on a block partitioning structure for a luma component and a chroma component according to an example.

As illustrated in FIG. 54, a corresponding relationship between a chroma component block and a luma component region may be established.

A current chroma component block may be partitioned into units of NxM subblocks. In this case, a luma subblock of a luma component region corresponding to the chroma subblock of the chroma component region may be obtained by partitioning the luma component region into units of (N×K1)x(M×K2) subblocks. Here, each of N and M may be an integer of 1 or more.

Alternatively, when the horizontal length of the current chroma component block is Wc and the vertical length thereof is Hc, the luma component block may be partitioned into units of NxM subblocks in such a way that the luma component block is partitioned into P1 subblocks in a horizontal direction and is partitioned into P2 subblocks in a vertical direction. In this case, the following [Equation 110] may be established.

$$[\text{Equation } 110]$$
$$N = Wc / P1, \ M = Hc / P2$$

Here, each of P1 and P2 may be an integer of 1 or more.

A luma component subblock corresponding to the subblock of the current chroma component block may be present. Here, the block vector of the subblock of the current chroma component block may be derived from the block vector of the corresponding luma component subblock.

When the block vector of the luma component subblock corresponding to the subblock of the chroma component block is (MVL[0], MVL[1]), the block vector of the subblock of the chroma component block may be (MVL[0]/K1, MVL[1]/K2).

In an example, when the chroma component format of the current picture is a 4:2:0 format, both of K1 and K2 may be 2.

In another example, when the chroma component format of the current picture is a 4:2:2 format, K1 may be 2 and K2 may be 1.

In a further example, when the chroma component format of the current picture is a 4:4:4 format, both of K1 and K2 may be 1.

Here, although embodiments have been described on the assumption that the default unit of MVL[0] and MVL[1] is 1 sample, the default unit may be 1/16 sample, 1/N sample, N samples, or the like. N may be a positive integer.

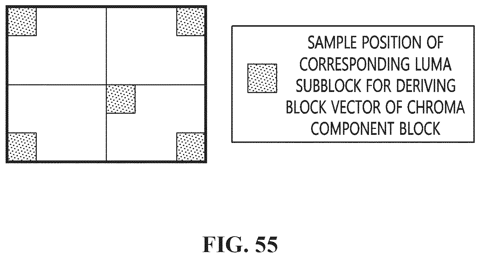

FIG. 55 illustrates sample positions in a luma component subblock according to an example.

All of samples located in a luma component subblock corresponding to the subblock of the current chroma component block may not be encoded/decoded in the same prediction mode. The reason for causing the difference is that the block partitioning structure of the luma component and the block partitioning structure of the chroma component are independently performed. In other words, this difference occurs because a luma component subblock corresponding to the subblock of the chroma component block may not match a luma component prediction block, and partitioned two or more luma component prediction blocks may be present in the luma component subblock.

Here, the luma component prediction block may refer to a block to which the same prediction or transform/inverse transform is applied when encoding/decoding is applied to the luma component. The luma component prediction block may be determined by luma component block partitioning.

A luma component region corresponding to the chroma component block, described in embodiments, may refer to not only a prediction block determined by the luma component block partitioning illustrated in FIG. 54, but also a luma component region corresponding to the location and size of the chroma component block.

Therefore, the block vector of the luma component subblock corresponding to the subblock of the current chroma component block may be at least one of the block vectors in [type 1-1] to [type 1-5] listed below:

**[type 1-1]** When a luma component prediction block including a top-left sample of the luma component subblock corresponding to the subblock of the current chroma component block is encoded/decoded in an intra block copy mode or a template matching prediction mode, the block vector of the luma component prediction block.

**[type 1-2]** When a luma component prediction block including a sample at the central position of a luma component subblock corresponding to the subblock of the current chroma component block is encoded/decoded in an intra block copy mode or a template matching prediction mode, the block vector of the luma component prediction block.

**[type 1-3]** When a luma component prediction block including one of sample positions indicated in FIG. 55 in a luma component subblock corresponding to the subblock of the current chroma component block is encoded/decoded in an intra block copy mode or a template matching prediction mode, the block vector of the luma component prediction block. Here, the sample positions may include a sample position diagonally adjacent to the right-below of the center of the subblock, a top-left sample position, a top-right sample position, a bottom-left sample position, and a bottom-right sample position.

**[type 1-4]** When a luma component prediction block including at least one of samples in a luma component subblock corresponding to the subblock of the current chroma component block is encoded/decoded in an intra block copy mode or a template matching prediction mode, the block vector of the luma component prediction block.

**[type 1-5]** When a luma component prediction block occupying the largest region in a luma component subblock corresponding to the subblock of the current chroma component block is encoded/decoded in an intra block copy mode or a template matching prediction mode, the block vector of the luma component prediction block.

The block vector of a luma component subblock corresponding to the subblock of the current chroma component block may not be present. This shows that a block vector may not be present in one of [case 1-1] to [case 1-5] described below.

**[case 1-1]** Case where a luma component prediction block including the top-left sample of a luma component subblock corresponding to the subblock of the current chroma component block is not encoded/decoded in an intra block copy mode or a template matching prediction mode, or is encoded/decoded in an intra-prediction mode.

**[case 1-2]** Case where a luma component prediction block including a sample at the central position of a luma component subblock corresponding to the subblock of the current chroma component block is not encoded/decoded in an intra block copy mode or a template matching prediction mode, or is encoded/decoded in an intra-prediction mode.

**[case 1-3]** Case where a luma component prediction block including one of the sample positions, illustrated in FIG. 55, in a luma component subblock corresponding to the subblock of the current chroma component block is not encoded/decoded in an intra block copy mode or a template matching prediction mode, or is encoded/decoded in an intra-prediction mode. Here, the sample positions may include a sample position diagonally adjacent to the right-below of the center of the subblock, a top-left sample position, a top-right sample position, a bottom-left sample position, and a bottom-right sample position.

[case 1-4]Case where a luma component prediction block including at least one of samples in a luma component subblock corresponding to the subblock of the current chroma component block is not encoded/decoded in an intra block copy mode or a template matching prediction mode, or is encoded/decoded in an intra-prediction mode.

[case **1-5**] Case where a luma component prediction block occupying the largest region in a luma component subblock corresponding to the subblock of the current chroma component block is not encoded/decoded in an intra block copy mode or a template matching prediction mode, or is encoded/decoded in an intra-prediction mode.

When the block vector of the luma component subblock corresponding to the subblock of the current chroma component block is not present, the block vector corresponding to the subblock of the current chroma component block may be derived by at least one of the methods, which will be described below. In the following descriptions, the current subblock may refer to the subblock of the current chroma component block.

The block vector of the current subblock may be set to (0, 0) or (D1, D2). Here, each of D1 and D2 may be an integer such as 0, $\pm 1$, $\pm 2$, $\pm 3$, ..., or the like.

The block vector of the current subblock may be set to ((Wc+D1, D2) or (D1, Hc+D2). Here, Wc may be the horizontal length of the current chroma component block, Hc may be the vertical length of the current chroma component block, and each of D1 and D2 may be an integer such as 0, $\pm 1$, $\pm 2$, $\pm 3$ ..., or the like.

The block vector of the current subblock may be set to one of (-(Wc<<n)+a, -(Hc<<n)+b), (-(Wc<<n)+c, 0) or (0, -(Hc<<n)+d). Here, n may be a positive integer, and each of a, b, c, and d may be an integer.

The block vector of a neighbor subblock of the current subblock (e.g., at least one of an above subblock, a below subblock, a left subblock, a right subblock, a left-above subblock, a right-above subblock, a left-below subblock, and a right-below subblock) may be used as the block vector of the current subblock.

The block vector of the current subblock may be derived using a block vector statistical value of subblocks for which the block vector of the corresponding luma component subblock is present, among the subblocks of the current chroma component block. The block vector statistical value may be a statistical value for the block vectors of the subblocks.

For example, the block vector statistical value may be at least one of the average value, median value, maximum value, and minimum value of the block vectors of the subblocks.

For example, a block vector corresponding to the subblock of the current chroma component block may be a block vector having the highest occurrence frequency.

When there are at least one or more subblocks of a chroma component block for which the corresponding luma component subblock is not encoded/decoded in an intra block copy mode or for which the block vector of the corresponding luma component subblock is not present, the chroma component block may not be encoded/decoded in an intra block copy mode or a template matching prediction mode.

The prediction mode of the luma component subblock corresponding to the subblock of the current chroma component block may be set to the prediction mode, described in [setting 4-1] to [setting 4-5] described below. Here, the prediction mode may be at least one of an intra-prediction mode, an inter-prediction mode, an intra block copy mode, and a template matching prediction mode. In detail, the prediction mode may be at least one of a skip mode, a merge mode, an AMVP mode, an affine skip mode, and an affine inter mode, which are inter-prediction modes, and may be at least one of an intra block copy skip mode, an intra block copy merge mode, and an intra block copy AMVP mode, which are intra block copy modes.

**[setting 4-1]** The prediction mode of a luma component prediction block including a top-left sample of the luma component subblock corresponding to the subblock of the current chroma component block.

**[setting 4-2]** The prediction mode of a luma component prediction block including a sample at the center position of the luma component subblock corresponding to the subblock of the current chroma component block.

**[setting 4-3]** The prediction mode of a luma component prediction block including one of sample positions, illustrated in FIG. 55, in the luma component subblock corresponding to the subblock of the current chroma component block. Here, the sample positions may include a sample position diagonally adjacent to the right-below of the center of the subblock, a top-left sample position, a top-right sample position, a bottom-left sample position, and a bottom-right sample position.

**[setting 4-4]** The prediction mode of a luma component prediction block including at least one of samples in the luma component subblock corresponding to the subblock of the current chroma component block.

**[setting 4-5]** The prediction mode of a luma component prediction block occupying the largest region in the luma component subblock corresponding to the subblock of the current chroma component block.

### Prediction block derivation step

Hereinafter, prediction vector derivation at steps 2720 and 2830 will be described.

Prediction block derivation for prediction in an intra block copy mode at steps 2720 and 2830 may include at least one of prediction block derivation for a luma component block and prediction block derivation for a chroma component block, which will be described below.

### Prediction block derivation for luma component block

A block indicated by the block vector of a luma component block derived from a current luma component block may be referred to as a reference block. Here, the reference block may be determined to be the prediction block of the current block.

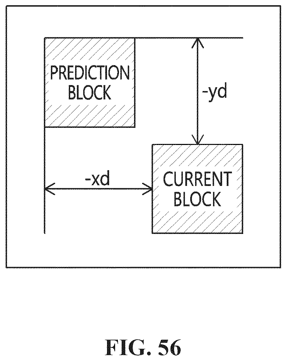

FIG. 56 illustrates a prediction block selection method according to an example.

As illustrated in FIG. 56, the position of a top-left sample of a current luma component block may be $(x0, y0)$. The horizontal length of the current block may be WL, and the vertical length thereof may be HL. The derived block vector of the luma component may be $(xd, yd)$.

Here, a prediction block may be indicated by the block vector of the luma component. The position of the top-left sample of the prediction block may be the sample position $(x0+xd, y0+yd)$, which is shifted from the top-left sample position of the current luma component block by $(xd, yd)$ in the current image. The horizontal length of the prediction block may be WL, and the vertical length thereof may be HL. Alternatively, a block having the above-described position and size may be derived as a prediction block.

Here, when xd is a negative integer, the position specifying the prediction block may be shifted from $(x0, y0)$ by xd in a left horizontal direction, whereas when xd is a positive integer, the corresponding position may be shifted from $(x0, y0)$ by xd in a right horizontal direction. When yd is a negative integer, the position specifying the prediction block may be shifted from $(x0, y0)$ by yd in an upward vertical direction, whereas when yd is a positive integer, the corresponding position may be shifted from $(x0, y0)$ by yd in a downward vertical direction.

FIG. 49 may show an example of the case where both of xd and yd are negative integers.

A sample value in the reference block may be set to a prediction sample value for the current luma component block. The set prediction sample value may be considered to be a prediction block for the current luma component block.

The sample value of the reference block may be the sample value of a reconstructed image to which at least one of in-loop filtering techniques in embodiments is not applied.

When the block vector is (0, 0), the sample value of the prediction block may be set to a specific value.

The specific value may be an integer value that is equal to or greater than 0 and less than or equal to $2^{bitdepth}$-1.

The specific value may be a specific value falling within the range of values that the reconstructed sample can have. Furthermore, the specific value may be 0, $2^{bitdepth-1}$, $2^{bitdepth}$-1, or the like.

In another example, when all of sample values of the prediction block are set to the specific value, the specific value may be one of values ranging from 0 to (2 << bitdepth) - 1.

Here, bitdepth may be a positive integer. For example, bitdepth may be 1, 2, 3, 4, 5, 6, 7, 8, 9, 10, 11, 12 or the like.

Furthermore, in an example, all of the sample values of the prediction block may be 0, (2 << (bitdepth - N - 1)) or (2 << (bitdepth - N)) - 1.

Here, N may be an integer of 0 or more. Further, N may be a value preset by the encoder/decoder, and may be a value signaled from the encoder to the decoder.

bitdepth may refer to the bit depth of an input sample. In addition, bitdepth may be a value preset by the encoder/decoder, and may be a value signaled from the encoder to the decoder.

At least one of N and bitdepth may have different values for a luma component block and a chroma component (Cb and/or Cr) block.

At least one of N and bitdepth may have different values depending on at least one the coding modes of the current block (e.g., an intra block copy skip mode, an intra block copy merge mode, and an intra block copy AMVP mode).

At least one of N and bitdepth may be determined depending on at least one of the coding parameters of the current block/CTB/CTU.

The value of the block vector may be restricted such that the reference block is located in a limited region. When the block vector does not have a value falling within a limited range, the sample values of a prediction block for the block having the block vector may be set to a specific value.

Such a specific value may be set to be identical to the specific value that is set when the above-described block vector is (0, 0) in embodiments.

When encoding/decoding to which a buffer is applied is performed, the reference block may be a region indicated by the block vector from the location of the current block in the buffer. Here, the reference block may be included in the buffer.

When the coordinates of the sample, included in the current block, in a picture are (x, y) and a block vector is (Vx,Vy), the position of a corresponding reference sample located in the reference block in the buffer may be ((x+Vx) % M1, (y+Vy) % M2), or ((x+Vx) % M1, (y+Vy)).

**Prediction block derivation for chroma component block**

When a CTU is a single tree type (i.e., SINGLE_TREE), block partitioning for a luma component and block partitioning for a chroma component in the CTU may be equally performed.

When the current CTU is a single tree type, and the current block is a chroma component block, and is encoded/decoded in an intra block copy mode or a template matching prediction mode, a prediction block for the chroma component block may be derived, as will be described below.

The prediction block may be a block spaced apart from the current chroma component block by the derived block vector of the chroma component block.

For example, the position of the top-left sample of the current chroma component block may be (x0, y0). The horizontal length of the current block may be Wc, and the vertical length thereof may be Hc. The derived block vector of the luma component may be (xd, yd).

Here, the prediction block may be indicated by the block vector of the chroma component. The position of the top-left sample of the prediction block may be the sample position (x0+xd, y0+yd), which is shifted from the top-left sample position of the current chroma component block by (xd, yd) in the current image. The horizontal length of the prediction block may be Wc, and the vertical length thereof may be Hc. Alternatively, a block having the above-described position and size may be derived as the prediction block.

Here, when xd is a negative integer, the position specifying the prediction block may be shifted from (x0, y0) by xd in a left horizontal direction, whereas when xd is a positive integer, the corresponding position may be shifted from (x0, y0) by xd in a right horizontal direction. When yd is a negative integer, the position specifying the prediction block may be shifted from (x0, y0) by yd in an upward vertical direction, whereas when yd is a positive integer, the corresponding position may be shifted from (x0, y0) by yd in a downward vertical direction.

A sample value in the prediction block may be set to a prediction sample value for the current chroma component block. The set prediction sample value may be considered to be a prediction block for the current chroma component block.

When CTU is a dual tree type (i.e., DUAL_TREE), block partitioning for a luma component and block partitioning for a chroma component in a CTU may be independently performed.

When the current CTU has a tree type for a dual tree structure (DUAL_TREE_LUMA or DUAL_TREE_CHROMA), and the current block is a chroma component block and is encoded/decoded in an intra block copy mode or a template matching prediction mode, the block vector of the chroma component block may be derived, as will be described below.

A prediction block for each subblock may be derived in units of subblocks using the block vector derived in units of subblocks of the current chroma component block.

A block indicated by the block vector of the subblock of the chroma component block derived from the subblock of the current chroma component block may be referred to as a prediction subblock.

For example, the position of the top-left sample of the subblock of the current chroma component block may be (sx0, sy0). The horizontal length of the current block may be SWc, and the vertical length thereof may be SHc. The derived block vector of the chroma component may be (Sxd, Syd).

The position of the top-left sample of the prediction block may be a sample position (sx0+Sxd, sy0+Syd), which is shifted from the top-left sample position of the subblock in the current chroma component block by (Sxd, Syd), in the current image. The horizontal length of the prediction block may be SWc, and the vertical length thereof may be SHc. Alternatively, a block having the above-described position and size may be derived as the prediction block.

As described above, a specified prediction block may be a subblock prediction block that is a prediction block for the subblock of the chroma component block.

A sample value of the prediction subblock may be set to a prediction sample value of the subblock of the current chroma component block. The set prediction sample value may be referred to as a prediction block for the subblock of the current chroma component block.

A prediction block for the current chroma component block may be configured by subblock prediction blocks for all subblocks included in the current chroma component block.

### Residual block derivation

Hereinafter, residual block derivation at steps 2730 and 2840 will be described.

Generally, when there is a residual block, encoded residual block information may be generated through at least one of transform and quantization on the residual block; and entropy encoding in an encoding process. In a decoding process, a reconstructed residual block may be derived through entropy decoding on the encoded residual block information; and at least one of dequantization and inverse transform. Here, the reconstructed residual block may refer to a residual block.

Identifier information indicating whether there is entropy encoded/decoded residual block-related information (e.g., a quantized transform coefficient, a quantized level, a transform coefficient, or the like) may be at least one of [identifier 1-1] to [identifier 1-3], which will be described below.

**[identifier 1-1]** cu_cbf: cu_cbf may be information indicating whether a quantized transform coefficient of a luma component block and a quantized transform coefficient in a residual block of a chroma component block are present when a luma component and a chroma component have the same block partitioning structure.

cu_cbf may be information indicating whether there is a quantized transform coefficient of a residual block of a luma component block or information indicating whether there is a quantized transform coefficient of a residual block of a chroma component block when a luma component and a chroma component have independent block partitioning structures. The case where the information indicating whether there is a quantized transform coefficient is a first value (e.g., 1) may indicate that the quantized transform coefficient of the residual block of each block is present. The case where the information indicating whether there is a quantized transform coefficient is a second value (e.g., 0) may indicate that the quantized transform coefficient of the residual block of each block is not present.

In the case where the luma component and the chroma component have the same block partitioning structure, cu_cbf may have a first value when there is a quantized transform coefficient in the residual block of at least one of a luma component block and a chroma component (i.e., Cb and Cr) block. When a quantized transform coefficient is present in none of residual blocks of all components, cu_cbf may have a first value.

**[identifier 1-2]** tu_cbf_luma: tu_cbf_luma may indicate whether there is a quantized transform coefficient in the residual block of the luma component block.

The case where the information indicating whether there is a quantized transform coefficient in the residual block of the luma component block is a first value (e.g., 1) may indicate that the quantized transform coefficient of the residual block of the luma component block is present.

The case where the information indicating whether there is a quantized transform coefficient in the residual block of the luma component block is a 0-th value (e.g., 0) may indicate that the quantized transform coefficient of the residual block of the luma component block is not present.

**[identifier 1-3]** tu_cbf_cr and tu_cbf_cb: tu_cbf_cr and tu_cbf_cb may indicate whether there are quantized transform coefficients in the residual blocks of chroma components Cr and Cb, respectively.

The case where the information indicating whether there is a quantized transform coefficient in the residual block of the chroma component (Cr or Cb) block is a first value (e.g., 1) may indicate that the quantized transform coefficient in the residual block of the chroma component (Cr or Cb) block is present.

The case where the information indicating whether there is a quantized transform coefficient in the residual block of the chroma component (Cr or Cb) block is a second value (e.g., 0) may indicate that the quantized transform coefficient in the residual block of the chroma component (Cr or Cb) block is not present.

In embodiments, the quantized transform coefficient may refer to at least one of a quantized level, a transform coefficient, etc. Also, the quantized transform coefficient may refer to a quantized transform coefficient having a value other than 0. The residual block may include the quantized transform coefficient.

At least one of tu_cbf_luma, tu_cbf_cr and tu_cbf_cb may be additionally signaled only when cu_cbf is a first value (e.g., 1), and the signaled tu_cbf_luma, tu_cbf_cr, and tu_cbf_cb may indicate whether there are quantized transform coefficients in residual blocks of the luma component, the chroma component Cr, and the chroma component Cb, respectively.

When the luma component and the chroma component have independent block partitioning structures, there may occur the case where cu_cbf and tu_cbf_luma have the same information.

When a CTU is a single tree type (i.e.,, SINGLE_TREE), block partitioning for a luma component and block partitioning for a chroma component in the CTU may be equally performed.

When the current CTU is a single tree type and the prediction mode of the current luma component block is an intra block copy skip mode or a template matching prediction mode, residual blocks of the current luma component block and the chroma component block may be derived, as will be described below.

When the prediction mode of the current luma component block is the intra block copy skip mode or the template matching prediction mode, a residual block may not be present, as in the case of a skip mode in inter-prediction. In this case, the residual block may be set to have only values of '0'.

In embodiments, setting the residual block to have only values of '0' may mean that the values of all quantized transform coefficients in the residual block are set to 0.

When the prediction mode of a luma component block corresponding to the current chroma component block is the intra block copy skip mode or the template matching prediction mode, the residual block of the current chroma component block may not be present in the same manner as the luma component block. In this case, the residual block may be set to have only values of '0'.

When the prediction mode of the block is an intra block copy skip mode or a template matching prediction mode, information indicating whether the residual block of the block is present (e.g., an identifier, a flag, an index, cu_cbf, tu_cbf_luma, tu_cbf_cr, tu_cbf_cb, or the like) may not be signaled.

For example, the cu_cbf value indicating whether quantized transform coefficients are present in all of the residual blocks of a luma component, a chroma component Cr, and a chroma component Cb may not be signaled. In the encoding/decoding process, cu_cbf may be set to a second value indicating that quantized transform coefficients are present in none of the residual blocks of the luma component, the chroma component Cr, and the chroma component Cb, without signaling. Furthermore, none of tu_cbf_luma indicating whether a quantized transform coefficient is present in the residual block of the luma component, tu_cbf_cr indicating whether a quantized transform coefficient is present in the residual block of the chroma component Cr, and tu_cbf_cb indicating whether a quantized transform coefficient is present in the residual block of the chroma component Cb may be signaled. In the encoding/decoding process, each of tu_cbf_luma, tu_cbf_cr, and tu_cbf_cb may be set to a second value without signaling. By means of settings, each of tu_cbf_luma, tu_cbf_cr, and tu_cbf_cb may indicate that a quantized transform coefficient is not present in the corresponding residual block.

When a CTU is a single tree type (i.e., SINGLE_TREE), block partitioning for a luma component and block partitioning for a chroma component in the CTU may be equally performed.

When the current CTU is a single tree type and the prediction mode of the current luma component block is an intra block copy merge mode or a template matching prediction mode, residual blocks of the current luma component block and the chroma component block may be derived, as will be described below.

When the prediction mode of the current luma component block is the intra block copy merge mode or the template matching prediction mode, a residual block may always be present. In this case, a quantized transform coefficient on which transform and/or quantization are performed may be signaled in the encoding process on the residual block, and a reconstructed residual block may be derived by performing dequantization and/or inverse transform on the signaled quantized transform coefficient in the decoding process.

When the prediction mode of a luma component block corresponding to the current chroma component block is the intra block copy merge mode or the template matching prediction mode, the residual block of the current chroma component block may be present in the same manner as the luma component block. In this case, information about a quantized transform coefficient on which transform and/or quantization are performed may be signaled in the encoding process on the residual block, and a reconstructed residual block may be derived by performing dequantization and/or inverse transform on the signaled information in the decoding process.

When the prediction mode of the block is the intra block copy merge mode or the template matching prediction mode, information indicating whether the residual block of the block is present (e.g., an identifier, a flag, an index, cu_cbf, tu_cbf_luma, tu_cbf_cr, tu_cbf_cb, or the like) may not be signaled. When the merge mode is used, a residual block may always be present. Therefore, the reason for this is that the value of cu_cbf indicating whether at least one quantized transform coefficient in the residual blocks of the luma component, the chroma component Cr, and the chroma component Cb is present may always be set to a first value in the decoding process, without signaling. In this case, the information indicating whether a residual block is present may not be signaled, and quantized transform coefficient information of the residual block may always be signaled.

However, when the prediction mode of the block is the intra block copy merge mode or the template matching prediction mode, a component for which a quantized transform coefficient in a residual block is not present may exist among the luma component, the chroma component Cr, and the chroma component Cb. Therefore, when the prediction mode of the block is the intra block copy merge mode or the template matching prediction mode, identifiers, each indicating whether a quantized transform coefficient in a residual block of the corresponding component is present (e.g., tu_cbf_luma for the luma component and tu_cbf_cr and tu_cbf_cb for the chroma component), may be signaled.

When a CTU is a single tree type (i.e., SINGLE_TREE), block partitioning for a luma component and block partitioning for a chroma component in the CTU may be equally performed.

When the current CTU is a single tree type and the prediction mode of the current luma component block is an intra block copy AMVP mode or a template matching prediction mode, residual blocks of the current luma component block and the chroma component block may be derived, as will be described below.

When the prediction mode of the current luma component block is the intra block copy AMVP mode or the template matching prediction mode, a residual block may or may not be present. In this case, information identifying whether there is a residual block may always be signaled. When there is the residual block, a quantized transform coefficient on which transform and/or quantization are performed may be signaled in the encoding process on the residual block, and a reconstructed residual block may be derived by performing dequantization and/or inverse transform on the signaled quantized transform coefficient in the decoding process. When there is no residual block, the residual block may be set to have only values of '0'.

When the prediction mode of a luma component block corresponding to the current chroma component block is the intra block copy AMVP mode or the template matching prediction mode, the residual block of the current chroma component block may or may not be present in the same manner as the luma component block. When there is the residual block, a quantized transform coefficient on which transform and/or quantization are performed may be signaled in the encoding process on the residual block, and a reconstructed residual block may be derived by performing dequantization and/or inverse transform on the signaled quantized transform coefficient in the decoding process. When there is no residual block, the residual block may be set to have only values of '0'.

When the prediction mode of the block is the intra block copy AMVP mode or the template matching prediction mode, quantized transform coefficients in the residual blocks of the luma component, the chroma component Cr, and the chroma component Cb may or may not be present. Therefore, information (e.g., an identifier, a flag, an index or cu_cbf) identifying whether quantized transform coefficients of the residual blocks of the luma component, the chroma component Cr, and the chroma component Cb are present may always be signaled.

Further, when the information (e.g., an identifier, a flag, an index or cu_cbt) identifying whether quantized transform coefficients in the residual blocks of the luma component, the chroma component Cr, and the chroma component Cb are present has a first value indicating the presence of the residual blocks, a component for which a quantized transform coefficient in a residual block is not present may exist among the luma component, the chroma component Cr, and the chroma component Cb. Therefore, when the information identifying whether quantized transform coefficients in the residual blocks of the luma component, the chroma component Cr, and the chroma component Cb are present has the first value, identifiers, each indicating whether a quantized transform coefficient in the residual block of the corresponding component is present (e.g., tu_cbf_luma for the luma component and tu_cbf_cr and tu_cbf_cb for the chroma component) may be signaled.

When CTU is a dual tree type (i.e., DUAL_TREE), block partitioning for a luma component and block partitioning for a chroma component in a CTU may be independently performed.

When the current CTU is a tree type for a dual tree structure (DUAL_TREE_LUMA or DUAL_TREE_CHROMA), and the prediction mode of the current luma component block is an intra block copy skip mode, the residual block of the current luma component block may not be present, as in the case of the skip mode in inter-prediction. In this case, the residual block may be set to have only values of '0'. The information identifying whether a residual block is present (e.g., identifier, flag, index, cu_cbf, tu_cbf_luma, or the like) may not be signaled.

When the prediction mode of the luma component block is an intra block copy skip mode, cu_cbf signaled for the luma component block in an independent partitioning structure may indicate whether a quantized transform coefficient in the residual block of the luma component block is present. In this case, because a quantized transform coefficient in the residual block of the luma component block is not always present, the corresponding information may not be signaled, and may be set to a second value (e.g., 0) in the decoding process.

Further, the identification information indicating whether the residual block of the luma component is present (e.g., tu_cbf_luma) may not be signaled, and may be set to a second value (e.g., 0) in the decoding process.

When CTU is a dual tree type (i.e., DUAL_TREE), block partitioning for a luma component and block partitioning for a chroma component in a CTU may be independently performed.

When the current CTU is a tree type for a dual tree structure (DUAL_TREE_LUMA or DUAL_TREE_CHROMA), and the prediction mode of the current luma component block is an intra block copy merge mode, the residual block of the current luma component block may always be present, as in the case of a merge mode in inter-prediction. In this case, a quantized transform coefficient on which transform and/or quantization are performed may be signaled in the encoding process on the residual block, and a reconstructed residual block may be derived by performing dequantization and/or inverse transform on the signaled quantized transform coefficient in the decoding process.

When the prediction mode of the luma component block is an intra block copy merge mode, cu_cbf signaled for the luma component block in an independent partitioning structure may merely indicate whether a quantized transform coefficient in the residual block of the luma component block is present. In this case, the quantized transform coefficient in the residual block of the luma component block may always be present. Therefore, the information indicating whether a quantized transform coefficient in the residual block of the luma component block is present may not be signaled, and may be set to a first value (e.g., 1) in the decoding process.

Meanwhile, the identification information indicating whether the residual block of the luma component is present (e.g., tu_cbf_luma) may have the same value as cu_cbf signaled for the luma component block in the independent partitioning structure. Therefore, the identification information indicating whether the residual block of the luma component is present may not be signaled, and may be set to a first value (e.g., 1) in the decoding process.

When CTU is a dual tree type (i.e., DUAL_TREE), block partitioning for a luma component and block partitioning for a chroma component in a CTU may be independently performed.

When the current CTU is a tree type for a dual tree structure (DUAL_TREE_LUMA or DUAL_TREE_CHROMA), and the prediction mode of the current luma component block is an intra block copy AMVP mode, the residual block of the current luma component block may or may not present, as in the case of the AMVP mode in inter-prediction. When there is the residual block of the current luma component block, a quantized transform coefficient on which transform and/or quantization are performed may be signaled in the encoding process on the residual block, and a reconstructed residual block may be derived by performing dequantization and/or inverse transform on the signaled quantized transform coefficient in the decoding process. When there is no residual block, the residual block may be set to have only values of '0'.

When the prediction mode of the luma component block is an intra block copy AMVP mode, cu_cbf signaled for the luma component block in an independent partitioning structure may merely indicate whether a quantized transform coefficient in the residual block of the luma component block is present. In this case, the quantized transform coefficient in the residual block of the luma component block may or may not be present. Therefore, cu_cbf that is the information identifying whether there is a residual block may always be signaled.

Meanwhile, the identification information indicating whether the residual block of the luma component is present (e.g., tu_cbf_luma) may have the same value as cu_cbf signaled for the luma component block in the independent partitioning structure. Therefore, the identification information indicating whether the residual block of the luma component is present may not be signaled, and may be set to the same value as the value of cu_cbf in the decoding process.

Whether a residual block is present may be set depending on the value of cu_cbf or tu_cbf_luma. For example, when cu_cbf or tu_cbf_luma has a first value, the presence of the residual block may be set.

When CTU is a dual tree type (i.e., DUAL_TREE), block partitioning for a luma component and block partitioning for a chroma component in a CTU may be independently performed.

When the current CTU has a tree type for a dual tree structure (DUAL_TREE_LUMA or DUAL_TREE_CHROMA), and the current block is a chroma component block and is encoded/decoded in an intra block copy mode, the residual block of the chroma component block may be derived, as will be described below.

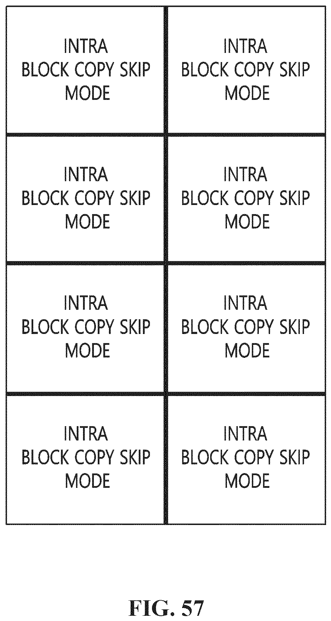

FIG. 57 illustrates the case where prediction coding modes of luma component subblocks corresponding to a chroma component block are identical to each other according to an example.

There may occur the case where all of subblocks included in a luma component block corresponding to a current chroma component block have the same intra block copy mode.

In this case, the intra block copy mode may indicate one or more of an intra block copy skip mode, an intra block copy merge mode, and an intra block copy AMVP mode.

For example, as illustrated in FIG. 57, all of the prediction coding modes of the subblocks may be the intra block copy skip mode, the intra block copy merge mode, or the intra block copy AMVP mode.

When all of the prediction modes of the subblocks included in the luma component block corresponding to the current chroma component block indicate the same intra block copy mode, whether the residual block of the chroma component block is encoded/decoded may be determined based on the intra block copy mode of the corresponding luma component blocks.

When all of the prediction modes of the subblocks included in the corresponding luma component block indicate the intra block copy skip mode, a residual block may not be encoded/decoded even for the chroma component block, and residual block information may not be signaled, in the same manner as the case where the prediction mode of the luma component block is the intra block copy skip mode. In this case, the residual block may be set to have only values of '0'.

Here, information identifying whether the residual block of the corresponding block is present (e.g., identifier, flag, cu_cbf, tu_cbf_cr/tu_cbf_cb, or the like) may not be signaled. The case where the information identifying whether the residual block is present has a first value may indicate that the residual block is present, and the case where the information has a second value may indicate that no residual block is present. When the prediction mode of the chroma component block is an intra block copy skip mode, the information identifying whether the residual block of the block is present may always be set to a second value in the decoding process.

When all of the prediction modes of the subblocks included in the corresponding luma component block indicate the intra block copy merge mode, a residual block may always be present for the chroma component block in the same manner as the case where the prediction mode of the luma component block is the intra block copy merge mode. In this case, a quantized transform coefficient on which transform and/or quantization are performed may be signaled in the encoding process on the residual block, and a reconstructed residual block may be derived by performing dequantization and/or inverse transform on the signaled quantized transform coefficient in the decoding process.

The information that identifies whether a residual block is present (e.g., identifier, flag, or cu_cbf) in the independent partitioning structure and that is signaled for the chroma component block in the independent partitioning structure may indicate whether a quantized transform coefficient in a residual block is present in the component of at least one of a Cb block and a Cr block that are chroma components.

Information identifying whether a residual block is present (e.g., identifier, flag, index or cu_cbf) when the prediction mode of the block is the intra block copy merge mode may not be signaled. The reason for this is that, when the merge mode is used, a residual block is always present, and thus the value of cu_cbf indicating whether at least one of quantized transform coefficients in the residual blocks of the chroma component Cr and the chroma component Cb is present may always be set to a first value in the decoding process.

However, when the prediction mode of the block is an intra block copy merge mode, a component for which a quantized transform coefficient in a residual block is not present may exist among the luma component, the chroma component Cr, and the chroma component Cb. Therefore, when the prediction mode of the block is an intra block copy merge mode, identifiers, each indicating whether a quantized transform coefficient in the residual block of the corresponding chroma component is present (e.g., tu_cbf_cr and tu_cbf_cb), may be signaled.

When all of the prediction modes of the subblocks included in the corresponding luma component block indicate the intra block copy AMVP mode, the residual block of the chroma component block may or may not be present in the same manner as the case where the prediction mode of the luma component block is the intra block copy AMVP mode. In this case, information identifying whether there is a residual block may always be signaled. When there is the residual block, a quantized transform coefficient on which transform and/or quantization are performed may be signaled in the encoding process on the residual block, and a reconstructed residual block may be derived by performing dequantization and/or inverse transform on the signaled quantized transform coefficient in the decoding process. When there is no residual block, the residual block may be set to have only values of '0'.

The information that identifies whether a residual block is present (e.g., an identifier, a flag, or cu_cbf) in the independent partitioning structure and that is signaled for the chroma component block in the independent partitioning structure may indicate whether a quantized transform coefficient in a residual block is present in the component of at least one of a Cb block and a Cr block that are chroma components.

When the prediction mode of the block is the intra block copy AMVP mode, quantized transform coefficients in the residual blocks of the chroma component Cr and the chroma component Cb may or may not be present. Therefore, information identifying whether quantized transform coefficients in the residual blocks of the chroma component Cr and the chroma component Cb are present (e.g., an identifier, a flag, an index or cu_cbf) may always be signaled.

Furthermore, when the information identifying whether quantized transform coefficients in the residual blocks of the chroma component Cr and the chroma component Cb are present (e.g., an identifier, a flag, an index or cu_cbf) has a first value indicating the presence of the residual blocks, a component for which a quantized transform coefficient in a residual block is not present may exist between the chroma component Cr and the chroma component Cb. Therefore, in this case, identifiers indicating whether a quantized transform coefficient in the residual block of each component is present (e.g., tu_cbf_cr and tu_cbf_cb in the case of the chroma component) may be signaled. When the identifier indicating whether a quantized transform coefficient in the residual block of the chroma component Cr is present (e.g., tu_cbf_cr) has a first value, information about the quantized transform coefficient in the residual block for the component Cr may be signaled. When the identifier indicating whether a quantized transform coefficient in the residual block of the chroma component Cb is present (e.g., tu_cbf_cr) has a first value, information about the quantized transform coefficient in the residual block for the component Cb may be signaled.

Even if all of the prediction blocks of subblocks included in the corresponding luma component block indicate the same intra block copy mode (e.g., an intra block copy skip mode, an intra block copy merge mode, an intra block copy AMVP mode, or the like), the intra block copy mode may not be applied to all samples included in the corresponding luma component block. Therefore, it may be inefficient to encode/decode the residual block of the chroma component depending on the mode of the luma component block corresponding to the chroma component block.

Therefore, when the prediction mode of the chroma component block is an intra block copy mode, information identifying whether quantized transform coefficients in the residual blocks of the chroma component Cr and the chroma component Cb are present (e.g., an identifier, a flag, an index or cu_cbf) may always be signaled, regardless of the types of prediction modes of the subblocks included in the corresponding luma component block.

Furthermore, when the information identifying whether quantized transform coefficients in the residual blocks of the chroma component Cr and the chroma component Cb are present (e.g., an identifier, a flag, an index or cu_cbf) has a first value indicating the presence of the residual blocks, a component for which a quantized transform coefficient in a residual block is not present may exist between the chroma component Cr and the chroma component Cb. Therefore, in this case, identifiers indicating whether a quantized transform coefficient in the residual block of each component is present (e.g., tu_cbf_cr and tu_cbf_cb in the case of the chroma component) may be signaled. When the identifier indicating whether a quantized transform coefficient in the residual block of the chroma component Cr is present (e.g., tu_cbf_cr) has a first value, information about the quantized transform coefficient in the residual block for the component Cr may be signaled. When the identifier (e.g., tu_cbf_cr) indicating whether there is a quantized transform coefficient in the residual block of the chroma component Cb has a first value, information about a quantized transform coefficient in the residual block for the Cb component may be signaled, and the residual block may be derived through dequantization and/or inverse transform on the signaled quantized transform coefficient information in the decoding process. When it is identified that the residual block of the chroma component block is not present, the quantized transform coefficient information in the residual block of the chroma component block may not be signaled, and the residual block may be set to have only values of '0'.

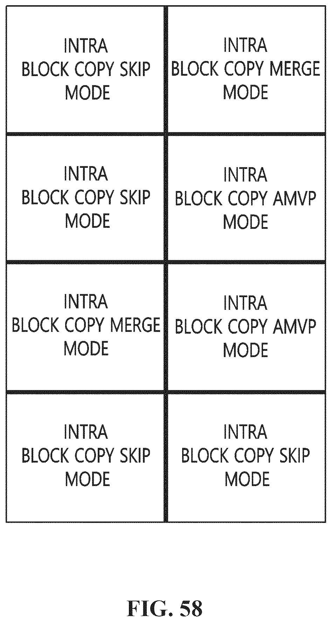

FIG. 58 illustrates the case where prediction coding modes of luma component subblocks corresponding to a chroma component block are different from each other according to an example.

When the prediction mode of a current chroma component block is an intra block copy mode or when all of the prediction modes of subblocks included in a luma component block corresponding to the current chroma component block indicate the intra block copy mode, there may occur the case where the prediction modes of the luma component subblocks corresponding to the chroma component block are different intra block copy modes (e.g., an intra block copy skip mode, an intra block copy merge mode, and an intra block copy AMVP mode).

For example, as illustrated in FIG. 58, two or more of the intra block copy skip mode, the intra block copy merge mode, and the intra block copy AMVP mode may be used for the corresponding luma component block.

In this case, information identifying whether quantized transform coefficients in the residual blocks of the chroma component Cr and the chroma component Cb are present (e.g., an identifier, a flag, an index or cu_cbf) may always be signaled, regardless of the types of prediction modes of the subblocks included in the corresponding luma component block.

Furthermore, when the information identifying whether quantized transform coefficients in the residual blocks of the chroma component Cr and the chroma component Cb are present (e.g., an identifier, a flag, an index or cu_cbf) has a first value indicating the presence of the residual blocks, a component for which a quantized transform coefficient in a residual block is not present may exist between the chroma component Cr and the chroma component Cb. Therefore, in this case, identifiers, each indicating whether a quantized transform coefficient in the residual block of the corresponding component is present (e.g., tu_cbf_cr and tu_cbf_cb for chroma components), may be signaled. When the identifier indicating whether a quantized transform coefficient in the residual block of the chroma component Cr is present (e.g., tu_cbf_cr) has a first value, information about the quantized transform coefficient in the residual block for the component Cr may be signaled. When the identifier indicating whether a quantized transform coefficient in the residual block of the chroma component Cb is present (e.g., tu_cbf_cr) has a first value, information about the quantized transform coefficient in the residual block for the component Cb may be signaled. The residual block may be derived through dequantization and/or inverse transform on the signaled quantized transform coefficient information in the decoding process. When it is identified that the residual block of the chroma component block is not present, the quantized transform coefficient information in the residual block of the chroma component block may not be signaled, and the residual block may be set to have only values of '0'.

## Reconstructed block configuration

Hereinafter, residual block derivation at steps 2740 and 2850 will be described.

A luma component reconstructed block may be configured by adding the residual block of a luma component block to a prediction block for the luma component block.

When a luma component residual block is not present, the luma component prediction block may be set as the luma component reconstructed block.

A chroma component reconstructed block may be configured by adding the residual block of a chroma component (Cb or Cr) block to a prediction block for the chroma component (Cb or Cr) block.

When there is no chroma component (Cb or Cr) residual block, the chroma component (Cb or Cr) prediction block may be set as the chroma component (Cb or Cr) reconstructed block.

**Entropy encoding/decoding of intra block copy-related coding information**

Hereinafter, entropy encoding/decoding at step 2750 and step 2860 will be described.

Entropy encoding/decoding may be performed on intra block copy-related coding information. Here, the intra block copy-related coding information may include at least one of the following pieces of information.

- cu_skip_flag indicating whether a skip mode is used,
- merge_flag indicating whether a merge mode is used,
- merge index merge_idx indicating a merge candidate,
- pred_mode_flag indicating whether a prediction mode is an intra-prediction mode,
- pre_mode_ibc_flag indicating whether the prediction mode is an inter-prediction mode or an intra block copy mode,
- block vector candidate index mvp_10_flag
- block vector difference
- cu_cbf, tu_cbf_luma, tu_cbf_cb, and tu_cbf_cr indicating whether a quantized transform coefficient is present in a residual block

cu_skip_flag may refer to skip mode usage information, and may be entropy encoded/decoded for at least one or more units among a coding block and a prediction block. For example, the skip mode usage information equal to a first value (e.g., 1) may indicate that the skip mode is used, and the skip mode information equal to a second value (e.g., 0) may indicate that the skip mode is used.

merge_flag may refer to merge mode usage information, and may be entropy encoded/decoded on at least one or more units of a coding block and a prediction block. For example, the merge mode information equal to a first value (e.g., 1) may indicate that the merge mode is used, and the merge mode information equal to a second value (e.g., 0) may indicate that the merge mode is used. Here, merge_flag may indicate whether an intra block copy merge mode is used.

merge_idx may refer to information indicating a merge candidate in a merge candidate list, and may be entropy encoded/decoded on at least one or more units of a coding block and a prediction block.

Also, merge _idx may denote merge index information. Further, merge_idx may indicate a block for deriving a merge candidate among blocks reconstructed to be spatially adjacent to the current block.

Furthermore, merge_idx may denote at least one of pieces of motion information that the merge candidate has.

For example, when the merge index information has a first value (e.g., 0), the merge index information may indicate a first merge candidate in a merge candidate list. When the merge index information has a second value (e.g., 1), the merge index information may indicate the first merge candidate in the merge candidate list. When the merge index information has a third value (e.g., 2), the merge index information may indicate the first merge candidate in the merge candidate list. Similarly, when the merge index information has any one value of fourth to N-th values, the merge index may indicate a merge candidate corresponding to the value of the merge index in the order of merge candidates in the merge candidate list. Here, N may be an integer of 0 or more.

Here, merge_idx may indicate a merge index used in an intra block copy merge mode. That is, the merge candidate list may refer to a block vector candidate list, and a merge candidate may refer to a block vector candidate.

pred_mode_flag may be information indicating whether an intra-prediction mode is applied, and may be entropy encoded/decoded on at least one or more units among a coding block, a prediction block or a coding unit.

For example, the case where the value of information indicating whether the intra-prediction mode is applied is a first value (e.g., 1) may indicate that the intra-prediction mode is applied, and the case where the value of the information indicating whether the intra-prediction mode is applied is a second value (e.g., 0) may indicate that the intra-prediction mode is not applied.

pred_mode_ibc_flag may refer to information indicating whether an intra block copy mode is applied, and may be entropy encoded/decoded on at least one or more units among a coding block, a prediction block or a coding unit. For example, the case where the value of the information indicating whether the intra block copy mode is applied is a first value (e.g., 1) may indicate that the intra block copy mode is applied. For example, the case where the value of the information indicating whether the intra block copy mode is applied is a second value (e.g., 0) may indicate that the intra block copy mode is not applied.

A block vector candidate index mvp_10_flag may indicate a prediction block vector used by the current block among prediction block vectors in a prediction block vector candidate list of the intra block copy AMVP mode. For this indication, the block vector candidate index may be entropy encoded/decoded. A prediction block for the current block may be derived using the block vector candidate index and the prediction block vector candidate list. Here, the block vector candidate index may refer to an L0 block vector prediction flag.

The block vector difference may refer to the difference between the block vector and the prediction block vector (i.e., a predicted block vector) in the intra block copy AMVP mode. The block vector difference for the current block may be entropy encoded/decoded. The prediction block for the current block may be derived using the block vector difference.

Among cu_cbf, tu_cbf_luma, tu_cbf_cb and tu_cbf_cr indicating whether a quantized transform coefficient in a residual block is present, cu_cbf may indicate whether a quantized transform coefficient of a luma component block and a quantized transform coefficient of a chroma component block are present when a luma component and a chroma component have the same block partitioning structure. Further, cu_cbf may indicate whether a quantized transform coefficient of a luma component block or a chroma component block is present when a luma component and a chroma component have independent block partitioning structures. The case where the information indicating whether a quantized transform coefficient is present has a second value (e.g., 0) may indicate that quantized transform coefficients in blocks is not present.

tu_cbf_luma may indicate whether a quantized transform coefficient of the luma component block is present.

tu_cbf_cr and tu_cbf_cb may indicate whether quantized transform coefficients of a chroma component Cr and a chroma component Cb, respectively, are present. The case where the information indicating whether a quantized transform coefficient of a luma component block is present has a first value (e.g., 1) may indicate that the quantized transform coefficient of the luma component block is present. The case where the information indicating whether a quantized transform coefficient of a luma component block is present has a second value (e.g., 0) may indicate that the quantized transform coefficient of the luma component block is not present.

The case where the information indicating whether a quantized transform coefficient of a specific chroma component (Cb or Cr) block is present has a first value (e.g., 1) may indicate that the quantized transform coefficient of the specific chroma component block is present. The case where the information indicating whether a quantized transform coefficient of a specific chroma component (Cb or Cr) block is present has a second value (e.g., 0) may indicate that the quantized transform coefficient of the specific chroma component block is not present.

At least one of pieces of intra block copy-related coding information may be signaled/encoded/decoded for a specific unit.

### Information signaling in embodiments

In embodiments, the specific unit may include at least one of a parameter set, a header, a brick, CTU, CU, PU, TU, CB, PB, and TB. Further, the specific unit may include units determined for signaling/encoding/decoding described in embodiments.

In embodiments, at least one of the parameter set, header, brick, CTU, CU, PU, TU, CB, PB, and TB, described as the specific unit, may be at least one of a video parameter set, a decoding parameter set, a sequence parameter set, an adaptation parameter set, a picture parameter set, a picture header, a sub-picture header, a slice header, a tile group header, a tile header, a brick, a Coding Tree Unit (CTU), a Coding Unit (CU), a Prediction Unit (PU), a Transform Unit (TU), a Coding Block (CB), a Prediction Block (PB), and a Transform Block (TB).

Here, prediction using an intra block copy mode that exploits intra block copy-related coding information may be performed for at least one of specific units to be signaled.

For example, when at least one of pieces of intra block copy-related coding information is entropy encoded/decoded in a sequence parameter set, prediction using the intra block copy mode may be performed by exploiting at least one of pieces of intra block copy-related coding information having the same syntax element value at a sequence unit (or level).

For example, when at least one of pieces of intra block copy-related coding information is entropy encoded/decoded in a slice header, prediction using the intra block copy mode may be performed by exploiting at least one of pieces of intra block copy-related coding information having the same syntax element value in a slice header unit (or level).

For example, when at least one of pieces of intra block copy-related coding information is entropy encoded/decoded in an adaptation parameter set, prediction using the intra block copy mode may be performed by exploiting at least one of pieces of intra block copy-related coding information having the same syntax element value in units which refer to the same adaptation parameter set.

For example, when at least one of pieces of intra block copy-related coding information is entropy encoded/decoded in a CU, prediction using the intra block copy mode may be performed by exploiting at least one of pieces of intra block copy-related coding information having the same syntax element value for the CU.

For example, when at least one of pieces of intra block copy-related coding information is entropy encoded/decoded in a CB, prediction using the intra block copy mode may be performed by exploiting at least one of pieces of intra block copy-related coding information having the same syntax element value for the CB.

For example, when at least one of pieces of intra block copy-related coding information is entropy encoded/decoded in a PU, prediction using the intra block copy mode may be performed by exploiting at least one of pieces of intra block copy-related coding information having the same syntax element value for the PU.

For example, when at least one of pieces of intra block copy-related coding information is entropy encoded/decoded in a PB, prediction using the intra block copy mode may be performed by exploiting at least one of pieces of intra block copy-related coding information having the same syntax element value for the PB.

For example, when at least one of pieces of intra block copy-related coding information is entropy encoded/decoded in a CU, prediction using the intra block copy mode may be performed by exploiting at least one of pieces of intra block copy-related coding information having the same syntax element value for the TU.

For example, when at least one of pieces of intra block copy-related coding information is entropy encoded/decoded in a TB, prediction using the intra block copy mode may be performed by exploiting at least one of pieces of intra block copy-related coding information having the same syntax element value for the TB.

Here, at least one of pieces of intra block copy-related coding information may be derived depending on at least one of the coding parameters of the current block/CTB/CTU.

When at least one of pieces of intra block copy-related coding information is not present in a bitstream, the at least one of the pieces of intra block copy-related coding information may be inferred as a first value (e.g., 0).

The adaptation parameter set may refer to a parameter set that can be referenced and shared by different pictures, sub-pictures, slices, tile groups, tiles, or bricks. Further, sub-pictures, slices, tile groups, tiles, or bricks in a picture may refer to different adaptation parameter sets, respectively, and may use information in the referenced adaptation parameter set.

Furthermore, sub-pictures, slices, tile groups, tiles, or bricks in a picture may refer to different adaptation parameter sets, respectively, using the identifiers of the different adaptation parameter sets.

Furthermore, slices, tile groups, tiles, or bricks in a sub-picture may refer to different adaptation parameter sets, respectively, using the identifiers of different adaptation parameter sets.

Furthermore, tiles or bricks in a slice may refer to different adaptation parameter sets, respectively, using the identifiers of different adaptation parameter sets.

Furthermore, for the adaptation parameter sets, bricks in a tile may refer to different adaptation parameter sets using the identifiers of different adaptation parameter sets.

The parameter set or header of a sub-picture may include information about the identifier of the corresponding adaptation parameter set. The adaptation parameter set corresponding to each adaptation parameter set identifier may be used in a sub-picture.

The parameter set or header of a tile may include information about the identifier of the adaptation parameter set. The adaptation parameter set corresponding to the adaptation parameter set identifier may be used in the tile.

The header of the brick may include information about the adaptation parameter set identifier. The adaptation parameter set corresponding to the adaptation parameter set identifier may be used in the brick.

A picture may be partitioned into one or more tile rows and one or more tile columns.

A sub-picture may be partitioned into one or more tile rows and one or more time columns in a picture. A sub-picture may be a region having a rectangular/square shape in a picture, and may include one or more CTUs. Further, at least one tile/brick/slice may be included in one sub-picture.

A tile may be a region having a rectangular/square shape in a picture, and may include one or more CTUs. Also, the tile may be partitioned into one or more bricks.

A brick may represent one or more CTU rows in a tile. The tile may be partitioned into one or more bricks, and each brick may have at least one CTU row. A tile that is not partitioned into two or more bricks may also represent a brick.

A slice may include one or more tiles in a picture, and may include one or more bricks in a tile.

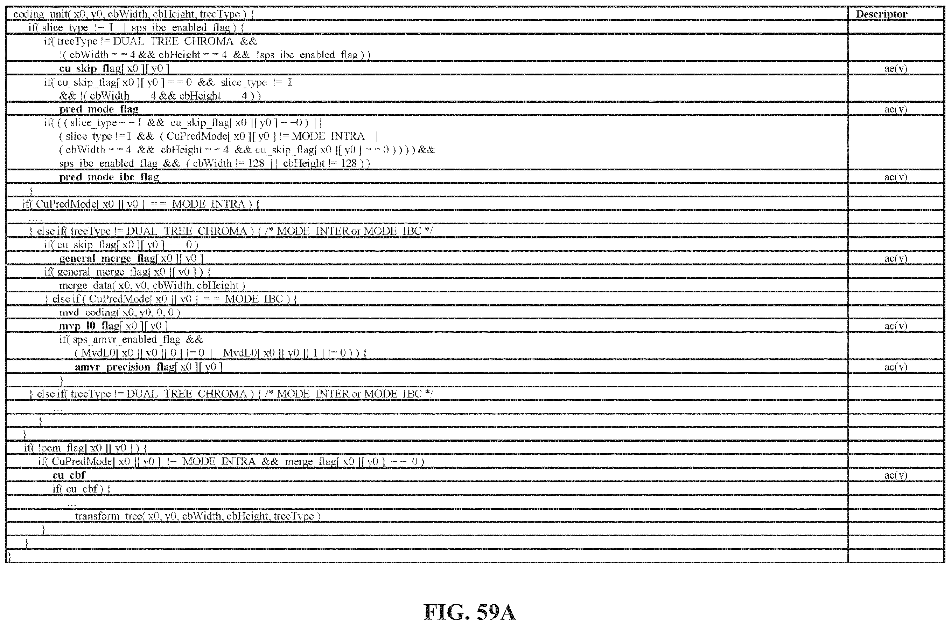

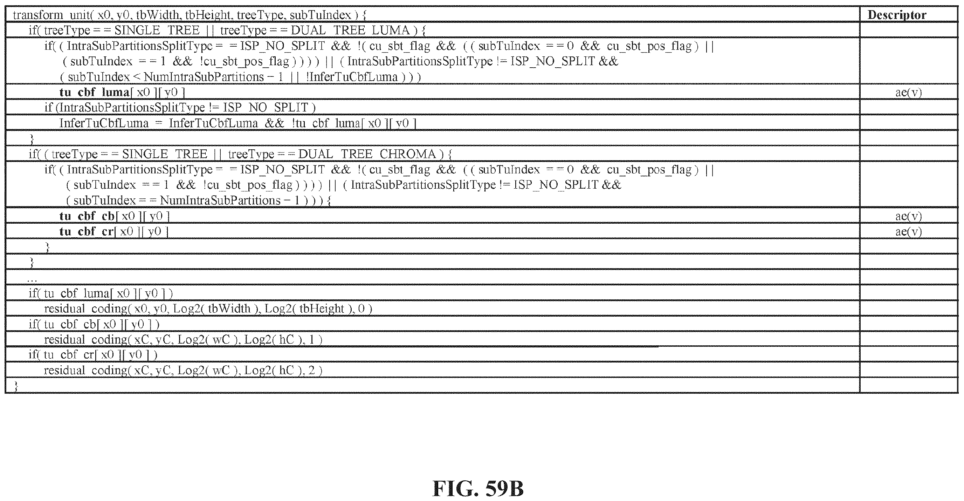

FIGS. 59A and 59B illustrate coding information signaled for a block partitioning structure according to an example.

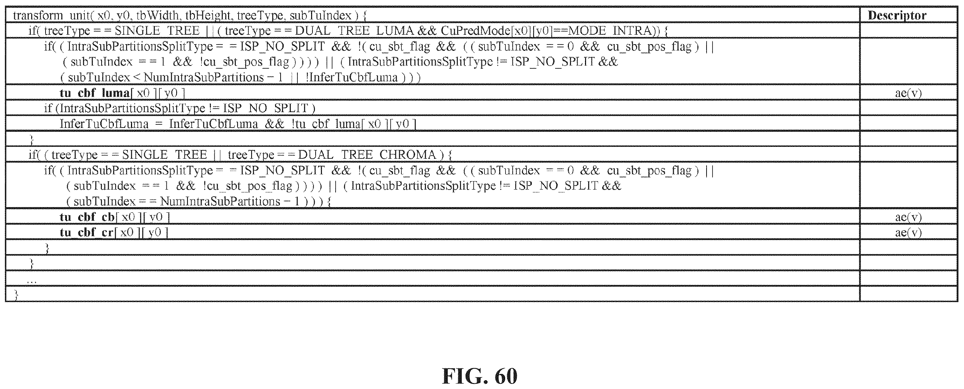

FIG. 60 illustrates another type of coding information signaled for a block partitioning structure according to an example.

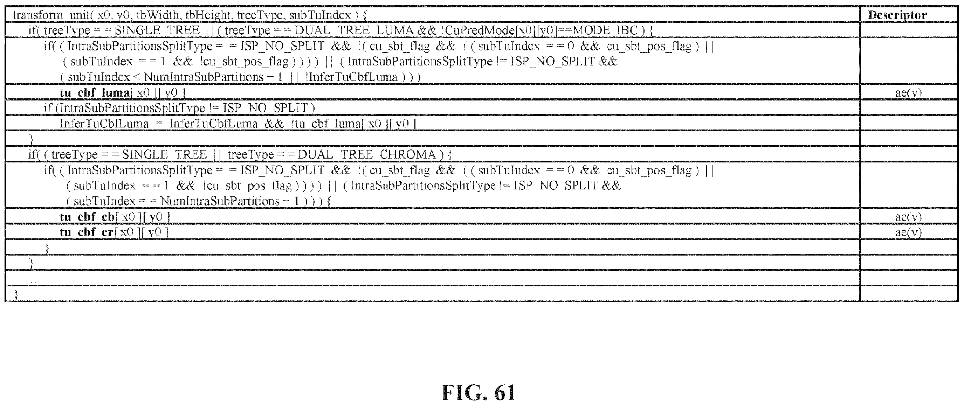

FIG. 61 illustrates a method for signaling coding information from which information redundancy is removed according to an example.

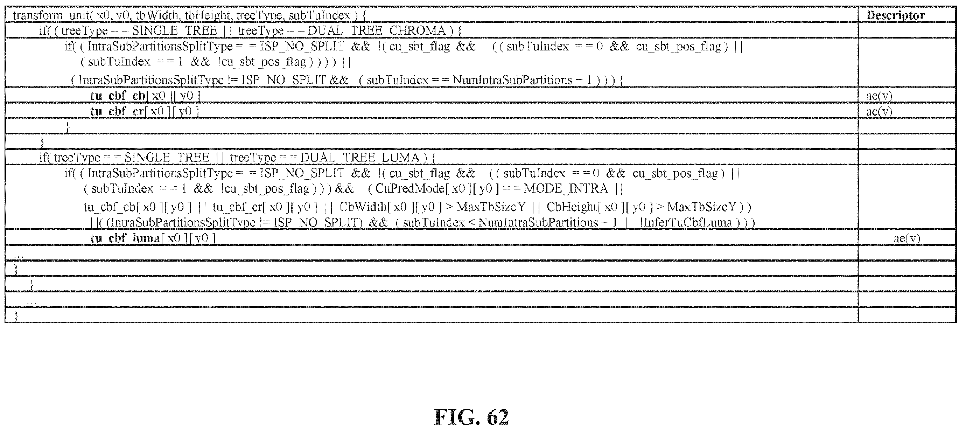

FIG. 62 illustrates another method for signaling coding information from which information redundancy is removed according to an example.

In particular, FIGS. 60 to 62 illustrate a method for removing redundant signaling of cu_cbf and tu_cbf_luma indicating the same information when independent block partitioning structures are used and prediction using an intra block copy mode is utilized for a luma component block.

As illustrated in FIG. 60, when a block is a luma component block having an independent block partitioning structure (i.e., when treeType is DUAL_TREE_LUMA), tu_cbf_luma may be signaled only in the case where the prediction mode of the block is an intra-prediction mode (i.e., when CuPredMode[x0][y0] == MODE_INTRA). By means of this limitation, in the case where the prediction mode of the luma component block having an independent block partitioning structure is an intra block copy mode, tu_cbf_luma may not be signaled.

As illustrated in FIG. 61, when a block is a luma component block having an independent block partitioning structure (i.e., when treeType is DUAL_TREE_LUMA), tu_cbf_luma may be signaled only in the case where the prediction mode of the block is not an intra block copy mode (i.e., when CuPredMode[x0][y0] != MODE_IBC). By means of this limitation, in the case where the prediction mode of the luma component block having an independent block partitioning structure is the intra block copy mode, tu_cbf_luma may not be signaled.

As illustrated in FIG. 62, in a structure in which tu_cbf_luma is signaled based on tu_cbf_cb and tu_cbf_cr, when the prediction mode of the luma component block having an independent block partitioning structure is the intra block copy mode, tu_cbf_luma may not be signaled.

When a block is a luma component block having an independent block partitioning structure (i.e., when treeType is DUAL_TREE_LUMA), tu_cbf_cb and tu_cbf_cr may not be signaled. When tu_cbf_luma is not signaled, tu_cbf_cb and tu_cbf_cr may be individually set in an encoding/decoding process to have a value of 0.

In this case, according to an embodiment of FIG. 62, tu_cbf_luma may not be signaled when both of tu_cbf_cb and tu_cbf_cr are 0. Here, the value of tu_cbf_luma that is not signaled may be set to cu_cbf.

As shown in the examples of FIGS. 60 to 62, when a block has an independent block partitioning structure and prediction using an intra block copy mode is applied to a luma component block, tu_cbf_luma may not be signaled, and the value of cu_cbf may be set as the value of tu_cbf_luma.

In FIGS. 60 to 62, IntraSubPartitionsSplitType may indicate whether a block is partitioned (split) into subblocks when intra-prediction is applied, and prediction is performed on the partitioned subblocks.

When prediction using the intra block copy mode is applied to the luma component block, the block is not partitioned into subblocks in encoding/decoding of the block. Therefore, IntraSubPartitionsSplitType may have the value of ISP_NO_SPLIT indicating that the block is not partitioned into subblocks.

Also, cu_sbt_flag may indicate whether transform on the unit of a subblock is performed when inter-prediction is used. The transform on the unit of a subblock may not be applied when prediction using an intra block copy mode is applied. Therefore, when the prediction mode of the target block is the intra block copy mode, cu_sbt_flag may always have a value of '0'.

tu_joint_cbcr_residual may be an indicator indicating a scheme for unifying and encoding/decoding residual signals of chroma components (Cb component and Cr component). When the value of tu_joint_cbcr_residual of a block (e.g., a transform block or a transform unit) is a second value (e.g., 1), at least one of tu_cbf_cb and tu_cbf_cr for the block may not be signaled/encoded/decoded. Also, when the value of tu_joint_cbcr_residual of a block (e.g., a transform block or a transform unit) is a first value (e.g., 0), at least one of tu_cbf_cb and tu_cbf_cr for the block may be signaled/encoded/decoded.

For example, when a residual signal of a specific component is not present in a bitstream depending on the value of tu_joint_cbcr_residual, tu_cbf_cb or tu_cbf_cr for the specific component may not be signaled/encoded/decoded for a block of the specific component (e.g., a transform block and a transform unit).

Here, tu_joint_cbcr _residual may indicate whether the residual signal of the Cb component is used to derive residual signals of the Cb component and the Cr component.

For example, the case where the tu_joint_cbcr residual has a first value (e.g., 0) may indicate that the residual signal of the Cr component is present in a bitstream depending on another syntax element value. The case where tu_joint_cbcr_residual has a second value (e.g., 1) may indicate that the residual signal of the Cb component is used to derive residual signals of the Cb component and the Cr component.

When tu_joint_cber residual means that the residual signal of the Cb component is used to derive the residual signals of the Cb component and the Cr component, the Cr component may be used as the specific component, and the residual signal of the Cr component may not be present in the bitstream. In this case, for the block of the Cr component (transform block or transform unit), tu_cbf_cr may not be signaled/encoded/decoded.

Further, tu_joint_cbcr_residual may indicate whether the residual signal of the Cr component is used to derive residual signals of the Cb component and the Cr component.

For example, the case where the tu_joint_cbcr _residual has a first value (e.g., 0) may indicate that the residual signal of the Cb component is present in a bitstream depending on another syntax element value. The case where tu_joint_cbcr _residual has a second value (e.g., 1) may indicate that the residual signal of the Cr component is used to derive residual signals of the Cb component and the Cr component.

When tu_joint_cbcr residual means that the residual signal of the Cr component is used to derive the Cb component and the residual signal of the Cr component, the Cb component may be used as the specific component, and the residual signal of the Cb component may not be present in the bitstream. In this case, for the block of the Cb component (transform block or transform unit), tu_cbf_cr may not be signaled/encoded/decoded.

## Syntax elements in embodiments

### amvr_flag:

amvr_flag may indicate whether a method of determining the resolution of a block vector is applied when the prediction mode of the current block is an intra block copy mode.

When the prediction mode of the current block is the intra block copy mode and the value of amvr_flag is not present, the value of amvr_flag may be inferred as 1.

### amvr_precision_flag:

When the prediction mode of the current block is an intra block copy mode and the value of amvr_precision_flag is not present, the value of amvr_ precision_flag may be inferred as 1.

### amvr_precision_idx:

When the prediction mode of the current block is an intra block copy mode and the value of amvr_precision_idx is not present, the value of amvr_precision_idx may be inferred as 1.

amvr_precision_idx may have an integer value less than or equal to the value of max_amvr_precision_idx.

### max_amvr_precision_idx:

The value of max _amvr_precision _idx may be an integer of 0 or more.

The value of max_amvr_precision _idx may be an integer less than or equal to 8.

When the value of max _amvr_precision _idx is not present, the value of max_amvr_precision_idx may be inferred as a predefined value.

When the value of max_amvr_precision_idx is not present, the value of max_amvr_precision_idx may be inferred as the sum of num_amvr_precisions and num_additional_amvr_precisions.

The following [Table 27] shows an integer sample unit size corresponding the value of amvr_ precision_idx when the prediction mode of the current block is an intra block copy mode.

**[Table 27]**

| Amvr_precision_idx | AMVR rounding shift |
|---|---|
| | CuPredMode[ chType ][x0][y0] == MODE_IBC |
| 0 | 4 (1 luma sample) |
| 1 | 5 (2 luma samples) |
| 2 | 6 (4 luma samples) |
| 3 | 7 (8 luma samples) |

Here, the available values of amvr_precision_idx may be limited to 0 to 3.

Here, when the value of max _amvr_precision _idx is not present, the value of max_amvr_precision_idx may be inferred as 3.

### max_amvr_precision:

The value of max_amvr_precision may be an integer of 0 or more.

The value of max_amvr_precision may be an integer less than or equal to 128.

The value of max _amvr_precision may be an integer less than or equal to log(128).

When the value of max_amvr_precision is not present, it may be inferred as a predefined value, as in the case of an embodiment.

In the case where the value of max _amvr_precision is present, an integer sample unit size value applied to the corresponding block vector may be determined by the value of max _amvr_precision when the value of amvr_precision_idx is equal to a maximum value that amvr_precision_idx can have.

**amvr_separate_prec_flag:**

amvr_separate_prec_flag may be a value indicating whether integer sample unit size values applied to the horizontal value and the vertical value of the block vector, respectively, are identical to each other.

Here, when the value of amvr_separate_prec_flag is 0, the same integer sample unit size may be applied to the horizontal direction and the vertical direction of the block vector.

Here, when the value of amvr_separate_prec_flag is 1, different integer sample unit sizes may be applied to the horizontal direction and the vertical direction of the block vector, respectively.

amvr_separate_prec_flag may be a value indicating which one of the horizontal direction and the vertical direction of the block vector is a reference direction.

Here, when the value of amvr_separate_prec_flag is 0, the vertical direction of the block vector may be the reference direction.

Here, when the value of amvr__separate_prec_flag is 0, the horizontal direction of the block vector may be the reference direction.

When there is no amvr _separate_prec_flag, it may be inferred as 0.

**amvr_separate_precision:**

amvr_separate_precision may be a value indicating the ratio between integer sample unit size values applied to the horizontal direction and the vertical direction of the block vector, respectively.

The value of amvr_separate_precision may be an integer of 0 or more.

When the value of amvr__separate_prec_flag is 0, the value of amvr_separate_ precision may be inferred as 0.

When the value of amvr__separate_precision is a non-zero integer, the value of amvr_separate_prec_flag may be inferred as 1.

The value of amvr_separate_precision may be an integer less than or equal to 128.

The value of amvr_separate_precision may be an integer less than or equal to log(128).

When the value of amvr_separate_precision is not present, the value of amvr_separate precision may be inferred as 0.

Here, when the value of amvr _separate_precision is 0, the same integer sample unit size value may be applied to the horizontal direction and the vertical direction of the block vector.

When the value of amvr_separate_precision is used, one of the horizontal direction and the vertical direction of the block vector may be defined as a reference direction.

Here, when the vertical direction is the reference direction for the non-zero value of amvr_separate_precision, the horizontal value of the block vector may be inferred as $2^{amvr}$_separate_precision times the vertical value thereof.

Here, when the horizontal direction is the reference direction for the non-zero value of amvr_separate_precision, the vertical value of the block vector may be inferred as $2^{amvr}$_separate_precision times the vertical value thereof.

The value of amvr _separate_precision may be an integer equal to or greater than -128 and less than or equal to 128.

When the value of amvr_separate_prec_flag is 0, the value of amvr_separate_precision may be inferred as 0.

When the value of amvr_separate_precision is a non-zero integer, the value of amvr_separate_prec_flag may be inferred as 1.

When the value of amvr__separate_precision is a non-zero integer, the value of amvr_separate_prec_flag may be inferred as -1.

The value of amvr_separate_precision may be an integer equal to or greater than -log(128) and less than or equal to log(128).

**num_amvr_precisions:**

num_amvr_precisions may be the number of integer sample unit size values that can be applied to a block vector.

When the value of num_amvr_precisions is not present, the value of num_amvr_precisions may be inferred as 0.

When the value of num_amvr_precisions is not present, the value of num_amvr_precisions may be inferred as the predefined number of integer sample unit size values.

When the value of num_amvr_precisions is not present, the value of num_amvr_precisions may be inferred as the value of max _amvr_precision _idx.

The value of num_amvr_precisions may be an integer greater than 0.

**amvr_precisions[num_amvr_precisions]:**

amvr_precisions[num_amvr_precisions] may be a set of integer sample unit size values having the sizes of non-zero values of num_amvr_precisions.

When the value of num_amvr_precisions is 0, amvr_precisions may be omitted.

When the value of num_amvr_precisions is greater than 0, element values of amvr_precisions[i] indicated by integer i that is equal to or greater than 0 and less than num_amvr_precisions may be a sequence of integer sample unit sizes of the block vector or log values thereof.

The amvr_precisions set may be composed of the integer sample unit size values of the block vector indicated by amvr_flag, amvr_precision_flag and/or amvr_precision_idx.

**num_additional_amvr_precisions:**

num_additional_amvr_precisions may refer to the number of integer sample unit size values of the block vector, which can be additionally used in addition to integer sample unit size values that can be applied to the block vector derived by the predefined num_amvr_precisions and/or amvr_precisions set.

When the value of num_additional_amvr_precisions is not present, the value of num_additional_amvr_precisions may be inferred as 0.

The value of num_additional_amvr_precisions may be an integer greater than 0.

When the value of num_additional_amvr_precisions is not present, the value of num_additional_amvr_precisions may be inferred as a difference value between the value of max_amvr_precision_idx and the value of max _amvr_precision _idx.

**additional_amvr_precisions[num_additional_amvr_precisions]:**

_additionalamvr_precisions[num _additional_amvr_precisions] may be a set of integer sample unit size values having sizes of non-zero values of num_additional_amvr_precisions.

When the value of num_additional_amvr_precisions is 0, additional_amvr_precisions may be omitted.

When the value of num_additional_amvr_precisions is greater than 0, element values of additional_amvr_precisions[i] indicated by integer i that is equal to or greater than 0 and less than num_additional_amvr_precisions may be a sequence of integer sample unit sizes of the block vector or log values thereof.

The _additionalamvr_precisions set may be composed of the integer sample unit size values of the block vector indicated by amvr_flag, amvr_precision_flag and/or amvr_precision_idx.

## Binarization, debinarization, and entropy encoding/decoding methods

At least one of syntax elements for intra block copy-related coding information that is entropy encoded by the encoder and is entropy decoded by the decoder may use at least one of the following binarization, debinarization, and entropy encoding/decoding methods.

- Signed 0-th order Exp_Golomb binarization/debinarization method (abbreviated as se(v))
- Signed k-th order Exp_Golomb binarization/debinarization method (abbreviated as sek(v))
- 0-th order Exp_Golomb binarization/debinarization method for an unsigned positive integer (abbreviated as ue(v))
- k-th order Exp_Golomb binarization/debinarization method for an unsigned positive integer (abbreviated as uek(v))
- Fixed-length binarization/debinarization method (abbreviated as f(n))
- Truncated Rice binarization/debinarization method or truncated unary binarization/debinarization method (abbreviated as tu(v))
- Truncated binary binarization/debinarization method (abbreviated as tb(v))
- Context-adaptive arithmetic encoding/decoding method (abbreviated as ae(v))
- Bit string in bytes (abbreviated as b(8))
- Signed integer binarization/debinarization method (abbreviated as i(n))
- Unsigned positive integer binarization/debinarization method (abbreviated as u(n)) (where 'u(n)' may denote a fixed-length binarization/debinarization method).
- Unary binarization/debinarization method

When at least one of pieces of intra block copy-related coding information is entropy encoded/decoded, a context model may be determined using at least one of pieces of intra block copy-related coding information of a neighbor block; or at least one of pieces of intra block copy-related coding information that are previously encoded/decoded; or information about current unit/block depth; or information about current unit/block size.

At least one of pieces of intra block copy-related coding information may be signaled/encoded/decoded by utilizing the at least one of pieces of intra block copy-related coding information of a neighbor block; or the at least one of pieces of intra block copy-related coding information that are previously encoded/decoded; or information about current unit/block depth; or the information about the current unit/block size, as a prediction value for at least one of the pieces of intra block copy-related coding information.

Any one of the embodiments is not limitedly applied to an encoding/decoding process for the current block, and a specific embodiment or at least one combination of embodiments may be applied to the encoding/decoding process for the current block.

A possible binarization method for entropy encoding/decoding of syntax elements for implementing the present disclosure may be performed as described below.

**amvr_flag** may be,

- binarized and entropy encoded/decoded by unary binarization(u(1)).

**amvr_precision_flag** may be,

- binarized and entropy encoded/decoded by unary binarization(u(1)).

**amvr_precision_idx** may be binarized and entropy encoded/decoded using one of,

- unsigned positive integer binarization/debinarization method (u(n));
- 0-th order Exp_Golomb binarization/debinarization method for an unsigned positive integer (ue(v));
- fixed-length binarization/debinarization method (f(n));
- truncated rice binarization/debinarization method or truncated unary binarization/debinarization method (tu(v));
- truncated binary binarization/debinarization method (tb(v)); and
- context-adaptive arithmetic encoding/decoding method (ae(v)).

**max_amvr_precision_idx** may be binarized and entropy encoded/decoded using one of

- unsigned positive integer binarization/debinarization method (u(n));
- 0-th order Exp_Golomb binarization/debinarization method for an unsigned positive integer (ue(v));
- fixed-length binarization/debinarization method (f(n));
- truncated rice binarization/debinarization method or truncated unary binarization/debinarization method (tu(v));
- truncated binary binarization/debinarization method (tb(v)); and
- context-adaptive arithmetic encoding/decoding method (ae(v)).

**max_amvr_precision** may be binarized and entropy encoded/decoded using one of

- unsigned positive integer binarization/debinarization method (u(n));
- 0-th order Exp_Golomb binarization/debinarization method for an unsigned positive integer (ue(v));
- fixed-length binarization/debinarization method (f(n));
- truncated rice binarization/debinarization method or truncated unary binarization/debinarization method (tu(v));
- truncated binary binarization/debinarization method (tb(v)); and
- context-adaptive arithmetic encoding/decoding method (ae(v)).

**amvr_separate_prec_flag** may be,

- binarized and entropy encoded/decoded by unary binarization(u(1)).

**amvr_separate_precision** may be binarized and entropy encoded/decoded using one of

- unsigned positive integer binarization/debinarization method (u(n));
- 0-th order Exp_Golomb binarization/debinarization method for an unsigned positive integer (ue(v));
- signed 0-th order Exp_Golomb binarization/debinarization method (se(v));
- k-th order Exp_Golomb binarization/debinarization method for an unsigned positive integer (uek(v));
- signed k-th order Exp_Golomb binarization/debinarization method (sek(v));
- fixed-length binarization/debinarization method (f(n));

- truncated rice binarization/debinarization method or truncated unary binarization/debinarization method (tu(v));
- truncated binary binarization/debinarization method (tb(v)); and
- context-adaptive arithmetic encoding/decoding method (ae(v)).

**num_amvr_precisions** may be binarized and entropy encoded/decoded using one of

- unsigned positive integer binarization/debinarization method (u(n));
- 0-th order Exp_Golomb binarization/debinarization method for an unsigned positive integer (ue(v));
- fixed-length binarization/debinarization method (f(n));
- truncated rice binarization/debinarization method or truncated unary binarization/debinarization method (tu(v));
- truncated binary binarization/debinarization method (tb(v)); and
- context-adaptive arithmetic encoding/decoding method (ae(v)).

**amvr_precisions[num_amvr_precisions]** may be binarized and entropy encoded/decoded using one of

- unsigned positive integer binarization/debinarization method (u(n));
- 0-th order Exp_Golomb binarization/debinarization method for an unsigned positive integer (ue(v));
- fixed-length binarization/debinarization method (f(n));
- truncated rice binarization/debinarization method or truncated unary binarization/debinarization method (tu(v));
- truncated binary binarization/debinarization method (tb(v)); and
- context-adaptive arithmetic encoding/decoding method (ae(v)).

**num_additional_amvr_precisions** may be binarized and entropy encoded/decoded using one of

- unsigned positive integer binarization/debinarization method (u(n));
- 0-th order Exp_Golomb binarization/debinarization method for an unsigned positive integer (ue(v));
- fixed-length binarization/debinarization method (f(n));
- truncated rice binarization/debinarization method or truncated unary binarization/debinarization method (tu(v));
- truncated binary binarization/debinarization method (tb(v)); and
- context-adaptive arithmetic encoding/decoding method (ae(v)).

**additional_amvr_precisions[num_additional_amvr_precisions]** may be binarized and entropy encoded/-decoded using one of

- unsigned positive integer binarization/debinarization method (u(n));
- 0-th order Exp_Golomb binarization/debinarization method for an unsigned positive integer (ue(v));
- fixed-length binarization/debinarization method (f(n));
- truncated rice binarization/debinarization method or truncated unary binarization/debinarization method (tu(v));
- truncated binary binarization/debinarization method (tb(v)); and
- context-adaptive arithmetic encoding/decoding method (ae(v)).

In embodiments, each of values capable of indicating the integer sample unit size of a block vector applied to the intra block copy mode and/or syntaxes capable of indicating the integer sample unit size and/or values used in a series of processes for deriving those values may be an integer sample unit size value, a shift value applied to a rounding procedure for applying the integer sample unit size, or the log (log2) value of the integer sample unit size value.

Such a shift value may refer to a left shift value and/or right shift value.

The log value may refer to a value calculated from a base-2 logarithm function.

The integer sample unit size may refer to the resolution of a block vector.

In embodiments, the resolution of a block vector may be applied to the resolution of the block vector, the resolution of a block vector difference, and/or the resolution of a block vector prediction value.

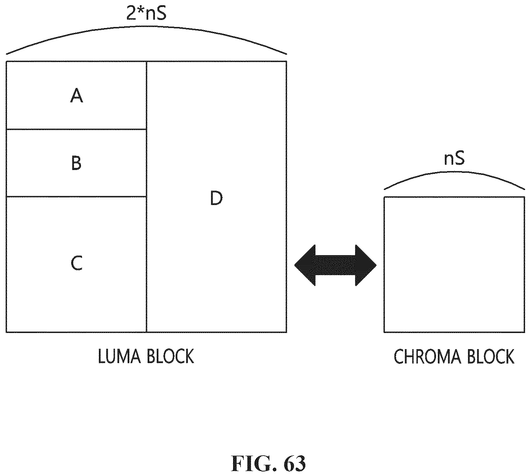

FIG. 63 illustrates a luma block and a chroma block when the ratio between color components is 4:2:0 according to an example.

In the following embodiment, a method for encoding/decoding a chroma component using the same intra-prediction mode as the intra-prediction mode of a luma component is described.

The intra-prediction mode of the current block may be derived using the intra-prediction mode of another color component (e.g., luma, chroma, etc.).

For example, when the current block is a chroma block, the intra-prediction mode of a luma corresponding block corresponding to a chroma target block may be used when an intra-prediction mode for the chroma block is derived.

Here, the luma corresponding block may include one or more luma corresponding blocks, and may be determined based on at least one of the size/shape or coding parameter of the chroma block. Alternatively, the luma corresponding block may be determined based on at least one of the size/shape or coding parameter of the luma block.

A luma block corresponding to the chroma block may be composed of multiple partitions. All or some of the multiple partitions may have different intra-prediction modes.

The intra-prediction mode of the chroma block may be derived based on all or some of the multiple partitions in the corresponding luma block. Some partitions may be selectively used based on a comparison in block size/shape, depth information, or the like between the chroma block and the luma block (all or some of the multiple partitions).

A partition at a position in the luma block, corresponding to a specific position in the chroma block, may be selectively used. Here, the specific position may refer to a corner sample position (e.g., a top-left sample) or a central sample position in the chroma block. The above-described method is not limited to the example in which the chroma block uses the intra-prediction mode of the luma block, and may also be used to share at least one of mpm_idx or an MPM list of the luma block.

For example, in FIG. 63, an example of the case where the ratio between color components is 4:2:0 is illustrated.

The luma corresponding block corresponding to the chroma block may be one or more of A, B, C, and D. When there are multiple luma corresponding blocks, a luma corresponding block, corresponding to a certain position of the chroma block, may be selected from among the multiple luma blocks.

The specific position may be determined based on at least one of the size, shape, and depth of the chroma block. Alternatively, statistical values of intra-prediction modes of multiple luma corresponding blocks may be used to determine the specific position.

One intra-prediction mode corresponding to at least one of luma blocks A, B, C, and D may be derived as the intra-prediction mode of the chroma block.

For example, the intra-prediction mode of the chroma block may be derived by a combination of one or more intra-prediction modes in the luma block corresponding to the chroma block size.

For example, the prediction mode of the chroma block may be derived based on at least one of the size, shape or depth information of the luma block.

For example, the prediction mode of the chroma block may be derived based on at least one of the size, shape or depth information of the chroma block.

FIG. 64 illustrates a luma block, a chroma block, and specific positions in the luma block when the ratio between color components is 4:2:0 according to an example.

When the intra-prediction mode of the chroma block is derived from a luma corresponding block, prediction coding efficiency of the intra-prediction mode of the chroma block may be improved by assigning higher priority to a luma corresponding position corresponding to the center of the chroma block.

The luma corresponding block corresponding to the chroma block may be at least one or more of positions CR1, CR2, CR3, CR4, Top-Left (TL), Top-Right (TR), Bottom-Left (BL), and Bottom-Right (BR).

One intra-prediction mode corresponding to at least one of the positions of the luma blocks CR1, CR2, CR3, CR4, TL, TR, BL, and BR may be derived as the intra-prediction mode of the chroma block.

Each of the corresponding intra-prediction modes in the order of the positions of CR1, CR2, CR3, CR4, TL, TR, BL, and BR may be derived as the intra-prediction mode of the chroma block. However, the order is not limited to the exemplified order, and may be determined based on at least one of the size and shape of the chroma block.

When the intra-prediction mode of the chroma block is derived from the luma corresponding block, the coding parameters of at least one of the luma corresponding block and the chroma block may be used.

The MPM list of the chroma block may be configured to include at least one of the following [intra-prediction mode 1] to [intra-prediction mode 5]. Here, the MPM list of the chroma block may be configured such that candidate modes in the MPM list do not overlap each other.

**[intra-prediction mode 1]** intra-prediction mode of a spatial neighbor block (at least one of left, above, left-below, right-above, and left-above neighbor blocks) of a chroma block

**[intra-prediction mode 2]** planar mode and DC mode

**[intra-prediction mode 3]** at least one of intra-prediction modes of CR1, CR2, CR3, CR4, TL, TR, BL, and BR positions of a luma corresponding block corresponding to the chroma block

**[intra-prediction mode 4]** vertical mode, horizontal mode, etc.

**[intra-prediction mode 5]** diagonal mode

## Intra-prediction method for screen content

Hereinafter, an example of an intra-prediction mode for screen content will be described.

In an embodiment, an intra-prediction method may be a chroma intra-prediction method, and may be the specific intra-prediction described in embodiments, or prediction based on intra-prediction.

In embodiments, the intra-prediction method may be intra-prediction using a Direct Block Vector (DBV).

In an embodiment, the motion information of a first block may be used for prediction for corresponding second blocks. The motion information may be a Block Vector (BV). The first block may be a luma block. The second blocks may be one or more chroma blocks or chroma components. Here, the corresponding blocks may refer to components for one block.

The above-described use may be performed under a specific condition. The specific condition may be a condition in which the values of the above-described one or more coding parameters are specific values.

For example, when a specific condition related to partitioning of a block is enabled in the specific region described in embodiments, the motion information of the first block may be used for prediction for the corresponding second blocks.

For example, when a specific tree is enabled in a specific slice, the motion information of the first block may be used for prediction for the corresponding second blocks.

For example, when a dual tree is enabled in intra slice, the motion information of the first block may be used for prediction for the corresponding second blocks.

The above-described use may be performed under a specific configuration. The specific configuration may include All Intra (AI) configuration and Random Access (RA) configuration.

Intra-prediction modes for the specific component may include one or more of 6 cross component Linear Model (ML) modes, Convolution Cross Component Model (CCCM) mode, a Gradient Linear Model (GLM) mode, a Decoder-side Intra Mode Derivation (DIMD) mode, a Direct Mode (DM), and n default intra-prediction modes. Here, the specific component may be the chroma component. The n default intra-prediction modes may be n intra-prediction modes in the list, described in embodiments. n may be an integer of 1 or more. n may be 4.

When intra modes are signaled, an indicator indicating a specific coding mode may be exploited, as shown in the following Table 28. For example, the intra modes may be chroma intra modes. The indicator may be intra_chroma_pred_mode.

[Table 28]

| Indicator | Bin string | Intra mode |
|---|---|---|
| 0 | 1100 | list[0] |
| 1 | 1101 | list[1] |
| 2 | 1110 | list[2] |
| 3 | 1111 | list[3] |
| 4 | 10 | DIMD (or DIMD chroma) |
| 5 | 0 | DM |

Table 28 may show a binarization process for the indicator according to an embodiment. Further, the intra modes may include an intra block copy (IBC) mode in which prediction is performed depending on the block vector.

Furthermore, the intra modes may include an intra Template Matching Prediction (TMP) mode in which a block vector is derived depending on the template. The intra TMP mode may also be used to derive a BV depending on the template, and may be enabled to derive BV depending on the template.

The intra TMP mode may be a mode in which the template is used for intra-prediction.

In single tree partitioning, IBC prediction may be applied both to a luma component and to a chroma component. A chroma block vector may be derived from the corresponding luma block vector. Here, the chroma block vector may be derived from the corresponding luma block vector based on a sampling structure.

In dual tree partitioning, IBC prediction may be applied only to a luma component, and may not be applied to a chroma component.

In methods in embodiments, a Direct Block Vector (DBV) may be used. The DBV may be used for a specific block under a specific condition. For this use, coding efficiency may be improved.

The specific block may be one of the blocks described in the embodiments. For example, the specific block may be one or more chroma blocks or one or more chroma components.

The specific condition may be a condition in which the values of the above-described one or more coding parameters are specific values.

For example, when the specific condition related to partitioning of a block is enabled in the specific region described in embodiments, DBV may be used.

For example, when a specific tree is enabled in a specific slice, the DBV may be used.

For example, when a dual tree is enabled in intra slice, DBV may be used.

The above-described use may be performed under a specific configuration. The specific configuration may include All Intra (AI) configuration and Random Access (RA) configuration.

As shown in the following Table 29, an indicator and/or a bin indicating whether the block is coded in a DBV mode may be signaled.

The indicator may be signaled for a specific unit described in embodiments, such as a CU. In other words, the indicator applied to the specific unit may be signaled at the level of the specific unit.

When intra modes are signaled, an indicator indicating a specific coding mode may be used, as shown in the following Table 29. For example, the intra modes may be chroma intra modes. The indicator may be intra_chroma_pred_mode.

**[Table 29]**

| intra_chroma_pred_mode | Bin string | Chroma intra mode |
|:---:|:---:|:---:|
| 0 | **1**1100 | list[0] |
| 1 | **1**1101 | list[1] |
| 2 | **1**1110 | list[2] |
| 3 | **1**1111 | list[3] |
| 4 | **1**10 | DIMD chroma |
| 5 | **1**0 | DM |

Table 29 may represent a binarization process for an indicator according to an embodiment. A bin may represent the indicator, and may be information corresponding to the indicator.

In the IBC mode, chroma prediction using a block vector may be performed.

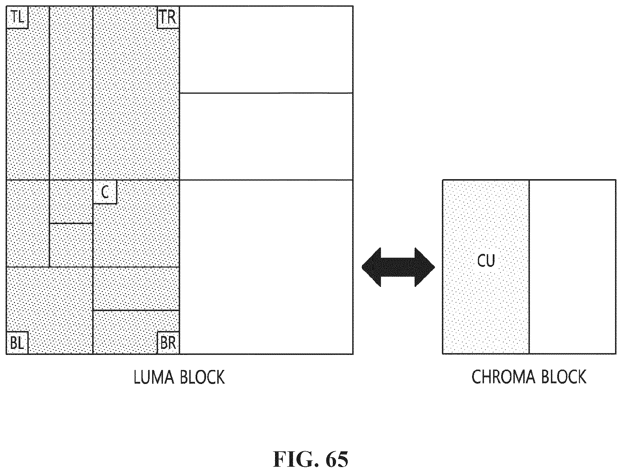

FIG. 65 illustrates the positions of reconstructed samples according to an example.

In FIG. 65, a luma block and a chroma block are illustrated.

In the case where the specific condition is satisfied, when a third block among second blocks at the specific position is coded in a second mode or a third mode in a first block coded in a first mode, the motion information of the third block may be used to derive the motion information of the first block.

In embodiments, satisfying the specific condition may mean that the values of one or more coding parameters are specific values.

For example, satisfying the specific condition may mean that a specific condition related to the partitioning of a block is enabled in the specific region described in embodiments.

For example, satisfying the specific condition may mean that a specific tree is enabled in a specific slice.

For example, satisfying the specific condition may mean that a dual tree is enabled in intra slice.

The first block and the third block may be blocks corresponding to each other. Each of the blocks may be a CU.

The first block may be a luma component of the block. The third block may be a chroma component of the block.

For example, the specific positions may be a predefined number of positions. The predefined number may be an integer of 1 or more. The predefined number may be 5.

The specific positions may include the top-left position of the block, the top-right position of the block, the center position of the block, the bottom-left position of the block, and the bottom-right position of the block.

For example, when the top-left coordinates of the block are (x, y), the width of the block is w, and the height of the block is h, the second blocks may include a top-left block occupying coordinates (x, y), a top-right block occupying coordinates (x+w-1, y), a central block occupying coordinates (x+w/2, y+h/2), a bottom-left block occupying coordinates (x, y+h-1), and a bottom-right block occupying coordinates (x+w-1, y+h-1).

The top-left block may be the block TL illustrated in FIG. 65, or a block occupying a sample TL.

The top-right block may be the block TR illustrated in FIG. 65, or a block occupying a sample TR.

The central block may be the block C, illustrated in FIG. 65, or a block occupying a sample C.

The bottom-left block may be the block BL illustrated in FIG. 65, or a block occupying a sample BL.

The bottom-right block may be the block BR illustrated in FIG. 65, or a block occupying a sample BR.

Alternatively, when the top-left coordinates of the block are (x, y), the width of the block is w, and the height of the block is h, the second blocks may include a block occupying a sample having coordinates (x, y), a block occupying a sample having coordinates (x+w-1, y), a block occupying a sample having coordinates (x+w/2, y+h/2), a block occupying a sample having coordinates (x, y+h-1), and a block occupying a sample having coordinates (x+w-1, y+h-1).

The first mode may be a DBV mode. The second mode may be an IBC mode. The third mode may be an intra TMP mode.

In order to specify the third block among the multiple second blocks, an additional bin may be used. The additional bin may be an additional indicator.

The additional bin may be information for specifying the third block among the multiple second blocks.

The additional bin may be information for specifying the third block among some of the multiple second blocks. For example, some blocks may be available blocks. Such an available block may be the block coded in the second mode or the third mode.

The motion information of the third block may be a block vector bvL. The motion information of the first block may be a block vector bvC. The motion information of the third block may be a luma block vector. The motion information of the first block may be a chroma motion vector. bvL may be a block vector for the luma component. bvC may be a block vector for the chroma component.

Block vector scaling processing for the block vector may be determined depending on template matching. Template matching may refer to matching in the intra TMP mode of the third mode.

For example, when the third block is coded in a specific mode, block vector adjustment may be performed on the motion information of the third block. Block vector adjustment may be flip-aware block vector adjustment.

For example, when the third block is coded in Reconstruction-Reordered IBC (RRIBC), block vector adjustment may be performed on the block vector bvL of the third block.

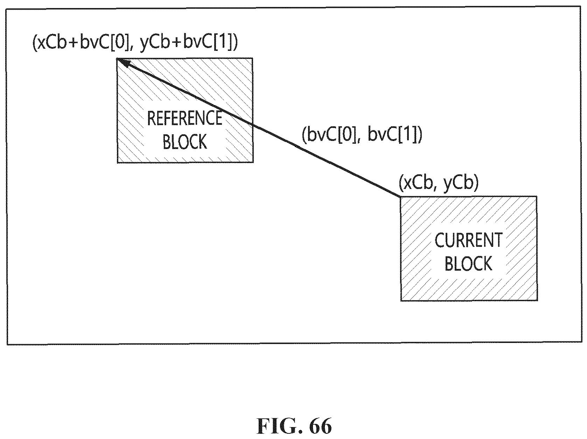

FIG. 66 illustrates a prediction process of a DBV method according to an embodiment.

In FIG. 66, xCb and yCb may be the coordinates of a target block. bv may denote the block vector of the target block. bvC[0] and bvC[1] may denote the x component and the y component of the block vector, respectively.

The target block may be the above-described first block.

The target block may be a chroma block. Alternatively, the target block may be the above-described first block.

Block vector adjustment may be selectively performed depending on the coding parameters for the target block.

The corresponding offset position (xCb + bvC[0], yCb + bvC[1]) may be determined using the position (xCb, YCb) of the target block and the block vector bvC of the target block. A reference block indicated by the offset position may be determined, and block copy prediction may be performed using the reference block. Block copy prediction may be prediction that uses a reconstructed block at the position, indicated by the offset position, as a prediction block for the target block.

In an embodiment, the additional bin may not be signaled.

The case where the additional bin is not signaled may mean that selection for the multiple second blocks is not performed, and a block located at the specific position or a block occupying a sample at the specific position is used as the third block.

When the additional bin is not signaled, the DBV of the third block may be used. The third block may be a central block. The central block may be the block C illustrated in FIG. 65.

In the case where the specific condition is satisfied, when the third block is coded in a second mode or a third mode in the first block coded in a first mode, the motion information of the third block may be used to derive the motion information of the first block.

In embodiments, satisfying the specific condition may mean that the values of one or more coding parameters are specific values.

For example, satisfying the specific condition may mean that a specific condition related to the partitioning of a block is enabled in the specific region described in embodiments.

For example, satisfying the specific condition may mean that a specific tree is enabled in a specific slice.

For example, satisfying the specific condition may mean that a dual tree is enabled in intra slice.

The first block and the third block may be blocks corresponding to each other. Each of the blocks may be a CU.

The first block may be a luma component of the block. The third block may be a chroma component of the block.

The central block may be the block C, illustrated in FIG. 65, or a block occupying a sample C.

The first mode may be a DBV mode. The second mode may be an IBC mode. The third mode may be an intra TMP mode.

The motion information of the third block may be a block vector bvL. The motion information of the first block may be a block vector bvC. The motion information of the third block may be a luma block vector. The motion information of the first block may be a chroma motion vector. bvL may be a block vector for the luma component. bvC may be a block vector for the chroma component.

Block vector scaling processing for the block vector may be determined depending on template matching. Template matching may refer to matching in the intra TMP mode of the third mode.

For example, when the third block is coded in a specific mode, block vector adjustment may be performed on the motion information of the third block. Block vector adjustment may be flip-aware block vector adjustment.

Block vector adjustment may be selectively performed depending on the coding parameters for the third block.

For example, when the third block is coded in Reconstruction-Reordered IBC (RRIBC), block vector adjustment may be performed on the block vector bvL of the third block.

Next, the corresponding offset position (xCb + bvC[0], yCb + bvC[1]) may be determined using the position (xCb, YCb) of the first block and the block vector bvC of the first block. A reference block indicated by the offset position may be determined, and block copy prediction may be performed using the reference block. Block copy prediction may be prediction that uses a reconstructed block at the position, indicated by the offset position, as a prediction block for the first block.

**Intra template matching**

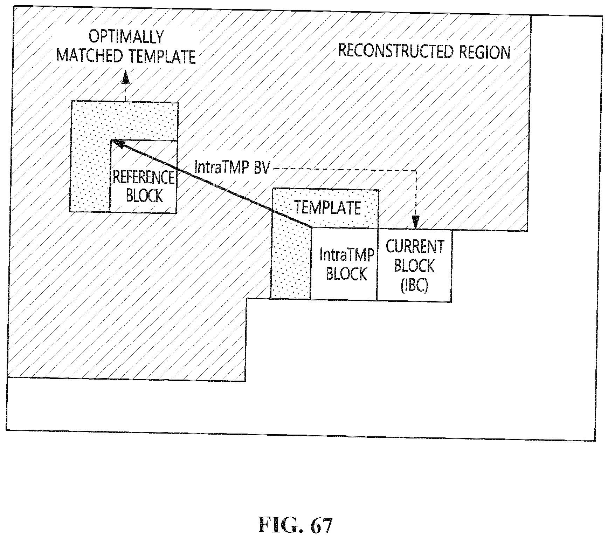

FIG. 67 illustrates intra-template matching prediction according to an example.

Intra Template Matching Prediction (IntraTMP) may be a special intra-prediction mode in which an optimal prediction block having an L-shaped template matching a current template is copied from a reconstructed portion of a current frame. For a predefined search range, the encoder may search the reconstructed portion of the current frame for a template most similar to the current template, and may use the corresponding block as a prediction block. Then, the encoder may signal the usage of this mode, and the decoder may perform the same prediction operation as the encoder.

A prediction signal may be generated by matching L-shaped casual neighbors of the current block in four predefined search areas R1, R2, R3, and R4 illustrated in FIG. 67 with other blocks. Here, R1 may be a current CTU, R2 may be a left-above CTU, R3 may be an above CTU, and R4 may be a left CTU.

The Sum of Absolute Differences (SAD) may be used as a cost function.

In each region, the decoder may search the current region for a template having the minimum SAD, and may use a block corresponding to the found template as a prediction block.

The dimensions of all regions (SearchRange_w, SearchRange_h) may be set in proportion to block dimensions (BlkW, BlkH) to have a fixed number of SAD comparisons per pixel. That is, SearchRange_w may be a × BlkW, and SearchRange_h may be a × BlkH.

a may be a value for controlling a gain/complexity trade-off. N may be explicitly transmitted in a higher-level syntax such as a parameter set/slice header/picture header, and may be a predefined value.

In order to improve the speed of a template matching process, search ranges for all search regions may be sub-sampled by a factor of 2. This sub-sampling may lead to the reduction of template matching search by four times. After the best match is found, a refinement process may be performed. Refinement may be performed through secondary template matching search around the best match having a reduced range. The reduced range may be defined as min(BlkW, BlkH)/2.

Intra template matching may be enabled for a CU having a size less than or equal to 64 in horizontal and vertical sizes. The maximum CU size for such intra template matching is configurable.

When DIMD is not used for the current CU, an intra template matching prediction mode may be signaled at a CU level through a dedicated flag.

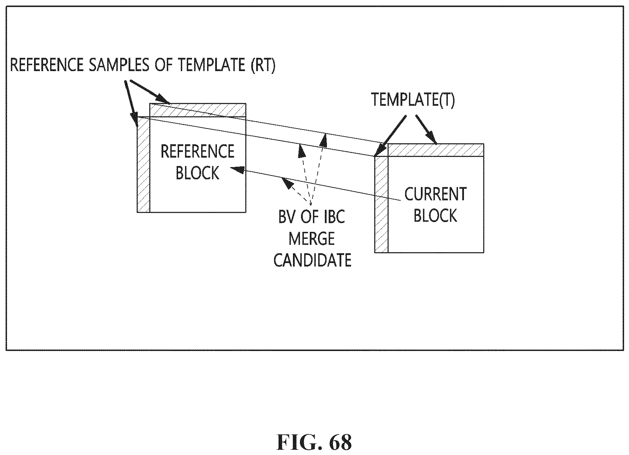

FIG. 68 illustrates templates and reference samples for the templates according to an example.

In the following embodiments, an IBC merge candidate list may be reordered based on template matching.

IBC merge/AMVP list configuration may be performed as follows.

1) An IBC merge candidate or an AMVP candidate may be inserted into an IBC merge candidate list or an AMVP candidate list only when the corresponding candidate is valid.
2) A right-above spatial candidate, a left-below spatial candidate, a left-above spatial candidate, and one pairwise candidate may be added to the IBC merge candidate list or the AMVP candidate list.
3) Adaptive Reordering of Merge Candidates with Template Matching (ARMC-TM) may be extended to an IBC merge list. This extension may be referred to as ARMC-TM-IBC.

IntraTMP BV may be an example of a BV candidate aligned in ARMC-TM-IBC.

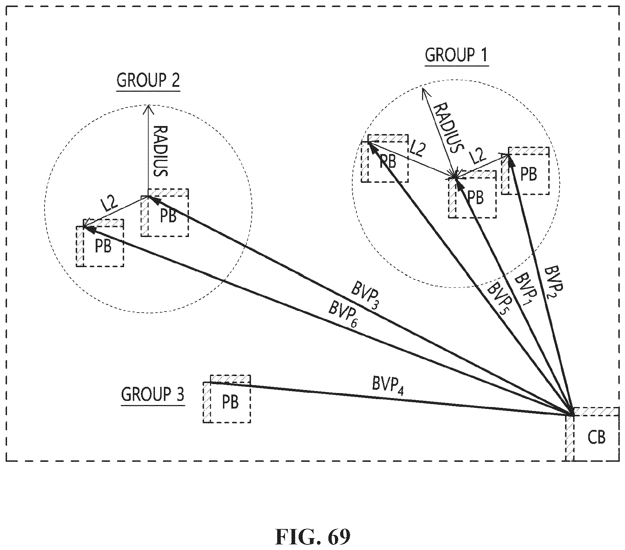

FIG. 69 illustrates clustering of AMVP IBC candidates according to an example.

The construction of an IBC AMVP list may be modified based on clustering of Block Vector Predictor (BVP) candidates. Here, when BV has a single null component, clustering of the BVP candidates may be performed based on the prediction of the distance between the BVP candidates and the sign of the BVD.

In order to configure an IBC list, spatial candidates and pairwise-average candidates may be added. The number of HMVP candidates may increase up to 25, and new padding candidates may be added to a regular IBC list.

Further, an IBC-TM merge mode may be performed such that, after pruning is applied to the candidates, refinement may be performed on the candidates using merge list reordering (Adaptive Reordering of Merge Candidates with Template Matching: ARMC-TM) and template matching(TM) cost.

In the IBC-TM AMVP mode, three merge candidates may be refined and sorted based on the TM cost. Further, as in the case of the conventional scheme, two first candidates for a motion estimation processor may be selected.

In order to generate an IBC AMVP list, AMVP IBC candidates may be clustered based on L2 distance and TM cost.

First, non-null BVs may be clustered into three groups using the L2 distance. In other words, candidates having the lowest template cost may be determined from each group, and a maximum of two BVs may be selected from each group through determination of the candidates. Here, a BV to which clustering for BVP is applied may be an IntraTMP BV.

Below, modification of the configuration of an AMVP list will be described in detail.

For blocks, the block vectors (BV) of which have non-null components, clustering of the BVP candidates may be performed before two AMVP candidates are selected.

When the number of valid BVP candidates exceeds 2, up to six block vector predictor candidates may be clustered based on a specific criterion. The specific criterion may be an L2 Euclidean distance between candidates. A radius R may be used to determine the group of vectors. In order to determine the group, a logarithmic function using the width cbWidth and height cbHeight of the current block, such as that shown in the following [Equation 111], may be used.

$$[\text{Equation 111}]$$

$$R = Log2(( \text{cbWidth} \; \cdot \; \text{cbHeight}) >> MIN\_PU\_SIZE )$$

The clustering method may be applied in the order of candidate lists. Candidates allocated to one group may be removed from the list of a next cluster. A block vector predictor having lower TM cost may be selected, from each group, as a representative candidate of the corresponding group. Representative candidates of two first groups may be selected for a motion estimation processor as in the case of the regular IBC AMVP list.

Additionally, a Reconstruction-Reordered IBC (RRIBC) mode may be selected for the IBC AMVP.

A BV having one null component, including a RRIBC block, may be signaled to the decoder through a byOneNullComp flag.

Instead of invoking the construction of the AMVP IBC list, two new BVP candidates may be determined. Such candidates may be adjusted in conformity with the boundary of a valid IBC search area depending on the horizontal or vertical direction indicated by the RRIBC mode. The horizontal or vertical direction may be indicated by a byNullCompDir flag.

$AMVP_0$ may be set to a position closest to the current block (i.e., -cbWidth or -cbHeight). Therefore, BVD may always be a negative number unless the BVD is null, and may indicate the left to the BV having a null vertical component or the top of the BV having a null horizontal component.

Similarly, AMVP $BVP_1$ may be set to a position farthest away from the current block in a valid reference region. The valid reference region may be a left boundary or a top boundary of the IBC search area. Therefore, when $BVP_1$ is selected, BVD may always be a positive number, and may indicate the right to the BV having a null vertical component or the bottom of the BV having the null horizontal component.

On the decoder side, an optimal IBC AMVP index enabling the sign of a BVD component, other than a null, to be derived may be signaled. Such signaling may enable the sign of a non-null BVD component to be derived on the decoder side. Consequently, as the absolute value of the non-null component of BVD is signaled to the decoder, coding efficiency may be improved. The RRIBC mode may transmit a signal using an existing syntax flag, and the direction of a flipping mode may be derived from the bvNullCompDir flag.

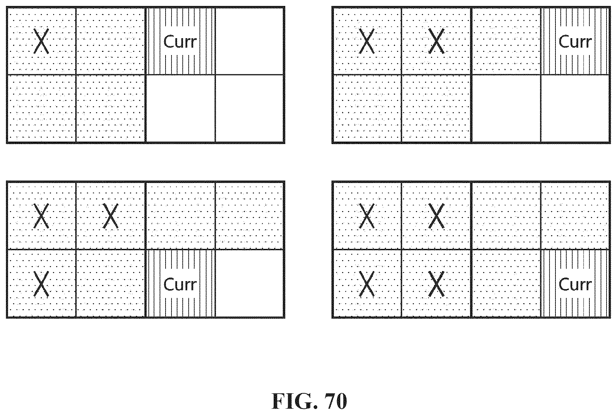

FIG. 70 illustrates an IBC reference region based on the location of a current CU according to an example.

Template matching may be used in a regular merge mode and an AMVP mode, and may also be used in the GPM and Combined Inter-intra Prediction (CIIP) merge modes.

Also, template matching may be used both in an IBC merge mode and in an IBC AMVP mode.

In an embodiment, in the IBC merge mode and/or the AMVP mode, refinement using template matching is applied to the selected candidate BV. Here, the BV to which IBC having template matching is applied may be an IntraTMP BV.

In an embodiment, compared to the regular IBC merge mode, an IBC-TM merge list may be modified. Due to the modification, as in the case of the regular TM merge mode, a candidate is selected based on a pruning method having motion distance between candidates.

Ending zero motion fulfillment may be replaced with motion vectors to left (-W, 0), above (0, -H), and left-above (-W, -H) CUs. W may be the width of the current CU. H may be the height of the current CU. Next, if necessary, the list may be filled with left CUs without pruning.

In the IBC-TM merge mode, the selected candidates may be refined using a template matching method before an encoding or decoding process. The IBC-TM merge mode may be disposed to compete with merge in the regular IBC merge mode, and a TM-merge flag may be signaled.

In an IBC-TM AMVP mode, a maximum of three candidates may be selected from the IBC merge list. Each of the three selected candidates may be refined using a template matching method, and may be sorted based on the template matching cost derived as the result of refinement. Next, as usual, two first candidates may be taken into consideration in a motion estimation process.

As indicated in FIG. 70, because restrictions, indicating (i) an IBC motion vector needs to be an integer and (ii) it needs to be within a reference region, are applied to the IBC motion vector, template matching refinement both for an IBC-TM merge mode and for an AMVP mode may be simplified. Therefore, all refinements may be performed at an integer precision in the IBC-TM merge mode, and may be performed at an integer or 4-pel precision in the IBC-TM AMVP mode. In both cases, restrictions on reference regions may be applied to refined motion vectors and used templates at respective refinement steps.

**Transmission of BVD information in IBC merge mode**

As the extensions of a regular MMVD mode, affine-MMVD and GPM-MMVD may be used.

In an IBC Merge mode with Block Vector Differences (IBC-MBVD), IBC base candidates are selected, after which the candidates may be further refined by signaled BVD information.

For the IBC merge mode, BVD information including a direction and an index, together with a merge index, may be additionally transmitted. A prediction BV of IBC-MBVD may correspond to the above-described IntraTMP BV.

In a first method, a distance set may be {1-pel, 2-pel, 4-pel, 8-pel, 16-pel, 32-pel, 48-pel, 64-pel, 80-pel, 96-pel, 112-pel, 128-pel}. The BVD directions may be two horizontal directions and two vertical directions.

In the second method, a distance set may be {1-pel, 2-pel, 4-pel, 8-pel, 12-pel, 16-pel, 24-pel, 32-pel, 40-pel, 48-pel, 56-pel, 64-pel, 72-pel, 80-pel, 88-pel, 96-pel, 104-pel, 112-pel, 120-pel, 128-pel}. The BVD directions may be two horizontal directions and two vertical directions.

In both of the two methods, base candidates may be selected from a reordered IBC merge list. All possible MBVD refinement positions ($12 \times 4$ positions in the first method and $20 \times 4$ positions in the second method) for each base candidate may be reordered based on templates (one row above the current block and one column left to the current block) and SAD costs of template referencing at respective refinement positions. Top 1/4 refinement positions having the lowest template SAD costs may be finally maintained as available positions for MBVD index coding.

Here, a block coded in IBC-MBVD may not inherit a flip type from a neighbor block coded in RRIBC.

**Blending of blocks depending on combination of prediction modes**

A CIIP in which an inter merge mode and an intra mode are combined may be utilized. The inter merge mode may be a regular merge mode or a TM merge mode. The intra mode may be a Position Dependent Prediction Combination (PDPC) mode or a mode derived by TIMD.

When an intra-prediction is a planar mode, weights for intra and inter merge-predicted samples may be uniform within the entire CU.

When the derived intra-prediction mode is an angular mode, weights for intra and inter merge-predicted samples may vary with the positions of the samples within the CU.

IBC may search a reconstructed region of the current image for a prediction block. In addition to the regular IBC AMVP or IBC merge mode, IBC may also be combined with a TM mode and an MMVD mode.

In order to improve IBC performance, IBC may be combined with intra-prediction. The design of a mode in which IBC and intra-prediction are combined may be similar to an existing CIIP. In detail, the IBC regular merge mode or an IBC TM merge mode may be combined with a PDPC mode or a TIMD mode.

For syntax change, a flag indicating whether a prediction block has been coded in a combined IBC and intra-prediction mode may be signaled.

When this flag is true, another flag may be signaled to indicate whether an intra part is generated based on TIMD or generated based on PDPC.

The combined IBC and inter prediction (Combined IBC and intra prediction; IBC-CIIP) method may be used. When IBC-CIIP is applied to a CU, two prediction blocks may be obtained using IBC and intra-prediction. In order to generate a final prediction block, a weighted sum of the two prediction blocks may be derived.

When the intra-prediction mode is a planar mode or a DC mode, the final block may be derived, as shown in the following [Equation 112].

**[Equation 112]**

$$P = (w_{ibc} \times P_{ibc} + ((1 << shift) - w_{ibc}) \times P_{intra} + (1 << (shift - 1))) >> shift$$

$P_{ibc}$ and $P_{intra}$ may represent an IBC prediction block and an intra-prediction block, respectively.

When both of the above CU and the left CU are intra-coded, ($w_{ibc}$, shift) may be set to (1, 2), when one of the above CU and the left CU is intra-coded, it may be set to (2, 2), and when both of the above CU and the left CU are IBC-coded, it may be set to (3, 2). Otherwise (i.e., when intra-prediction is a directional mode), the final prediction block may be obtained by adaptively switching the prediction block of the intra mode and the prediction block of IBC.

When the size of the current CU is w×h and the prediction mode of the intra mode is a horizontal mode or a vertical mode, in the case where both of the above CU and the left CU are intra-coded, a left 3/4×h portion (horizontal mode) or an above w×3/4h portion (vertical mode) of the final prediction block may be set as an intra-prediction signal.

When only one of the above CU and the left CU is intra-coded, a left 1/2w×h portion (horizontal mode) or an above w×1/2h portion (vertical mode) of the final prediction block may be set as an intra-prediction signal.

When both of the above CU and the left CU are IBC or inter-coded, a left 1/4w×h portion (horizontal mode) or an above w×1/4h portion (vertical mode) of the final prediction block may be set as an intra-prediction signal.

($w_{ibc}$, shift) may be set to (13, 4) and (1, 1) for the IBC merge mode and the IBC AMVP mode, respectively.

In addition to the intra-prediction portion, other portions of the final prediction block may be set as an IBC prediction sample.

For the intra-prediction signal, an intra-prediction mode candidate list may be used. The size of the intra candidate list may be predefined as 2. An IPM index may be signaled to indicate which IPM is used.

IBC-CIIP may be applied to an IBC AMVP mode and an IBC merge mode. A CU flag indicating whether IBC-CIIP is used may be signaled.

A higher-level flag such as an SPS level may be used. The SPS level flag may indicate whether the blending scheme in embodiments is applied to an IBC merge mode at the SPS level.

IBC with a Geometry Partitioning Method (IBC-GPM) may be used. When IBC-GPM is applied to a CU, prediction blocks for two subblocks in the CU may be generated using IBC and intra-prediction. IBC-GPM may be applied to a regular IBC merge mode and an IBC TM merge mode. A CU flag indicating whether IBC-GPM is used may be signaled.

The intra-prediction mode candidate list may be configured to include inter-prediction and intra-prediction to perform intra-prediction. The size of an IPM candidate list may be predefined as 3. 48 geometric partitioning modes may be divided into two geometric partitioning mode sets.

When IBC-GPM is used, a flag indicating which one of the two sets has been selected and the index of the selected set may be signaled. Further, a flag indicating whether an intra-prediction mode is used for a first sub-partition may be signaled. When intra-prediction is used in a sub-partition, an intra-prediction mode index may be signaled. When IBC is used in a sub-partition, a merge index may be signaled.

IBC with Local Illumination Compensation (IBC-LIC) may be used.

IBC-LIC may be technology for correcting local illumination variation in an image between a CU coded in IBC and a prediction block by utilizing a linear equation. When IBC-LIC is applied to a CU, local illumination variation between the CU and the prediction block may be modeled as a linear equation. The parameters of the linear equation may be derived in a manner similar to that of LIC for inter-prediction. In contrast, in IBC-LIC, a reference template may be generated using a block vector.

IBC-LIC may be applied to an IBC AMVP mode and an IBC merge mode. For the IBC AMVP mode, an IBC-LIC flag may be signaled to indicate whether IBC-LIC is used. For the IBC merge mode, the IBC-LIC flag may be inferred from a merge candidate.

In a CU, prediction blocks for two subblocks may be generated using IBC and intra-prediction. IBC-GPM may be applied to the IBC merge mode. A CU flag indicating whether IBC-GPM is used may be signaled.

The prediction block generated in IBC depending on the above-described method and the prediction block generated by intra-prediction may be blended, and a final prediction block may be generated through blending.

Here, a BV may be used to refer to the prediction block generated by IBC. BV may be IntraTmp BV.

In an embodiment, although blending of the prediction block generated by IBC and the prediction block generated by intra-prediction has been described, these prediction blocks may be understood to be replaced with prediction blocks generated by other methods described in embodiments.

In the embodiment, IBC may be replaced with IntraTMP. In other words, the specific prediction block described in embodiments may be a prediction block generated in IntraTMP. Alternatively, the generation of the final prediction block through processing of the prediction blocks, described in embodiments, may also be applied to the prediction block in IntraTMP.

In the embodiment, intra-prediction may be replaced with IntraTMP. In other words, the specific prediction block described in embodiments may be a prediction block generated in IntraTMP. In other words, it may be understood that description that the prediction block is generated by intra-prediction in embodiments is replaced with description that the prediction block is generated in IntraTMP.

## IBC-LIC model merge mode

IBC-LIC may perform compensation for local illumination variation in an image between a CU coded in IBC and a prediction block using a linear equation.

The linear equation may be represented by the following Equation 113.
$$[\text{Equation 113}]$$

$$\alpha \times p[x] + \beta$$

The parameters of the linear equation may be derived using the same manner as LIC for inter-prediction. However, a reference template in IBC-LIC may be generated by a block vector in IBC-LIC.
IBC-LIC may be applied to an IBC AMVP mode and an IBC merge mode.
For the IBC AMVP mode, an IBC-LIC flag indicating whether IBC-LIC is used may be inferred from a merge candidate.
An IBC-LIC merge model mode may inherit IBC-LIC model parameters from a previously encoded/decoded block. In detail, the LIC model for the IBC-LIC merge mode may be obtained by the method, as described below.
A model candidate list including model parameters derived from a spatial adjacent neighbor block, spatial non-adjacent neighbor blocks, history candidates, and default models may be constructed. For example, the size of the merge candidate list may be 12.
The LIC models may be collected from adjacent positions and non-adjacent positions of a previously encoded/decoded IBC-LIC and IBC-LIC merge model.
A history IBC-LIC model table having a specific size may be maintained. A method for maintaining the HMVP table may be applied to the history IBC-LIC model table. A fixed size may be 6.
Spatial neighbor blocks and LIC models from the history IBC-LIC model table may be added to an IBC-LIC model merge candidate list.
When the IBC-LIC model merge candidate list is not full, a default model and scaled models may be subsequently added to the IBC-LIC model merge candidate list.
In order to prevent redundant models from occurring, a pruning operation may be applied.
Next, the offset of each model candidate may be calculated.
For a specific inherited IBC-LIC model parameter set $(\alpha, \beta)$, the offset may be calculated from the template by the following Equations 114 and 115.

$$[\text{Equation 114}]$$

$$\text{totalDiff} = \sum (\text{Rec} - (\alpha * \text{Ref} + \beta))$$

$$[\text{Equation 115}]$$

$$\text{offset} = \text{totalDiff} / N$$

Rec may be pixels in the template of the current block. Ref may be pixels in the template of the reference block. N may be the total number of pixels in a template region.
After calculation is performed, an offset may be added to $\beta$. $\beta$ may be updated to $(\beta + \text{offset})$.
An IBC-LIC model merge mode flag indicating whether an IBC-LIC model merge mode is applied may be signaled. When the value of the flag is true, an index indicating an IBC-LIC model for the current block among LIB-LIC model candidates in an IBC-LIC model merge candidate list may be signaled.
Through signaling, an IBC-LIC model may be selected from the IBC-LIC model merge candidate list.
In detail, an IBC-LIC model merge mode flag may be signaled in an IBC-AMVP mode and an IBC-merge mode.
In the IBC-AMVP mode, an IBC-LIC model merge mode flag for the IBC-LIC model merge mode may be signaled when the IBC-LIC flag is true.
In the IBC-merge mode, the IBC-LIC model merge mode flag may be signaled when the current block is not in an IBC-CIIP, an IBC-GPM, a template mode merge, a skip mode, and a skip mode. The regular inheritance of the IBC-LIC flag may not be applied, and the current block may be regarded as a block to which the IBC-LIC mode is applied by the other blocks.

**Fractional-pel motion compensation**

A specific partitioning depth may be omitted depending on POC distance between a current picture and a reference picture closest to the current picture. When IBC is enabled at an SPS level, the POC distance may be set to 0. For inter-slices, the original POC distance, instead of a set value of 0, may be used.

From the standpoint of the encoder, the search range of IBC BC may be limited to 32 pixels.

IBC may not be applied to non-intra slices for specific content. In this condition, whether IBC is applied may be indicated by a high-level syntax. The high-level syntax may refer to a level higher than a CU level or a CTU level. CU level signaling of the IBC flag may be removed by utilizing the high-level syntax. However, in other types of content, IBC may be applied to all slices.

An SPS level flag may be used to determine whether RR-IBC and/or TM-IBC are used.

Fractional-pel motion compensation may be applied to IBC. For example, quarter-pel and half-pel resolutions may be added to methods in embodiments in which integer-pel resolution is used. The integer-pel resolution described in embodiments may be replaced with fractional-pel resolution. As the integer-pel resolution is replaced with the fractional-pel resolution, the lower level fractional-pel resolution for integer-pel resolution, described in embodiments, may also be replaced with smaller fractional-pel resolution, in proportion to such replacement.

In the case of IBC AMVP, additional Adaptive Block Vector Resolution (ABVR) signaling may be added to 1/2-pel and 1/4-pel BV precisions of Adaptive Block Vector Resolution (ABVR).

As fractional BV precision becomes possible, the corresponding BVPs and BVDs may have the unit of the selected precision.

On the encoder side, integer BV search methods may be preferentially performed, and groups of N integer BVs may be subsequently selected for further fractional refinement. During a fractional refinement process, 1/2-pel and 1/4-pel search may be successively applied.

A BV having the minimum RD cost may be signaled to the decoder side. Here, the selected BV may have integer resolution or fractional resolution.

The option of BV resolution may be full-pel, 4-pel, and 1/4-pel.

Similar to inter AMVR syntax, a first bin of the AMVR syntax may be signaled to indicate whether BV has a quarter-pel resolution. As the 1/2-pel resolution is not supported, a second bin may not be signaled. The last bin of the AMVR syntax may be signaled for switching between full-pel resolution and 4-pel resolution.

In order to generate a prediction pixel of IBC at fractional sample positions, specific filters may be applied.

For example, the filter may be an 8-tap or 12-tap filter, and a Discrete Cosine Transform-based Interpolation Filter (DCT-IF) filter may be used as the filter.

Filters applied to the luma component and the chroma component of the IBC block may be identical to or different from each other.

An exceptional filter such as a 2-tap bilinear interpolation filter may be used to generate a template prediction block. Such an exceptional filter may be used for specific prediction modes such as IBC-ARMC, IBC LIC, DBV, MBVD, IBC_TM, BVP clustering, and BVD prediction.

When a sample referenced for interpolation is an external sample located outside an available reference region, padding may be performed. For example, the value of a sample at an integer sample position closest to the external sample within a valid reference region may be copied to the external sample. In padding of the external sample, a specific order may be applied to the directions of padding. For example, horizontal padding may be more preferentially performed than vertical padding.

In the case of the IBC merge mode, a BV may be inherited by a spatial neighbor block in the same manner as the IBC inheritance process.

Signaling in AMVR may follow signaling in inter-prediction. Further, the same interpolation filters as that applied to inter-prediction may be applied to fractional-pel motion compensation. In the interpolation filter, filter attributes such as a filter tap and filter coefficient may be changed based on the coding parameters of the block.

The embodiments may be performed using the same method and/or the corresponding methods by the encoding apparatus 1600 and by the decoding apparatus 1700. Also, as to encoding/decoding for the image, at least one of the embodiments or at least one combination thereof may be used.

The order of application of the embodiments may be different from each other by the encoding apparatus 1600 and the decoding apparatus 1700, and the order of application of the embodiments may be (at least partially) identical to each other by the encoding apparatus 1600 and the decoding apparatus 1700.

The embodiments may be performed for each of a luma signal and a chroma signal, and may be equally performed for the luma signal and the chroma signal.

The form of a block to which the embodiments are applied may have a square or non-square shape.

Whether at least one of the above-described embodiments is to be applied and/or performed may be determined based on a condition related to the size of a block. In other words, at least one of the above-described embodiments may be applied and/or performed when the condition related to the size of a block is satisfied. The condition includes a minimum block size and a maximum block size. The block may be one of blocks described above in connection with the embodiments and the units described above in connection with the embodiments. The block to which the minimum block size is applied and the block to which the maximum block size is applied may be different from each other.

For example, when the block size is equal to or greater than the minimum block size and/or less than or equal to the maximum block size, the above-described embodiments may be applied and/or performed. When the block size is greater than the minimum block size and/or less than or equal to the maximum block size, the above-described embodiments may be applied and/or performed.

For example, the above-described embodiments may be applied only to the case where the block size is a predefined block size. The predefined block size may be 2x2, 4x4, 8x8, 16x16, 32x32, 64x64, or 128x128. The predefined block size may be $(2*SIZE_X)x(2*SIZE_Y)$. $SIZE_X$ may be one of integers of 1 or more. $SIZE_Y$ may be one of integers of 1 or more.

For example, the above-described embodiments may be applied only to the case where the block size is equal to or greater than the minimum block size. The above-described embodiments may be applied only to the case where the block size is greater than the minimum block size. The minimum block size may be 2x2, 4x4, 8x8, 16x16, 32x32, 64x64, or 128x128. Alternatively, the minimum block size may be $(2*SIZE_{MIN\_X})x(2*SIZE_{MIN\_Y})$. $SIZE_{MIN\_X}$ may be one of integers of 1 or more. $SIZE_{MIN\_Y}$ may be one of integers of 1 or more.

For example, the above-described embodiments may be applied only to the case where the block size is less than or equal to the maximum block size. The above-described embodiments may be applied only to the case where the block size is less than the maximum block size. The maximum block size may be 2x2, 4x4, 8x8, 16x16, 32x32, 64x64, or 128x128. Alternatively, the maximum block size may be $(2*SIZE_{MAX\_X})x(2*SIZE_{MAX\_Y})$. $SIZE_{MAX\_X}$ may be one of integers of 1 or more. $SIZE_{MAX\_Y}$ may be one of integers of 1 or more.

For example, the above-described embodiments may be applied only to the case where the block size is equal to or greater than the minimum block size and is less than or equal to the maximum block size. The above-described embodiments may be applied only to the case where the block size is greater than the minimum block size and is less than or equal to the maximum block size. The above-described embodiments may be applied only to the case where the block size is equal to or greater than the minimum block size and is less than the maximum block size. The above-described embodiments may be applied only to the case where the block size is greater than the minimum block size and is less than the maximum block size.

In the above-described embodiments, the block size may be a horizontal size (width) or a vertical size (height) of a block. The block size may indicate both the horizontal size and the vertical size of the block. The block size may indicate the area of the block. Each of the area, minimum block size, and maximum block size may be one of integers equal to or greater than 1. In addition, the block size may be the result (or value) of a well-known equation using the horizontal size and the vertical size of the block, or the result (or value) of an equation in embodiments.

Further, in the embodiments, a first embodiment may be applied to a first size, and a second embodiment may be applied to a second size. That is, the embodiments may be compositely applied according to the size.

The embodiments may be applied depending on a temporal layer. In order to identify a temporal layer to which the embodiments are applicable, a separate identifier may be signaled, and the embodiments may be applied to the temporal layer specified by the corresponding identifier. Here, the identifier may be defined as the lowest (bottom) layer and/or the highest (top) layer to which the embodiments are applicable, and may be defined as being indicating a specific layer to which the embodiments are applied. Further, a fixed temporal layer to which the embodiments are applied may also be defined.

For example, the embodiments may be applied only to the case where the temporal layer of a target image is the lowermost layer. For example, the embodiments may be applied only to the case where the temporal layer identifier of a target image is 0. For example, the embodiments may be applied only to the case where the temporal layer identifier of a target image is equal to or greater than 1. For example, the embodiments may be applied only to the case where the temporal layer of a target image is the highest layer.

A slice type or a tile group type to which the embodiments to which the embodiments are applied may be defined, and the embodiments may be applied depending on the corresponding slice type or tile group type.

In the above-described embodiments, it may be construed that, during the application of specific processing to a specific target, assuming that specified conditions may be required and the specific processing is performed under a specific determination, a specific coding parameter may be replaced with an additional coding parameter when a description has been made such that whether the specified conditions are satisfied is determined based on the specific coding parameter, or such that the specific determination is made based on the specific coding parameter. In other words, it may be considered that a coding parameter that influences the specific condition or the specific determination is merely exemplary, and it may be understood that, in addition to the specific coding parameter, a combination of one or more additional coding parameters functions as the specific coding parameter.

In the above-described embodiments, although the methods have been described based on flowcharts as a series of steps or units, the present disclosure is not limited to the sequence of the steps and some steps may be performed in a sequence different from that of the described steps or simultaneously with other steps. Further, those skilled in the art will understand that the steps shown in the flowchart are not exclusive and may further include other steps, or that one or more steps in the flowchart may be deleted without departing from the scope of the disclosure.

The above-described embodiments include examples in various aspects. Although all possible combinations for indicating various aspects cannot be described, those skilled in the art will appreciate that other combinations are possible in addition to explicitly described combinations. Therefore, it should be understood that the present disclosure includes other replacements, changes, and modifications belonging to the scope of the accompanying claims.

The above-described embodiments according to the present disclosure may be implemented as a program that can be executed by various computer means and may be recorded on a computer-readable storage medium. The computer-readable storage medium may include program instructions, data files, and data structures, either solely or in combination. Program instructions recorded on the storage medium may have been specially designed and configured for the present disclosure, or may be known to or available to those who have ordinary knowledge in the field of computer software.

A computer-readable storage medium may include information used in the embodiments of the present disclosure. For example, the computer-readable storage medium may include a bitstream, and the bitstream may contain the information described above in the embodiments of the present disclosure.

A bitstream may include computer-executable code and/or program. The computer-executable code and/or program may include pieces of information described in the embodiments, and may include syntax elements described in the embodiments. In other words, the pieces of information and syntax elements described in the embodiments may be regarded as a computer-executable code in the bitstream, and may be regarded as at least a part of the computer-executable code and/or program represented by the bitstream.

The computer-readable storage medium may include a non-transitory computer-readable medium.

Examples of the computer-readable storage medium include all types of hardware devices specially configured to record and execute program instructions, such as magnetic media, such as a hard disk, a floppy disk, and magnetic tape, optical media, such as compact disk (CD)-ROM and a digital versatile disk (DVD), magneto-optical media, such as a floptical disk, ROM, RAM, and flash memory. Examples of the program instructions include machine code, such as code created by a compiler, and high-level language code executable by a computer using an interpreter. The hardware devices may be configured to operate as one or more software modules in order to perform the operation of the present disclosure, and vice versa.

As described above, although the present disclosure has been described based on specific details such as detailed components and a limited number of embodiments and drawings, those are merely provided for easy understanding of the entire disclosure, the present disclosure is not limited to those embodiments, and those skilled in the art will practice various changes and modifications from the above description.

Accordingly, it should be noted that the spirit of the present embodiments is not limited to the above-described embodiments, and the accompanying claims and equivalents and modifications thereof fall within the scope of the present disclosure.

**Claims**

1. An image decoding method, comprising:

   deriving a block vector; and
   deriving a prediction block for a current block by performing prediction based on the block vector.

2. The image decoding method of claim 1, wherein the prediction is template matching prediction or intra template matching prediction.

3. The image decoding method of claim 2, wherein, when a luma component and a chroma component of the current block has independent block partitioning structures, template matching prediction mode information for the luma component and template matching prediction mode information for the chroma component are independently decoded for the luma component and the chroma component, respectively.

4. The image decoding method of claim 2, wherein:

   a block vector of the current block is stored in a motion information buffer,
   the block vector is added to a block vector candidate list for a next block of the current block, and
   the prediction is template matching prediction or intra template matching prediction.

5. The image decoding method of claim 1, wherein the block vector is a template matching block vector.

**6.** The image decoding method of claim 1, wherein scaling is performed on the template matching block vector.

**7.** An image encoding method, comprising:

deriving a block vector; and
deriving a prediction block for a current block by performing prediction based on the block vector.

**8.** The image encoding method of claim 7, wherein the prediction is template matching prediction or intra template matching prediction.

**9.** The image encoding method of claim 8, wherein, when a luma component and a chroma component of the current block has independent block partitioning structures, template matching prediction mode information for the luma component and template matching prediction mode information for the chroma component are independently decoded for the luma component and the chroma component, respectively.

**10.** The image decoding method of claim 8, wherein:

a block vector of the current block is stored in a motion information buffer,
the block vector is added to a block vector candidate list for a next block of the current block, and
the prediction is template matching prediction or intra template matching prediction.

**11.** The image encoding method of claim 7, wherein the block vector is a template matching block vector.

**12.** The image encoding method of claim 7, wherein scaling is performed on the template matching block vector.

**13.** A computer-readable storage medium for storing a bitstream generated by the image encoding method of claim 7.

**14.** A computer-readable storage medium for storing a bitstream for image decoding, wherein:

the bitstream comprises prediction mode information,
a block vector is derived using the prediction mode information, and
a prediction block for a current block is derived by performing prediction based on the block vector.

**15.** The computer-readable storage medium of claim 14, wherein the prediction is template matching prediction or intra template matching prediction.

**16.** The computer-readable storage medium of claim 15, wherein, when a luma component and a chroma component of the current block has independent block partitioning structures, template matching prediction mode information for the luma component and template matching prediction mode information for the chroma component are independently decoded for the luma component and the chroma component, respectively.

**17.** The computer-readable storage medium of claim 15, wherein:

a block vector of the current block is stored in a motion information buffer, and
the block vector is added to a block vector candidate list for a next block of the current block.

**18.** The image decoding method of claim 14, wherein the block vector is a template matching block vector.

**19.** The image decoding method of claim 14, wherein scaling is performed on the template matching block vector.

**20.** A computer-readable storage medium for storing a bitstream including computer-executable code, wherein, when being executed, the computer-executable code allows a video decoding apparatus to perform:

deriving a block vector based on prediction mode information of the computer-executable code; and
deriving a prediction block for a current block by performing prediction based on the block vector.

**FIG.1**

**FIG. 2**

**FIG. 3**

**FIG. 4**

510

**FIG. 5**

**FIG. 6**

**FIG. 7**

FIG. 8

FIG. 9

**FIG. 10**

FIG. 11

RESIDUAL
SIGNAL → FIRST TRANSFORM → TRANSFORM COEFFICIENT → SECONDARY TRANSFORM → QUANTIZATION →

**FIG. 12**

DIAGONAL SCANNING

**FIG. 13**

HORIZONTAL SCANNING

**FIG. 14**

VERTICAL SCANNING

**FIG. 15**

**FIG. 16**

**FIG. 17**

START

DETERMINE PREDICTION INFORMATION — 1810

PERFORM ENCODING ON CODING INFORMATION — 1820

PERFORM PREDICTION

GENERATE BITSTREAM — 1830

END — 1840

**FIG. 18**

**FIG. 19**

**FIG. 20**

**FIG. 21**

CURRENT IMAGE

RECONSTRUCTED REGION

SEARCH AREA

SEARCH AREA

BLOCK VECTOR

ADJACENT BLOCK

CURRENT BLOCK

CURRENT CTB

**FIG. 22**

**FIG. 23**

**FIG. 24**

**FIG. 25A**

**FIG. 25B**

**FIG. 25C**

**FIG. 26A**

**FIG. 26B**

START

DERIVE INTRA BLOCK VECTOR FOR INTRA BLOCK COPY ~2710

DERIVE PREDICTION BLOCK ~2720

DERIVE RESIDUAL BLOCK ~2730

CONFIGURE RECONSTRUCTED BLOCK ~2740

PERFORM ENTROPY ENCODING ON CODING INFORMATION RELATED TO INTRA BLOCK COPY ~2750

END

**FIG. 27**

START

PERFORM ENTROPY DECODING
ON CODING INFORMATION RELATED
TO INTRA BLOCK COPY | ~2810

DERIVE INTRA BLOCK VECTOR FOR
INTRA BLOCK COPY | ~2820

DERIVE PREDICTION BLOCK | ~2830

DERIVE RESIDUAL BLOCK | ~2840

CONFIGURE RECONSTRUCTED BLOCK | ~2850

END

**FIG. 28**

**FIG. 29**

**FIG. 30**

INTRA BLOCK COPY

TEMPLATE
MATCHING BLOCK

TEMPLATE
MATCHING BLOCK

INTRA BLOCK COPY

INTRA BLOCK COPY

B2

B1 | B0

CURRENT BLOCK

A1

A0

BLOCK VECTOR CANDIDATE LIST

| A1 | B1 | B0 | A0 | B2 |

FIG. 31

FIG. 32

FIG. 33

HISTORY BLOCK VECTOR BUFFER

| $BV_{TMP,1}$ | $BV_{TMP,2}$ | $BV_{IBC,1}$ | $BV_{IBC,2}$ | $BV_{IBC,3}$ | $BV_{TMP,3}$ | $BV_{IBC,4}$ | $BV_{IBC,5}$ | $BV_{TMP,4}$ | $\cdots$ |
|---|---|---|---|---|---|---|---|---|---|

**FIG. 34**

INTRA BLOCK COPY HISTORY BLOCK VECTOR BUFFER

| $BV_{IBC, 1}$ | $BV_{IBC, 2}$ | $BV_{IBC, 3}$ | $BV_{IBC, 4}$ | $BV_{IBC, 5}$ | $BV_{IBC, 6}$ | $BV_{IBC, 7}$ | $BV_{IBC, 8}$ | $BV_{IBC, 9}$ | $\cdots$ |
|---|---|---|---|---|---|---|---|---|---|

**FIG. 35A**

INTRA BLOCK COPY HISTORY BLOCK VECTOR BUFFER

| $BV_{IBC, 1}$ | $BV_{IBC, 2}$ | $BV_{IBC, 3}$ | $BV_{IBC, 4}$ | $BV_{IBC, 5}$ | $BV_{IBC, 6}$ | $BV_{IBC, 7}$ | $BV_{TMP, 8}$ | $BV_{TMP, 9}$ | $\cdots$ |
|---|---|---|---|---|---|---|---|---|---|

**FIG. 35B**

BLOCK VECTOR CANDIDATE LIST

| $BV_{spatial, 1}$ | $BV_{spatial, 2}$ | $BV_{spatial, 3}$ | $\cdots$ | $BV_{history, 1}$ | $BV_{history, 2}$ | $BV_{history, 3}$ | $\cdots$ |

N SPATIAL BLOCK VECTORS     M HISTORY BLOCK VECTORS

**FIG. 36**

BLOCK VECTOR CANDIDATE LIST

| $BV_{spatial, 1}$ | $BV_{spatial, 2}$ | $BV_{spatial, 3}$ | $\cdots$ | $BV_{IBC, history, 1}$ | $BV_{IBC, history, 2}$ | $BV_{IBC, history, 3}$ | $\cdots$ | $BV_{TMP, history, 1}$ | $BV_{TMP, history, 2}$ | $BV_{TMP, history, 3}$ | $\cdots$ |

N SPATIAL BLOCK VECTORS     M HISTORY BLOCK VECTORS     L HISTORY BLOCK VECTORS

**FIG. 37**

BLOCK VECTOR CANDIDATE LIST

| $BV_{spatial,\,1}$ | $BV_{spatial,\,2}$ | $BV_{spatial,\,3}$ | $\cdots$ | $BV_{TMP,\,history,\,1}$ | $BV_{TMP,\,history,\,2}$ | $BV_{TMP,\,history,\,3}$ | $\cdots$ | $BV_{IBC,\,history,\,1}$ | $BV_{IBC,\,history,\,2}$ | $BV_{IBC,\,history,\,3}$ | $\cdots$ |

N SPATIAL BLOCK VECTORS    L HISTORY BLOCK VECTORS    M HISTORY BLOCK VECTORS

**FIG. 38**

BLOCK VECTOR CANDIDATE LIST

| $BV_{spatial,\ 1}$ | $BV_{spatial,\ 2}$ | $BV_{spatial,\ 3}$ | . . . | $BV_{IBC,\ history,\ 1}$ | $BV_{TMP,\ history,\ 1}$ | $BV_{IBC,\ history,\ 2}$ | $BV_{TMP,\ history,\ 2}$ | $BV_{IBC,\ history,\ 3}$ | $BV_{TMP,\ history,\ 3}$ | . . . |

N SPATIAL BLOCK VECTORS · L HISTORY BLOCK VECTORS

**FIG. 39**

**FIG. 40**

BLOCK VECTOR CANDIDATE LIST BEFORE BLOCK
VECTOR CANDIDATE REFINEMENT USING
TEMPLATE MATCHING

| $BV_1$ | $BV_2$ | $BV_3$ | . . . |
|---|---|---|---|

BLOCK VECTOR CANDIDATE LIST AFTER BLOCK
VECTOR CANDIDATE REFINEMENT USING
TEMPLATE MATCHING

| $BV_{TM\text{-}refined,\ 1}$ | $BV_{TM\text{-}refined,\ 2}$ | $BV_{TM\text{-}refined,\ 3}$ | . . . |
|---|---|---|---|

**FIG. 41**

**FIG. 42**

BLOCK VECTOR CANDIDATE LIST BEFORE BLOCK
VECTOR CANDIDATE REFINEMENT USING
TEMPLATE MATCHING

| $BV_1$ | $BV_2$ | $BV_3$ | . . . |
|--------|--------|--------|-------|

BLOCK VECTOR CANDIDATE LIST AFTER BLOCK
VECTOR CANDIDATE REFINEMENT USING
TEMPLATE MATCHING

| $BV_1$ | $BV_{TM\text{-refined, 2}}$ | $BV_3$ | . . . |
|--------|-----------------------------|--------|-------|

**FIG. 43**

**FIG. 44**

BLOCK VECTOR CANDIDATE LIST BEFORE BLOCK VECTOR
CANDIDATE REORDERING USING TEMPLATE MATCHING

| $BV_1$ | $BV_2$ | $BV_3$ | . . . |

BLOCK VECTOR CANDIDATE LIST AFTER BLOCK VECTOR
CANDIDATE REORDERING USING TEMPLATE MATCHING

| $BV_2$ | $BV_3$ | $BV_1$ | . . . |

FIG. 45

QUAD-TREE PARTITIONING

**FIG. 46A**

B2

B1 B0

*4X4*    *4X4*

A1

A0

ERTICAL BINARY TREE
PARTITIONING

**FIG. 46B**

HORIZONTAL BINARY
TREE PARTITIONING

**FIG. 46C**

TERNARY TREE PARTITIONING

**FIG. 46D**

FIG. 47

**FIG. 48**

**FIG. 49A**

**FIG. 49B**

**FIG. 49C**

**FIG. 49D**

LEFT (PREVIOUS) CTB        CURRENT CTB

EXAMPLE OF REGION (SAMPLE)
ENCODED/DECODED BEFORE CURRENT
BLOCK IS ENCODED/DECODED

LEFT CTB REGION (I.E., RECONSTRUCTED REGION)
OF CTB TO WHICH CURRENT BLOCK BELONGS

SAMPLES ENCODED/DECODED BEFORE CURRENT
BLOCK IS ENCODED/DECODED IN CTB TO WHICH
CURRENT BLOCK BELONGS

CURRENT BLOCK

**FIG. 50A**

EXAMPLE OF INTRA BLOCK COPY
REFERENCE REGION BUFFER

LEFT CTB REGION (I.E., RECONSTRUCTED REGION) OF CTB TO WHICH CURRENT BLOCK BELONGS

SAMPLES ENCODED/DECODED BEFORE CURRENT BLOCK IS ENCODED/DECODED IN CTB TO WHICH CURRENT BLOCK BELONGS

**FIG. 50B**

**FIG. 51A**

**FIG. 51B**

LEFT (PREVIOUS) CTB        CURRENT CTB

CTB #1    CTB #2    CTB #3    CTB #4

REGION OF LEFT (N-1) CTBS (I.E., RECONSTRUCTED REGION) OF CTB TO WHICH CURRENT BLOCK BELONGS

SAMPLES ENCODED/DECODED BEFORE CURRENT BLOCK IS ENCODED/DECODED IN CTB TO WHICH CURRENT BLOCK BELONGS

CURRENT BLOCK

**FIG. 52**

BUFFER STATUS BEFORE ENCODING/
DECODING ON CORRESPONDING CTU
ROW STARTS

BUFFER STATUS AT TIME POINT AT
WHICH ENCODING/DECODING ON
CTB #1 IS COMPLETED

BUFFER STATUS AT TIME POINT AT
WHICH ENCODING/DECODING ON
CTB #2 IS COMPLETED

BUFFER STATUS AT TIME POINT AT
WHICH ENCODING/DECODING ON
CTB #3 IS COMPLETED

BUFFER STATUS AT TIME POINT AT
WHICH ENCODING/DECODING ON
CTB #4 IS COMPLETED

BUFFER STATUS AT TIME POINT AT
WHICH ENCODING/DECODING ON
CTB #5 IS COMPLETED

EXAMPLE OF REFERENCE
REGION BUFFER STATUS IN
INTRA BLOCK COPY

**FIG. 53A**

BUFFER STATUS BEFORE ENCODING/ DECODING ON CORRESPONDING CTU ROW STARTS

CTB # 1

BUFFER STATUS AT TIME POINT AT WHICH ENCODING/DECODING ON CTB #1 IS COMPLETED

CTB # 1 | CTB # 2

BUFFER STATUS AT TIME POINT AT WHICH ENCODING/DECODING ON CTB #2 IS COMPLETED

CTB # 1 | CTB # 2 | CTB # 3

BUFFER STATUS AT TIME POINT AT WHICH ENCODING/DECODING ON CTB #3 IS COMPLETED

CTB # 1 | CTB # 2 | CTB # 3 | CTB # 4

BUFFER STATUS AT TIME POINT AT WHICH ENCODING/DECODING ON CTB #4 IS COMPLETED

CTB # 5 | CTB # 2 | CTB # 3 | CTB # 4

BUFFER STATUS AT TIME POINT AT WHICH ENCODING/DECODING ON CTB #5 IS COMPLETED

ANOTHER EXAMPLE OF REFERENCE REGION BUFFER STATUS IN INTRA BLOCK COPY

**FIG. 53B**

BUFFER STATUS BEFORE ENCODING/ DECODING ON CORRESPONDING CTU ROW STARTS

CTB # 1

BUFFER STATUS AT TIME POINT AT WHICH ENCODING/DECODING ON CTB #1 IS COMPLETED

CTB # 1 | CTB # 2

BUFFER STATUS AT TIME POINT AT WHICH ENCODING/DECODING ON CTB #2 IS COMPLETED

CTB # 1 | CTB # 2 | CTB # 3

BUFFER STATUS AT TIME POINT AT WHICH ENCODING/DECODING ON CTB #3 IS COMPLETED

CTB # 1 | CTB # 2 | CTB # 3 | CTB # 4

BUFFER STATUS AT TIME POINT AT WHICH ENCODING/DECODING ON CTB #4 IS COMPLETED

CTB # 2 | CTB # 3 | CTB # 4 | CTB # 5

BUFFER STATUS AT TIME POINT AT WHICH ENCODING/DECODING ON CTB #5 IS COMPLETED

FURTHER EXAMPLE OF REFERENCE REGION BUFFER STATUS IN INTRA BLOCK COPY

**FIG. 53C**

BUFFER STATUS BEFORE ENCODING/
DECODING ON CORRESPONDING CTU
ROW STARTS

CTB # 1

BUFFER STATUS AT TIME POINT AT
WHICH ENCODING/DECODING ON
CTB #1 IS COMPLETED

CTB # 1    CTB # 2

BUFFER STATUS AT TIME POINT AT
WHICH ENCODING/DECODING ON
CTB #2 IS COMPLETED

CTB # 1    CTB # 2    CTB # 3

BUFFER STATUS AT TIME POINT AT
WHICH ENCODING/DECODING ON
CTB #3 IS COMPLETED

CTB # 1    CTB # 2    CTB # 3    CTB # 4

BUFFER STATUS AT TIME POINT AT
WHICH ENCODING/DECODING ON
CTB #4 IS COMPLETED

CTB # 2    CTB # 3    CTB # 4    CTB # 5

BUFFER STATUS AT TIME POINT AT
WHICH ENCODING/DECODING ON
CTB #5 IS COMPLETED

YET ANOTHER EXAMPLE OF
REFERENCE REGION BUFFER STATUS
IN INTRA BLOCK COPY

**FIG. 53D**

BLOCK PARTITIONING

SUBBLOCK PARTITIONING

N×M

CURRENT CHROMA COMPONENT BLOCK

(d) EXAMPLE OF SUBBLOCK PARTITIONING OF CHROMA COMPONENT BLOCK

(c) CHROMA COMPONENT BLOCK PARTITIONING STRUCTURE

(N*2)×(M*2)

LUMA COMPONENT REGION CORRESPONDING TO CURRENT CHROMA COMPONENT BLOCK

(b) EXAMPLE OF SUBBLOCK PARTITIONING OF LUMA COMPONENT BLOCK CORRESPONDING TO CHROMA COMPONENT BLOCK

(a) LUMA COMPONENT BLOCK PARTITIONING STRUCTURE

**FIG. 54**

FIG. 55

**FIG. 56**

| | |
|---|---|
| INTRA<br>BLOCK COPY SKIP<br>MODE | INTRA<br>BLOCK COPY SKIP<br>MODE |
| INTRA<br>BLOCK COPY SKIP<br>MODE | INTRA<br>BLOCK COPY SKIP<br>MODE |
| INTRA<br>BLOCK COPY SKIP<br>MODE | INTRA<br>BLOCK COPY SKIP<br>MODE |
| INTRA<br>BLOCK COPY SKIP<br>MODE | INTRA<br>BLOCK COPY SKIP<br>MODE |

**FIG. 57**

| INTRA BLOCK COPY SKIP MODE | INTRA BLOCK COPY MERGE MODE |
|---|---|
| INTRA BLOCK COPY SKIP MODE | INTRA BLOCK COPY AMVP MODE |
| INTRA BLOCK COPY MERGE MODE | INTRA BLOCK COPY AMVP MODE |
| INTRA BLOCK COPY SKIP MODE | INTRA BLOCK COPY SKIP MODE |

**FIG. 58**

| | Descriptor |
|---|---|
| coding_unit( x0, y0, cbWidth, cbHeight, treeType ) { | |
|   if( slice_type != I \| sps_ibc_enabled_flag ) { | |
|     if( treeType != DUAL_TREE_CHROMA && | |
|       !( cbWidth = = 4 && cbHeight = = 4 && !sps_ibc_enabled_flag ) ) | |
|       **cu_skip_flag**[ x0 ][ y0 ] | ae(v) |
|     if( cu_skip_flag[ x0 ][ y0 ] = = 0 && slice_type != I | |
|       && !( cbWidth = = 4 && cbHeight = = 4 ) ) | |
|       **pred_mode_flag** | ae(v) |
|     if( ( ( slice_type = = I && cu_skip_flag[ x0 ][ y0 ] = =0 ) \| | |
|       ( slice_type != I && ( CuPredMode[ x0 ][ y0 ] != MODE_INTRA \| | |
|       ( cbWidth = = 4 && cbHeight = = 4 && cu_skip_flag[ x0 ][ y0 ] = = 0 ) ) ) ) && | |
|       sps_ibc_enabled_flag && ( cbWidth != 128 \|\| cbHeight != 128 ) ) | |
|       **pred_mode_ibc_flag** | ae(v) |
|   } | |
|   if( CuPredMode[ x0 ][ y0 ] = = MODE_INTRA ) { | |
|     ... | |
|   } else if( treeType != DUAL_TREE_CHROMA ) { /* MODE_INTER or MODE_IBC */ | |
|     if( cu_skip_flag[ x0 ][ y0 ] = = 0 ) | |
|       **general_merge_flag**[ x0 ][ y0 ] | ae(v) |
|     if( general_merge_flag[ x0 ][ y0 ] ) { | |
|       merge_data( x0, y0, cbWidth, cbHeight ) | |
|     } else if ( CuPredMode[ x0 ][ y0 ] = = MODE_IBC ) { | |
|       mvd_coding( x0, y0, 0, 0 ) | |
|       **mvp_l0_flag**[ x0 ][ y0 ] | ae(v) |
|       if( sps_amvr_enabled_flag && | |
|         ( MvdL0[ x0 ][ y0 ][ 0 ] != 0 \|\| MvdL0[ x0 ][ y0 ][ 1 ] != 0 ) ) { | |
|         **amvr_precision_flag**[ x0 ][ y0 ] | ae(v) |
|       } | |
|     } else if( treeType != DUAL_TREE_CHROMA ) { /* MODE_INTER or MODE_IBC */ | |
|       ... | |
|     } | |
|   } | |
|   if( !pcm_flag[ x0 ][ y0 ] ) { | |
|     if( CuPredMode[ x0 ][ y0 ] != MODE_INTRA && merge_flag[ x0 ][ y0 ] = = 0 ) | |
|       **cu_cbf** | ae(v) |
|     if( cu_cbf ) { | |
|       ... | |
|       transform_tree( x0, y0, cbWidth, cbHeight, treeType ) | |
|     } | |
|   } | |
| } | |

**FIG. 59A**

EP 4 554 209 A1

| transform_unit( x0, y0, tbWidth, tbHeight, treeType, subTuIndex ) { | Descriptor |
|---|---|
|   if( treeType = = SINGLE_TREE \|\| treeType = = DUAL_TREE_LUMA ) { | |
|     if( ( IntraSubPartitionsSplitType = = ISP_NO_SPLIT && !( cu_sbt_flag && ( ( subTuIndex = = 0 && cu_sbt_pos_flag ) \|\| | |
|       ( subTuIndex = = 1 && !cu_sbt_pos_flag ) ) ) ) \|\| ( IntraSubPartitionsSplitType != ISP_NO_SPLIT && | |
|       ( subTuIndex < NumIntraSubPartitions − 1 \|\| !InferTuCbfLuma ) ) ) | |
|       **tu_cbf_luma**[ x0 ][ y0 ] | ae(v) |
|     if (IntraSubPartitionsSplitType != ISP_NO_SPLIT ) | |
|       InferTuCbfLuma = InferTuCbfLuma && !tu_cbf_luma[ x0 ][ y0 ] | |
|   } | |
|   if( ( treeType = = SINGLE_TREE \|\| treeType = = DUAL_TREE_CHROMA ) { | |
|     if( ( IntraSubPartitionsSplitType = = ISP_NO_SPLIT && !( cu_sbt_flag && ( ( subTuIndex = = 0 && cu_sbt_pos_flag ) \|\| | |
|       ( subTuIndex = = 1 && !cu_sbt_pos_flag ) ) ) ) \|\| ( IntraSubPartitionsSplitType != ISP_NO_SPLIT && | |
|       ( subTuIndex = = NumIntraSubPartitions − 1 ) ) ) { | |
|       **tu_cbf_cb**[ x0 ][ y0 ] | ae(v) |
|       **tu_cbf_cr**[ x0 ][ y0 ] | ae(v) |
|     } | |
|   } | |
|   ... | |
|   if( tu_cbf_luma[ x0 ][ y0 ] ) | |
|     residual_coding( x0, y0, Log2( tbWidth ), Log2( tbHeight ), 0 ) | |
|   if( tu_cbf_cb[ x0 ][ y0 ] ) | |
|     residual_coding( xC, yC, Log2( wC ), Log2( hC ), 1 ) | |
|   if( tu_cbf_cr[ x0 ][ y0 ] ) | |
|     residual_coding( xC, yC, Log2( wC ), Log2( hC ), 2 ) | |
| } | |

**FIG. 59B**

EP 4 554 209 A1

| transform_unit( x0, y0, tbWidth, tbHeight, treeType, subTuIndex ) { | Descriptor |
|---|---|
|   if( treeType = = SINGLE_TREE \|\| ( treeType = = DUAL_TREE_LUMA && CuPredMode[x0][y0]==MODE_INTRA)) { | |
|     if( ( IntraSubPartitionsSplitType = = ISP_NO_SPLIT && !( cu_sbt_flag && ( ( subTuIndex = = 0 && cu_sbt_pos_flag ) \|\| <br>    ( subTuIndex = = 1 && !cu_sbt_pos_flag ) ) ) ) \|\| ( IntraSubPartitionsSplitType != ISP_NO_SPLIT && <br>    ( subTuIndex < NumIntraSubPartitions − 1 \|\| !InferTuCbfLuma ) ) ) | |
|     **tu_cbf_luma**[ x0 ][ y0 ] | ae(v) |
|     if (IntraSubPartitionsSplitType != ISP_NO_SPLIT ) | |
|       InferTuCbfLuma = InferTuCbfLuma && !tu_cbf_luma[ x0 ][ y0 ] | |
|   } | |
|   if( ( treeType = = SINGLE_TREE \|\| treeType = = DUAL_TREE_CHROMA ) { | |
|     if( ( IntraSubPartitionsSplitType = = ISP_NO_SPLIT && !( cu_sbt_flag && ( ( subTuIndex = = 0 && cu_sbt_pos_flag ) \|\| <br>    ( subTuIndex = = 1 && !cu_sbt_pos_flag ) ) ) ) \|\| ( IntraSubPartitionsSplitType != ISP_NO_SPLIT && <br>    ( subTuIndex = = NumIntraSubPartitions − 1 ) ) ) { | |
|     **tu_cbf_cb**[ x0 ][ y0 ] | ae(v) |
|     **tu_cbf_cr**[ x0 ][ y0 ] | ae(v) |
|     } | |
|   } | |
|   ... | |
| } | |

**FIG. 60**

| transform_unit( x0, y0, tbWidth, tbHeight, treeType, subTuIndex ) { | Descriptor |
|---|---|
|   if( treeType = = SINGLE_TREE \|\| ( treeType = = DUAL_TREE_LUMA && !CuPredMode[x0][y0]==MODE_IBC ) { | |
|     if( ( IntraSubPartitionsSplitType = = ISP_NO_SPLIT && !( cu_sbt_flag && ( ( subTuIndex = = 0 && cu_sbt_pos_flag ) \|\| <br>      ( subTuIndex = = 1 && !cu_sbt_pos_flag ) ) ) ) \|\| ( IntraSubPartitionsSplitType != ISP_NO_SPLIT && <br>      ( subTuIndex < NumIntraSubPartitions − 1 \|\| !InferTuCbfLuma ) ) ) | |
|       **tu_cbf_luma**[ x0 ][ y0 ] | ae(v) |
|     if (IntraSubPartitionsSplitType != ISP_NO_SPLIT ) | |
|      InferTuCbfLuma = InferTuCbfLuma && !tu_cbf_luma[ x0 ][ y0 ] | |
|   } | |
|   if( ( treeType = = SINGLE_TREE \|\| treeType = = DUAL_TREE_CHROMA ) { | |
|     if( ( IntraSubPartitionsSplitType = = ISP_NO_SPLIT && !( cu_sbt_flag && ( ( subTuIndex = = 0 && cu_sbt_pos_flag ) \|\| <br>      ( subTuIndex = = 1 && !cu_sbt_pos_flag ) ) ) ) \|\| ( IntraSubPartitionsSplitType != ISP_NO_SPLIT && <br>      ( subTuIndex = = NumIntraSubPartitions − 1 ) ) ) { | |
|       **tu_cbf_cb**[ x0 ][ y0 ] | ae(v) |
|       **tu_cbf_cr**[ x0 ][ y0 ] | ae(v) |
|     } | |
|   } | |
|   ... | |
| } | |

**FIG. 61**

EP 4 554 209 A1

| transform_unit( x0, y0, tbWidth, tbHeight, treeType, subTuIndex ) { | Descriptor |
|---|---|
| if( ( treeType = = SINGLE_TREE  \|\|  treeType = = DUAL_TREE_CHROMA ) { | |
| if( ( IntraSubPartitionsSplitType = = ISP_NO_SPLIT  &&  !( cu_sbt_flag  &&    (( subTuIndex  = = 0  &&  cu_sbt_pos_flag )  \|\|  ( subTuIndex  = = 1  &&  !cu_sbt_pos_flag ) ) ) )  \|\|  ( IntraSubPartitionsSplitType != ISP_NO_SPLIT  &&   ( subTuIndex = = NumIntraSubPartitions − 1 ) ) ) { | |
| tu_cbf_cb[ x0 ][ y0 ] | ae(v) |
| tu_cbf_cr[ x0 ][ y0 ] | ae(v) |
| } | |
| } | |
| if( treeType = = SINGLE_TREE  \|\|  treeType = = DUAL_TREE_LUMA ) { | |
| if( ( IntraSubPartitionsSplitType = = ISP_NO_SPLIT  &&  !( cu_sbt_flag  &&   (( subTuIndex  = = 0  &&  cu_sbt_pos_flag )  \|\|  ( subTuIndex  = = 1  &&  !cu_sbt_pos_flag ) ) )  &&   ( CuPredMode[ x0 ][ y0 ] = = MODE_INTRA  \|\|  tu_cbf_cb[ x0 ][ y0 ]  \|\|  tu_cbf_cr[ x0 ][ y0 ]  \|\|  CbWidth[ x0 ][ y0 ] > MaxTbSizeY  \|\|  CbHeight[ x0 ][ y0 ] > MaxTbSizeY )  \|\|( ( IntraSubPartitionsSplitType != ISP_NO_SPLIT )  &&   ( subTuIndex < NumIntraSubPartitions − 1  \|\|  !InferTuCbfLuma ) ) ) | |
| tu_cbf_luma[ x0 ][ y0 ] | ae(v) |
| … | |
| } | |
| } | |
| … | |
| } | |

FIG. 62

FIG. 63

TL TR

CR1 CR2
CR3 CR4

BL BR

2*nS

LUMA BLOCK

CHROMA BLOCK

**FIG. 64**

LUMA BLOCK

CHROMA BLOCK

**FIG. 65**

(xCb+bvC[0], yCb+bvC[1])

REFERENCE
BLOCK

(bvC[0], bvC[1])

(xCb, yCb)

CURRENT
BLOCK

**FIG. 66**

**FIG. 67**

FIG. 68

**FIG. 69**

**FIG. 70**

## INTERNATIONAL SEARCH REPORT

| International application No. |
|---|
| **PCT/KR2023/009533** |

**A. CLASSIFICATION OF SUBJECT MATTER**

**H04N 19/105**(2014.01)i; **H04N 19/593**(2014.01)i; **H04N 19/176**(2014.01)i; **H04N 19/91**(2014.01)i; **H04N 19/184**(2014.01)i; **H04N 19/11**(2014.01)i; **H04N 19/132**(2014.01)i; **H04N 19/186**(2014.01)i; **H04N 19/70**(2014.01)i; **H04N 19/129**(2014.01)i

According to International Patent Classification (IPC) or to both national classification and IPC

**B. FIELDS SEARCHED**

Minimum documentation searched (classification system followed by classification symbols)

H04N 19/105(2014.01); H04N 19/11(2014.01); H04N 19/157(2014.01); H04N 19/176(2014.01); H04N 19/577(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 템플릿 매칭(template matching), 블록 벡터(block vector), 버퍼 (buffer), 후보 리스트(candidate list), 스케일링(scaling)

**C. DOCUMENTS CONSIDERED TO BE RELEVANT**

| Category* | Citation of document, with indication, where appropriate, of the relevant passages | Relevant to claim No. |
|---|---|---|
| X | KR 10-2020-0116462 A (QUALCOMM INCORPORATED) 12 October 2020 (2020-10-12) See paragraphs [0178] and [0193]-[0194]; and claims 1-5 and 13. | 1-4,7-10,13-17,20 |
| Y | | 5-6,11-12,18-19 |
| Y | CHEN, Haoming et al. Improvements on Intra Block Copy in Natural Content Video Coding. 2015 IEEE International Symposium on Circuits and Systems (ISCAS). pp. 2772-2775, 24 May 2015. See pages 2772-2773. | 5-6,11-12,18-19 |
| A | KR 10-2022-0026567 A (DOLBY LABORATORIES LICENSING CORP.) 04 March 2022 (2022-03-04) See paragraphs [0034]-[0180]; and figures 1-16. | 1-20 |
| A | KR 10-2019-0055819 A (QUALCOMM INCORPORATED) 23 May 2019 (2019-05-23) See claims 1-12. | 1-20 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 October 2023** | **05 October 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| **INTERNATIONAL SEARCH REPORT** | International application No. |
|---|---|
| | **PCT/KR2023/009533** |

**C.    DOCUMENTS CONSIDERED TO BE RELEVANT**

| Category* | Citation of document, with indication, where appropriate, of the relevant passages | Relevant to claim No. |
|---|---|---|
| A | ROBERT, A. et al. EE2-3.4: IBC with Template Matching. Joint Video Experts Team (JVET) of ITU-T SG 16 WP 3 and ISO/IEC JTC 1/SC 29, [Document: JVET-Z0084-v1, (version 1)], 26th Meeting: by teleconference. pp. 1-3, 13 April 2022.<br>    [Retrieved on 31 August 2023]. Retrieved from <https://jvet-experts.org/>.<br>    See pages 1-3. | 1-20 |

Form PCT/ISA/210 (second sheet) (July 2022)

**INTERNATIONAL SEARCH REPORT**
Information on patent family members

| International application No. |
| --- |
| **PCT/KR2023/009533** |

| Patent document cited in search report | | | Publication date (day/month/year) | Patent family member(s) | | | Publication date (day/month/year) |
| --- | --- | --- | --- | --- | --- | --- | --- |
| KR | 10-2020-0116462 | A | 12 October 2020 | CN | 111684806 | A | 18 September 2020 |
| | | | | EP | 3750317 | A1 | 16 December 2020 |
| | | | | US | 11012715 | B2 | 18 May 2021 |
| | | | | US | 2019-0246143 | A1 | 08 August 2019 |
| | | | | WO | 2019-157186 | A1 | 15 August 2019 |
| KR | 10-2022-0026567 | A | 04 March 2022 | CN | 106464870 | A | 22 February 2017 |
| | | | | CN | 106464870 | B | 09 August 2019 |
| | | | | CN | 110312128 | A | 08 October 2019 |
| | | | | CN | 110312128 | B | 22 November 2022 |
| | | | | KR | 10-2015-0113522 | A | 08 October 2015 |
| | | | | KR | 10-2021-0132631 | A | 04 November 2021 |
| | | | | KR | 10-2022-0154068 | A | 21 November 2022 |
| | | | | KR | 10-2319384 | B1 | 29 October 2021 |
| | | | | KR | 10-2366528 | B1 | 25 February 2022 |
| | | | | KR | 10-2464786 | B1 | 08 November 2022 |
| | | | | US | 2017-0134726 | A1 | 11 May 2017 |
| | | | | WO | 2015-152507 | A1 | 08 October 2015 |
| KR | 10-2019-0055819 | A | 23 May 2019 | CN | 109792518 | A | 21 May 2019 |
| | | | | CN | 109792518 | B | 23 June 2023 |
| | | | | EP | 3523962 | A1 | 14 August 2019 |
| | | | | JP | 2019-531029 | A | 24 October 2019 |
| | | | | US | 10798404 | B2 | 06 October 2020 |
| | | | | US | 10880570 | B2 | 29 December 2020 |
| | | | | US | 10951912 | B2 | 16 March 2021 |
| | | | | US | 2018-0098070 | A1 | 05 April 2018 |
| | | | | US | 2018-0098079 | A1 | 05 April 2018 |
| | | | | US | 2018-0098086 | A1 | 05 April 2018 |
| | | | | WO | 2018-067729 | A1 | 12 April 2018 |
| | | | | WO | 2018-067732 | A1 | 12 April 2018 |
| | | | | WO | 2018-067733 | A1 | 12 April 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220082790
- KR 1020220084570
- KR 1020220089927
- KR 1020220129439
- KR 1020230001498
- KR 1020230006995
- KR 1020230087301